(19) Europäisches Patentamt
European Patent Office
Office européen des brevets

(11) EP 4 645 862 A1

(12) **EUROPEAN PATENT APPLICATION**
published in accordance with Art. 153(4) EPC

(43) Date of publication:
**05.11.2025 Bulletin 2025/45**

(21) Application number: **23911678.3**

(22) Date of filing: **12.12.2023**

(51) International Patent Classification (IPC):
***H04N 19/46*** *(2014.01)* ***H04N 19/42*** *(2014.01)*
***H04N 19/60*** *(2014.01)* ***H04N 19/85*** *(2014.01)*

(52) Cooperative Patent Classification (CPC):
**H04N 19/42; H04N 19/46; H04N 19/60; H04N 19/85**

(86) International application number:
**PCT/JP2023/044343**

(87) International publication number:
**WO 2024/142897 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 JP 2022208494**

(71) Applicant: **Sony Semiconductor Solutions Corporation**
**Atsugi-shi, Kanagawa 243-0014 (JP)**

(72) Inventors:
- **NAGUMO Takefumi**
  **Atsugi-shi, Kanagawa 243-0014 (JP)**
- **KITAMURA Takuya**
  **Atsugi-shi, Kanagawa 243-0014 (JP)**
- **ONO Yoshinori**
  **Atsugi-shi, Kanagawa 243-0014 (JP)**
- **YAMATO Atsushi**
  **Atsugi-shi, Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

# (54) INFORMATION PROCESSING APPARATUS AND INFORMATION PROCESSING METHOD

(57) The present disclosure relates to an information processing apparatus and an information processing method that enable inference of machine learning to be performed more reliably.

Provided is an information processing apparatus including: a preliminary analysis unit that analyzes a neural network before inference using the neural network is performed and generates control information for controlling compression and decoding of a feature amount processed by the neural network; a computing unit that performs inference using input data and the neural network and outputs a processing result obtained by processing the feature amount obtained from the input data as a computing result; a compression unit that compresses the feature amount input from the computing unit on the basis of the control information and records a compressed feature amount that is the feature amount having been compressed in a memory; and a decoding unit that decodes the compressed feature amount temporarily recorded in the memory on the basis of the control information and outputs the decoded feature amount to the computing unit. The present disclosure can be applied to, for example, a machine learning inference unit.

*FIG. 5*

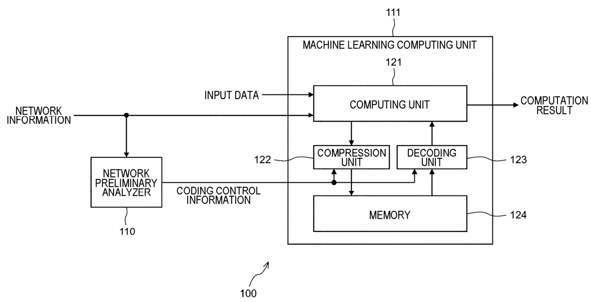


EP 4 645 862 A1

## Description

### TECHNICAL FIELD

The present disclosure relates to an information processing apparatus and an information processing method, and more particularly, to an information processing apparatus and an information processing method capable of inferring machine learning more reliably.

### BACKGROUND ART

In recent years, research and development of machine learning such as a neural network have been actively conducted. A machine learning computing unit that performs inference processing of machine learning acquires input data and network information, performs inference, and outputs a processing result to the outside as a computation result. This type of machine learning computing unit includes a computing unit and a memory, and temporarily records data such as a feature amount processed by the computing unit in the memory, so that the recorded data can be read in the next processing or the like and used for the computation.

In the machine learning computing unit, a data size of data processed by the computing unit tends to increase, and as a result, a use amount of a memory and a data communication amount between the computing unit and the memory increase. As a countermeasure against these problems, a method has been proposed in which a compression unit and a decoding unit are provided between the computing unit and the memory to reduce the data amount. For example, Patent Document 1 discloses a method of comparing uncompressed and compressed data when compressing carrier data of a neural network, and applying compression only in a case where there is a gain of compression.

### CITATION LIST

### PATENT DOCUMENT

Patent Document 1: Japanese Patent Application Laid-Open No. 2021-111320

### SUMMARY OF THE INVENTION

### PROBLEMS TO BE SOLVED BY THE INVENTION

According to the conventional method, in a case where the data size of the compressed data is smaller than the memory size, the inference processing can be performed by the computing unit, but depending on the compression or decoding method, the inference processing cannot be performed in some cases, and a proposal for reliably performing inference of machine learning has been demanded.

In particular, the method disclosed in Patent Document 1 uses a compression system in which a compression rate of data dynamically changes, but since a data size after compression cannot be defined, there are cases in which inference can be made by input data and cases in which inference cannot be made. As described above, in the method disclosed in Patent Document 1, since the possibility of inference varies depending on input data, inference processing cannot be reliably performed.

The present disclosure has been made in view of such a situation, and an object thereof is to enable inference of machine learning to be performed more reliably.

### SOLUTIONS TO PROBLEMS

An information processing apparatus according to one aspect of the present disclosure is an information processing apparatus including: a preliminary analysis unit that analyzes a neural network before inference using the neural network is performed and generates control information for controlling compression and decoding of a feature amount processed by the neural network; a computing unit that performs inference using input data and the neural network and outputs a processing result obtained by processing the feature amount obtained from the input data as a computing result; a compression unit that compresses the feature amount input from the computing unit on the basis of the control information and records a compressed feature amount that is the feature amount having been compressed in a memory; and a decoding unit that decodes the compressed feature amount temporarily recorded in the memory on the basis of the control information and outputs the decoded feature amount to the computing unit.

An information processing method according to one aspect of the present disclosure is an information processing method including, by an information processing apparatus: analyzing a neural network before inference using the neural network

network is performed and generating control information for controlling compression and decoding of a feature amount processed by the neural network; performing inference using input data and the neural network and outputting a processing result obtained by processing the feature amount obtained from the input data as a computing result; compressing the feature amount to be input on the basis of the control information and recording a compressed feature amount that is the feature amount having been compressed in a memory; and decoding the compressed feature amount temporarily recorded in the memory on the basis of the control information and outputting the decoded feature amount.

In the information processing apparatus and the information processing method according to one aspect of the present disclosure, a neural network is analyzed before inference using the neural network is performed and control information for controlling compression and decoding of a feature amount processed by the neural network is generated, inference using input data and the neural network is performed and a processing result obtained by processing the feature amount obtained from the input data is output as a computing result, the feature amount to be input is compressed on the basis of the control information and a compressed feature amount that is the feature amount having been compressed is recorded in a memory, and the compressed feature amount temporarily recorded in the memory is decoded on the basis of the control information and the decoded feature amount is output.

An information processing apparatus according to one aspect of the present disclosure is an information processing apparatus including: a preliminary analysis unit that generates control information for controlling compression of image data on the basis of sample data of the image data; and a compression unit that compresses the image data to be input on the basis of the control information, in which the preliminary analysis unit selects a nonlinear transformation table for performing nonlinear transformation according to a result of analysis of a statistical value of sample data of the image data, selects a residual nonlinear transformation table for performing a residual nonlinear transformation according to a result of analysis of a statistical value of a sample data on the basis of sample data of a prediction residual that is a difference between sample data of the image data and a prediction value of the sample data of the image data, and includes identification information of the selected nonlinear transformation table and the residual nonlinear transformation table in the control information, and the compression unit uses a compression scheme for generating a prediction value for the image data to be input and compressing the image data by entropy coding difference information obtained from a difference between the image data and the prediction value, performs nonlinear transformation on the image data to be input according to the nonlinear transformation table, and performs nonlinear transformation on a prediction residual to which a nonlinear transformation has been applied, the prediction residual being a difference between the image data to which the nonlinear transformation has been applied and the prediction value generated for the image data to which the nonlinear transformation has been applied, according to the residual nonlinear transformation table.

In the information processing apparatus according to one aspect of the present disclosure, control information for controlling compression of image data is generated on the basis of sample data of the image data, and the image data to be input is compressed on the basis of the control information. Further, a nonlinear transformation table for performing nonlinear transformation according to a result of analysis of a statistical value of sample data of the image data is selected, a residual nonlinear transformation table for performing a residual nonlinear transformation according to a result of analysis of a statistical value of a sample data is selected on the basis of sample data of a prediction residual that is a difference between sample data of the image data and a prediction value of the sample data of the image data, and identification information of the selected nonlinear transformation table and the residual nonlinear transformation table is included in the control information, and a compression method for generating a prediction value for the image data to be input and compressing the image data by entropy coding difference information obtained from a difference between the image data and the prediction value is used, a nonlinear transformation on the image data to be input according to the nonlinear transformation table is performed, and a nonlinear transformation is performed on a prediction residual to which a nonlinear transformation has been applied, the prediction residual being a difference between the image data to which the nonlinear transformation has been applied and the prediction value generated for the image data to which the nonlinear transformation has been applied, according to the residual nonlinear transformation table.

An information processing apparatus according to one aspect of the present disclosure is an information processing apparatus including: a computing unit that performs inference using input data and a neural network and outputs a processing result obtained by processing a feature amount obtained from the input data as a computing result; a compression unit that compresses the feature amount input from the computing unit and records a compressed feature amount that is the feature amount having been compressed in a memory; and a decoding unit that decodes the compressed feature amount temporarily recorded in the memory and outputs the decoded feature amount to the computing unit, in which the feature amount is three-dimensional data in which a feature amount of an xy plane is configured for each channel in a z direction, and the compression unit uses a compression scheme for generating a prediction value for data of the feature amount to be input and compressing the feature amount by entropy coding difference information obtained from a difference between the data of the feature amount and the prediction value, and in a case where a compression method for grouping the data of the feature amount in a second direction corresponding to a z direction is set as the compression method of the feature amount, generates the prediction value by prediction in a first direction corresponding to an xy plane of the same channel as the data of the feature amount, and packs the difference information obtained from a difference between the data of the feature amount and the prediction value in the second direction.

In the information processing apparatus according to one aspect of the present disclosure, inference using input data and a neural network is performed and a processing result obtained by processing a feature amount obtained from the input data is output as a computing result, the feature amount to be input is compressed and a compressed feature amount that is the feature amount having been compressed is recorded in a memory, and the compressed feature amount temporarily recorded in the memory is decoded and the decoded feature amount is output. In addition, the feature amount is three-dimensional data in which a feature amount of an xy plane is configured for each channel in a z direction, a compression method for generating a prediction value for data of the feature amount to be input and compressing the feature amount by entropy coding difference information obtained from a difference between the data of the feature amount and the prediction value is used, and in a case where a compression method for grouping the data of the feature amount in a second direction corresponding to a z direction is set as the compression method of the feature amount, the prediction value is generated by prediction in a first direction corresponding to an xy plane of the same channel as the data of the feature amount, and the difference information obtained from a difference between the data of the feature amount and the prediction value is packed in the second direction.

Note that the information processing apparatus according to one aspect of the present disclosure may be an independent apparatus or an internal block constituting one device.

## BRIEF DESCRIPTION OF DRAWINGS

Fig. 1 is a diagram illustrating a configuration example of a conventional machine learning inference unit.
Fig. 2 is a diagram illustrating a relationship between a data amount required for processing for each layer and a memory size.
Fig. 3 is a diagram illustrating a data configuration example of a feature amount of a DNN.
Fig. 4 is a diagram illustrating an example of a data access method of DNN processing.
Fig. 5 is a diagram illustrating a configuration example of an embodiment of a machine learning inference unit to which the present disclosure is applied.
Fig. 6 is a diagram illustrating a configuration example of a network preliminary analyzer in Fig. 5.
Fig. 7 is a diagram illustrating a network configuration example of a DNN.
Fig. 8 is a diagram illustrating an example of a data size of weight data.
Fig. 9 is a diagram illustrating an example of a data size of a feature map.
Fig. 10 is a flowchart illustrating a flow of calculation of a compression rate of a feature amount.
Fig. 11 is a diagram illustrating a calculation example of a data size of a feature map required in each layer.
Fig. 12 is a diagram illustrating an example of a data size of a feature map required in each layer.
Fig. 13 is a diagram illustrating an example of a maximum target rate of each layer.
Fig. 14 is a diagram illustrating an example of a target rate of each layer.
Fig. 15 is a diagram illustrating a calculation example of a target rate for each feature map.
Fig. 16 is a diagram illustrating an example of a target rate for each feature map.
Fig. 17 is a diagram illustrating an example of DNN processing.
Fig. 18 is a diagram illustrating a compression method suitable for each processing of DNN processing.
Fig. 19 is a flowchart illustrating a flow of determination of a compression method of a feature amount.
Fig. 20 is a diagram illustrating an example of a determination table for determining a compression method of a feature amount.
Fig. 21 is a diagram illustrating an example of a determination table for determining a compression method of a feature amount.
Fig. 22 is a diagram illustrating an example of a determination table for determining a compression method of a feature amount.
Fig. 23 is a diagram illustrating an example of a determination table for determining a compression method of a feature amount.
Fig. 24 is a diagram illustrating an example of priority of an access method.
Fig. 25 is a diagram illustrating an example of a determination table for determining a compression method of a feature amount.
Fig. 26 is a diagram illustrating an example of a final determination table.
Fig. 27 is a diagram illustrating an example of coding control information.
Fig. 28 is a diagram illustrating a configuration example of a compression unit in Fig. 5.
Fig. 29 is a diagram illustrating an example of feature amount compression in a case of using a spatial direction collection compression method.

Fig. 30 is a diagram illustrating an example of feature amount compression in a case of using a depth direction collection compression method.

Fig. 31 is a diagram illustrating a configuration example of a decoding unit in Fig. 5.

Fig. 32 is a diagram illustrating an example of data rearrangement processing by a data rearrangement unit in Fig. 31.

Fig. 33 is a diagram illustrating another configuration example of an embodiment of a machine learning inference unit to which the present disclosure is applied.

Fig. 34 is a diagram illustrating a configuration example of a network preliminary analyzer in Fig. 33.

Fig. 35 is a diagram illustrating a configuration example of a control parameter generation unit in Fig. 34.

Fig. 36 is a diagram illustrating a configuration example of a nonlinear transformation table selection unit in Fig. 35.

Fig. 37 is a diagram illustrating an example of variation of nonlinear transformation.

Fig. 38 is a diagram illustrating a configuration example of a prediction calculation parameter calculation unit in Fig. 35.

Fig. 39 is a diagram illustrating an example of prediction value generation and packing in a case where inter-channel prediction is used.

Fig. 40 is a diagram illustrating an example of prediction value generation in a case where spatial direction prediction and inter-channel prediction are used.

Fig. 41 is a diagram illustrating an example of prediction calculation parameters.

Fig. 42 is a diagram illustrating an example of a reference channel and a prediction method different for each channel.

Fig. 43 is a diagram illustrating an example of prediction value generation and packing in a case where spatial direction prediction and inter-channel prediction are used.

Fig. 44 is a diagram illustrating a configuration example of a residual nonlinear transformation table selection unit in Fig. 35.

Fig. 45 is a diagram illustrating an example of variations of residual nonlinear transformation.

Fig. 46 is a diagram illustrating an example of selection of an entropy coding table by the entropy coding table selection unit in Fig. 35.

Fig. 47 is a diagram illustrating an example of coding control information.

Fig. 48 is a diagram illustrating a configuration example of a compression unit in Fig. 33.

Fig. 49 is a diagram illustrating a configuration example of a decoding unit in Fig. 33.

Fig. 50 is a diagram schematically illustrating DNN.

Fig. 51 is a diagram illustrating a configuration of each layer of a DNN.

Fig. 52 is a diagram illustrating an example of an activation function.

Fig. 53 is a diagram illustrating an example in which a feature map is temporarily stored in a memory as a DNN mounting method.

Fig. 54 is a flowchart illustrating a flow of conventional DNN processing.

Fig. 55 is a diagram illustrating a configuration and an operation of a DNN system that executes conventional DNN processing.

Fig. 56 is a diagram illustrating an example in which a feature map is compressed and stored in a memory.

Fig. 57 is a diagram illustrating an example of compression in a DPCM mode.

Fig. 58 is a diagram illustrating frequencies of input data and difference data in a DPCM mode.

Fig. 59 is a diagram illustrating an example of rearrangement of data subjected to channel interleaving.

Fig. 60 is a diagram illustrating an example of compression in a direct compression mode.

Fig. 61 is a diagram illustrating a first example in a case where a frequency deviation of feature amount data is asymmetric.

Fig. 62 is a diagram illustrating a second example in a case where a frequency deviation of feature amount data is asymmetric.

Fig. 63 is a diagram illustrating a first example in a case where a frequency deviation of feature amount data is symmetric.

Fig. 64 is a diagram illustrating a second example in a case where a frequency deviation of feature amount data is symmetric.

Fig. 65 is a diagram illustrating an example of pre-processing introduced into a coding side.

Fig. 66 is a diagram illustrating an example of post-processing introduced on a decoding side.

Fig. 67 is a diagram illustrating an example of determination of a compression parameter by a network preliminary analyzer.

Fig. 68 is a diagram illustrating an example of inference processing by a machine learning computing unit.

Fig. 69 is a flowchart illustrating a flow of DNN processing by the machine learning computing unit.

Fig. 70 is a diagram illustrating a configuration and an operation of a DNN system that executes DNN processing.

Fig. 71 is a flowchart illustrating a flow of compression parameter determination processing by the network preliminary analyzer.

Fig. 72 is a diagram illustrating a mode value and a minimum value of feature amount data.
Fig. 73 is a diagram illustrating a configuration example of an asymmetric coder.
Fig. 74 is a diagram illustrating an example of a variable-length code table in Fig. 73.
Fig. 75 is a diagram illustrating a configuration example of an asymmetric decoder.
Fig. 76 is a diagram illustrating an example of a variable-length code table in Fig. 75.
Fig. 77 is a diagram illustrating a configuration example of a symmetric coder.
Fig. 78 is a diagram illustrating an example of a variable-length code table in Fig. 77.
Fig. 79 is a diagram illustrating a configuration example of a symmetric decoder.
Fig. 80 is a diagram illustrating an example of a variable-length code table in Fig. 79.
Fig. 81 is a diagram illustrating a configuration example of a compression unit.
Fig. 82 is a diagram illustrating a configuration example of a decoding unit.
Fig. 83 is a diagram illustrating asymmetric pre-processing in a pre-processing unit.
Fig. 84 is a diagram illustrating asymmetric post-processing in the post-processing unit.
Fig. 85 is a diagram illustrating symmetric pre-processing in a pre-processing unit.
Fig. 86 is a diagram illustrating symmetric post-processing in the post-processing unit.
Fig. 87 is a diagram illustrating an example of refinement processing.
Fig. 88 is a diagram illustrating another configuration example of a compression unit.
Fig. 89 is a diagram illustrating another configuration example of a decoding unit.
Fig. 90 is a diagram illustrating a configuration example of a compressed stream in a case where quantized data includes non-zero.
Fig. 91 is a diagram illustrating a configuration example of a compressed stream in a case where all quantized data is 0.
Fig. 92 is a block diagram illustrating a configuration example of a computer.

## MODE FOR CARRYING OUT THE INVENTION

### <Conventional Configuration>

Fig. 1 is a diagram illustrating a configuration example of a conventional machine learning inference unit.

In Fig. 1, a machine learning inference unit 11 is a computing unit that performs inference of machine learning. The machine learning inference unit 11 performs inference processing of machine learning such as deep learning on the basis of network information and input data input thereto, and outputs a computing result obtained as a result to the outside. A deep neural network (DNN) is one in which the neural network is made deep into four or more layers corresponding to deep learning. The input data is data such as image data.

The machine learning inference unit 11 includes a computing unit 21, a compression unit 22, a decoding unit 23, and a memory 24. In a case where inference processing of machine learning such as deep learning is performed, the computing unit 21 temporarily records a feature amount such as a feature map of each layer in the memory 24. The computing unit 21 can read the feature amount recorded in the memory 24 in processing of the next layer or the like and use the feature amount for computation. The memory 24 is configured by a static random access memory (SRAM) or the like and incorporated in the computing unit 21, or configured by a dynamic random access memory (DRAM) or the like and externally connected to the computing unit 21.

In recent years, in inference processing of machine learning such as deep learning, the data size of the feature amount is large, which may cause an increase in cost in a case where processing on a mobile edge or the like is assumed. Whether the memory 24 is incorporated inside the computing unit 21 or externally connected to the computing unit 21, a use amount of the memory 24 and the amount of data communication between the computing unit 21 and the memory 24 become problems. In order to solve such a problem, in the machine learning inference unit 11, the compression unit 22 and the decoding unit 23 are provided between the computing unit 21 and the memory 24 to reduce the data amount.

The compression unit 22 compresses the feature amount input from the computing unit 21, writes the compressed feature amount in the memory 24, and temporarily records the compressed feature amount. The decoding unit 23 reads and decodes the compressed feature amount recorded in the memory 24, and outputs the decoded feature amount to the computing unit 21.

Here, it is assumed that there is a deep neural network (DNN) in which a feature amount having a data size exceeding an available memory size is generated with respect to the memory 24 having a predetermined finite memory size. In general, in a case where the data size of the feature amount exceeds the memory size, inference processing cannot be performed. On the other hand, since the machine learning inference unit 11 is provided with the compression unit 22 and the decoding unit 23, the inference processing in the computing unit 21 can be performed in a case where the data size of the feature amount after compression is smaller than the memory size.

Fig. 2 is a diagram illustrating a relationship between a data amount required for processing for each layer and a memory size. In Fig. 2, the horizontal axis represents the DNN layer, and the vertical axis represents the data amount required for processing of each layer. Further, a broken line in a horizontal direction in the drawing indicates the memory size of the memory 24. In Fig. 2, a subsequent layer is illustrated as proceeding in the direction of the horizontal axis. However, as illustrated by a bar graph, the data amount required for processing in the subsequent layer tends to be smaller than that in the preceding layer. At this time, if the compression rate used in the compression by the compression unit 22 is uniformly set, unnecessary compression may be performed in the processing of the subsequent layer in which the data amount is less than the memory size, or appropriate compression may not be applied in the processing of the preceding layer in which the data amount exceeds the memory size.

As in the method disclosed in Patent Document 1 described above, in a method of comparing uncompressed data and compressed data and applying compression only in a case where there is a gain of compression, a compression system in which a compression rate of data dynamically changes, but since a data size after compression cannot be defined, there are cases where inference can be made by input data and cases where inference cannot be made. A method in which possibility of inference changes depending on input data is practically inconvenient and needs to be improved.

Furthermore, by selecting an appropriate compression method in consideration of the property and use method of the data of the feature amount of the DNN, more appropriate compression of the feature amount can be performed. In general, the feature amount of the DNN is often expressed as three-dimensional data as illustrated in Fig. 3. In Fig. 3, an xy plane indicates a position of a feature amount in a spatial direction, and a z direction indicates a channel direction of the feature amount. In Fig. 3, the feature amount f is three-dimensional data in which the feature amount of the xy plane is configured for each channel in the z direction, and includes the feature amounts f10 to f16 corresponding to the channels #0 to #6.

In general, the feature amount to be compressed in the inference processing of the DNN (hereinafter, it is also referred to as DNN processing) is often a feature generated at the initial stage of the DNN processing. In this case, the correlation in the xy spatial direction is high, but the correlation in the z direction is low. However, the z direction is not completely uncorrelated, and there is a case where there is a loose correlation between channels of some feature amounts. However, it is difficult to dynamically determine the correlation between the feature amounts when using the feature amounts from the viewpoint of processing cost, and there is room for improvement in the use of the correlation in the z direction. In addition, there is a plurality of types of methods as data access methods that can be used in the DNN processing.

Fig. 4 is a diagram illustrating an example of a data access method of DNN processing. For example, as illustrated in A of Fig. 4, there is depth wise access for reading/writing data in a spatial direction like image data. In A of Fig. 4, as indicated by an arrow s in the drawing, the channels are fixed, and data is accessed in the spatial direction in units of channels. Further, as illustrated in B of Fig. 4, there is pixel wise access in which data is read/written in a channel direction while spatial coordinates are fixed. In B of Fig. 4, as indicated by an arrow d in the drawing, in the case of image data, pixels (pixels) are fixed, and data is accessed in the channel direction. Note that pixel wise access is also referred to as point wise access.

As described above, in the conventional configuration, by providing the compression unit 22 and the decoding unit 23 between the computing unit 21 and the memory 24, in a case where the data size of the compressed data is smaller than the memory size, the computing unit 21 can perform the inference processing, but there are cases where the inference processing cannot be performed depending on the compression or decoding method. Furthermore, when the compression by the compression unit 22 is applied, by appropriately selecting a compression method in consideration of the data access method of the DNN processing while using the correlation in the spatial direction of the feature amount of the DNN, more appropriate compression of the feature amount can be performed. Therefore, the present disclosure proposes a configuration obtained by improving the conventional configuration.

## <<First Configuration of Present Disclosure>>

### <Configuration of Machine Learning Inference Unit>

Fig. 5 is a diagram illustrating a configuration example of an embodiment of a machine learning inference unit to which the present disclosure is applied. In Fig. 5, the machine learning inference unit 100 includes a network preliminary analyzer 110 and a machine learning computing unit 111.

The network preliminary analyzer 110 analyzes network information input thereto, and outputs coding control information obtained as a result of the analysis to the machine learning computing unit 111. The network information is information regarding a neural network such as a deep neural network (DNN) used for inference of machine learning. The coding control information is control information for controlling compression and decoding of a feature amount processed by machine learning.

The machine learning computing unit 111 is a computing unit that performs inference of machine learning such as deep learning. The machine learning computing unit 111 performs inference processing of machine learning on the basis of network information and input data input thereto, and outputs a computation result obtained as a result to the outside.

The input data is data such as image data.

The machine learning computing unit 111 includes a computing unit 121, a compression unit 122, a decoding unit 123, and a memory 124. The computing unit 121 is a computing unit that performs inference processing of machine learning such as deep learning and outputs a processing result obtained by processing a feature amount obtained from input data as a computing result. In a case where deep learning inference processing (DNN processing) is performed, the computing unit 121 temporarily records (holds) the feature amount such as the feature map of each layer processed by the deep neural network (DNN) in the memory 124 as appropriate.

The compression unit 122 and the decoding unit 123 are provided between the computing unit 121 and the memory 124. The coding control information from the network preliminary analyzer 110 is input to the compression unit 122 and the decoding unit 123. The memory 124 includes an SRAM or the like incorporated in the computing unit 121, or includes a DRAM or the like externally connected to the computing unit 121.

The compression unit 122 is a compressor that performs compression processing of compressing a feature amount such as a feature map. The compression unit 122 compresses the feature amount input from the computing unit 121 on the basis of the coding control information from the network preliminary analyzer 110. The compression unit 122 writes the compressed feature amount, which is the feature amount having been compressed, in the memory 124 as a compressed stream. In addition, in a case of not compressing the feature amount, the compression unit 122 writes the feature amount in the memory 124 as an uncompressed stream. As a result, the data of the compressed stream and the uncompressed stream is temporarily recorded in the memory 124.

The decoding unit 123 is a decoder that performs decoding processing of decoding the compressed feature amount compressed by the compression unit 122 into a feature amount. The decoding unit 123 appropriately reads data of the compressed stream or the uncompressed stream temporarily recorded in the memory 124. The decoding unit 123 decodes the compressed stream read from the memory 124 from the compressed feature amount into the feature amount on the basis of the coding control information from the network preliminary analyzer 110. The decoding unit 123 outputs the feature amount decoded from the compressed feature amount or the feature amount read as the uncompressed stream to the computing unit 121.

As described above, in the machine learning inference unit 100, before the machine learning computing unit 111 performs the inference processing of the machine learning, the network preliminary analyzer 110 analyzes the network information used in the machine learning, and inputs the coding control information obtained as a result of the analysis to the machine learning computing unit 111. Then, in the machine learning computing unit 111, when the computing unit 121 performs the inference processing of the machine learning, the feature amount processed by the neural network such as the DNN is temporarily recorded in the memory 124, but the feature amount recorded in the memory 124 is compressed by the compression unit 122 on the basis of the coding control information as necessary and decoded by the decoding unit 123.

<Configuration of Network Preliminary Analyzer>

Fig. 6 is a diagram illustrating a configuration example of the network preliminary analyzer 110 in Fig. 5. In Fig. 6, the network preliminary analyzer 110 includes a detection unit 141, a compression rate calculation unit 142, and a compression method determination unit 143.

The detection unit 141 analyzes (parses) the network information input thereto to detect the data size of the weight processed by the neural network and the data size of the feature amount, and outputs the detection result to the compression rate calculation unit 142.

The compression rate calculation unit 142 calculates and outputs the compression rate of the feature amount on the basis of the detection result from the detection unit 141. When the compression rate of the feature amount is calculated, the optimum compression rate is calculated by using information such as the network configuration of the neural network and the available memory size in the memory 124 in addition to the data size of the weight and the data size of the feature amount. The optimum compression rate calculated here can be designated as a target rate of compression in the compression processing by the compression unit 122, and thus is hereinafter also referred to as a target rate. Details of the calculation of the compression rate of the feature amount will be described later with reference to Figs. 7 to 16.

The network information and the compression rate of the feature amount from the compression rate calculation unit 142 are input to the compression method determination unit 143. The compression method determination unit 143 determines and outputs a compression method of the feature amount on the basis of the network information and the compression rate of the feature amount. When the compression method of the feature amount is determined, the presence or absence of compression is determined by using the compression rate of the feature amount, and the compression method optimal for the DNN processing is determined by analyzing the network information. Details of the determination of the compression method of the feature amount will be described later with reference to Figs. 17 to 27.

As described above, in the network preliminary analyzer 110, the compression rate (target rate) calculated by the compression rate calculation unit 142 and the compression method determined by the compression method determination unit 143 are obtained for each of the feature amounts of the feature amounts #0 to #N, and are output as the coding control information.

<Calculation of Compression Rate of Feature Amount>

An example of calculation of the compression rate of the feature amount by the compression rate calculation unit 142 in Fig. 6 will be described with reference to Figs. 7 to 16.

In this example, a case where the memory 124 is configured with an SRAM in the machine learning computing unit 111 and the available memory size is 32 kilobytes (KB) will be described. Furthermore, in this example, the network information input to the network preliminary analyzer 110 will be described using the network configuration of the DNN illustrated in Fig. 7. In the network configuration of Fig. 7, the feature map is processed as the feature amount. Convolutional Neural Network (CNN) is one of DNN methods, and here, a case where CNN is used will be exemplified.

In Fig. 7, the DNN includes four layers of pixel wise conv-1, depth wise conv, and pixel wise conv-2, add. Note that "conv" is an abbreviation for "convolution". The weight of the pixel wise conv-1 is weight1, the weight of the depth wise conv is weight2, and the weight of the pixel wise conv-2 is weight3. The feature map1 to the feature map5 represent feature maps.

The pixel wise conv-1 performs layer processing (pixel wise convolution) using the weight1 on the feature map1 input thereto, and outputs the feature map2 obtained as a result. The feature map2 output from the pixel wise conv-1 is input to the depth wise conv and the add. The depth wise conv performs layer processing (depth wise convolution) using the weight2 on the feature map2 input thereto, and outputs the feature map3 obtained as a result. The feature map3 output from the depth wise conv is input to the pixel wise conv-2.

The pixel wise conv-2 performs layer processing (pixel wise convolution) using the weight3 on the feature map3 input thereto, and outputs the feature map4 obtained as a result. The feature map4 output from the pixel wise conv-2 is input to the add. The add performs addition processing of adding the feature map2 and the feature map4 input thereto, and outputs the feature map5 obtained as a result.

Further, in this example, a case where the weight and the data size of the feature map illustrated in Figs. 8 and 9 are detected by the detection unit 141 will be described. Note that the weight and the feature map before compression are each data of 8 bits/sample.

Fig. 8 is a diagram illustrating an example of a data size of a weight. As illustrated in Fig. 8, the data sizes of the weight1, the weight2, and the weight3 are 128 bytes, 288 bytes, and 256 bytes from the kernel sizes represented by the respective tensors, and the sum thereof is 672 bytes.

Fig. 9 is a diagram illustrating an example of the data size of the feature map. As illustrated in Fig. 9, the data sizes of the feature map1, the feature map2, the feature map3, the feature map4, and the feature map5 are 19200 bytes, 9600 bytes, 38400 bytes, 9600 bytes, and 9600 bytes from the sizes represented by the respective tensors.

The flowchart of Fig. 10 illustrates a flow of calculation of the compression rate of the feature amount performed by the compression rate calculation unit 142.

First, the compression rate calculation unit 142 calculates the work buffer size from the available memory size of the memory 124 and the data size of the weight (S11). The work buffer size is a memory size that can be actually used to temporarily record the feature amount in the memory 124, and is calculated by, for example, the following Formula (1).
[Math. 1]

$$workBufferSize = totalRAMSize - weigtDataSize \quad \cdots (1)$$

In Formula (1), totalRAMSize represents an available memory size of the memory 124, and weightDataSize represents a data size of a weight. In this example, totalRAMSize is 32 kilobytes, weightDataSize is 672 bytes, and workBufferSize = 32000 - 672 = 31328 bytes is calculated by applying Formula (1). Therefore, the work buffer size is 31328 bytes. In addition, a memory size to be used for the weight can be secured in advance.

Next, the compression rate calculation unit 142 obtains the data size of the feature map required for each layer (S12). Here, the data size of the input and output feature maps for each layer and the data size of the feature map skipped during the layer processing are calculated. The total value of the data size of the feature map at the time of input/output to the corresponding layer and the data size of the feature map skipped at the time of the corresponding layer processing is the data size of the feature map at the time of uncompression.

Fig. 11 is a diagram illustrating a calculation example of a data size of a feature map required in each layer. As illustrated in Fig. 11, since in the pixel wise conv-1, the feature map1 of 19200 byte is input and the feature map2 of 9600 byte is output, the total value of the data sizes of the feature maps is 28800 bytes, and since in the depth wise conv, the feature map2 of 9600 bytes is input and the feature map3 of 38400 bytes is output, the total value of the data sizes of the feature maps is 48000 bytes.

In the pixel wise conv-2, the feature map3 of 38400 bytes is input, the feature map4 of 9600 bytes is output, and the feature map2 of 9600 bytes is skipped, so that the total value of the data sizes of the feature maps is 57600 bytes, and since the feature map2 of 9600 bytes and the feature map4 of 9600 bytes are input to the add and the feature map5 of 9600 bytes is output, the total value of the data sizes of the feature maps is 28800 bytes.

Next, the compression rate calculation unit 142 calculates the target rate of each layer from the data size of the feature map and the work buffer size required for each layer (S13). Here, the target rate after compression is calculated from the ratio between the data size of the feature map and the work buffer size. In addition, in a case where the target rate exceeds the rate at the time of uncompression, that is, in a case where the target rate exceeds the data size at the time of uncompression, it is determined that there is no need for compression, and the original data size is assigned. Further, in a case where the compression rate of the target rate includes a fractional part, the fractional part is assigned to the integer part and the integer value thereof is used for the purpose of simplifying the computation of the rate control. As a result, the compression rate required for each layer processing can be defined.

In this example, the data size of the feature map required in each layer is 28800 bytes for the pixel wise conv-1, 48000 bytes for the depth wise conv, 57600 bytes for the pixel wise conv-2, and 28800 bytes for the add as illustrated in Fig. 12, and the maximum target rate of each layer as illustrated in Fig. 13 can be obtained by applying the following Formula (2).

[Math. 2]

$$MaxTargetRate = 8 \times \frac{workBufferSize}{feature\ map\ data\ size} \quad \cdots \quad (2)$$

In addition, the target rate of each layer as illustrated in Fig. 14 can be obtained by applying the following Formula (3) to the maximum target rate obtained by Formula (2).

[Math. 3]

$$LayerTargetRate = min(8, int(MaxTargetRate)) \quad \cdots \quad (3)$$

Note that, in Formula (3), int () is a function that rounds down the fractional part to an integer. min () is a function that returns the smallest numerical value, and the target rate of each layer does not exceed 8 bits/sample.

In this example, as illustrated in Figs. 12 to 14, the target rate (unit: bit/sample) for each layer is obtained as follows. That is, since in the pixel wise conv-1, the data size of the required feature map is 28800 bytes, the maximum target rate is 8.702222222, and the target rate is 8. Since in the depth wise conv, the required data size of the feature map is 48000 bytes, the maximum target rate is 5.221333333, and the target rate is 5. Since in the pixel wise conv-2, the data size of the required feature map is 57600 bytes, the maximum target rate is 4.351111111, and the target rate is 4. Since in the add, the data size of the required feature map is 28800 bytes, the maximum target rate is 8.702222222, and the target rate is 8.

Next, the compression rate calculation unit 142 calculates a target rate for each feature amount from the target rate of each layer (S14). Here, the target rate at which the processing of each layer can be executed is calculated in step S13 described above, but since the feature map is used in a plurality of layers, it is necessary to perform processing at the minimum target rate throughout the processing. For example, as illustrated in the network configuration of Fig. 7, the feature map2 is used in three layers of the pixel wise conv-1, the depth wise conv, and the add. At this time, as illustrated in Fig. 14, the target rates set for the respective layers are 8, 5, 4, and 8 bits/sample, but by selecting 4 which is the minimum value thereof, the target rate for the feature map can be calculated.

Fig. 15 is a diagram illustrating a calculation example of the target rate for each feature map. In Fig. 15, a case where each feature map is not input or output to the corresponding layer is described as "non-reference". However, since the pixel wise conv-2 skips the feature map2, this is considered in the feature map2.

Since the feature map1 is used in the pixel wise conv-1, the target rate that is the minimum value of the feature map1 and is 8 bits/sample is the target rate of the feature amount. Since the feature map2 is used in the pixel wise conv-1, the depth wise conv, the pixel wise conv-2, and the add, 4 bits/sample which is the minimum value of the feature map2 is the target rate of the feature amount.

Since the feature map3 is used in the depth wise conv and the pixel wise conv-2, 4 bits/sample which is the minimum value of the feature map3 is the target rate of the feature amount. Since the feature map4 is used in the pixel wise conv-2 and the add, 4 bits/sample which is the minimum value of the feature map4 is the target rate of the feature amount. Since the feature map5 is used in the add, 8 bits/sample which is the minimum value of the feature map5 is the target rate of the feature amount.

When step S14 in Fig. 10 ends, the processing ends. In this way, by performing the processing illustrated in the flowchart of Fig. 10, the target rates of 8, 4, 4, 4, and 8 bits/sample are calculated for the feature maps which are the feature maps1 to the feature maps5 as illustrated in Fig. 16.

<Determination of Compression Method of Feature Amount>

An example of determination of the compression method of the feature amount by the compression method determination unit 143 in Fig. 6 will be described with reference to Figs. 17 to 27.

In the DNN processing executed by the computing unit 121, a data access method is different for each processing to be applied. Fig. 17 illustrates processing concepts of depth wise convolution and pixel wise convolution used in MobileNet and the like. MobileNet is a lightweight and highly accurate CNN architecture that can be used with limited resources such as mobile terminals. Note that the pixel wise convolution is also referred to as point wise convolution.

As illustrated in Fig. 17, in a case where the feature amounts of three channels of RGB are input, both the depth wise convolution and the pixel wise convolution refer to all of the input feature amounts, but the reference order is different depending on whether data in the space is read continuously or whether data in the space is read with a fixed spatial position with priority given to a channel direction (depth direction). Therefore, the compression method applied in the present disclosure is also preferably a compression method according to the data access method of each processing.

For example, in a case where the depth wise convolution is performed as the DNN processing, since the access order is continuous in the spatial direction, the compression method (hereinafter, it is also referred to as a "spatial direction collection compression method") in which the data in the spatial direction is collected is effective as indicated by planar squares s1 to s4 in the xy direction in A of Fig. 18. On the other hand, in a case where the pixel wise convolution is performed as the DNN processing, the data access order is in the depth direction, and thus, as illustrated by three-dimensional squares d1 to d4 in the z direction in B of Fig. 18, the compression method (hereinafter, it is also referred to as "depth direction collection compression method") in which the data in the depth direction is collected is effective.

The flowchart of Fig. 19 illustrates a flow of determination of the compression method of the feature amount performed by the compression method determination unit 143.

First, the compression method determination unit 143 determines whether it is necessary to compress the feature map from the compression rate of the feature map calculated by the compression rate calculation unit 142 (S21). Here, it is possible to determine whether or not it is necessary to compress the feature map on the basis of whether or not the compression rate calculated for each feature map is a predetermined value or more.

In a case where it is determined in step S21 that there is no need to perform compression, the compression method determination unit 143 selects uncompression as the compression method of the feature map and outputs the determination result (S22). That is, in a case where the target rate exceeds the rate at the time of uncompression, there is no need to perform compression, and uncompression is designated in the corresponding feature map. By designating uncompression and not performing unnecessary compression, for example, power consumption can be reduced.

On the other hand, in a case where it is determined in step S21 that the compression needs to be performed, the compression method determination unit 143 selects the compression method of the feature map and outputs the decision result (S23). Here, according to the data access method for each layer referring to each feature map, spatial direction collection or depth direction collection is designated as the compression method.

When steps S22 and S23 end, the processing ends. That is, uncompression, spatial direction collection, or depth direction collection is designated as the compression method for each feature map.

In this example, as illustrated in Fig. 16, target rates of 8, 4, 4, 4, and 8 bits/sample are calculated for the feature maps which are the feature map1 to the feature map5 by calculation of the compression rate of the feature amount, and compression or uncompression is selected according to these target rates. Here, a procedure until an optimum compression method is determined for each feature map will be described using the determination tables illustrated in Figs. 20 to 23 and 25 and the table illustrated in Fig. 24 for convenience.

The feature map1 and the feature map5 do not need to be compressed because the target rate is 8 bits/sample, which exceeds the data size at the time of uncompression. Therefore, as illustrated in the determination table of Fig. 20, the compression methods of the feature map1 and the feature map5 are described as "uncompressed".

Next, as illustrated in the determination table of Fig. 21, desired access methods are described in the columns of the pixel wise conv-1, the depth wise conv, the pixel wise conv-2, and the add. For example, in the case of the pixel wise conv-2, the feature map3 is read as an input. In this case, hatching is described for the feature maps1, 2, 4, and 5 that are not directly referred to, and the feature map3 is described as "pixel-wise" with good access efficiency in the pixel wise conv-2.

By applying similar judgment to each column, in the pixel wise conv-1, "pixel-wise" is described for the feature map1, and hatching is described for the feature maps2, 3, 4, and 5. In the depth wise conv, "depth-wise" is described for the feature map2, and oblique lines are described for the feature maps1, 3, 4, and 5. In the case of the add for adding each element of the feature map, the feature map2 and the feature map4 are read as inputs, but both "depth-wise" and "pixel-wise" can be easily supported. Therefore, "don’t care" is described for the feature maps2 and 4, and hatching is described for the feature maps1, 3, and 5.

Next, a method of determining the compression methods of the feature maps2 and 3 will be described with reference to the determination tables in Figs. 22 and 23. The compression method is determined in units of columns in the determination table.

First, reference is made only from one layer processing, and an advantageous compression method is determined from a feature map that can be uniquely specified. As illustrated in the determination table of Fig. 22, feature maps referred to from only one layer processing include the feature map3 and the feature map4. The feature map3 is referred to only from the pixel wise conv-2, and the depth direction collection compression method is effective, so that the determined compression method can be uniquely specified as "depth direction collection". The feature map4 is referred to only from the add, but an access method of the add is "don't care", and therefore a compression method of the feature map4 is not yet determined.

Next, a compression method is determined for the feature map referred from the two or more pieces of layer processing. As illustrated in the determination table of Fig. 23, the feature map2 is referred to from the two layer pieces of processing of the depth wise conv and the add. Since the optimum access methods are "depth-wise" and "don't care", "depth-wise" having a higher priority is selected according to the priority of the access method in Fig. 24. In the table of Fig. 24, "depth-wise" and "pixel-wise" are managed to have higher priority than "don't care" by a numerical value indicating priority.

Then, as illustrated in the determination table of Fig. 23, "don't care" of the add in the feature map2 is overwritten with "depth-wise", and "spatial direction collection" is described in the determined compression method. Note that, although not present in this example, it is also assumed that priority levels of access methods are the same, such as "depth-wise" and "pixel-wise." In this case, for example, it is desirable to appropriately select an optimum access method from a processing order of the entire network, characteristics of a computing unit, and the like.

Finally, a case where there is only one layer processing to be accessed as in the feature map4 but an access method is not uniquely determined as in "don't care" or the like will be described with reference to the determination table in Fig. 25.

Here, when the column of the add is confirmed in the determination table of Fig. 25, it can be confirmed that "don't care" of the add in the feature map2 is replaced with "depth-wise" according to the procedure immediately before illustrated in the determination table of Fig. 23. As described above, in a case where a setting other than "don't care" is set in the same column, "don't care" of the add in the feature map4 is overwritten with "depth-wise" with reference to "depth-wise" of the add in the feature map2, and the determined compression method is described as "spatial direction collection".

Note that, also here, a case where priorities of access methods are the same, such as "depth-wise" and "pixel-wise", or a case where only "don't care" exists is assumed. In this case, for example, it is desirable to appropriately select an optimum access method from a processing order of the entire network, characteristics of a computing unit, and the like.

To summarize the above, the determination table finally created is as the determination table in Fig. 26. That is, as illustrated in the determination table of Fig. 26, the feature maps1 and 5 are uncompressed, the feature map2 is a spatial direction collection compression method, the feature map3 is a depth direction collection compression method, and the feature map4 is a spatial direction collection compression method.

In the network preliminary analyzer 110, since the compression rate (target rate) calculated by the compression rate calculation unit 142 and the compression method determined by the compression method determination unit 143 are obtained for each feature amount such as the feature map, they are aggregated and output as the coding control information. Fig. 27 is a diagram illustrating an example of the coding control information. In the coding control information of Fig. 27, the target rate of Fig. 16 and the compression method of Fig. 26 are aggregated, and the target rate and the compression method are associated with each feature map of the feature maps1 to 5.

More specifically, in the feature map1, the target rate is 8 bits/sample, and the compression method is "uncompressed". In addition, in the feature map2, the target rate is 4 bits/sample and the compression method is "spatial direction collection", and in the feature map3, the target rate is 4 bits/sample and the compression method is "depth direction collection". In addition, in the feature map4, the target rate is 4 bits/sample and the compression method is "spatial direction collection", and in the feature map5, the target rate is 8 bits/sample and the compression method is "uncompressed".

<Configuration of Compression Unit>

Fig. 28 is a diagram illustrating a configuration example of the compression unit 122 in Fig. 5.

The compression unit 122 generates a compressed feature amount obtained by compressing the feature amount input from the computing unit 121 on the basis of the coding control information from the network preliminary analyzer 110, and outputs the compressed feature amount as a compressed stream, or outputs an uncompressed feature amount as an uncompressed stream. The stream for each feature amount including the compressed stream or the uncompressed stream is output from the compression unit 122 to the memory 124, and the data thereof is temporarily recorded.

In Fig. 28, the compression unit 122 includes a data extraction unit 161, a switch 162, an addition unit 163, a quantization unit 164, an entropy coding unit 165, an inverse quantization unit 166, an addition unit 167, a work buffer 168, and a prediction value generation unit 169. The coding control information input to the compression unit 122 includes a target rate and a compression method for each feature amount, and each unit of the compression unit 122 is dynamically controlled in accordance with these pieces of information (parameters).

The target rate is input to the quantization unit 164 and the inverse quantization unit 166. The compression method is input to the data extraction unit 161, the switch 162, and the prediction value generation unit 169. In Fig. 28, the data of the feature amount #N and the coding control information of the feature amount #N are input to the compression unit 122.

Data of the feature amount from the computing unit 121 is input to the data extraction unit 161. According to the compression method input thereto, the data extraction unit 161 reads the input feature amount (feature amount in the 3D tensor format) in units of two-dimensional compression, and outputs the feature amount to the switch 162 as a blocked feature amount. For example, the feature amount input to the data extraction unit 161 is represented by a 3D tensor, and is read in units of two-dimensional compression according to a compression method such as spatial direction collection or depth direction collection.

The switch 162 switches the output destination of the blocked feature amount from the data extraction unit 161 according to the compression method input thereto. That is, in a case where the compression method is designated, the switch 162 is connected to the lower terminal and outputs the blocked feature amount to the addition unit 163. In addition, in a case where the designation of the compression method is uncompressed, the switch 162 is connected to the upper terminal and outputs the blocked feature amount to the outside as it is as an uncompressed stream.

The addition unit 163 receives the blocked feature amount from the data extraction unit 161 and the prediction value from the prediction value generation unit 169 via the switch 162. The addition unit 163 generates a prediction residual from the difference between the blocked feature amount and the prediction value, and outputs the prediction residual to the quantization unit 164.

The quantization unit 164 quantizes the prediction residual from the addition unit 163 according to the target rate input thereto, and outputs the quantized prediction residual to the entropy coding unit 165 and the inverse quantization unit 166.

The entropy coding unit 165 performs entropy coding on the quantized prediction residual from the quantization unit 164 to generate a compressed stream, and outputs the compressed stream to the outside. Note that, although the entropy coding is performed here, the quantization prediction residual may be coded with a fixed length.

The inverse quantization unit 166 inversely quantizes the prediction residual with respect to the quantized prediction residual from the quantization unit 164 according to the target rate input thereto, and outputs the inverse quantization prediction residual obtained as a result to the addition unit 167.

The addition unit 167 receives the inverse quantization prediction residual from the inverse quantization unit 166 and the prediction value from the prediction value generation unit 169. The addition unit 167 adds the inverse quantization prediction residual and the prediction value to generate local decoded data, and outputs the local decoded data to the work buffer 168. The work buffer 168 temporarily records the local decoded data from the addition unit 167, and outputs the local decoded data to the prediction value generation unit 169 as necessary.

The prediction value generation unit 169 generates a prediction value from the local decoded data from the work buffer 168 according to the compression method input thereto, and outputs the prediction value to the addition unit 163 and the addition unit 167. In the prediction value generation unit 169, the prediction value generation method is appropriately switched according to a compression method such as spatial direction collection or depth direction collection.

Here, an example of the operation of each unit (data extraction unit 161, prediction value generation unit 169, and the like) dynamically controlled according to the compression method in the compression unit 122 will be described. Fig. 29 is a diagram illustrating an example of feature amount compression in the case of using the spatial direction collection compression method. As illustrated in Fig. 29, in a case where the spatial direction collection is designated as the compression method, data in the spatial direction is collectively coded in units of channels as indicated by planar squares s1 to s4 in the xy direction.

Similarly, at the time of prediction, prediction can be performed in units of channels, and a prediction value can be generated. For example, a case is assumed in which the prediction value generation unit 169 performs prediction with reference to data to which coding is applied and which is recorded in the local decoding buffer. In particular, when data at an adjacent position adjacent to the left side of the spatial position of the feature amount to be coded is used as a reference value, a prediction value of the feature amount can be generated using the following Formula (4).

[Math. 4]

$$p_{x,y,i} = f_{x-1,y,i} \qquad \cdots \quad (4)$$

Note that, in Formula (4), x and y represent spatial positions of feature amounts to be coded on the xy plane, and i represents a channel to be coded in the z direction. $P_{x, y, i}$ represents a prediction value of the feature amount $_{x, y, i}$ to be coded. $f_{x, y, i}$ represents a value of the feature amount $_{x, y, i}$ that has already been coded.

As described above, in the case of using the spatial direction collection compression method, the difference data between the prediction value of the feature amount obtained by the prediction in the spatial direction in the same channel and the data of the current feature amount is collectively packed and coded in the spatial direction, so that the feature amount can be compressed. By performing such packing, the decoding unit 123 decodes the feature amounts compressed collectively in the spatial direction.

Fig. 30 is a diagram illustrating an example of feature amount compression in a case where the depth direction collection compression method is used. As illustrated in Fig. 30, in a case where the depth direction collection compression method is designated as the compression method, since the prediction value of the feature amount is generated from the data of the same channel and the difference data is packed in the depth direction (channel direction), the reference surface at the time of generating the prediction value and the packing surface of the data at the time of coding are different. In Fig. 30, the spatial position of the feature amount of each channel on the xy plane is represented by p(x, y) with the upper left position as the origin.

First, as illustrated in A of Fig. 30, data of a feature amount of p(0, 0) in each channel is coded (three-dimensional square d1 in the drawing). Here, since there is no reference data, prediction is performed from pulse code modulation (PCM) or a predetermined initial value. Next, as illustrated in B of Fig. 30, the data of the feature amount of p(0, 0) of each channel is stored for prediction of p(1, 0) on the right side thereof. As the data of the feature amount of p(1, 0), difference data is generated using the stored data of the feature amount of p(0, 0) as a prediction value (arrow r1).

Next, entropy coding is applied to the difference data. Furthermore, as illustrated in C of Fig. 30, the data is packed in the depth direction to generate compressed data (three-dimensional square d2). Thereafter, as illustrated in D of Fig. 30, the data of the feature amount of p(1, 0) of each channel is stored and used for prediction of p(2,0) on the right side thereof (arrow r2). By repeating the series of processing illustrated in A to D of Fig. 30, all the data of the feature amount can be compressed.

As described above, in a case where the depth direction collection compression method is used, the difference data between the prediction value of the feature amount obtained by the prediction in the spatial direction and the data of the current feature amount is coded and collectively packed in the depth direction, whereby the feature amount can be compressed. By performing such packing, the decoding unit 123 decodes the feature amounts compressed collectively in the depth direction.

As described above, the compression unit 122 uses a compression method for compressing a feature amount by generating a prediction value for input data of the feature amount and entropy coding difference information obtained from a difference between the data of the feature amount and the prediction value. Furthermore, in the compression unit 122, the coding control information is input, and the quantization unit 164 and the inverse quantization unit 166 perform the quantization of the prediction residual and the inverse quantization of the quantized prediction residual obtained by quantizing the prediction residual according to the compression rate (target rate), so that the feature amount is compressed to the designated compression rate. In the compression unit 122, the data extraction unit 161 extracts data from the input feature amount according to the compression method, and the prediction value generation unit 169 generates the prediction value according to the compression method, so that the data is processed in units of compression corresponding to the data access method in the DNN processing.

<Configuration of Decoding Unit>

Fig. 31 is a diagram illustrating a configuration example of the decoding unit 123 in Fig. 5.

The decoding unit 123 reconstructs the feature amount from the stream (compressed stream or uncompressed stream) for each feature amount temporarily recorded in the memory 124 on the basis of the coding control information input from the network preliminary analyzer 110, and outputs the feature amount to the computing unit 121. Note that the reconstructed feature amount may be output after decoding of the entire feature amounts is completed, or partially reconstructed results may be sequentially output.

In Fig. 31, the decoding unit 123 includes a switch 181, an entropy decoding unit 182, an inverse quantization unit 183, an addition unit 184, a data rearrangement unit 185, a work buffer 186, and a prediction value generation unit 187. The coding control information input to the decoding unit 123 includes the target rate and the compression method for each feature amount, and each unit of the decoding unit 123 is dynamically controlled according to these pieces of information (parameters).

The target rate is input to the inverse quantization unit 183. The compression method is input to the switch 181, the data rearrangement unit 185, and the prediction value generation unit 187. In Fig. 31, the data of the feature amount #N and the coding control information of the feature amount #N are input to the decoding unit 123.

The stream of the feature amount temporarily recorded in the memory 124 is input to the switch 181. The switch 181 switches the output destination of the input stream according to the compression method input thereto. That is, in a case where the designation of the compression method is uncompressed, the switch 181 is connected to the upper terminal and outputs the input uncompressed stream to the data rearrangement unit 185. Further, in a case where the compression method is designated, the switch 181 is connected to the lower terminal and outputs the input compressed stream to the entropy decoding unit 182.

The entropy decoding unit 182 performs entropy decoding on the compressed stream input via the switch 181 to reconstruct a quantized prediction residual, and outputs the quantized prediction residual to the inverse quantization unit 183.

The inverse quantization unit 183 inversely quantizes the prediction residual with respect to the quantized prediction residual from the entropy decoding unit 182 according to the target rate input thereto, and outputs the inverse quantization prediction residual obtained as a result to the addition unit 184.

The addition unit 184 receives the inverse quantization prediction residual from the inverse quantization unit 183 and the prediction value from the prediction value generation unit 187. The addition unit 184 adds the inverse quantization prediction residual and the prediction value to generate local decoded data, and outputs the local decoded data to the data rearrangement unit 185 and the work buffer 186.

The data rearrangement unit 185 receives an input of a blocked feature amount input as an uncompressed stream via the switch 181 or an input of a blocked feature amount input as local decoded data from the addition unit 184. The data rearrangement unit 185 remaps the data of the blocked feature amount into a tensor format (3D tensor format) which is the original feature amount format, and outputs the data of the feature amount obtained as a result.

The work buffer 186 temporarily records the local decoded data from the addition unit 184, and outputs the local decoded data to the prediction value generation unit 187 as necessary. The prediction value generation unit 187 generates a prediction value from the local decoded data from the work buffer 186 according to the compression method input thereto, and outputs the prediction value to the addition unit 184.

Fig. 32 is a diagram illustrating an example of data rearrangement processing by the data rearrangement unit 185 in Fig. 31. As illustrated in Fig. 32, the data of the blocked feature amount bf input to the data rearrangement unit 185 is remapped to the format of the original feature amount by being arranged in the spatial direction (planar square s1 in the xy direction) in a case where the spatial direction collection compression method is designated. Furthermore, in a case where the depth direction collection compression method is designated, the data of the blocked feature amount bf is remapped to the format of the original feature amount by being arranged in the depth direction (three-dimensional square d1 in the z direction).

As described above, the decoding unit 123 uses a decoding method for decoding the compressed feature amount by generating the prediction value to be added to the difference information obtained by entropy decoding the input data of the compressed feature amount and adding the difference information and the prediction value. Furthermore, in the decoding unit 123, the coding control information is input, and the inverse quantization unit 183 inversely quantizes the quantized prediction residual according to the compression rate (target rate), so that the compressed feature amount compressed to the specified compression rate is decoded into the feature amount. In the decoding unit 123, the prediction value generation unit 187 generates the prediction value according to the compression method, and the data rearrangement unit 185 rearranges the feature amount obtained by adding the prediction value to the difference information according to the compression method, so that the data is processed in units of compression corresponding to the data access method in the DNN processing.

In the first configuration of the present disclosure, the compression unit 122 and the decoding unit 123 provided between the computing unit 121 and the memory 124 are controlled on the basis of the coding control information generated by analyzing the neural network in advance by the network preliminary analyzer 110, whereby the inference processing using the neural network by the computing unit 121 can be reliably performed.

More specifically, conventionally, in a case where the work buffer size required for computation exceeds the mounted memory size, inference processing by the computing unit cannot be performed. In addition, as in the method disclosed in Patent Document 1, in a case where the compression is applied only in a case where there is a gain of the compression, the stream size after the compression depends on the input data, and the possibility of inference changes depending on the input data, and the inference processing cannot be reliably performed.

On the other hand, in the first configuration of the present disclosure, by analyzing the neural network in advance and generating the coding control information including the compression rate of the feature amount suitable for the available memory size, the work buffer size required for temporarily recording the feature amount processed by the inference processing using the neural network can be controlled to be equal to or smaller than the available memory size. Furthermore, in the first configuration of the present disclosure, since the control using the compression rate of the feature amount is performed, the stream size after the compression does not depend on the input data, and the possibility of inference does not change.

As a result, it is possible to reliably perform the inference processing even in the machine learning inference unit having a small mounted memory capacity in which the computation is conventionally impossible. Furthermore, as described above, in the layer of the DNN, the data amount required for processing tends to decrease from the preceding layer to the subsequent layer. However, by performing control using the compression rate of the feature amount included in the coding control information, unnecessary compression is not performed in the processing of the subsequent layer, or appropriate compression cannot be applied in the processing of the preceding layer.

Furthermore, in the first configuration of the present disclosure, by analyzing the neural network in advance and generating the coding control information including the compression method of the feature amount suitable for the data access method of the DNN processing, it is possible to appropriately select the compression method in consideration of the data access method of the DNN processing while using the correlation in the spatial direction of the feature amount of the DNN, and to perform more appropriate compression of the feature amount.

<<Second Configuration of Present Disclosure>>

<Configuration of Machine Learning Inference Unit>

Fig. 33 is a diagram illustrating another configuration example of an embodiment of the machine learning inference unit to which the present disclosure is applied. In Fig. 33, the machine learning inference unit 200 includes a network preliminary analyzer 210 and a machine learning computing unit 211.

The network preliminary analyzer 210 analyzes the network information of the machine learning input thereto and the sample data group, and outputs the coding control information obtained as a result of the analysis to the machine learning computing unit 211. The sample data group includes sample data for control parameter generation. The coding control information includes a control parameter for efficiently compressing a feature amount in addition to a compression rate (target rate) and a compression method.

The machine learning computing unit 211 performs inference processing of machine learning such as deep learning on the basis of the network information and the input data input thereto, and outputs a computation result obtained as a result to the outside. The machine learning computing unit 211 includes a computing unit 221, a compression unit 222, a decoding unit 223, and a memory 224. The computing unit 221 is a computing unit configured similarly to the computing unit 121 (Fig. 5), and appropriately records the feature amount such as the feature map of each layer of the DNN in the memory 224 in a case of performing the deep learning inference processing. Similarly to the memory 124 (Fig. 5), the memory 224 includes SRAM, DRAM, or the like.

The compression unit 222 and the decoding unit 223 are provided between the computing unit 221 and the memory 224. The coding control information from the network preliminary analyzer 210 is input to the compression unit 222 and the decoding unit 223.

The compression unit 222 is a compressor that performs compression processing of compressing a feature amount such as a feature map. The compression unit 222 compresses the feature amount from the computing unit 221 on the basis of the coding control information from the network preliminary analyzer 210, and writes the compressed feature amount in the memory 224 as a compressed stream. In addition, in a case of not compressing the feature amount, the compression unit 222 writes the feature amount in the memory 224 as an uncompressed stream.

The decoding unit 223 is a decoder that performs decoding processing of decoding the compressed feature amount compressed by the compression unit 222 into a feature amount. The decoding unit 223 appropriately reads data of the compressed stream or the uncompressed stream temporarily recorded in the memory 224. The decoding unit 223 decodes the compressed stream read from the memory 224 from the compressed feature amount into the feature amount on the basis of the coding control information from the network preliminary analyzer 210. The decoding unit 223 outputs the feature amount decoded from the compressed feature amount or the feature amount read as the uncompressed stream to the computing unit 221.

As described above, in the machine learning inference unit 200, before the machine learning computing unit 211 performs the inference processing of machine learning, the network preliminary analyzer 210 analyzes the network information and the sample data group, and inputs the coding control information obtained as a result of the analysis to the machine learning computing unit 211. Then, in the machine learning computing unit 211, when the computing unit 221 performs the inference processing of the machine learning, the feature amount processed by the neural network such as the DNN is temporarily recorded in the memory 224, but the feature amount recorded in the memory 224 is compressed by the compression unit 222 on the basis of the coding control information as necessary and decoded by the decoding unit 223.

<Configuration of Network Preliminary Analyzer>

Fig. 34 is a diagram illustrating a configuration example of the network preliminary analyzer 210 in Fig. 33. In Fig. 34, the network preliminary analyzer 210 includes a detection unit 241, a compression rate calculation unit 242, a compression method determination unit 243, a feature amount sample extraction unit 244, and control parameter generation units 245-0 to 245-N (N: an integer of 1 or more).

The detection unit 241 analyzes (parses) the network information input thereto to detect the data size of the weight processed by the neural network and the data size of the feature amount, and outputs the detection result to the compression rate calculation unit 242.

The compression rate calculation unit 242 calculates and outputs a compression rate (target rate) of the feature amount on the basis of the detection result from the detection unit 141. In the calculation of the compression rate of the feature amount here, for example, the calculation method described with reference to Figs. 7 to 16 can be used. Here, the compression rate is calculated for each of the feature amounts of the feature amounts #0 to #N, the compression rates of the feature amounts #0 to #N are output to the compression method determination unit 243, and the compression rates of the feature amounts of the corresponding numbers among the feature amounts #0 to #N are output to the control parameter generation units 245-0 to 245-N, respectively.

The network information and the compression rate of the feature amount from the compression rate calculation unit 242 are input to the compression method determination unit 243. The compression method determination unit 243 determines and outputs a compression method of the feature amount on the basis of the network information and the compression rate of the feature amount. In determining the compression method of the feature amount, for example, the determination method described with reference to Figs. 17 to 27 can be used. Here, the compression method is determined for each of the feature amounts of the feature amounts #0 to #N, and the compression method of the feature amount of the corresponding number among the feature amounts #0 to #N is output to each of the control parameter generation units 245-0 to 245-N.

The feature amount sample extraction unit 244 generates sample data of a feature amount of each layer of a neural network such as a DNN on the basis of the network information and the sample data group input thereto. Although the number of sample data groups to be input is not specified, it is desirable to prepare a sufficient number of sample data in order to use the statistical data of the feature amount or the like. Here, sample data is generated for each of the feature amounts of the feature amounts #0 to #N, and sample data of a feature amount of a corresponding number among the feature amounts #0 to #N is output to each of the control parameter generation units 245-0 to 245-N.

The control parameter generation unit 245-0 receives the compression rate of the feature amount #0 from the compression rate calculation unit 242, the compression method of the feature amount #0 from the compression method determination unit 243, and the sample data of the feature amount #0 from the feature amount sample extraction unit 244. The control parameter generation unit 245-0 generates and outputs control parameters optimum for the compression rate and the compression method of the feature amount #0 as control parameters for the feature amount #0 on the basis of the compression rate of the feature amount #0, the compression method of the feature amount #0, and the sample data of the feature amount #0.

Similarly to the control parameter generation unit 245-0, the control parameter generation unit 245-N generates and outputs control parameters optimum for the compression rate and the compression method of the feature amount #N as control parameters for the feature amount #N on the basis of the compression rate of the feature amount #N, the compression method of the feature amount #N, and the sample data of the feature amount #N input thereto.

Note that, although illustration of the control parameter generation units 245-1 to 245-N-1 is omitted because the description is repeated, the control parameters of the feature amounts #0 to #N are generated and output by the control parameter generation units 245-0 to 245-N.

As described above, in the network preliminary analyzer 210, the compression rate (target rate) calculated by the compression rate calculation unit 242, the compression method determined by the compression method determination unit 243, and the control parameters generated by the control parameter generation units 245-0 to 245-N are obtained for each of the feature amounts of the feature amounts #0 to #N, and are output as the coding control information.

Fig. 35 is a diagram illustrating a configuration example of the control parameter generation unit 245-N in Fig. 34. In Fig. 35, the control parameter generation unit 245-N includes a nonlinear transformation table selection unit 321, a nonlinear transformation unit 322, a prediction calculation parameter calculation unit 323, a simple prediction value generation unit 324, a difference unit 325, a residual nonlinear transformation table selection unit 326, a residual nonlinear transformation unit 327, and an entropy coding table selection unit 328.

On the basis of the sample data of the feature amount #N input thereto, the nonlinear transformation table selection unit 321 selects an optimal nonlinear transformation table for each channel of the feature amount sample, and outputs a nonlinear transformation table ID that is identification information of the optimal nonlinear transformation table. Details of the nonlinear transformation table selection unit 321 will be described later with reference to Figs. 36 and 37.

The sample data of the feature amount #N and the nonlinear transformation table ID from the nonlinear transformation table selection unit 321 are input to the nonlinear transformation unit 322. The nonlinear transformation unit 322 performs nonlinear transformation on the sample data of the feature amount #N according to the nonlinear transformation table specified by the nonlinear transformation table ID, and outputs the feature amount #N sample data to which the nonlinear transformation has been applied obtained as a result to the prediction calculation parameter calculation unit 323, the simple prediction value generation unit 324, and the difference unit 325.

The target rate of the feature amount #N from the compression rate calculation unit 242 (Fig. 34), the compression method of the feature amount #N from the compression method determination unit 243 (Fig. 34), and the feature amount #N sample data to which the nonlinear transformation has been applied from the nonlinear transformation unit 322 are input to the prediction calculation parameter calculation unit 323. The prediction calculation parameter calculation unit 323 calculates a prediction calculation parameter for prediction value calculation from the feature amount #N sample data to which the nonlinear transformation has been applied on the basis of the target rate and the compression method, and outputs the prediction calculation parameter. Here, calculation of a channel having a strong correlation in the feature amount, calculation of a correction parameter at the time of reference, and the like are performed. Details of the prediction calculation parameter calculation unit 323 will be described later with reference to Figs. 38 to 43.

The target rate of the feature amount #N from the compression rate calculation unit 242 (Fig. 34), the compression method of the feature amount #N from the compression method determination unit 243 (Fig. 34), the feature amount #N sample data to which the nonlinear transformation has been applied from the nonlinear transformation unit 322, and the prediction calculation parameter from the prediction calculation parameter calculation unit 323 are input to the simple prediction value generation unit 324. The simple prediction value generation unit 324 generates a prediction value from the feature amount #N sample data to which the nonlinear transformation has been applied on the basis of the target rate, the compression method, and the prediction calculation parameter, and outputs the prediction value to the difference unit 325. Here, accurate prediction residual calculation may be performed, but simple approximation processing may be performed in a case where the cost is limited.

The difference unit 325 receives the feature amount #N sample data to which the nonlinear transformation has been applied from the nonlinear transformation unit 322 and the prediction value from the simple prediction value generation unit 324. The difference unit 325 calculates a sample of the prediction residual #N from the difference between the feature amount #N sample data to which the nonlinear transformation has been applied and the prediction value, and outputs the sample to the residual nonlinear transformation table selection unit 326 and the residual nonlinear transformation unit 327.

On the basis of the prediction residual #N sample data from the difference unit 325, the residual nonlinear transformation table selection unit 326 selects a residual nonlinear transformation table that is a prediction transformation table for a residual to be applied to the prediction residual, and outputs a residual nonlinear transformation table ID that is identification information of the residual nonlinear transformation table. Details of the residual nonlinear transformation table selection unit 326 will be described later with reference to Figs. 44 and 45.

The prediction residual #N sample data from the difference unit 325 and the residual nonlinear transformation table ID from the residual nonlinear transformation table selection unit 326 are input to the residual nonlinear transformation unit 327. The residual nonlinear transformation unit 327 performs nonlinear transformation on the prediction residual #N sample data according to the residual nonlinear transformation table specified by the residual nonlinear transformation table ID, and outputs the prediction residual sample data to which the nonlinear transformation has been applied obtained as a result to the entropy coding table selection unit 328.

The entropy coding table selection unit 328 calculates a statistical value on the basis of the prediction residual sample data to which the nonlinear transformation has been applied from the residual nonlinear transformation unit 327, selects an entropy coding table, and outputs an entropy coding table ID which is identification information thereof. Here, the number of the VLC (variable-length code) table optimal for the prediction residual for which the nonlinear transformation has been performed is output. Details of the entropy coding table selection unit 328 will be described later with reference to Fig. 46.

As described above, in the control parameter generation unit 245-N, the nonlinear transformation table ID, the prediction calculation parameter, the residual nonlinear transformation table ID, and the entropy coding table ID are generated for each channel of the feature amount #N, and are output as control parameters. Note that, in Fig. 35, the configuration of the control parameter generation unit 245-N has been described as a representative, but the control parameter generation units 245-0 to 245-N-1 (Fig. 34) are similarly configured.

Fig. 36 is a diagram illustrating a configuration example of the nonlinear transformation table selection unit 321 in Fig. 35. In Fig. 36, the nonlinear transformation table selection unit 321 includes a channel division unit 421, histogram calculation units 422-0 to 422-3, and transformation table ID calculation units 423-0 to 423-3. Note that Fig. 36 illustrates a case where the number of channels is M = 4 in order to simplify the description.

The channel division unit 421 divides the sample data group of the feature amount #N input thereto for each channel. The channel division unit 421 outputs the sample data (f10,..., f60) of the channel #0 of the feature amount #N to the histogram calculation unit 422-0, outputs the sample data (f11,..., f61) of the channel #1 of the feature amount #N to the histogram calculation unit 422-1, outputs the sample data (f12,..., f62) of the channel #2 of the feature amount #N to the histogram calculation unit 422-2, and outputs the sample data (f13,..., f63) of the channel #3 of the feature amount #N to the histogram calculation unit 422-3.

The histogram calculation unit 422-0 calculates a histogram of the channel #0 of the feature amount #N on the basis of the sample data of the channel #0 of the feature amount #N, and outputs the histogram to the transformation table ID calculation unit 423-0. The transformation table ID calculation unit 423-0 calculates the nonlinear transformation table ID of the channel #0 of the feature amount #N on the basis of the histogram from the histogram calculation unit 422-0. Here, histogram matching is performed between the histogram of the channel #0 of the feature amount #N and the histogram used to define the nonlinear transformation table. The maximum likelihood histogram is detected in the histogram matching, and the ID of the nonlinear transformation table calculated from the maximum likelihood histogram is output.

In the histogram calculation unit 422-1 and the transformation table ID calculation unit 423-1, the histogram calculation unit 422-2 and the transformation table ID calculation unit 423-2, and the histogram calculation unit 422-3 and the transformation table ID calculation unit 423-3, similarly to the histogram calculation unit 422-0 and the transformation table ID calculation unit 423-0, the nonlinear transformation table ID of each channel is calculated on the basis of the histogram calculated from the sample data of each channel of the feature amount #N. As a result, the nonlinear transformation table IDs for the four channels of the channels #0 to #3 of the feature amount #N are output. Note that a plurality of nonlinear transformation tables is prepared in advance and recorded in an internal memory or the like, and an ID of a nonlinear transformation table selected from the nonlinear transformation tables is output.

Fig. 37 is a diagram illustrating an example of a variation of the nonlinear transformation. Fig. 37 illustrates an example of the histogram and the nonlinear transformation table for the sample data for each channel of the feature amount.

In A of Fig. 37, the sample data f10 of the channel #0 of the feature amount #N has a feature amount like a normal image, and there is no particularly important portion. Therefore, the frequency of the value of the feature amount in the sample data f10 is represented by the line a0. Therefore, for the sample data f10, a nonlinear transformation table is selected from among the nonlinear transformation tables prepared in advance, the nonlinear transformation table having a relationship between before and after transformation as indicated by the line b0.

In B of Fig. 37, the sample data f11 of the channel #1 of the feature amount #N has a feature amount like an image from which only edge components are extracted, and the histogram peak concentrates on the value of the specific feature amount. Therefore, the frequency of the value of the feature amount in the sample data f11 is represented by the line a1. Therefore, for the sample data f11, a nonlinear transformation table is selected in which the relationship between before and after transformation is as indicated by the line b1 so as to protect the value of the specific feature amount.

In C of Fig. 37, the sample data f12 of the channel #2 of the feature amount #N has a feature amount like an image binarized in black and white, and histogram peaks are concentrated on a plurality of specific feature amount values, so that the frequency of the feature amount values in the sample data f12 is represented by the line a2. Therefore, for the sample data f12, a nonlinear transformation table is selected in which the relationship between before and after transformation is as indicated by the line b2 so as to protect the values of a plurality of specific feature amounts.

Here, the feature amount that is the target data to which the nonlinear transformation is applied is data having various properties by convolution computation or activation. For example, it has various properties such as a feature amount like a normal image (A of Fig. 37), a feature amount like an image obtained by extracting only edge components (B of Fig. 37), and a feature amount like an image binarized into black and white (C of Fig. 37). Like a normal image, it is expected to apply compression by nonlinear transformation, but applying the same processing uniformly to data of such different properties may cause severe deterioration in recognition performance. Therefore, in the present disclosure, when the network information is analyzed in advance, the compression by the optimum nonlinear transformation can be applied by analyzing the data distribution characteristic of the feature amount and the subsequent use method.

Note that the nonlinear transformation of the feature amount and the inverse nonlinear transformation are performed by the nonlinear transformation unit 263 (Fig. 48) of the compression unit 222 and the inverse nonlinear transformation unit 286 (Fig. 49) of the decoding unit 223, respectively, and details thereof will be described later.

Fig. 38 is a diagram illustrating a configuration example of the prediction calculation parameter calculation unit 323 in Fig. 35. In Fig. 38, the prediction calculation parameter calculation unit 323 includes a reference channel calculation unit 441, a reference parameter calculation unit 442, and a prediction method determination unit 443.

The reference channel calculation unit 441 receives a channel ID of a channel to be a target for prediction calculation parameter calculation and the feature amount #N sample data to which the nonlinear transformation has been applied from the nonlinear transformation unit 322 (Fig. 35). The reference channel calculation unit 441 calculates and outputs a reference channel ID in a case where reference prediction between channels is performed for a channel (target channel) designated by the channel ID on the basis of the feature amount #N sample data to which the nonlinear transformation has been applied.

Here, the search range is set to channels #0 to #M-1, and the channel used for prediction can be calculated using normalized correlation or the like. For example, with respect to the target channel, a normalized correlation with the channel #0 is calculated for all sample data, and an average value thereof is obtained. Then, these computations are performed on all the channels #0 to #M-1, and the ID of the channel having the highest average value of the normalized correlation can be obtained as the reference channel ID of the target channel.

The reference parameter calculation unit 442 receives a channel ID of a channel to be a target for prediction calculation parameter calculation, the feature amount #N sample data to which the nonlinear transformation has been applied from the nonlinear transformation unit 322 (Fig. 35), and the reference channel ID from the reference channel calculation unit 441. The reference parameter calculation unit 442 calculates and outputs a reference parameter (fitting parameter) for generating a prediction value of a target channel designated by a channel ID from the channel designated by the reference channel ID on the basis of the feature amount #N sample data group to which the nonlinear transformation has been applied.

Here, for example, in a case where a prediction value of the feature amount #N is calculated by the following Formula (5), parameters such as Scale, $offset_0$, and $offset_1$ are calculated as reference parameters by using a least squares method or the like.

[Math. 5]

$$p_{x,y,i} = (f_{x,y,j} - offset_0) \times Scale + offset_1 \quad \cdots \ (5)$$

Note that, in Formula (5), x and y represent the spatial position of the feature amount to be coded, i represents the channel to be coded, and j represents the channel to be predicted. $P_{x, y, i}$ represents a prediction value of the feature amount $_{x, y, i}$. $f_{x, y, j}$ represents a value of the feature amount $_{x, y, j}$ that has already been coded. $offset_0$, $offset_1$, and Scale are parameters for generating a prediction value.

The prediction method determination unit 443 receives a channel ID of a channel to be a target for prediction calculation parameter calculation, the feature amount #N sample data to which the nonlinear transformation has been applied group from the nonlinear transformation unit 322 (Fig. 35), the reference channel ID from the reference channel calculation unit 441, and the reference parameter from the reference parameter calculation unit 442. The prediction method determination unit 443 determines and outputs a prediction method in a case where the prediction value of the target channel designated by the channel ID is predicted using the reference channel ID and the reference parameter on the basis of the feature amount #N sample data to which the nonlinear transformation has been applied. Although details will be described later, prediction methods include inter-channel prediction, bidirectional prediction, and spatial direction prediction. For example, in a case where inter-channel prediction cannot be performed, spatial direction prediction is performed.

As described above, the prediction calculation parameter calculation unit 323 calculates the prediction calculation parameter including the reference channel ID that is the ID of the valid reference channel, the reference parameter that is the correction parameter at the time of reference, and the prediction method finally determined for the designated target channel. Note that the prediction calculation parameter calculation unit 323 performs processing with all channels except the head channel (channel #0) as target channels, and calculates prediction calculation parameters for the number of channels obtained by subtracting 1 from the number of channels.

Here, with reference to Fig. 39, an example of prediction value generation and packing in the compression unit 222 will be described limited to pixel wise. The prediction is performed with reference to data of a channel that has already been coded. The reference channel is calculated in advance by the network preliminary analyzer 210 (reference channel calculation unit 441). At this time, the reference channel may be limited to one channel, or the compression unit 222 may select from a plurality of candidate channels. Furthermore, in this example, the coding direction is the direction of an arrow e, that is, the direction from the front channel to the back channel.

Furthermore, prediction between different channels can be performed by adjusting offset and Scale using the above Formula (5). In Formula (5), $P_{x, y, i}$ represents a prediction value of the feature amount $_{x, y, i}$, and $f_{x, y, j}$ represents a value of the feature amount $_{x, y, j}$ that has already been coded. The reference parameters including $offset_0$, $offset_1$, and Scale used for this adjustment are calculated in advance by the network preliminary analyzer 210 (reference parameter calculation unit 442). Furthermore, a prediction method that is inter-channel prediction is determined in advance by the network preliminary analyzer 210 (prediction method determination unit 443).

In Fig. 39, since the coding direction is the direction of an arrow e, in a case where the feature amounts f10 to f13 correspond to the feature amounts of the channels #0 to #3, for example, as indicated by an arrow r1, the channel #3 is a channel to be coded, the channel #1 is a channel to be predicted, and a prediction value can be generated with i = 3 and j = 1. Furthermore, in the case of pixel wise, since the depth direction collection is designated as the compression method, the data is collectively coded in the depth direction (three-dimensional square d1).

Next, an example of generating a prediction value of a certain channel with reference to data in both the spatial direction and the channel direction will be described with reference to Fig. 40. That is, in this example, the prediction method that is bidirectional prediction is determined in advance by the network preliminary analyzer 210 (prediction method determination unit 443).

For example, in Fig. 40, in a case where the feature amounts f10 to f13 correspond to the feature amounts of the channels #0 to #3, it is assumed that a prediction value of the feature amount X in the feature amount f13 of the channel #3 is generated. The prediction value of the feature amount X can be generated by using a prediction value C calculated from the data of the feature amount at the adjacent position in the same channel #3 as indicated by an arrow r1, a prediction value B calculated from the data of the feature amount at the same position in the feature amount f11 of the channel #1 that is the reference channel as indicated by an arrow r2, and a prediction value A calculated from the data of the feature amount at the adjacent position at the position of the feature amount at which the prediction value B is calculated.

The prediction values A, B, and C can be calculated from the coded feature amount data using the following Formula (6). In addition, the prediction value of the feature amount X can be obtained by applying the values of the prediction values A, B, and C calculated using the following Formula (6) to the conditional formula shown in Formula (7).

[Math. 6]

$$\begin{aligned} A &= (f_{x-1,y,j} - offset_0) \times Scale + offset_1 \\ B &= (f_{x,y,j} - offset_0) \times Scale + offset_1 \\ C &= f_{x-1,y,i} \end{aligned} \quad \cdots (6)$$

[Math. 7]

$$p_{x,y,i} = \begin{cases} \min(A,B), if\ C \geq \max(A,B) \\ \max(A,B), if\ C \leq \min(A,B) \\ A + B - C, otherwise \end{cases} \quad \cdots (7)$$

Note that, in Formula (6), x and y represent the spatial position of the feature amount to be coded, i represents the channel to be coded, and j represents the channel to be predicted. $f_{y, y, j}$ represents a value of the feature amount $_{x, y, j}$ that has already been coded. $offset_0$, $offset_1$, and Scale are parameters for generating a prediction value. Furthermore, in Formula (7), $P_{x, y, i}$ represents a prediction value of the feature amount $_{x, y, i}$. min () is a function that returns the minimum numerical value, and max () is a function that returns the maximum numerical value.

As described above, in generating the prediction value, for example, reference between channels can be performed using inter-channel prediction as illustrated in Fig. 39, or reference in a spatial direction and reference between channels can be bidirectionally performed using spatial direction prediction and inter-channel prediction as illustrated in Fig. 40.

Fig. 41 is a diagram illustrating an example of the prediction calculation parameter output from the prediction calculation parameter calculation unit 323. In Fig. 41, the prediction calculation parameters include a reference channel, a reference parameter, and a parameter that is a prediction method. The reference channel is designated by a reference channel ID. As the reference parameter, $offset_0$, $offset_1$, and Scale in Formula (5) or (6) used as the reference formula are specified. As the prediction method, any prediction type of spatial direction prediction, inter-channel prediction, or bidirectional prediction is specified.

The reference parameter is specified in units of channels. Therefore, the reference channel and the prediction method are different for each channel. Fig. 42 is a diagram illustrating an example of a reference channel and a prediction method different for each channel. In Fig. 42, in a case where the feature amounts f10 to f13 correspond to the feature amounts of the channels #0 to #3, for example, it is assumed that spatial direction prediction is designated as a prediction method of the channel #0. At this time, as indicated by an arrow r1, the prediction value of the feature amount X0 in the feature amount f10 of the channel #0 can be generated using the prediction value calculated from the data of the feature amount of the adjacent position in the same channel #0.

In addition, when bidirectional prediction is designated as the prediction method of the channel #1, the prediction value of the feature amount X1 in the feature amount f11 of the channel #1 can be generated using the prediction value calculated from the data of the feature amount at the adjacent position in the same channel #1 as indicated by an arrow r2 and the prediction value calculated from the data of the feature amount at the same position in the feature amount f10 of the channel #0 as indicated by an arrow r3. When the inter-channel prediction is designated as the prediction method of the channel #2, the prediction value of the feature amount X2 in the feature amount f12 of the channel #2 can be generated using the prediction value calculated from the data of the feature amount at the same position in the feature amount f11 of the channel #1 as indicated by an arrow r4. When bidirectional prediction is designated as the prediction method of the channel #3, the prediction value of the feature amount X3 in the feature amount f13 of the channel #3 can be generated using the prediction value calculated from the data of the feature amount of the adjacent position in the same channel #3 as indicated by an arrow r5 and the prediction value calculated from the data of the feature amount of the same position in the feature amount f11 of the channel #1 as indicated by an arrow r6.

Next, an example of prediction value generation and packing in a case of referring to data in both the spatial direction and the channel direction will be described with reference to Fig. 43. In Fig. 43, the position of the feature amount of each channel on the xy plane is represented by p(x, y) with the upper left position as the origin.

First, as illustrated in A of Fig. 43, data of a feature amount of p(0, 0) in each channel is coded. Here, since there is no reference data, prediction is performed from the PCM or a predetermined initial value. In addition, as indicated by an arrow r1, in p(0, 0) of each channel, inter-channel prediction is performed. Next, as illustrated in B of Fig. 43, the data of the feature amount of p(0, 0) of each channel is stored for prediction of the next p(1, 0). p(1, 0) generates a prediction value with reference to data of a feature amount of p(0, 0) in the same channel and data of a feature amount of the same position that has already been coded in another channel (arrows r2, r3). As a result, difference data between the feature amount data and the prediction value is generated for p(1, 0).

Next, residual nonlinear transformation and entropy coding described later are applied to the difference data. Furthermore, as illustrated in C of Fig. 43, data is packed in the depth direction (channel direction) to generate compressed data (three-dimensional square d2). Thereafter, as illustrated in D of Fig. 43, the data of the feature amount of p(1, 0) of each channel is stored and used for prediction of the next p(2,0). Here, bidirectional prediction of the spatial direction and the channel direction is also performed (arrows r4, r5). By repeating the series of processing illustrated in A to D of Fig. 43, all the data of the feature amount can be compressed.

In this manner, it is possible to compress the feature amount by coding the difference data between the prediction value of the feature amount obtained by bidirectional prediction in the spatial direction and the channel direction and the data of the current feature amount and collectively packing the coded data in the depth direction. By performing such packing by the compression unit 222, the decoding unit 223 decodes the feature amounts compressed collectively in the depth direction.

Fig. 44 is a diagram illustrating a configuration example of the residual nonlinear transformation table selection unit 326 in Fig. 35. In Fig. 44, the residual nonlinear transformation table selection unit 326 includes a channel division unit 461, histogram calculation units 462-0 to 462-3, and transformation table ID calculation units 463 0 to 463-3. Note that Fig. 44 illustrates a case where the number of channels is M = 4 in order to simplify the description.

The channel division unit 461 divides the sample data group of the prediction residual #N input thereto for each channel. The channel division unit 461 outputs the sample data (p10,..., p60) of the channel #0 with the prediction residual #N to the histogram calculation unit 462-0, outputs the sample data (p11,..., p61) of the channel #1 with the prediction residual #N to the histogram calculation unit 462-1, outputs the sample data (p12,..., p62) of the channel #2 with the prediction residual N to the histogram calculation unit 462-2, and outputs the sample data (p13,..., p63) of the channel #3 with the prediction residual #N to the histogram calculation unit 462-3.

The histogram calculation unit 462-0 calculates the histogram of the channel #0 of the prediction residual #N on the basis of the sample data of the channel #0 of the prediction residual #N, and outputs the histogram to the transformation table ID calculation unit 463-0. The transformation table ID calculation unit 463-0 calculates the residual nonlinear transformation table ID of the channel #0 of the prediction residual #N on the basis of the histogram from the histogram calculation unit 462-0. Here, histogram matching is performed between the histogram of the channel #0 of the prediction residual #N and the histogram used to define the residual nonlinear transformation table. The maximum likelihood histogram is detected in the histogram matching, and the ID of the residual nonlinear transformation table calculated from the maximum likelihood histogram is output.

In the histogram calculation unit 462-1 and the transformation table ID calculation unit 463-1, the histogram calculation unit 462-2 and the transformation table ID calculation unit 463-2, and the histogram calculation unit 462-3 and the transformation table ID calculation unit 463-3, similarly to the histogram calculation unit 462-0 and the transformation table ID calculation unit 463-0, the residual nonlinear transformation table ID of each channel is calculated on the basis of the histogram calculated from the sample data of each channel of the prediction residual #N. As a result, the residual nonlinear transformation table IDs for the four channels #0 to #3 of the prediction residual #N are output. Note that the residual nonlinear transformation table is prepared in advance and recorded in an internal memory or the like, and an ID of a residual nonlinear transformation table selected therefrom is output.

Fig. 45 is a diagram illustrating an example of a variation of the residual nonlinear transformation. Fig. 45 illustrates an example of a histogram and a residual nonlinear transformation table for sample data for each channel of a prediction residual.

A of Fig. 45 illustrates a case where the sample data p10 of the channel #0 of the prediction residual #N has a prediction residual like a normal image similarly to A of Fig. 37, and the frequency of the value of the prediction residual in the sample data p10 is represented by a line c0. Therefore, for the sample data p10, a residual nonlinear transformation table is selected from among the residual nonlinear transformation tables prepared in advance, the residual nonlinear transformation table having a relationship between before and after transformation as indicated by a line d0.

B of Fig. 45 illustrates a case where the sample data p11 of the channel #1 of the prediction residual #N has a prediction residual like an image obtained by extracting only edge components similarly to B of Fig. 37, and the frequency of the value of the prediction residual in the sample data p11 is represented by a line c1. Therefore, for the sample data p11, the residual nonlinear transformation table in which the relationship between before and after the transformation is as indicated by a line d1 is selected so as to protect the value of the specific prediction residual.

C of Fig. 45 illustrates a case where the sample data p12 of the channel #2 of the prediction residual #N has a prediction residual such as an image binarized into black and white similarly to C of Fig. 37, and the frequency of the value of the prediction residual in the sample data p12 is represented by a line c2. Therefore, for the sample data p12, a residual nonlinear transformation table in which the relationship between before and after the transformation is as indicated by a line d2 is selected so as to protect a plurality of specific prediction residual values.

Note that the nonlinear transformation and the inverse nonlinear transformation of the prediction residual are performed by the residual nonlinear transformation unit 265 (Fig. 48) and the residual inverse nonlinear transformation unit 269 (Fig. 48) of the compression unit 222 and the residual inverse nonlinear transformation unit 284 (Fig. 49) of the decoding unit 223, respectively, and details thereof will be described later. Note that, in the transformation processing (the nonlinear transformation and the inverse nonlinear transformation of the feature amount described with reference to Figs. 36 and 37, and the like) using the nonlinear transformation table and the transformation processing (the nonlinear transformation and the inverse nonlinear transformation of the prediction residual described in Figs. 44 and 45 and the like) using the residual nonlinear transformation table, not only both the pieces of transformation processing are performed, but also at least one piece of the transformation processing may be performed.

Fig. 46 is a diagram illustrating an example of selection of an entropy coding table by the entropy coding table selection unit 328 in Fig. 35. In Fig. 46, four types of VLC tables identified by Table IDs = 0, 1, 2, and 3 are prepared in advance. The VLC tables each have a distribution centered on 0, and each is optimized for a different prediction residual. The entropy coding table selection unit 328 selects an entropy coding table to be used for each channel of the prediction residual, and outputs a Table ID according to the selection result.

Fig. 47 is a diagram illustrating an example of the coding control information. In the coding control information of Fig. 47, the compression rate (target rate), the compression method, and the control parameter are associated with each channel of the feature amount. The control parameter includes a nonlinear transformation table ID, a prediction calculation parameter, a residual nonlinear transformation table ID, and an entropy coding table ID. The prediction calculation parameter includes a reference channel ID, a reference parameter, and a prediction method. In Fig. 47, the target rate, the compression method, and the control parameter for each channel ID of the channels #0 to #7 are included as the coding control information of the feature map which is the feature map2. Here, the coding control information of the feature map which is the feature map2 is exemplified, but the target rate, the compression method, and the control parameter are similarly included for each channel in other feature maps such as the feature map1.

<Configuration of Compression Unit>

Fig. 48 is a diagram illustrating a configuration example of the compression unit 222 in Fig. 33.

The compression unit 222 generates a compressed feature amount obtained by compressing the feature amount input from the computing unit 221 on the basis of the coding control information from the network preliminary analyzer 210, and outputs the compressed feature amount as a compressed stream, or outputs an uncompressed feature amount as an uncompressed stream. The stream for each feature amount including the compressed stream or the uncompressed stream is output from the compression unit 222 to the memory 224, and the data thereof is temporarily recorded.

In Fig. 48, the compression unit 222 includes a data extraction unit 261, a switch 262, a nonlinear transformation unit 263, an addition unit 264, a residual nonlinear transformation unit 265, a quantization unit 266, an entropy coding unit 267, an inverse quantization unit 268, a residual inverse nonlinear transformation unit 269, an addition unit 270, a work buffer 271, and a prediction value generation unit 272. The coding control information input to the compression unit 222 includes a target rate, a compression method, and a control parameter for each feature amount, and each unit of the compression unit 222 is dynamically controlled in accordance with these pieces of information (parameters).

The target rate is input to the quantization unit 266 and the inverse quantization unit 268. The compression method is input to the data extraction unit 261, the switch 262, and the prediction value generation unit 272. Among the control parameters, the nonlinear transformation table ID is input to the nonlinear transformation unit 263, the residual nonlinear transformation table ID is input to the residual nonlinear transformation unit 265 and the residual inverse nonlinear transformation unit 269, and the entropy coding table ID is input to the entropy coding unit 267. Further, among the control parameters, the reference channel ID, the reference parameter, and the prediction method included in the prediction calculation parameter are input to the prediction value generation unit 272. In Fig. 48, the data of the feature amount #N and the coding control information of the feature amount #N are input to the compression unit 222.

Data of the feature amount from the computing unit 221 is input to the data extraction unit 261. According to the compression method input thereto, the data extraction unit 261 reads the input feature amount (feature amount in the 3D tensor format) in units of two-dimensional compression, and outputs the feature amount to the switch 262 as a blocked feature amount.

The switch 262 switches the output destination of the blocked feature amount from the data extraction unit 261 according to the compression method input thereto. That is, in a case where the compression method is designated, the switch 262 is connected to the lower terminal and outputs the blocked feature amount to the nonlinear transformation unit 263. Furthermore, in a case where the designation of the compression method is uncompressed, the switch 262 is connected to the upper terminal and outputs the blocked feature amount as it is as an uncompressed stream.

The nonlinear transformation unit 263 performs the nonlinear transformation on the blocked feature amount input from the data extraction unit 261 via the switch 262 according to the nonlinear transformation table specified by the nonlinear transformation table ID input thereto, and outputs the blocked feature amount to which the nonlinear transformation has been applied obtained as a result to the addition unit 264.

The addition unit 264 receives the blocked feature amount to which the nonlinear transformation has been applied from the nonlinear transformation unit 263 and the prediction value from the prediction value generation unit 272. The addition unit 264 generates a prediction residual from the difference between the blocked feature amount to which the nonlinear transformation has been applied and the prediction value, and outputs the prediction residual to the residual nonlinear transformation unit 265.

The residual nonlinear transformation unit 265 performs nonlinear transformation on the prediction residual from the addition unit 264 according to the residual nonlinear transformation table specified by the residual nonlinear transformation table ID input thereto, and outputs the prediction residual sample data to which the nonlinear transformation has been applied obtained as a result to the quantization unit 266.

The quantization unit 266 quantizes the prediction residual sample data to which the nonlinear transformation has been applied from the residual nonlinear transformation unit 265 according to the target rate input thereto, and outputs the quantized prediction residual to the entropy coding unit 267 and the inverse quantization unit 268.

The entropy coding unit 267 generates a compressed stream by performing entropy coding on the quantized prediction residual from the quantization unit 266 according to the entropy coding table specified by the entropy coding table ID input thereto, and outputs the compressed stream to the outside.

The inverse quantization unit 268 inversely quantizes the prediction residual with respect to the quantized prediction residual from the quantization unit 266 according to the target rate input thereto, and outputs the inverse quantization prediction residual obtained as a result to the residual inverse nonlinear transformation unit 269.

The residual inverse nonlinear transformation unit 269 performs inverse nonlinear transformation on the inverse quantization prediction residual from the inverse quantization unit 268 according to the residual nonlinear transformation table specified by the residual nonlinear transformation table ID input thereto, and outputs the inverse quantization prediction residual to which the inverse nonlinear transformation has been applied obtained as a result to the addition unit 270.

The addition unit 270 receives the inverse quantization prediction residual to which the inverse nonlinear transformation has been applied from the residual inverse nonlinear transformation unit 269 and the prediction value from the prediction value generation unit 272. The addition unit 270 adds the inverse quantization prediction residual to which the inverse nonlinear transformation has been applied and the prediction value to generate local decoded data, and outputs the local decoded data to the work buffer 271. The work buffer 271 temporarily records the local decoded data from the addition unit 270, and outputs the local decoded data to the prediction value generation unit 272 as necessary.

The prediction value generation unit 272 generates a prediction value from the local decoded data from the work buffer 271 according to the compression method, the reference channel ID, the reference parameter, and the prediction method input thereto, and outputs the prediction value to the addition unit 264 and the addition unit 270.

Note that a plurality of the nonlinear transformation tables, the residual nonlinear transformation tables, and the entropy coding tables are prepared in advance and recorded in an internal memory or the like, and the nonlinear transformation unit 263, the residual nonlinear transformation unit 265, the entropy coding unit 267, and the residual inverse nonlinear transformation unit 269 can read and use tables corresponding to IDs as necessary.

<Configuration of Decoding Unit>

Fig. 49 is a diagram illustrating a configuration example of the decoding unit 223 in Fig. 33.

The decoding unit 223 reconstructs the feature amount from the stream (compressed stream or uncompressed stream) for each feature amount temporarily recorded in the memory 224 on the basis of the coding control information input from the network preliminary analyzer 210, and outputs the feature amount to the computing unit 221. Note that the reconstructed feature amount may be output after decoding of the entire feature amounts is completed, or partially reconstructed results may be sequentially output.

In Fig. 49, the decoding unit 223 includes a switch 281, an entropy decoding unit 282, an inverse quantization unit 283, a residual inverse nonlinear transformation unit 284, an addition unit 285, an inverse nonlinear transformation unit 286, a data rearrangement unit 287, a work buffer 288, and a prediction value generation unit 289. The coding control information input to the decoding unit 223 includes the target rate, the compression method, and the control parameter for each feature amount, and each unit of the decoding unit 223 is dynamically controlled in accordance with these pieces of information (parameters).

The target rate is input to the inverse quantization unit 283. The compression method is input to the switch 281, the data rearrangement unit 287, and the prediction value generation unit 289. Among the control parameters, the nonlinear transformation table ID is input to the inverse nonlinear transformation unit 286, the residual nonlinear transformation table ID is input to the residual inverse nonlinear transformation unit 284, and the entropy coding table ID is input to the entropy decoding unit 282. Further, among the control parameters, the reference channel ID, the reference parameter, and the prediction method included in the prediction calculation parameter are input to the prediction value generation unit 289. In Fig. 49, the data of the feature amount #N and the coding control information of the feature amount #N are input to the decoding unit 223.

The stream of the feature amount temporarily recorded in the memory 224 is input to the switch 281. The switch 281 switches the output destination of the input stream according to the compression method input thereto. That is, in a case where the designation of the compression method is uncompressed, the switch 281 is connected to the upper terminal and outputs the input uncompressed stream to the data rearrangement unit 287. Further, in a case where the compression method is designated, the switch 281 is connected to the lower terminal and outputs the input compressed stream to the entropy decoding unit 282.

The entropy decoding unit 282 performs entropy decoding on the compressed stream input via the switch 281 according to the entropy coding table specified by the entropy coding table ID input thereto, reconstructs a quantized prediction residual, and outputs the quantized prediction residual to the inverse quantization unit 283.

The inverse quantization unit 283 inversely quantizes the prediction residual with respect to the quantized prediction residual from the entropy decoding unit 282 according to the target rate input thereto, and outputs the inverse quantization prediction residual obtained as a result to the residual inverse nonlinear transformation unit 284.

The residual inverse nonlinear transformation unit 284 performs inverse nonlinear transformation on the inverse quantization prediction residual from the inverse quantization unit 283 according to the residual nonlinear transformation table specified by the residual nonlinear transformation table ID input thereto, and outputs the inverse quantization prediction residual to which the inverse nonlinear transformation has been applied obtained as a result to the addition unit 285.

The addition unit 285 receives the inverse quantization prediction residual to which the inverse nonlinear transformation has been applied from the residual inverse nonlinear transformation unit 284 and the prediction value from the prediction value generation unit 289. The addition unit 285 generates local decoded data by adding the inverse quantization prediction residual to which the inverse nonlinear transformation has been applied and the prediction value, and outputs the local decoded data to the inverse nonlinear transformation unit 286 and the work buffer 288.

The inverse nonlinear transformation unit 286 performs inverse nonlinear transformation on the local decoded data from the addition unit 285 according to the nonlinear transformation table specified by the nonlinear transformation table ID input thereto, and outputs the local decoded data to which the inverse nonlinear transformation has been applied obtained as a result to the data rearrangement unit 287.

The data rearrangement unit 287 receives a blocked feature amount input as an uncompressed stream via the switch 281 or a blocked feature amount input as local decoded data to which the inverse nonlinear transformation has been applied from the inverse nonlinear transformation unit 286. The data rearrangement unit 287 remaps the data of the blocked feature amount into a tensor format (3D tensor format) which is the original feature amount format, and outputs the data of the feature amount obtained as a result.

The work buffer 288 temporarily records the local decoded data from the addition unit 285, and outputs the local decoded data to the prediction value generation unit 289 as necessary. The prediction value generation unit 289 generates a prediction value from the local decoded data from the work buffer 288 according to the compression method, the reference channel ID, the reference parameter, and the prediction method input thereto, and outputs the prediction value to the addition unit 285.

Note that a plurality of the nonlinear transformation tables, the residual nonlinear transformation tables, and the entropy coding tables are prepared in advance and recorded in an internal memory or the like, and the entropy decoding unit 282, the residual inverse nonlinear transformation unit 284, and the inverse nonlinear transformation unit 286 can read and use a table corresponding to the ID as necessary.

In the second configuration of the present disclosure, the compression rate, the compression method, and the control parameter can be included for each channel of the feature amount in the coding control information generated by analyzing the neural network in advance by the network preliminary analyzer 210. Furthermore, the control parameter can include a nonlinear transformation table ID, a residual nonlinear transformation table ID, an entropy coding table ID, a reference channel ID, a reference parameter, and a prediction calculation parameter including a prediction method.

By using the control parameter, the feature amount can be more efficiently compressed. For example, by performing nonlinear transformation or inverse nonlinear transformation according to the nonlinear transformation table specified by the nonlinear transformation table ID and nonlinear transformation or inverse nonlinear transformation according to the residual nonlinear transformation table specified by the residual nonlinear transformation table ID, it is possible to protect a particularly important portion using data distribution characteristics or the like with respect to a feature amount and a prediction residual which are data having various properties by convolution computation or the like. This makes it possible to avoid reduction in the recognition rate due to improvement in the compression rate. Furthermore, by generating the prediction value using the prediction computation parameter, the amount of coding calculation can be reduced by limiting the prediction method and the like in advance.

<<Third Configuration of Present Disclosure>>

<Outline of DNN and Conventional Problems>

Fig. 50 is a diagram schematically illustrating a deep neural network (DNN). As illustrated in Fig. 50, in the DNN, a computing result (recognition result) is calculated by repeating a multi-layer calculation layer of 100 layers or more in a case where the number of layers is large. The calculation result of each layer is referred to as a feature map.

Fig. 51 is a diagram illustrating a configuration of each layer of a DNN. As illustrated in Fig. 51, each layer of the DNN includes linear filter processing of performing convolution, product sum, or the like on the feature map from the previous layer using weight data, and activation function processing of generating a feature map by nonlinearly mapping the result. The type and characteristics of the activation function are defined by parameters unique to each layer. Fig. 52 illustrates a rectified linear unit (ReLU) function as an example of the activation function.

As a method of mounting DNN, as illustrated in Fig. 53, there is a calculation method for each layer in which after processing of a certain layer (n-1 layers) is performed, a feature map that is a calculation result is temporarily stored in a memory, and the processing proceeds to the next layer (n layers) using the data. In this type of computation method, since the inside of the layer includes repetition of the same calculation, computation efficiency is good. In addition, when the layer advances, the used feature map area is discarded and a necessary area is newly secured, so that the memory amount can be reduced. However, the feature map varies in size depending on each layer, and may be larger than the input of the DNN. Therefore, in the computation method for each layer, it is necessary to secure an area equal to or more than the maximum feature map in the memory.

The flowchart of Fig. 54 illustrates a flow of conventional DNN processing. First, a DNN network is analyzed by a DNN parser (S51). Subsequently, the input data is written in the memory (S52), and 1 is set as an initial value of n (S53). Then, it is determined whether n is N or less (S54). In a case where $n \leq N$ is satisfied (S54: Yes), the subsequent processing is repeated. That is, data is read from the memory, n-layer processing is executed with the parameter of Layer (n) (S55), the computation result is written in the memory (S56), and the value of n is incremented (S57). Note that n is a variable indicating a layer to be processed, and a value indicating the last layer to be processed is N.

By repeating the processing of steps S54 to S57, in a case where $n > N$ is satisfied (S54: No), data is read from the memory as output data (S58), and the series of processing ends. In the DNN processing, since the feature map stored in the memory is overwritten for each processing of each layer, the memory amount does not simply increase. Note that the analysis of the DNN network (S51) can also be executed offline in advance.

Fig. 55 is a diagram illustrating a configuration and an operation of a DNN system that executes conventional DNN processing. In Fig. 55, a central processing unit (CPU) 31 issues a command to a direct memory access controller (DMAC) 32 and transfers data of a dynamic random access memory (DRAM) 33 to an internal memory of a DNN processor 34.

Subsequently, the CPU 31 executes processing by controlling the DNN processor 34. Here, the following processing is executed in a loop for the number of layers. That is, the CPU 31 reads the DNN parameters and the internal memory address information of the desired layer from the ROM and sets them in the DNN processor 34. Next, the CPU 31 activates the DNN processor 34 with the start pulse, and the DNN processor 34 returns a finish pulse when the processing is completed. After these processes are looped and executed for the number of layers, the CPU 31 issues a command to the DMAC 32 and transfers the computing result of the internal memory of the DNN processor 34 to the DRAM 33.

The memory amount can be reduced by applying a memory compression technology such as embedded block coding (EBC) to the feature map having a large memory consumption. As illustrated in Fig. 56, the compressed feature map can be stored in the memory by providing the compression unit (Enc) and the decoding unit (Dec) in the memory. The compression in this case includes lossy compression of a fixed length size with emphasis on high-speed performance and random access performance, and lossless compression with emphasis on recognition performance. The lossy compression is required to reduce degradation of recognition performance by further reducing compression distortion. On the other hand, lossless compression is required to reduce the size after compression.

<Outline of Present Disclosure>

Since image signal compression has a strong correlation with adjacent data, it is common to perform compression by obtaining a difference from adjacent data using differential pulse-code modulation (DPCM) to cause a deviation in the frequency of difference data. An example of compression by the DPCM mode is illustrated in Fig. 57. In Fig. 57, after quantizing input data, a difference from a prediction value predicted (Pred) is obtained, and variable-length coding (VLC) and refinement are performed to output a bit stream. Here, as illustrated in Fig. 58, by taking a difference between the input data (A of Fig. 58) having a constant frequency (Probability) and the adjacent data (prediction value), a deviation occurs in the frequency in the difference data (B of Fig. 58) obtained thereby.

In the feature amount data of the DNN, channel interleaving is generally performed due to processing. In a case where channel interleaving is performed, it is necessary to perform rearrangement in order to obtain correlated data of the same channel, and hardware (HW) such as a memory for the rearrangement is required. Fig. 59 is a diagram illustrating an example of rearrangement of data subjected to channel interleaving. In Fig. 59, the data subjected to the channel interleaving in the upper part is rearranged for each channel in the lower part.

In the feature amount data of the DNN, since there is a frequency deviation of data in the feature amount itself without taking a difference from adjacent data, compression using statistical properties such as variable-length coding can be performed as it is. Hereinafter, this compression method is referred to as direct compression. Fig. 60 is a diagram illustrating an example of compression in a direct compression mode. In Fig. 60, input data (feature amount data) is quantized, and then variable-length coding (VLC) and refinement are performed as it is to output a bit stream. Note that, in the following description, the feature amount input and output will be described using a feature amount quantized to 8 bits.

The frequency deviation in the feature amount data of the DNN includes at least asymmetric and symmetric ones. The asymmetrical one has a distribution only in the positive (or negative) with respect to the mode value, and the frequency decreases as it goes away from the mode value. Figs. 61 and 62 illustrate examples in which the frequency deviation of the feature amount data is asymmetric. Fig. 61 illustrates a histogram in a case where the vertical axis is the frequency (Probability) and the horizontal axis is the value. Only a positive distribution exists with respect to the mode value, and the frequency of the vertical axis decreases as the value of the horizontal axis deviates from the mode value. This similarly applies to Fig. 62.

On the other hand, the shape of the symmetric one is not necessarily completely symmetrical, but there is a distribution in both positive and negative with respect to the mode value, and the frequency decreases as it goes away from the mode value. Figs. 63 and 64 illustrate examples in which the frequency deviation of the feature amount data is symmetric. Fig. 63 illustrates a histogram in a case where the vertical axis is the frequency and the horizontal axis is the value, there are distributions in both positive and negative with respect to the mode value, and the frequency on the vertical axis decreases as the value on the horizontal axis deviates from the mode value. This similarly applies to Fig. 64.

Therefore, when performing direct compression, it is necessary to cope with these two patterns. Here, the values of these mode values are not fixed, but are different for each network mode and each layer, and thus, it is necessary to consider them. This is due to a method of quantizing the feature amount, the shape of the data itself, and the like.

In order to solve these problems, the present disclosure introduces pre-processing and post-processing. That is, on the compression (coding) side, the pre-processing and the coding portion are set (paired), and on the decoding (expansion) side, the decoding portion and the post-processing are set (paired). Specifically, the third configuration of the present disclosure can adopt a configuration corresponding to the above-described second configuration of the present disclosure (configuration in Fig. 33). For example, in a case where the configuration corresponding to the configuration of Fig. 33 is adopted, as illustrated in Fig. 65, a pre-processing unit 511 is provided in the compression unit 222 (Fig. 33) on the coding side, and the pre-processing unit 511 performs processing of aligning the position of the fixed mode value (for example, the mode value is fixed to 0) assumed by the coding unit 512 by applying correction (offset) according to the feature amount to the feature amount data (D1) of the input DNN on the basis of the variable parameter. As a result, the feature amount data (D2) after correction (after offset) by the pre-processing unit 511 is input to the coding unit 512, and coding is performed.

On the other hand, as illustrated in Fig. 66, in the decoding unit 223 (Fig. 33) on the decoding side, since the mode value of the decoded feature amount data (D3) obtained by the decoding unit 521 performing decoding is fixed (for example, the mode value is fixed to 0), a post-processing unit 522 is provided, and the post-processing unit 522 performs processing of returning to the distribution of the original feature amount data by performing correction (reverse offset) according to the feature amount on the basis of the variable parameter. As a result, the distribution of the feature amount data (D4) after the correction (after the reverse offset) by the post-processing unit 522 becomes the same as the distribution of the original feature amount data (D1).

<Configurations and Operations of Network Preliminary Analyzer and Machine Learning Computing Unit>

As described above, compression/decoding (compression/expansion) of the feature amount of the DNN becomes possible, but it is necessary to determine a coding mode for selecting asymmetry and symmetry in the coding unit 512 and the decoding unit 521 and a correction value (offset value) in the pre-processing unit 511 and the post-processing unit 522 according to each layer of each network model. A parameter including the coding mode and the correction value is referred to as a compression parameter. The coding mode is switching information (coder switching information) for switching between an asymmetric coder and a symmetric coder or between an asymmetric decoder and a symmetric decoder. The correction value (offset value) is correction value information. That is, the compression parameter includes switching information for switching and using a plurality of compression models of the feature amount and correction value information for adapting the feature amount to each compression model.

The compression parameter can be determined in prior offline processing with some test inputs, rather than being determined during the inference of the DNN. The offline processing may be performed only once when the network model is determined. For example, the compression parameter may be determined in prior offline processing by the network preliminary analyzer 210 of Fig. 33. The compression parameter can be included in the coding control information.

Fig. 67 is a diagram illustrating an example of determination of a compression parameter by the network preliminary analyzer 210. In Fig. 67, the network preliminary analyzer 210 analyzes a test input data group (sample data group) input thereto, and determines a compression parameter of each layer. The compression parameter includes a coding mode and a correction value, and is determined for each layer. The network preliminary analyzer 210 outputs the compression parameters of all layers to the machine learning computing unit 211 (Fig. 33) as the coding control information. Fig. 68 is a diagram illustrating an example of inference processing by the machine learning computing unit 211. In Fig. 68, compression parameters for all layers as coding control information are input to the machine learning computing unit 211. At the time of DNN inference, the compression unit 222 performs processing such as pre-processing and coding on the basis of the compression parameter, and the decoding unit 223 performs processing such as decoding and post-processing on the basis of the compression parameter.

The flowchart of Fig. 69 illustrates a flow of DNN processing by the machine learning computing unit 211. First, a DNN network is analyzed by a DNN parser (S71). Subsequently, the input data is compressed and written in the memory (S72), and 1 is set as an initial value of n (S73). Then, in a case where $n \leq N$ is satisfied (S74: Yes), the subsequent processing is repeated. That is, in a case where the data of Layer (n-1) is compressed (S75: Yes), the data in the memory is expanded with the compression parameter of Layer (n-1) and read (S76). On the other hand, in a case where the data of Layer (n-1) is not compressed (S75: No), the data is read from the memory as it is (S77). Note that, when n = 1, that is, in Layer (0), since the compressed input data is stored in the memory, the expansion processing is always performed.

When step S76 or S77 ends, n-layer processing is executed with the parameter of Layer (n) (S78). Subsequently, in a case where the data of Layer (n) is compressed (S79: Yes), the data is compressed with the compression parameter of Layer (n) and written in the memory (S80). On the other hand, in a case where the data of Layer (n) is not compressed (S79: No), the data is directly written in the memory (S81). When step S80 or S81 ends, the value of n is incremented.

By repeating the processing of steps S74 to S82, in a case where $n > N$ is satisfied (S74: No), when the data of Layer N is compressed (S83: Yes), the data of the memory is expanded with the compression parameter of Layer N, and is read as output data (S84). On the other hand, in a case where the data of Layer N is not compressed (S83: No), the data is read as it is from the memory as output data (S85). When step S84 or S85 ends, the series of processing ends. Note that the analysis of the DNN network (S71) can also be executed offline in advance.

Fig. 70 is a diagram illustrating a configuration and an operation of a DNN system that executes DNN processing. In Fig. 70, a CPU 501 issues a command to a DMAC 502 and transfers data of a DRAM 503 to an internal memory of a DNN processor 504.

Subsequently, the CPU 501 executes processing by controlling the DNN processor 504. Here, the following processing is executed in a loop for the number of layers. That is, the CPU 501 reads the DNN parameters and the internal memory address information of the desired layer from the ROM and sets them in the DNN processor 504. At this time, the CPU 501 reads the compression parameter from the ROM and sets the same as necessary. Next, the CPU 501 activates the DNN processor 504 with the start pulse, and the DNN processor 504 returns a finish pulse when the processing is completed. After these processes are looped and executed for the number of layers, the CPU 501 issues a command to the DMAC 502 and transfers the computing result of the internal memory of the DNN processor 504 to the DRAM 503.

Fig. 71 is a flowchart illustrating a flow of compression parameter determination processing by the network preliminary analyzer 210. The network preliminary analyzer 210 calculates the mode value and the minimum value of the n-layer feature amount data by analyzing the test input data group (sample data group) (S91), and determines whether the value of the minimum value + the threshold Th is equal to or larger than the mode value (S92). For example, as the threshold Th, an optimum value according to various conditions at the time of determining the compression parameter can be appropriately set.

The network preliminary analyzer 210 determines the compression parameter according to the determination result of step S92. That is, in a case where the minimum value + the threshold Th ≥ the mode value (S92: Yes), the coding mode that is "asymmetric" and the correction value that is "mode value - coder input minimum value" are determined (S93). Further, in a case where the minimum value + the threshold Th < the mode value (S92: No), the coding mode that is "symmetric" and the correction value that is "mode value - coder input median value" are determined (S94).

For example, as illustrated in Fig. 72, in a case where the minimum value (minimum value + threshold Th) is smaller than the mode value, the coding mode that is "symmetric" and the correction value that is "mode value - coder input median value" are determined as the compression parameters. When step S93 or S94 ends, the n-layer compression parameter is determined, and the series of processing ends. By repeating a series of processing for each layer to be compressed, the compression parameters of all layers are determined.

For example, in the compression unit 222, a coder capable of further compressing data near the minimum value and a coder capable of further compressing data near the median value may be provided, the former coder may be an asymmetric coder that performs asymmetric coding that is coding for feature amount data whose frequency deviation is asymmetric, and the latter coder may be a symmetric coder that performs symmetric coding that is coding for feature amount data whose frequency deviation is symmetric. In the compression unit 222, by using the determined compression parameter, the asymmetric coder and the symmetric coder can be switched and used, and the feature amount data can be adapted to each of the asymmetric coder and the symmetric coder. Furthermore, in the decoding unit 223, a decoder characterized by being able to more decode data near the minimum value and a decoder characterized by being able to more decode data near the median value can be provided, the former decoder can be an asymmetric decoder that performs asymmetric decoding that is decoding on feature amount data whose frequency deviation is asymmetric, and the latter decoder can be a symmetric decoder that performs symmetric decoding that is decoding on feature amount data whose frequency deviation is symmetric. In the decoding unit 223, by using the determined compression parameter, the asymmetric decoder and the symmetric decoder can be switched and used, and the feature amount data can be adapted to each of the asymmetric decoder and the symmetric decoder.

<Configuration of Asymmetric Coder>

Fig. 73 is a diagram illustrating a configuration example of an asymmetric coder 512A in the compression unit 222.

In Fig. 73, the asymmetric coder 512A includes a quantization unit 531, a quantization step determination unit 532, a variable-length coding unit 533, a variable-length code table 534, a refinement code processing unit 535, and a combining unit 536.

The quantization unit 531 quantizes the feature amount data (input: 0 to 255) input thereto according to the quantization step determined by the quantization step determination unit 532, and outputs the quantized feature amount data to the variable-length coding unit 533 and the refinement code processing unit 535. Note that the quantization step determination unit 532 may determine the quantization step on the basis of the target rate (compression rate) included in the coding control information.

The variable-length coding unit 533 codes the quantized data from the quantization unit 531 according to the variable-length code table 534, and outputs the coded data to the combining unit 536. Fig. 74 is a diagram illustrating an example of the variable-length code table 534. As illustrated in Fig. 74, the variable-length code table 534 is a table in which the input value and the variable-length code word are associated with each other.

The refinement code processing unit 535 performs refinement code processing on the quantized data from the quantization unit 531 and outputs the processed data to the combining unit 536. The combining unit 536 combines the coded data from the variable-length coding unit 533 and the coded data from the refinement code processing unit 535, and outputs the combined data as a bit stream.

<Configuration of Asymmetric Decoder>

Fig. 75 is a diagram illustrating a configuration example of an asymmetric decoder 521A in the decoding unit 223.

In Fig. 75, the asymmetric decoder 521A includes a separation unit 541, a variable-length decoding unit 542, a variable-length code table 543, an inverse quantization unit 544, a refinement decode processing unit 545, and a combining unit 546.

The separation unit 541 separates the bit stream input thereto, and outputs the coded data obtained by the separation to the variable-length decoding unit 542 and the refinement decode processing unit 545. Furthermore, the separation unit 541 outputs the quantization step obtained from the input bit stream to the inverse quantization unit 544. Note that the quantization step may be determined on the basis of the target rate (compression rate) included in the coding control information.

The variable-length decoding unit 542 decodes the coded data from the separation unit 541 according to the variable-length code table 543, and outputs the decoded data to the inverse quantization unit 544. Fig. 76 is a diagram illustrating an example of the variable-length code table 543. As illustrated in Fig. 76, the variable-length code table 543 is a table in which the input value and the variable-length code word are associated with each other, and corresponds to the variable-length code table 534 in Fig. 74. The inverse quantization unit 544 inversely quantizes the decoded data from the variable-length decoding unit 542 according to the quantization step from the separation unit 541 and outputs the decoded data to the combining unit 546.

The refinement decode processing unit 545 performs refinement decode processing on the coded data from the separation unit 541, and outputs the processed data to the combining unit 546. The combining unit 546 combines the inverse quantization decoded data from the inverse quantization unit 544 and the decoded data from the refinement decode processing unit 545, and outputs feature amount data (output: 0 to 255) obtained as a result.

<Configuration of Symmetric Coder>

Fig. 77 is a diagram illustrating a configuration example of a symmetric coder 512B in the compression unit 222.
In Fig. 77, the symmetric coder 512B includes a quantization unit 551, a quantization unit 552, a quantization step determination unit 553, a subtraction unit 554, a variable-length coding unit 555, a variable-length code table 556, a refinement code processing unit 557, and a combining unit 558.
The quantization unit 551 quantizes the feature amount data (input: 0 to 255) input thereto according to the quantization step determined by the quantization step determination unit 553 and outputs the quantized feature amount data to the subtraction unit 554 and the refinement code processing unit 557. The quantization unit 552 quantizes the feature amount data (median value: 128) input thereto according to the quantization step determined by the quantization step determination unit 553 and outputs the quantized feature amount data to the subtraction unit 554. Note that the quantization step determination unit 553 may determine the quantization step on the basis of the target rate (compression rate) included in the coding control information.
The subtraction unit 554 subtracts the quantized data from the quantization unit 552 from the quantized data from the quantization unit 551, and outputs a result of the subtraction to the variable-length coding unit 555. The variable-length coding unit 555 codes the quantized data from the subtraction unit 554 according to the variable-length code table 556, and outputs the coded data to the combining unit 558. Fig. 78 is a diagram illustrating an example of the variable-length code table 556. As illustrated in Fig. 78, the variable-length code table 556 is a table in which the input value and the variable-length code word are associated with each other.
The refinement code processing unit 557 performs refinement code processing on the quantized data from the quantization unit 551 and outputs the processed data to the combining unit 558. The combining unit 558 combines the coded data from the variable-length coding unit 555 and the coded data from the refinement code processing unit 557, and outputs the combined data as a bit stream.

<Configuration of Symmetric Decoder>

Fig. 79 is a diagram illustrating a configuration example of a symmetric decoder 521B in the decoding unit 223.
In Fig. 79, the symmetric decoder 521B includes a separation unit 561, a variable-length decoding unit 562, a variable-length code table 563, a quantization unit 564, an addition unit 565, an inverse quantization unit 566, a refinement decode processing unit 567, and a combining unit 568.
The separation unit 561 separates the bit stream input thereto, and outputs the coded data obtained by the separation to the variable-length decoding unit 562 and the refinement decode processing unit 567. Furthermore, the separation unit 561 outputs the quantization step obtained from the input bit stream to the quantization unit 564 and the inverse quantization unit 566. Note that the quantization step may be determined on the basis of the target rate (compression rate) included in the coding control information.
The variable-length decoding unit 562 decodes the coded data from the separation unit 561 according to the variable-length code table 563, and outputs the decoded data to the addition unit 565. Fig. 80 is a diagram illustrating an example of the variable-length code table 563. As illustrated in Fig. 80, the variable-length code table 563 is a table in which the input value and the variable-length code word are associated with each other, and corresponds to the variable-length code table 556 in Fig. 78. The quantization unit 564 quantizes the feature amount data (median value: 128) input thereto according to the quantization step from the separation unit 561 and outputs the quantized feature amount data to the addition unit 565.
The addition unit 565 adds the decoded data (quantized data) from the variable-length decoding unit 562 and the quantized data from the quantization unit 564, and outputs a computing result to the inverse quantization unit 566. The inverse quantization unit 566 inversely quantizes the decoded data from the addition unit 565 according to the quantization step from the separation unit 561 and outputs the decoded data to the combining unit 568.
The refinement decode processing unit 567 performs refinement decode processing on the coded data from the separation unit 561, and outputs the processed data to the combining unit 568. The combining unit 568 combines the inverse quantization decoded data from the inverse quantization unit 566 and the decoded data from the refinement decode processing unit 567, and outputs feature amount data (output: 0 to 255) obtained as a result.

<Configuration of Compression Unit>

Fig. 81 is a diagram illustrating a configuration example of the compression unit 222 in the machine learning computing unit 211.
In Fig. 81, the compression unit 222 includes a pre-processing unit 511, an asymmetric coder 512A (Fig. 73), a symmetric coder 512B (Fig. 77), and a switch 513. In a case where n-layer feature amount data is input in the compression unit 222, n-layer compression parameter determined by the network preliminary analyzer 210 is input. Here, among the information included in the compression parameter, the correction value information is input to the pre-processing unit 511, and the switching information is input to the switch 513.

The pre-processing unit 511 corrects the feature amount data input thereto on the basis of the correction value included in the correction value information, and outputs the corrected feature amount data to the asymmetric coder 512A and the symmetric coder 512B. The asymmetric coder 512A performs asymmetric coding on the corrected feature amount data from the pre-processing unit 511. The symmetric coder 512B performs symmetric coding on the corrected feature amount data from the pre-processing unit 511. According to the coding mode included in the switching information, the switch 513 selects the output of the asymmetric coder 512A in a case where the coding mode is asymmetric, and selects the output of the symmetric coder 512B in a case where the coding mode is symmetric. The output of the coder selected by the switch 513 is output as compressed feature amount data. Note that the output destination of the pre-processing unit 511 may be switched according to the coding mode by providing a switch at the subsequent stage of the pre-processing unit 511 and inputting switching information.

<Configuration of Decoding Unit>

Fig. 82 is a diagram illustrating a configuration example of the decoding unit 223 in the machine learning computing unit 211.

In Fig. 82, the decoding unit 223 includes an asymmetric decoder 521A (Fig. 75), a symmetric decoder 521B (Fig. 79), a post-processing unit 522, a switch 523, and a switch 524. In a case where the n-layer compressed feature amount data is input in the decoding unit 223, the n-layer compression parameter determined by the network preliminary analyzer 210 is input. Here, among the information included in the compression parameter, the switching information is input to the switch 523 and the switch 524, and the correction value information is input to the post-processing unit 522.

According to the coding mode included in the switching information, the switch 523 inputs the compressed feature amount data to the asymmetric decoder 521A in a case where the coding mode is asymmetric, and inputs the compressed feature amount data to the symmetric decoder 521B in a case where the coding mode is symmetric. The asymmetric decoder 521A performs asymmetric decoding on the compressed feature amount data input via the switch 523. The symmetric decoder 521B performs symmetric decoding on the compressed feature amount data input via the switch 523.

According to the coding mode included in the switching information, the switch 524 selects the output of the asymmetric decoder 521A in a case where the coding mode is asymmetric, and selects the output of the symmetric decoder 521B in a case where the coding mode is symmetric. The post-processing unit 522 corrects the feature amount data input via the switch 524 on the basis of the correction value included in the correction value information and outputs the corrected feature amount data.

<Pre-processing and Post-processing: for Asymmetry>

Fig. 83 is a diagram illustrating asymmetric pre-processing in the pre-processing unit 511 of Fig. 81. As illustrated in Fig. 83, in the pre-processing unit 511, in a case where the feature amount data in which the frequency deviation is asymmetric is input, the subtraction unit 510 subtracts the correction value (mode value - coder input minimum value) from the input data to perform correction (offset) to align the input data with the position with the fixed mode value assumed by the asymmetric coder 512A, and outputs the corrected feature amount data as output data.

Fig. 84 is a diagram illustrating asymmetric post-processing in the post-processing unit 522 in Fig. 82. As illustrated in Fig. 84, in the post-processing unit 522, in a case where the feature amount data in which the frequency deviation is asymmetric is input from the asymmetric decoder 521A, the addition unit 520 performs addition of adding the correction value (mode value - coder input minimum value) to the input data to perform correction (reverse offset) of returning the position of the mode value to return to the distribution of the original feature amount data, and outputs the corrected feature amount data as output data.

<Pre-processing and Post-processing: for Symmetry>

Fig. 85 is a diagram illustrating symmetric pre-processing in the pre-processing unit 511 of Fig. 81. As illustrated in Fig. 85, in the pre-processing unit 511, in a case where the feature amount data in which the frequency deviation is symmetric is input, the subtraction unit 510 subtracts the correction value (mode value - coder input median value) from the input data to perform correction (offset) to align the input data with the position of the fixed mode value assumed by the symmetric coder 512B, and outputs the corrected feature amount data as output data.

Fig. 86 is a diagram illustrating symmetric post-processing in post-processing unit 522 in Fig. 82. As illustrated in Fig. 86, in the post-processing unit 522, in a case where the feature amount data in which the frequency deviation is symmetric is input from the symmetric decoder 521B, the addition unit 520 performs addition of adding the correction value (mode value - coder input median value) to the input data to perform correction (reverse offset) of returning the position of the mode value to return to the distribution of the original feature amount data, and outputs the corrected feature amount data as output data.

<Refinement Processing>

Fig. 87 is a diagram illustrating an example of refinement processing performed in refinement code processing or refinement decode processing. In Fig. 87, block-shaped data to be coded is illustrated as a bit image. In Fig. 87, a horizontal direction indicates a block width, a vertical direction indicates a bit depth, an upper side indicates a most significant bit (MSB), and a lower side indicates a least significant bit (LSB). Assuming that the quantization is performed on the line L, the portion of the dot pattern below the line L is not subjected to VLC and is coded by the bit image itself. This portion of the dot pattern is referred to as refinement. The total number of bits is calculated for each data block. It is obtained by subtracting the code amount and the header information transmitted by VLC from a desired bit amount (bits × block size). The transmission order of the refinement is performed in the bit plane and is performed from the MSB side. The transmission order in the bit plane is not particularly specified, but needs to be correctly aligned on the coding side and the decoding side.

<Other Example Configurations>

In the above description, the compression unit 222 (Fig. 81) in the machine learning computing unit 211 has a configuration in which one common pre-processing unit 511 is provided for each of the coders of the asymmetric coder 512A and the symmetric coder 512B, but the pre-processing unit 511 may be separately provided for each of the coders and switched and used properly. Fig. 88 is a diagram illustrating another configuration example of the compression unit 222. In Fig. 88, the compression unit 222 includes an asymmetric pre-processing unit 511A, a symmetric pre-processing unit 511B, an asymmetric coder 512A, a symmetric coder 512B, and a switch 514.

The asymmetric pre-processing unit 511A performs asymmetric pre-processing (Fig. 83) on the basis of the correction value included in the correction value information to correct the feature amount data input thereto, and outputs the corrected feature amount data to the asymmetric coder 512A. The asymmetric coder 512A performs asymmetric coding on the corrected feature amount data from the asymmetric pre-processing unit 511A.

The symmetric pre-processing unit 511B performs asymmetric pre-processing (Fig. 85) on the basis of the correction value included in the correction value information to correct the feature amount data input thereto, and outputs the corrected feature amount data to the symmetric coder 512B. The symmetric coder 512B performs symmetric coding on the corrected feature amount data from the symmetric pre-processing unit 511B.

According to the coding mode included in the switching information, the switch 514 selects the output of the asymmetric coder 512A in a case where the coding mode is asymmetric, and selects the output of the symmetric coder 512B in a case where the coding mode is symmetric. The output of the coder selected by the switch 514 is output as compressed feature amount data.

Furthermore, in the above description, the decoding unit 223 (Fig. 82) in the machine learning computing unit 211 has a configuration in which one common post-processing unit 522 is provided for each of the decoders of the asymmetric decoder 521A and the symmetric decoder 521B, but the post-processing unit 522 may be separately provided for each of the decoders and switched for use. Fig. 89 is a diagram illustrating another configuration example of the decoding unit 223. In Fig. 89, the decoding unit 223 includes an asymmetric decoder 521A, a symmetric decoder 521B, an asymmetric post-processing unit 522A, a symmetric post-processing unit 522B, a switch 525, and a switch 526.

According to the coding mode included in the switching information, the switch 525 inputs the compressed feature amount data to the asymmetric decoder 521A in a case where the coding mode is asymmetric, and inputs the compressed feature amount data to the symmetric decoder 521B in a case where the coding mode is symmetric. The asymmetric decoder 521A performs asymmetric decoding on the compressed feature amount data input via the switch 525, and outputs the data to the asymmetric post-processing unit 522A. The asymmetric post-processing unit 522A performs asymmetric post-processing (Fig. 84) on the basis of the correction value included in the correction value information to correct the feature amount data input thereto.

The symmetric decoder 521B performs symmetric decoding on the compressed feature amount data input via the switch 525, and outputs the decoded compressed feature amount data to the symmetric post-processing unit 522B. The symmetric post-processing unit 522B performs symmetric post-processing (Fig. 86) on the basis of the correction value included in the correction value information to correct the feature amount data input thereto. According to the coding mode included in the switching information, the switch 526 selects the output of the asymmetric post-processing unit 522A in a case where the coding mode is asymmetric, and selects the output of the symmetric post-processing unit 522B in a case where the coding mode is symmetric. The output of the post-processing unit selected by the switch 526 is output as the feature amount data.

<Example of All-zero Flag>

In the above description of the coder and the decoder, the quantized data is subjected to the variable-length coding (VLC). However, since there are many cases where the quantized data becomes all zero, the compression can be performed more efficiently by defining the all-zero flag and applying the all-zero flag to the compressed stream. In a case where the quantized data is zero, the all-zero flag is set to "1", and the VLC portion is not transmitted. On the other hand, in a case where the quantized data includes a non-zero value, the all-zero flag is set to "0", and the VLC portion is transmitted. However, in a case where the frequency deviation is symmetric, the quantized median value is subtracted from the quantized data, but this case is similarly applicable.

Fig. 90 is a diagram illustrating a configuration example of the compressed stream in a case where the quantized data includes non-zero. In Fig. 90, the all-zero flag subsequent to the quantization step is set to "0", and the VLC portion is transmitted. The refinement is also transmitted. On the other hand, Fig. 91 is a diagram illustrating a configuration example of the compressed stream in a case where the quantized data is all 0. In Fig. 91, the all-zero flag is "1", and the VLC portion is not transmitted.

Note that, in the above description, the feature amount data of the DNN includes at least an asymmetric frequency deviation and a symmetric frequency deviation, but other distribution models may be prepared and switched and used. Furthermore, it is also possible to newly create a model based on the distribution of the feature amount data by the sample data, and switch and use the model including the model. Although the model that can be compressed without taking the difference from the prediction value has been described, it is also possible to switch and use the model including the model taking the difference from the prediction value at the time of switching.

As described above, in the third configuration of the present disclosure, in order to realize a large-scale operation even in a processor or the like having a limited memory capacity by compressing intermediate data at the time of processing machine learning such as DNN, particularly, feature amount data (feature map), it is possible to efficiently perform compression by switching a plurality of coding methods (decoding methods) and pre-processing and post-processing by using a compression parameter.

That is, in the third configuration of the present disclosure, there is proposed a coding method in which, when a feature map of a DNN is compressed, a plurality of combinations including different compression methods and pre-processing of data corresponding to the respective compression methods are switched according to a data distribution of a feature amount. For example, the different compression methods can be switched and used including at least the following two compression methods. Specifically, the first compression method is a compression method suitable for a model (first compression model) in which the frequency is high in the vicinity of the minimum value in terms of frequency distribution of data, and the frequency decreases as the value increases. The second compression method is a compression method suitable for a model (second compression model) in which the frequency is high at the center of the value in terms of frequency distribution of the data, and the frequency decreases as the value becomes larger or smaller than the center.

Furthermore, in the third configuration of the present disclosure, a decoding method is proposed in which, when a feature map of a DNN is decoded, a plurality of combinations including different decoding methods (expansion methods) and post-processing of data corresponding to the respective methods are switched according to a data distribution of a feature amount. For example, different decoding methods including at least the following two decoding methods can be switched and used. Specifically, the first decoding method is a decoding method suitable for a model (first compression model) in which the frequency is high near the minimum value in terms of frequency distribution of data, and the frequency decreases as the value increases. The second decoding method is a decoding method suitable for a model (second compression model) in which the frequency is high at the center of the value in terms of frequency distribution of the data, and the frequency decreases as the value becomes larger or smaller than the center.

However, in the compression method and the decoding method described above, the data distribution is not an input itself at the time of inference of the DNN, but a compression parameter corresponding to the distribution is determined by offline processing performed in advance, and is used at the time of inference of the DNN. That is, the network preliminary analyzer 210 analyzes the sample data of the feature amount, generates the compression parameter including the switching information for switching and using a plurality of compression models of the feature amount and the correction value information for adapting the feature amount to each compression model, and can include the generated compression parameter in the control information. At this time, the compression model includes direct compression that is a compression model that enables compression without taking a difference from the prediction value. In the machine learning computing unit 211, the compression unit 222 corrects the input feature amount on the basis of the correction value information, performs pre-processing to be adapted to the first compression model or the second compression model, performs coding according to the first compression model or the second compression model on the corrected feature amount corrected in the pre-processing, selects the compressed feature amount obtained by the coding according to the first compression model or the second compression model on the basis of the switching information, and records the compressed feature amount in the memory 224. Further, the decoding unit 223 performs decoding according to the first compression model or the second compression model on the compressed feature amount data temporarily stored in the memory 224, selects the corrected feature amount obtained by the decoding according to the first compression model or the second compression model on the basis of the switching information, and performs post-processing of returning the selected corrected feature amount to the feature amount before correction on the basis of the correction value information.

As described above, in the third configuration of the present disclosure, by efficiently compressing the feature amount by switching a plurality of coding methods (decoding methods) and pre-processing and post-processing using the compression parameter, it is possible to reduce the memory capacity and achieve improvement in performance such as reduction in power consumption and processing speed. In addition, by efficiently compressing the feature amount by switching a plurality of coding methods (decoding methods) and pre-processing and post-processing without using a rearrangement circuit, it is possible to more reliably perform inference and suppress deterioration in recognition performance.

<<Modifications>>

In the above description, the machine learning inference unit 100 (Fig. 5) and the machine learning inference unit 200 (Fig. 33) are illustrated as devices to which the present disclosure is applied. However, the functions of the machine learning inference unit 100 (Fig. 5) and the machine learning inference unit 200 (Fig. 33) can be executed by being mounted on an information processing apparatus such as a monitoring camera, a workstation, or a server. Furthermore, the network preliminary analyzer 110 and the machine learning computing unit 111 in the machine learning inference unit 100 (Fig. 5) may be configured as separate devices. For example, a first device including the network preliminary analyzer 110 and a second device including the machine learning computing unit 111 may be connected via a network. The network preliminary analyzer 210 and the machine learning computing unit 211 in the machine learning inference unit 200 (Fig. 33) may be similarly configured as different devices.

As a compression scheme used in the compression unit 122 (Fig. 5) and the compression unit 222 (Fig. 33), another compression scheme may be used as long as the compression scheme is a compression scheme to which the coding control information can be applied. As a decoding method used in the decoding unit 123 (Fig. 5) and the decoding unit 223 (Fig. 33), another decoding method may be used as long as the decoding method can apply the coding control information. Note that the coding control information may include at least one piece of information (parameter) among the compression rate, the compression method, and the control parameter. The control parameter may include at least one piece of information (parameter) among the nonlinear transformation table ID, the prediction calculation parameter, the residual nonlinear transformation table ID, and the entropy coding table ID. The prediction calculation parameter may include at least one piece of information (parameter) among the reference channel ID, the reference parameter, and the prediction method.

In the above description, it can be said that the feature amount processed by the neural network is intermediate data. The present disclosure may control compression and decoding of image data as intermediate data using the coding control information. For example, the nonlinear transformation table and the residual nonlinear transformation table can be applied to the image data. Specifically, in the machine learning inference unit 200 (Fig. 33), the network preliminary analyzer 210 and the machine learning computing unit 211 are only required to be configured as follows, for example.

That is, the network preliminary analyzer 210 generates coding control information for controlling compression of the image data on the basis of the sample data of the image data. More specifically, in the network preliminary analyzer 210, the nonlinear transformation table selection unit 321 selects a nonlinear transformation table for performing nonlinear transformation according to a result of analysis of a statistical value of sample data of image data. In addition, the residual nonlinear transformation table selection unit 326 selects the residual nonlinear transformation table for performing the residual nonlinear transformation according to the analysis result of the statistical value of the sample data on the basis of the sample data of the prediction residual that is the difference between the sample data of the image data and the prediction value of the sample data of the image data. As a result, the coding control information includes control parameters including the nonlinear transformation table ID and the residual nonlinear transformation table ID.

In addition, the machine learning computing unit 211 includes the compression unit 222, and the compression unit 222 compresses the input image data on the basis of the coding control information from the network preliminary analyzer 210. More specifically, the compression unit 222 uses a compression method for compressing image data by generating a prediction value for input image data and entropy coding difference information obtained from a difference between the image data and the prediction value. In the compression unit 222, the nonlinear transformation unit 263 performs nonlinear transformation on the input image data according to the nonlinear transformation table. In addition, the residual nonlinear transformation unit 265 performs the residual nonlinear transformation on the prediction residual to which the nonlinear transformation has been applied, which is the difference between the image data to which the nonlinear transformation has been applied and the prediction value generated for the image data to which the nonlinear transformation has been applied, according to the residual nonlinear transformation table. As described above, by performing the two-stage nonlinear transformation on the image data using the nonlinear transformation table and the residual nonlinear transformation table, it is possible to protect a particularly important portion using the data distribution characteristics and the like.

In the above description, depth wise access and pixel wise access (point wise access) have been described as data access methods of DNN processing. However, in the computing unit 121 (Fig. 5), computation can be performed using both access methods, and computation can be performed using only one of the access methods. For example, in a case where pixel wise convolution is performed as the DNN processing, when only pixel wise access is used as the data access method, the depth direction collection compression method is effective, but at this time, it is not necessary to switch the compression method between the spatial direction collection and the depth direction collection, and it is only required to fix the compression method to the depth direction collection compression method.

At this time, the compression unit 122 (Fig. 5) and the decoding unit 123 (Fig. 5) can use a compression method that is fixedly set without using the compression method included in the coding control information from the network preliminary analyzer 110 (Fig. 5). For example, in a case where the depth direction collection compression methods is set to be fixed, the compression unit 122 can compress the feature amounts by coding the difference data between the prediction value of the feature amount obtained by the prediction in the spatial direction and the data of the current feature amount and collectively packing the coded difference data in the depth direction (Fig. 30). Note that, although the description will be omitted due to repetition, a similar operation can be performed not only in the machine learning inference unit 100 (Fig. 5) but also in the machine learning inference unit 200 (Fig. 33).

<Configuration of Computer>

The series of processing described above can be performed by hardware or by software. In a case where the series of processing is executed by software, a program constituting the software is installed in a computer. Fig. 92 is a block diagram illustrating a configuration example of hardware of a computer that executes the series of processing described above by a program.

In the computer, a central processing unit (CPU) 1001, a read only memory (ROM) 1002, and a random access memory (RAM) 1003 are connected to one another by a bus 1004. An input/output interface 1005 is further connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone, and the like. The output unit 1007 includes a display, a speaker, and the like. The storage unit 1008 includes a hard disk, a nonvolatile memory, and the like. The communication unit 1009 includes a network interface and the like. The drive 1010 drives a removable recording medium 1011 such as a semiconductor memory, a magnetic disk, an optical disk, or a magneto-optical disk.

In the computer configured as described above, the CPU 1001 loads a program recorded in the ROM 1002 or the storage unit 1008 into the RAM 1003 via the input/output interface 1005 and the bus 1004 and executes the program, whereby the above-described series of processing is performed.

The program to be executed by the computer (the CPU 1001) can be recorded on the removable recording medium 1011 as a packaged medium or the like, for example, and be provided. Furthermore, the program can be provided via a wired or wireless transmission medium such as a local area network, the Internet, or digital satellite broadcasting.

In the computer, the program can be installed into the storage unit 1008 via the input/output interface 1005 when the removable recording medium 1011 is mounted to the drive 1010. Also, the program can be received by the communication unit 1009 via a wired or wireless transmission medium, and be installed into the storage unit 1008. In addition, the program can be installed in the ROM 1002 or the storage unit 1008 in advance.

The processing performed by the computer according to the program also includes processing executed in parallel or individually (for example, parallel processing or processing by an object). Furthermore, the program may be processed by one computer (processor) or may be processed in a distributed manner by a plurality of computers.

Note that the embodiment of the present disclosure is not limited to the above-described embodiment, and various modifications can be made without departing from the gist of the present disclosure. Furthermore, the effects described in the present specification are merely examples and are not restrictive, and some other effects may be achieved.

Furthermore, the present disclosure may have the following configurations.

(1) An information processing apparatus including:

a preliminary analysis unit that analyzes a neural network before inference using the neural network is performed and generates control information for controlling compression and decoding of a feature amount processed by the neural network;

a computing unit that performs inference using input data and the neural network and outputs a processing result obtained by processing the feature amount obtained from the input data as a computing result;

a compression unit that compresses the feature amount input from the computing unit on the basis of the control information and records a compressed feature amount that is the feature amount having been compressed in a memory; and
a decoding unit that decodes the compressed feature amount temporarily recorded in the memory on the basis of the control information and outputs the decoded feature amount to the computing unit.

(2) The information processing apparatus according to (1), in which
the preliminary analysis unit calculates a compression rate of the feature amount processed in each layer of the neural network on the basis of a data size of a weight of each layer of the neural network, a data size of the feature amount, and a memory size of the memory, and includes the calculated compression rate in the control information.
(3) The information processing apparatus according to (2), in which
the preliminary analysis unit determines a compression method of the feature amount in which the compression rate is equal to or greater than a predetermined value among the feature amounts for which the compression rate is calculated to be uncompressed on the basis of the compression rate of the feature amount, and includes the determined compression method in the control information.
(4) The information processing apparatus according to any one of (1) to (3), in which
the preliminary analysis unit determines a compression method of the feature amount in units of compression corresponding to a data access method on the basis of the feature amount processed in each layer of the neural network and the data access method in the processing of each layer of the neural network, and includes the determined compression method in the control information.
(5) The information processing apparatus according to (1) or (4), in which

the feature amount is three-dimensional data in which a feature amount of an xy plane is configured for each channel in a z direction, and
the preliminary analysis unit determines, as a compression method of the feature amount, a first compression method of collecting data of the feature amount in a first direction corresponding to the xy plane or a second compression method of collecting the data of the feature amount in a second direction corresponding to the z direction, and includes the determined compression method in the control information.

(6) The information processing apparatus according to (5), in which
the compression unit

uses a compression scheme for compressing the feature amount by generating a first prediction value for input data of the feature amount and entropy coding difference information obtained from a difference between the data of the feature amount and the first prediction value, and
calculates a difference between data of the feature amount extracted in units of compression corresponding to a data access method in processing of each layer of the neural network and the first prediction value according to the compression method.

(7) The information processing apparatus according to (6), in which
the decoding unit

uses a decoding scheme for decoding the compressed feature amount by generating a second prediction value to be added to the difference information obtained by entropy decoding of input data of the compressed feature amount and adding the difference information and the second prediction value, and
according to the compression method, rearranges the data of the feature amount obtained by adding the second prediction value to the difference information in units of compression corresponding to the data access method.

(8) The information processing apparatus according to (6), in which
in a case where the first compression method is designated, the compression unit generates the first prediction value by prediction of the same channel as the data of the feature amount in the first direction, and packs the difference information obtained from a difference between the data of the feature amount and the first prediction value in the first direction.
(9) The information processing apparatus according to (6), in which
in a case where the second compression method is designated, the compression unit generates the first prediction value by prediction of the same channel as the data of the feature amount in the first direction, and packs the difference information obtained from a difference between the data of the feature amount and the first prediction value in the second direction.

(10) The information processing apparatus according to (1), in which
the preliminary analysis unit analyzes a feature amount to be processed by the neural network on the basis of sample data of the feature amount, generates a parameter for controlling compression and decoding of the feature amount, and includes the generated parameter in the control information.
(11) The information processing apparatus according to (10), in which

the feature amount is three-dimensional data in which a feature amount of an xy plane is configured for each channel in a z direction, and
the preliminary analysis unit generates a control parameter for controlling compression and decoding of the feature amount in units of channels, and includes the generated control parameter in the control information.

(12) The information processing apparatus according to (11), in which

the preliminary analysis unit calculates a reference channel indicating a channel to be referred when a prediction value of the feature amount is generated on the basis of sample data of the feature amount, and includes identification information of the calculated reference channel in the control parameter,
the compression unit

uses a compression scheme for compressing the feature amount by generating a first prediction value for input data of the feature amount and entropy coding difference information obtained from a difference between the data of the feature amount and the first prediction value, and
generates the first prediction value according to the control parameter, and

the decoding unit

uses a decoding scheme for generating a second prediction value to be added to the difference information obtained by entropy decoding the input data of the compressed feature amount, and adding the difference information and the second prediction value to decode the compressed feature amount, and
generates the second prediction value according to the control parameter.

(13) The information processing apparatus according to (12), in which
the preliminary analysis unit calculates a reference parameter for generating the prediction value with reference to the reference channel on the basis of sample data of the feature amount and identification information of the reference channel, and includes the calculated reference parameter in the control parameter.
(14) The information processing apparatus according to (13), in which
the preliminary analysis unit determines, on the basis of the sample data of the feature amount, the identification information of the reference channel, and the reference parameter, one prediction method from among prediction methods including at least a first prediction method that is prediction performed with reference to a first direction corresponding to an xy plane, a second prediction method that is prediction performed with reference to between channels in a second direction corresponding to a z direction, and a third prediction method that is prediction performed with reference to both directions of the first direction and the second direction, and includes the determined prediction method in the control parameter.
(15) The information processing apparatus according to (14), in which
the preliminary analysis unit switches the reference channel, the reference parameter, and the prediction method for each channel.
(16) The information processing apparatus according to (11), in which

the preliminary analysis unit

selects a nonlinear transformation table for performing nonlinear transformation according to a result of analysis of a statistical value of sample data for each channel on the basis of the sample data of the feature amount, and
includes identification information of the selected nonlinear transformation table in the control parameter, and

the compression unit performs nonlinear transformation on input data of the feature amount according to the nonlinear transformation table.

(17) The information processing apparatus according to (16), in which

the preliminary analysis unit switches the nonlinear transformation table for each channel.
(18) The information processing apparatus according to (11) or (16), in which

the preliminary analysis unit

selects a residual nonlinear transformation table for performing residual nonlinear transformation according to a result of analysis of a statistical value of sample data for each channel on the basis of sample data of a prediction residual that is a difference between the sample data of the feature amount and a prediction value of the sample data of the feature amount, and
includes identification information of the selected residual nonlinear transformation table in the control parameter, and

the compression unit performs nonlinear transformation on a prediction residual that is a difference between data of the feature amount and a prediction value generated for the data of the feature amount according to the residual nonlinear transformation table.

(19) The information processing apparatus according to (18), in which
the preliminary analysis unit switches the residual nonlinear transformation table for each channel.
(20) The information processing apparatus according to claim 11, in which

the preliminary analysis unit

selects an entropy coding table for performing entropy coding according to a result of analysis of a statistical value of sample data for each channel on the basis of sample data of a prediction residual that is a difference between the sample data of the feature amount and a prediction value of the sample data of the feature amount, and
includes identification information of the selected entropy coding table in the control parameter, and

the compression unit performs entropy coding on difference information between data of the feature amount and a prediction value generated for the data of the feature amount according to the entropy coding table.

(21) The information processing apparatus according to (10), in which
the preliminary analysis unit analyzes sample data of the feature amount to generate a compression parameter including switching information for switching and using a plurality of compression models of the feature amount and correction value information for adapting the feature amount to each of the compression models, and includes the generated compression parameter in the control information.
(22) The information processing apparatus according to (21), in which
the compression model includes a compression model that enables compression without taking a difference from a prediction value.
(23) The information processing apparatus according to (21) or (22), in which
the compression unit

performs pre-processing of correcting the input feature amount on the basis of the correction value information to be adapted to a first compression model or a second compression model,
performs coding according to the first compression model or the second compression model on corrected feature amount corrected in the pre-processing, and
selects the compressed feature amount obtained by the coding according to the first compression model or the second compression model on the basis of the switching information and records the compressed feature amount in the memory.

(24) The information processing apparatus according to (23), in which
the decoding unit

performs decoding according to the first compression model or the second compression model on the compressed feature amount temporarily stored in the memory,
selects the corrected feature amount obtained by decoding according to the first compression model or the second compression model on the basis of the switching information, and
performs post-processing of returning the selected corrected feature amount to the feature amount before correction on the basis of the correction value information.

(25) An information processing method including:

by an information processing apparatus,
analyzing a neural network before inference using the neural network is performed and generating control information for controlling compression and decoding of a feature amount processed by the neural network;
performing inference using input data and the neural network and outputting a processing result obtained by processing the feature amount obtained from the input data as a computing result;
compressing the feature amount to be input on the basis of the control information and recording a compressed feature amount that is the feature amount having been compressed in a memory; and
decoding the compressed feature amount temporarily recorded in the memory on the basis of the control information and outputting the decoded feature amount.

(26) An information processing apparatus including:

a preliminary analysis unit that generates control information for controlling compression of image data on the basis of sample data of the image data; and
a compression unit that compresses the image data to be input on the basis of the control information, in which the preliminary analysis unit

selects a nonlinear transformation table for performing nonlinear transformation according to a result of analysis of a statistical value of sample data of the image data,
selects a residual nonlinear transformation table for performing a residual nonlinear transformation according to a result of analysis of a statistical value of a sample data on the basis of sample data of a prediction residual that is a difference between sample data of the image data and a prediction value of the sample data of the image data, and
includes identification information of the selected nonlinear transformation table and the residual nonlinear transformation table in the control information, and

the compression unit

uses a compression scheme for generating a prediction value for the image data to be input and compressing the image data by entropy coding difference information obtained from a difference between the image data and the prediction value,
performs nonlinear transformation on the image data to be input according to the nonlinear transformation table, and
performs nonlinear transformation on a prediction residual to which a nonlinear transformation has been applied, the prediction residual being a difference between the image data to which the nonlinear transformation has been applied and the prediction value generated for the image data to which the nonlinear transformation has been applied, according to the residual nonlinear transformation table.

(27) An information processing apparatus including:

a computing unit that performs inference using input data and a neural network and outputs a processing result obtained by processing a feature amount obtained from the input data as a computing result;
a compression unit that compresses the feature amount input from the computing unit and records a compressed feature amount that is the feature amount having been compressed in a memory; and
a decoding unit that decodes the compressed feature amount temporarily recorded in the memory and outputs the decoded feature amount to the computing unit, in which
the feature amount is three-dimensional data in which a feature amount of an xy plane is configured for each channel in a z direction, and
the compression unit

uses a compression scheme for generating a prediction value for data of the feature amount to be input and compressing the feature amount by entropy coding difference information obtained from a difference between the data of the feature amount and the prediction value, and
in a case where a compression method for grouping the data of the feature amount in a second direction corresponding to a z direction is set as the compression method of the feature amount, generates the prediction value by prediction in a first direction corresponding to an xy plane of the same channel as the data of the feature amount, and packs the difference information obtained from a difference between the data of the feature amount and the prediction value in the second direction.

REFERENCE SIGNS LIST

| | |
|---|---|
| 100 | Machine learning inference unit |
| 110 | Network preliminary analyzer |
| 111 | Machine learning computing unit |
| 121 | Computing unit |
| 122 | Compression unit |
| 123 | Decoding unit |
| 124 | Memory |
| 141 | Detection unit |
| 142 | Compression rate calculation unit |
| 143 | Compression method determination unit |
| 161 | Data extraction unit |
| 162 | Switch |
| 163 | Addition unit |
| 164 | Quantization unit |
| 165 | Entropy coding unit |
| 166 | Inverse quantization unit |
| 167 | Addition unit |
| 168 | Work buffer |
| 169 | Prediction value generation unit |
| 181 | Switch |
| 182 | Entropy decoding unit |
| 183 | Inverse quantization unit |
| 184 | Addition unit |
| 185 | Data rearrangement unit |
| 186 | Work buffer |
| 187 | Prediction value generation unit |
| 200 | Machine learning inference unit |
| 210 | Network preliminary analyzer |
| 211 | Machine learning computing unit |
| 221 | Computing unit |
| 222 | Compression unit |
| 223 | Decoding unit |
| 224 | Memory |
| 241 | Detection unit |
| 242 | Compression rate calculation unit |
| 243 | Compression method determination unit |
| 244 | Feature amount sample extraction unit |
| 245-0 | to 245-N Control parameter generation unit |
| 261 | Data extraction unit |
| 262 | Switch |
| 263 | Nonlinear transformation unit |
| 264 | Addition unit |
| 265 | Residual nonlinear transformation unit |
| 266 | Quantization unit |
| 267 | Entropy coding unit |
| 268 | Inverse quantization unit |
| 269 | Residual inverse nonlinear transformation unit |
| 270 | Addition unit |
| 271 | Work buffer |

| | |
|---|---|
| 272 | Prediction value generation unit |
| 281 | Switch |
| 282 | Entropy decoding unit |
| 283 | Inverse quantization unit |
| 284 | Residual inverse nonlinear transformation unit |
| 285 | Addition unit |
| 286 | Inverse nonlinear transformation unit |
| 287 | Data rearrangement unit |
| 288 | Work buffer |
| 289 | Prediction value generation unit |
| 321 | Nonlinear transformation table selection unit |
| 322 | Nonlinear transformation unit |
| 323 | Prediction calculation parameter calculation unit |
| 324 | Simple prediction value generation unit |
| 325 | Difference unit |
| 326 | Residual nonlinear transformation table selection unit |
| 327 | Residual nonlinear transformation unit |
| 328 | Entropy coding table selection unit |
| 421 | Channel division unit |
| 422-0 to 422-3 | Histogram calculation unit |
| 423-0 to 423-3 | Transformation table ID calculation unit |
| 441 | Reference channel calculation unit |
| 442 | Reference parameter calculation unit |
| 443 | Prediction method determination unit |
| 461 | Channel division unit |
| 462-0 to 462-3 | Histogram calculation unit |
| 463-0 to 463-3 | Transformation table ID calculation unit |
| 501 | CPU |
| 502 | DMAC |
| 503 | DRAM |
| 504 | DNN processor |
| 511 | Pre-processing unit |
| 511A | Asymmetric pre-processing unit |
| 511B | Symmetric pre-processing unit |
| 512 | Coding unit |
| 512A | Asymmetric coder |
| 512B | Symmetric coder |
| 513, 514 | Switch |
| 521 | Decoding unit |
| 521A | Asymmetric decoder |
| 521B | Symmetric decoder |
| 522 | Post-processing unit |
| 522A | Asymmetric post-processing unit |
| 522B | Symmetric post-processing unit |
| 523, 524, 525, 526 | Switch |
| 531 | Quantization unit |
| 532 | Quantization step determination unit |
| 533 | Variable-length coding unit |
| 534 | Variable-length code table |
| 535 | Refinement code processing unit |
| 536 | Combining unit |
| 541 | Separation unit |
| 542 | Variable-length decoding unit |
| 543 | Variable-length code table |
| 544 | Inverse quantization unit |
| 545 | Refinement decode processing unit |
| 546 | Combining unit |
| 551 | Quantization unit |

| | |
|---|---|
| 552 | Quantization unit |
| 553 | Quantization step determination unit |
| 554 | Subtraction unit |
| 555 | Variable-length coding unit |
| 556 | Variable-length code table |
| 557 | Refinement code processing unit |
| 558 | Combining unit |
| 561 | Separation unit |
| 562 | Variable-length decoding unit |
| 563 | Variable-length code table |
| 564 | Quantization unit |
| 565 | Addition unit |
| 566 | Inverse quantization unit |
| 567 | Refinement decode processing unit |
| 568 | Combining unit |

## Claims

**1.** An information processing apparatus comprising:

a preliminary analysis unit that analyzes a neural network before inference using the neural network is performed and generates control information for controlling compression and decoding of a feature amount processed by the neural network;
a computing unit that performs inference using input data and the neural network and outputs a processing result obtained by processing the feature amount obtained from the input data as a computing result;
a compression unit that compresses the feature amount input from the computing unit on a basis of the control information and records a compressed feature amount that is the feature amount having been compressed in a memory; and
a decoding unit that decodes the compressed feature amount temporarily recorded in the memory on a basis of the control information and outputs the decoded feature amount to the computing unit.

**2.** The information processing apparatus according to claim 1, wherein
the preliminary analysis unit calculates a compression rate of the feature amount processed in each layer of the neural network on a basis of a data size of a weight of each layer of the neural network, a data size of the feature amount, and a memory size of the memory, and includes the calculated compression rate in the control information.

**3.** The information processing apparatus according to claim 2, wherein
the preliminary analysis unit determines a compression method of the feature amount in which the compression rate is equal to or greater than a predetermined value among the feature amounts for which the compression rate is calculated to be uncompressed on a basis of the compression rate of the feature amount, and includes the determined compression method in the control information.

**4.** The information processing apparatus according to claim 1, wherein
the preliminary analysis unit determines a compression method of the feature amount in units of compression corresponding to a data access method on a basis of the feature amount processed in each layer of the neural network and the data access method in the processing of each layer of the neural network, and includes the determined compression method in the control information.

**5.** The information processing apparatus according to claim 1, wherein

the feature amount is three-dimensional data in which a feature amount of an xy plane is configured for each channel in a z direction, and
the preliminary analysis unit determines, as a compression method of the feature amount, a first compression method of collecting data of the feature amount in a first direction corresponding to the xy plane or a second compression method of collecting the data of the feature amount in a second direction corresponding to the z direction, and includes the determined compression method in the control information.

**6.** The information processing apparatus according to claim 5, wherein

the compression unit

uses a compression scheme for compressing the feature amount by generating a first prediction value for input data of the feature amount and entropy coding difference information obtained from a difference between the data of the feature amount and the first prediction value, and
calculates a difference between data of the feature amount extracted in units of compression corresponding to a data access method in processing of each layer of the neural network and the first prediction value according to the compression method.

**7.** The information processing apparatus according to claim 6, wherein
the decoding unit

uses a decoding scheme for decoding the compressed feature amount by generating a second prediction value to be added to the difference information obtained by entropy decoding of input data of the compressed feature amount and adding the difference information and the second prediction value, and
according to the compression method, rearranges the data of the feature amount obtained by adding the second prediction value to the difference information in units of compression corresponding to the data access method.

**8.** The information processing apparatus according to claim 6, wherein
in a case where the first compression method is designated, the compression unit generates the first prediction value by prediction of the same channel as the data of the feature amount in the first direction, and packs the difference information obtained from a difference between the data of the feature amount and the first prediction value in the first direction.

**9.** The information processing apparatus according to claim 6, wherein
in a case where the second compression method is designated, the compression unit generates the first prediction value by prediction of the same channel as the data of the feature amount in the first direction, and packs the difference information obtained from a difference between the data of the feature amount and the first prediction value in the second direction.

**10.** The information processing apparatus according to claim 1, wherein
the preliminary analysis unit analyzes a feature amount to be processed by the neural network on a basis of sample data of the feature amount, generates a parameter for controlling compression and decoding of the feature amount, and includes the generated parameter in the control information.

**11.** The information processing apparatus according to claim 10, wherein

the feature amount is three-dimensional data in which a feature amount of an xy plane is configured for each channel in a z direction, and
the preliminary analysis unit generates a control parameter for controlling compression and decoding of the feature amount in units of channels, and includes the generated control parameter in the control information.

**12.** The information processing apparatus according to claim 11, wherein

the preliminary analysis unit calculates a reference channel indicating a channel to be referred when a prediction value of the feature amount is generated on a basis of sample data of the feature amount, and includes identification information of the calculated reference channel in the control parameter,
the compression unit

uses a compression scheme for compressing the feature amount by generating a first prediction value for input data of the feature amount and entropy coding difference information obtained from a difference between the data of the feature amount and the first prediction value, and
generates the first prediction value according to the control parameter, and

the decoding unit

uses a decoding scheme for generating a second prediction value to be added to the difference information obtained by entropy decoding the input data of the compressed feature amount, and adding the difference information and the second prediction value to decode the compressed feature amount, and generates the second prediction value according to the control parameter.

**13.** The information processing apparatus according to claim 12, wherein the preliminary analysis unit calculates a reference parameter for generating the prediction value with reference to the reference channel on a basis of sample data of the feature amount and identification information of the reference channel, and includes the calculated reference parameter in the control parameter.

**14.** The information processing apparatus according to claim 13, wherein the preliminary analysis unit determines, on a basis of the sample data of the feature amount, the identification information of the reference channel, and the reference parameter, one prediction method from among prediction methods including at least a first prediction method that is prediction performed with reference to a first direction corresponding to an xy plane, a second prediction method that is prediction performed with reference to between channels in a second direction corresponding to a z direction, and a third prediction method that is prediction performed with reference to both directions of the first direction and the second direction, and includes the determined prediction method in the control parameter.

**15.** The information processing apparatus according to claim 14, wherein the preliminary analysis unit switches the reference channel, the reference parameter, and the prediction method for each channel.

**16.** The information processing apparatus according to claim 11, wherein

the preliminary analysis unit

selects a nonlinear transformation table for performing nonlinear transformation according to a result of analysis of a statistical value of sample data for each channel on a basis of the sample data of the feature amount, and
includes identification information of the selected nonlinear transformation table in the control parameter, and

the compression unit performs nonlinear transformation on input data of the feature amount according to the nonlinear transformation table.

**17.** The information processing apparatus according to claim 16, wherein the preliminary analysis unit switches the nonlinear transformation table for each channel.

**18.** The information processing apparatus according to claim 11, wherein

the preliminary analysis unit

selects a residual nonlinear transformation table for performing residual nonlinear transformation according to a result of analysis of a statistical value of sample data for each channel on a basis of sample data of a prediction residual that is a difference between the sample data of the feature amount and a prediction value of the sample data of the feature amount, and
includes identification information of the selected residual nonlinear transformation table in the control parameter, and

the compression unit performs nonlinear transformation on a prediction residual that is a difference between data of the feature amount and a prediction value generated for the data of the feature amount according to the residual nonlinear transformation table.

**19.** The information processing apparatus according to claim 18, wherein the preliminary analysis unit switches the residual nonlinear transformation table for each channel.

**20.** The information processing apparatus according to claim 11, wherein

the preliminary analysis unit

selects an entropy coding table for performing entropy coding according to a result of analysis of a statistical value of sample data for each channel on a basis of sample data of a prediction residual that is a difference between the sample data of the feature amount and a prediction value of the sample data of the feature amount, and
includes identification information of the selected entropy coding table in the control parameter, and

the compression unit performs entropy coding on difference information between data of the feature amount and a prediction value generated for the data of the feature amount according to the entropy coding table.

**21.** The information processing apparatus according to claim 10, wherein
the preliminary analysis unit analyzes sample data of the feature amount to generate a compression parameter including switching information for switching and using a plurality of compression models of the feature amount and correction value information for adapting the feature amount to each of the compression models, and includes the generated compression parameter in the control information.

**22.** The information processing apparatus according to claim 21, wherein
the compression model includes a compression model that enables compression without taking a difference from a prediction value.

**23.** The information processing apparatus according to claim 21, wherein
the compression unit

performs pre-processing of correcting the input feature amount on a basis of the correction value information to be adapted to a first compression model or a second compression model,
performs coding according to the first compression model or the second compression model on corrected feature amount corrected in the pre-processing, and
selects the compressed feature amount obtained by the coding according to the first compression model or the second compression model on a basis of the switching information and records the compressed feature amount in the memory.

**24.** The information processing apparatus according to claim 23, wherein
the decoding unit

performs decoding according to the first compression model or the second compression model on the compressed feature amount temporarily stored in the memory,
selects the corrected feature amount obtained by decoding according to the first compression model or the second compression model on a basis of the switching information, and
performs post-processing of returning the selected corrected feature amount to the feature amount before correction on a basis of the correction value information.

**25.** An information processing method comprising:

by an information processing apparatus,
analyzing a neural network before inference using the neural network is performed and generating control information for controlling compression and decoding of a feature amount processed by the neural network;
performing inference using input data and the neural network and outputting a processing result obtained by processing the feature amount obtained from the input data as a computing result;
compressing the feature amount to be input on a basis of the control information and recording a compressed feature amount that is the feature amount having been compressed in a memory; and
decoding the compressed feature amount temporarily recorded in the memory on a basis of the control information and outputting the decoded feature amount.

**26.** An information processing apparatus comprising:

a preliminary analysis unit that generates control information for controlling compression of image data on a basis of sample data of the image data; and
a compression unit that compresses the image data to be input on a basis of the control information, wherein the preliminary analysis unit

selects a nonlinear transformation table for performing nonlinear transformation according to a result of analysis of a statistical value of sample data of the image data,
selects a residual nonlinear transformation table for performing a residual nonlinear transformation according to a result of analysis of a statistical value of a sample data on a basis of sample data of a prediction residual that is a difference between sample data of the image data and a prediction value of the sample data of the image data, and
includes identification information of the selected nonlinear transformation table and the residual nonlinear transformation table in the control information, and

the compression unit

uses a compression scheme for generating a prediction value for the image data to be input and compressing the image data by entropy coding difference information obtained from a difference between the image data and the prediction value,
performs nonlinear transformation on the image data to be input according to the nonlinear transformation table, and
performs nonlinear transformation on a prediction residual to which a nonlinear transformation has been applied, the prediction residual being a difference between the image data to which the nonlinear transformation has been applied and the prediction value generated for the image data to which the nonlinear transformation has been applied, according to the residual nonlinear transformation table.

**27.** An information processing apparatus comprising:

a computing unit that performs inference using input data and a neural network and outputs a processing result obtained by processing a feature amount obtained from the input data as a computing result;
a compression unit that compresses the feature amount input from the computing unit and records a compressed feature amount that is the feature amount having been compressed in a memory; and
a decoding unit that decodes the compressed feature amount temporarily recorded in the memory and outputs the decoded feature amount to the computing unit, wherein
the feature amount is three-dimensional data in which a feature amount of an xy plane is configured for each channel in a z direction, and
the compression unit

uses a compression scheme for generating a prediction value for data of the feature amount to be input and compressing the feature amount by entropy coding difference information obtained from a difference between the data of the feature amount and the prediction value, and
in a case where a compression method for grouping the data of the feature amount in a second direction corresponding to a z direction is set as the compression method of the feature amount, generates the prediction value by prediction in a first direction corresponding to an xy plane of the same channel as the data of the feature amount, and packs the difference information obtained from a difference between the data of the feature amount and the prediction value in the second direction.

FIG. 1

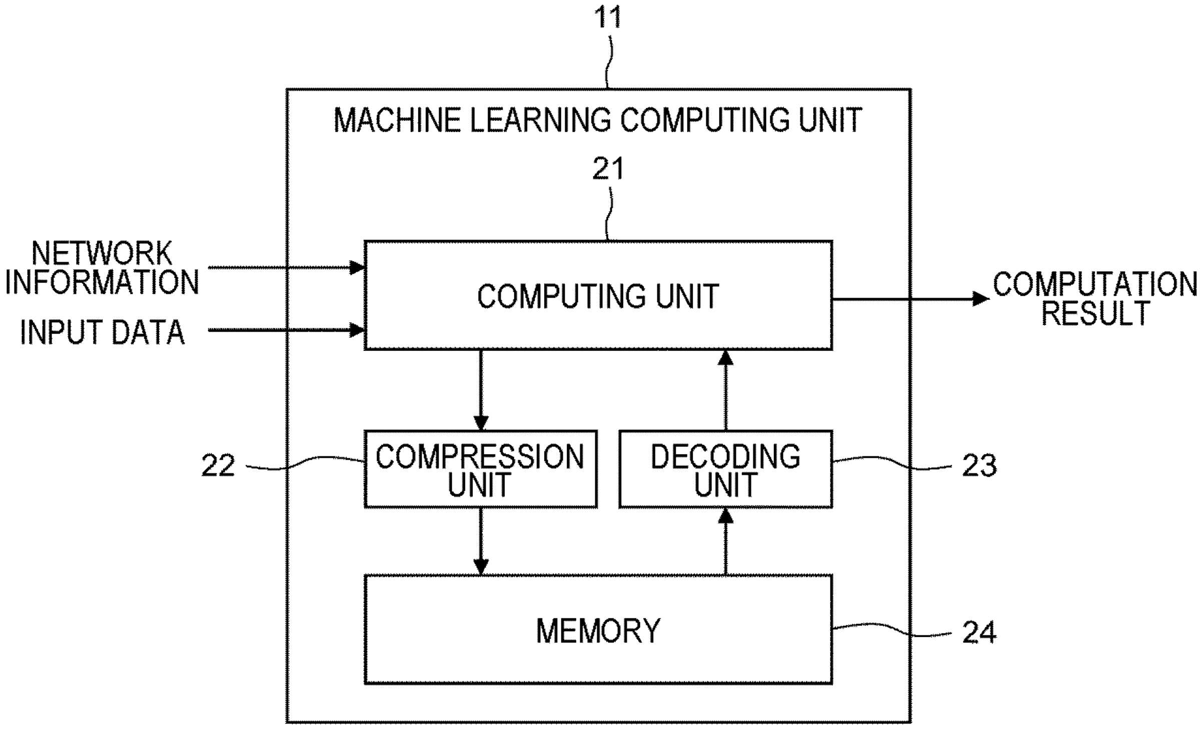
11
MACHINE LEARNING COMPUTING UNIT
21
NETWORK INFORMATION
INPUT DATA
COMPUTING UNIT
COMPUTATION RESULT
22
COMPRESSION UNIT
DECODING UNIT
23
MEMORY
24

FIG. 2

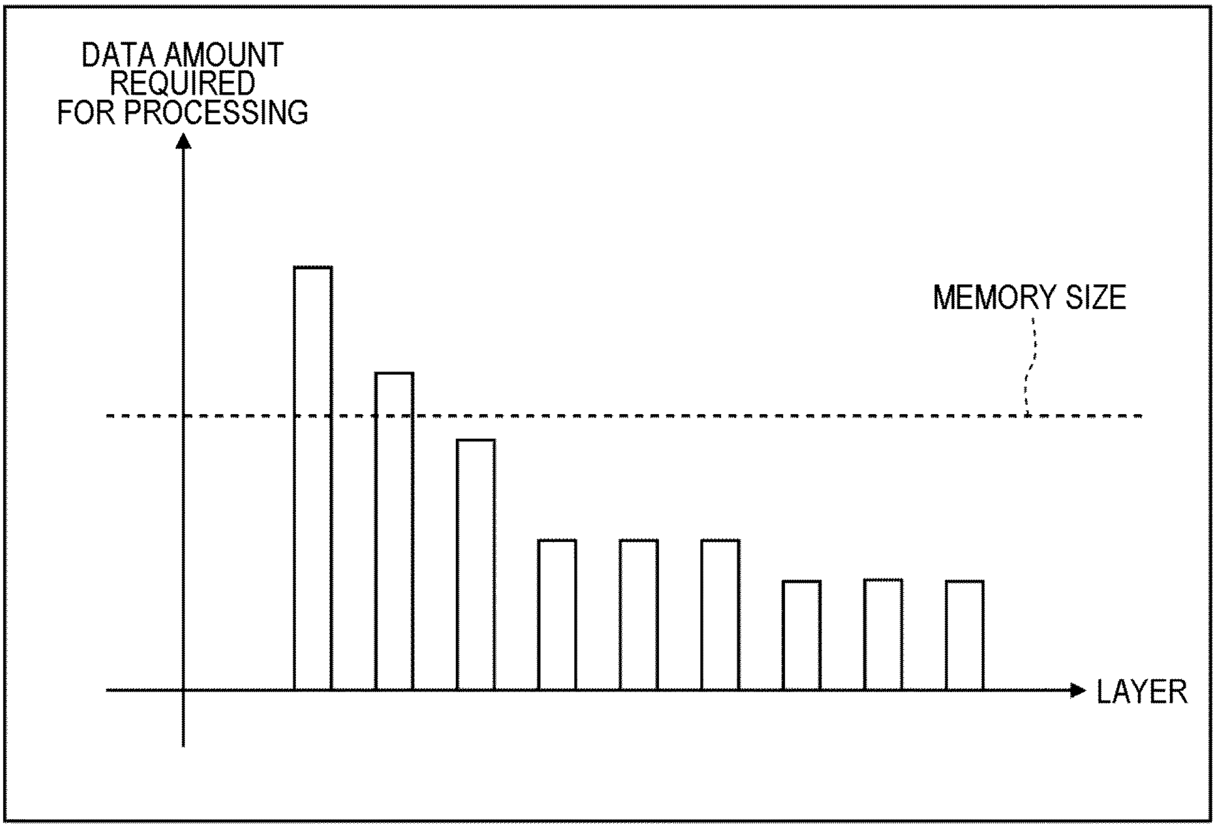
DATA AMOUNT REQUIRED FOR PROCESSING
MEMORY SIZE
LAYER

FIG. 3

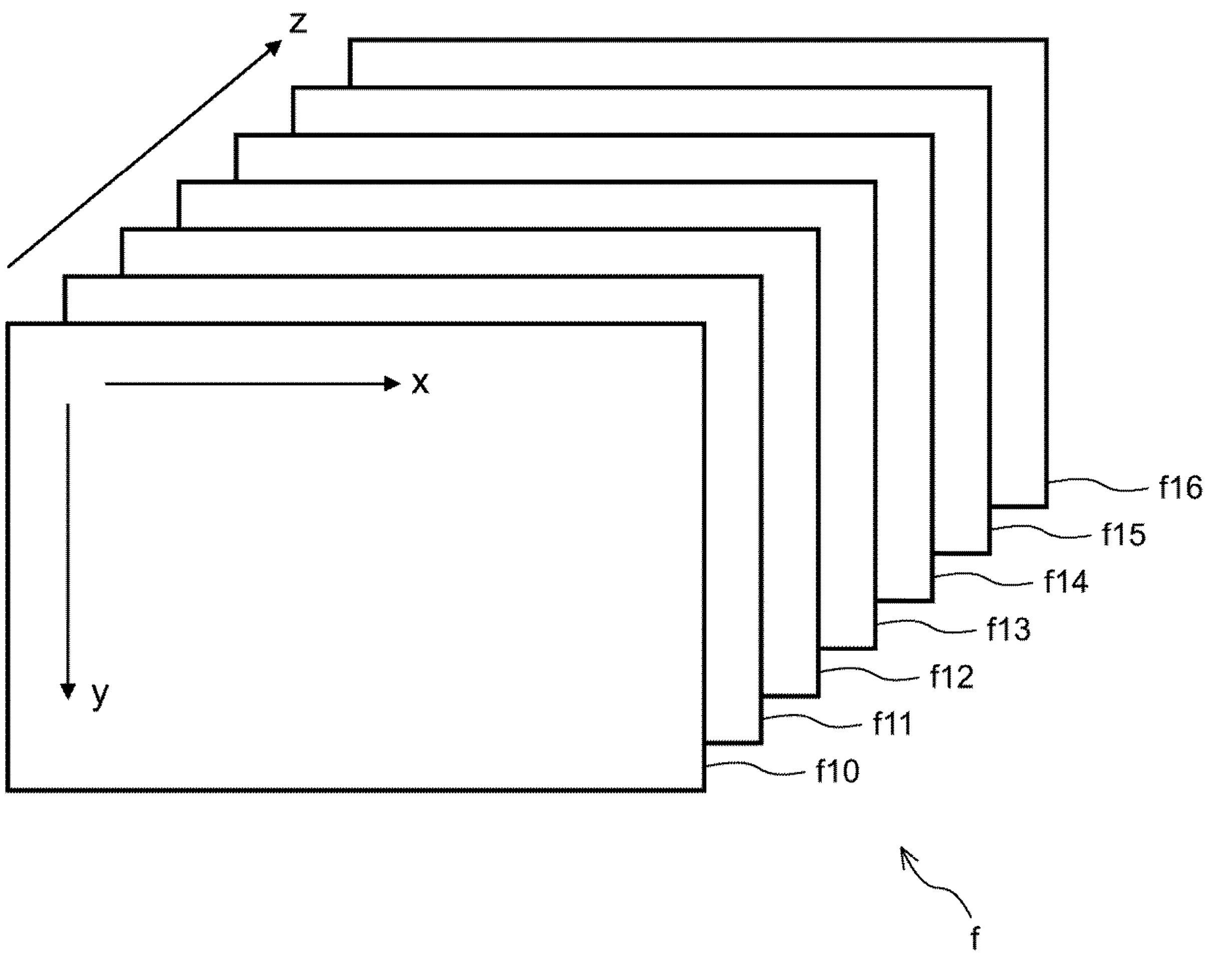

FIG. 4

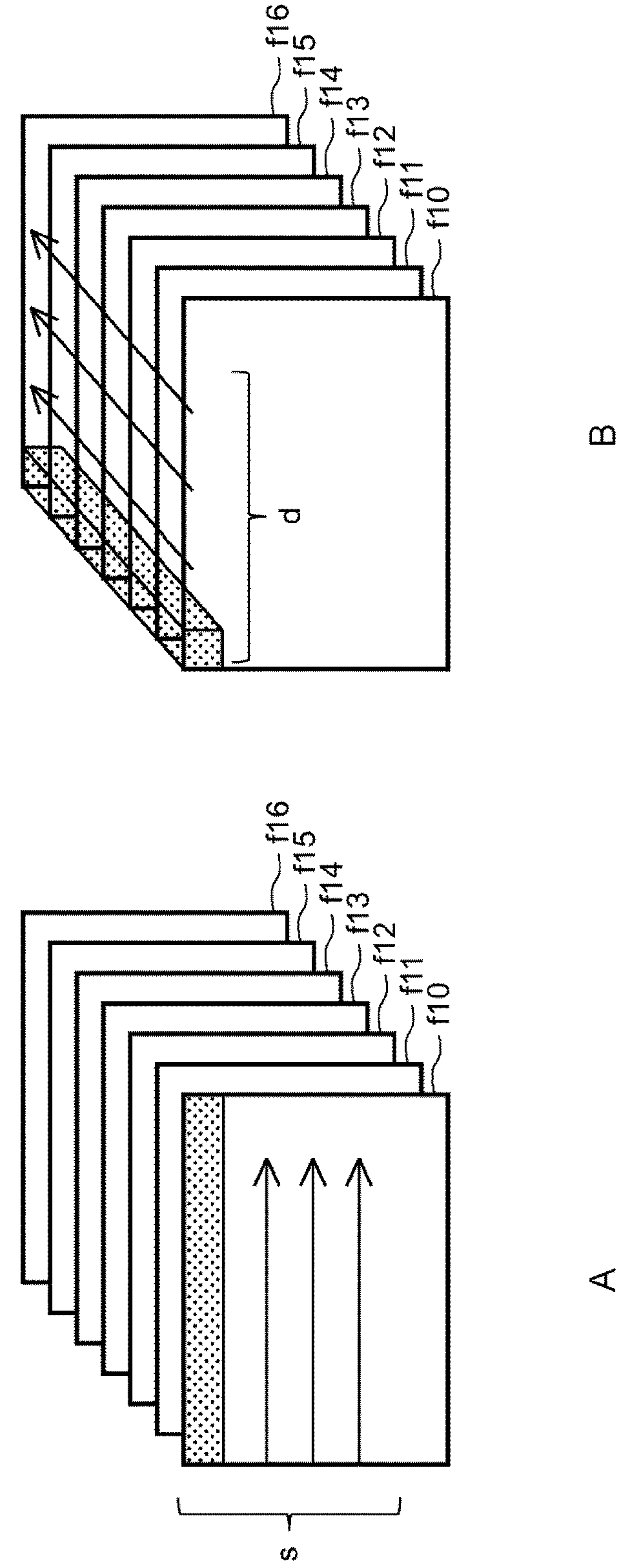

FIG. 5

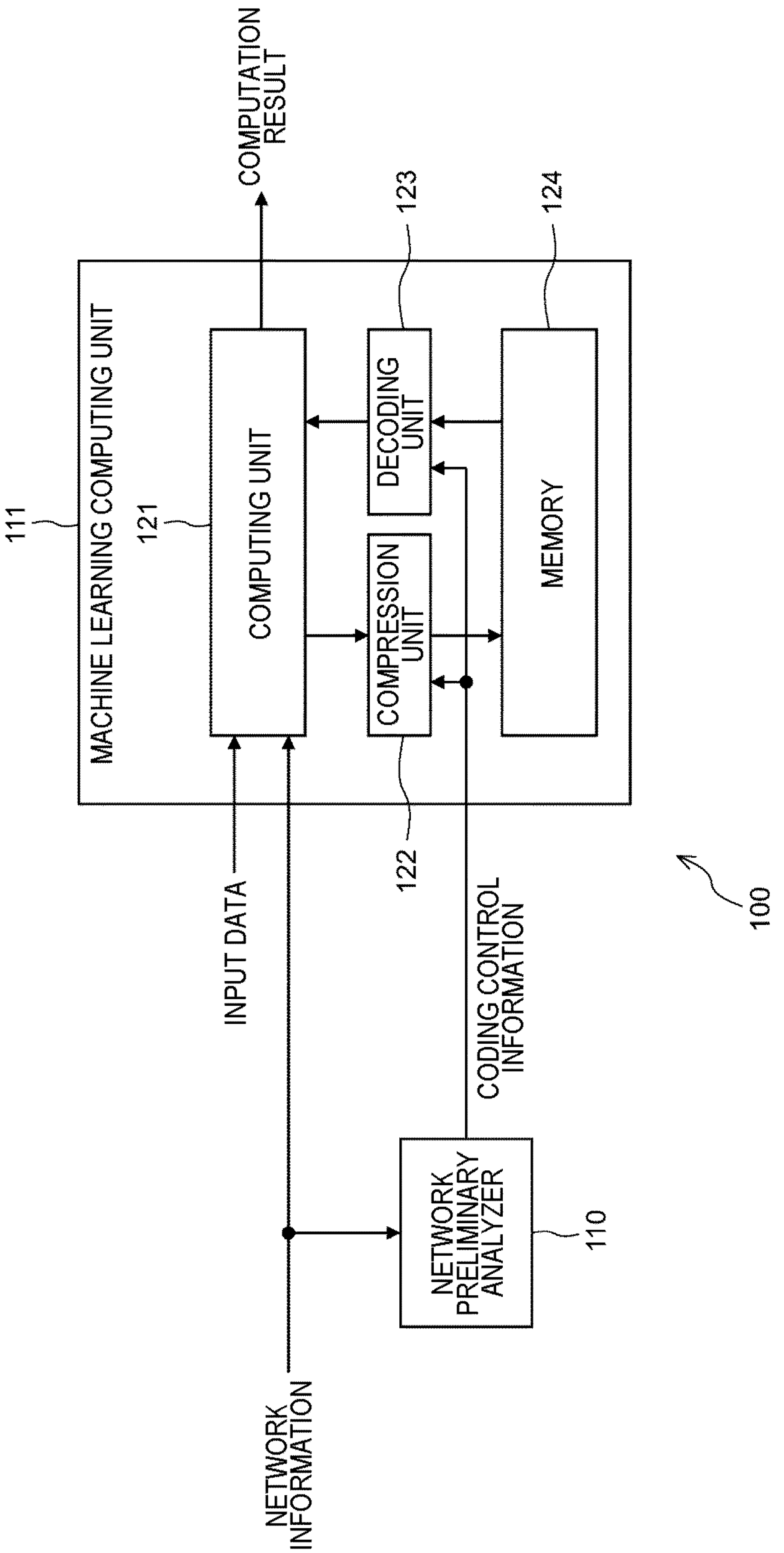
COMPUTATION RESULT
123
124
111
MACHINE LEARNING COMPUTING UNIT
121
COMPUTING UNIT
DECODING UNIT
COMPRESSION UNIT
MEMORY
122
INPUT DATA
CODING CONTROL INFORMATION
100
NETWORK PRELIMINARY ANALYZER
110
NETWORK INFORMATION

FIG. 6

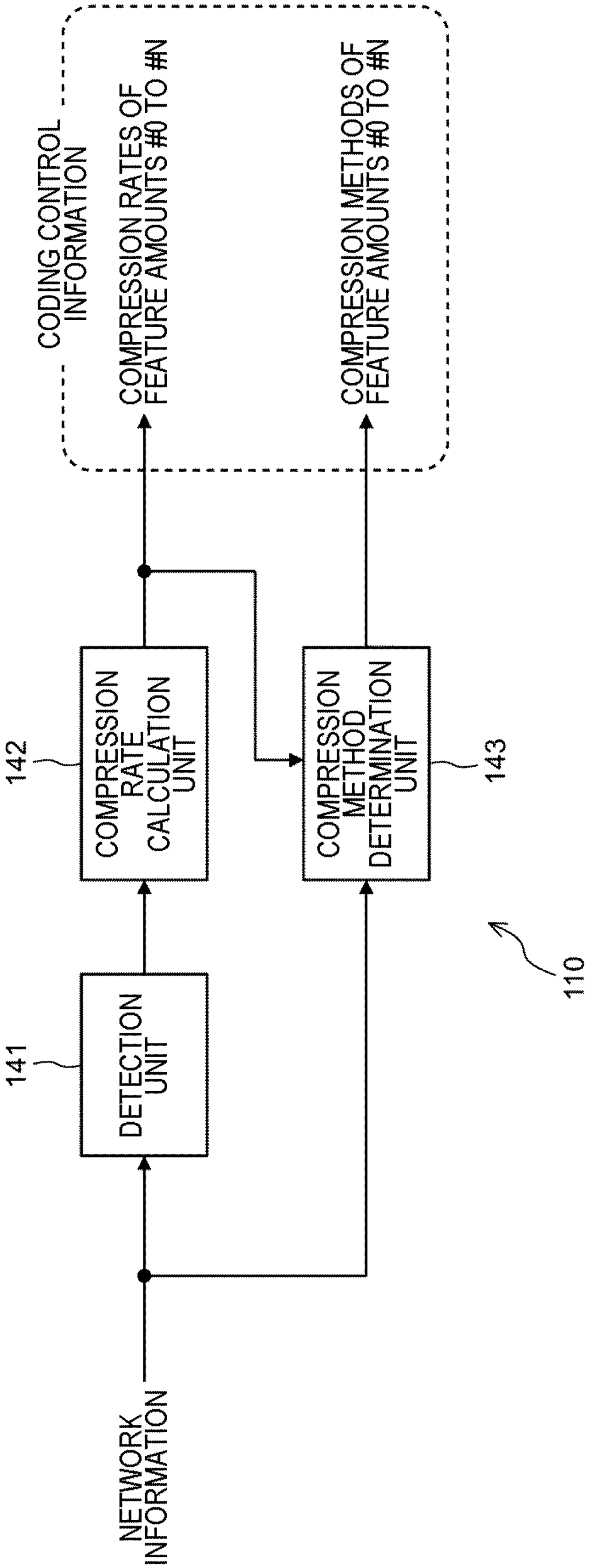
CODING CONTROL INFORMATION
COMPRESSION RATES OF FEATURE AMOUNTS #0 TO #N
COMPRESSION METHODS OF FEATURE AMOUNTS #0 TO #N
142
COMPRESSION RATE CALCULATION UNIT
COMPRESSION METHOD DETERMINATION UNIT
143
141
DETECTION UNIT
110
NETWORK INFORMATION

FIG. 7

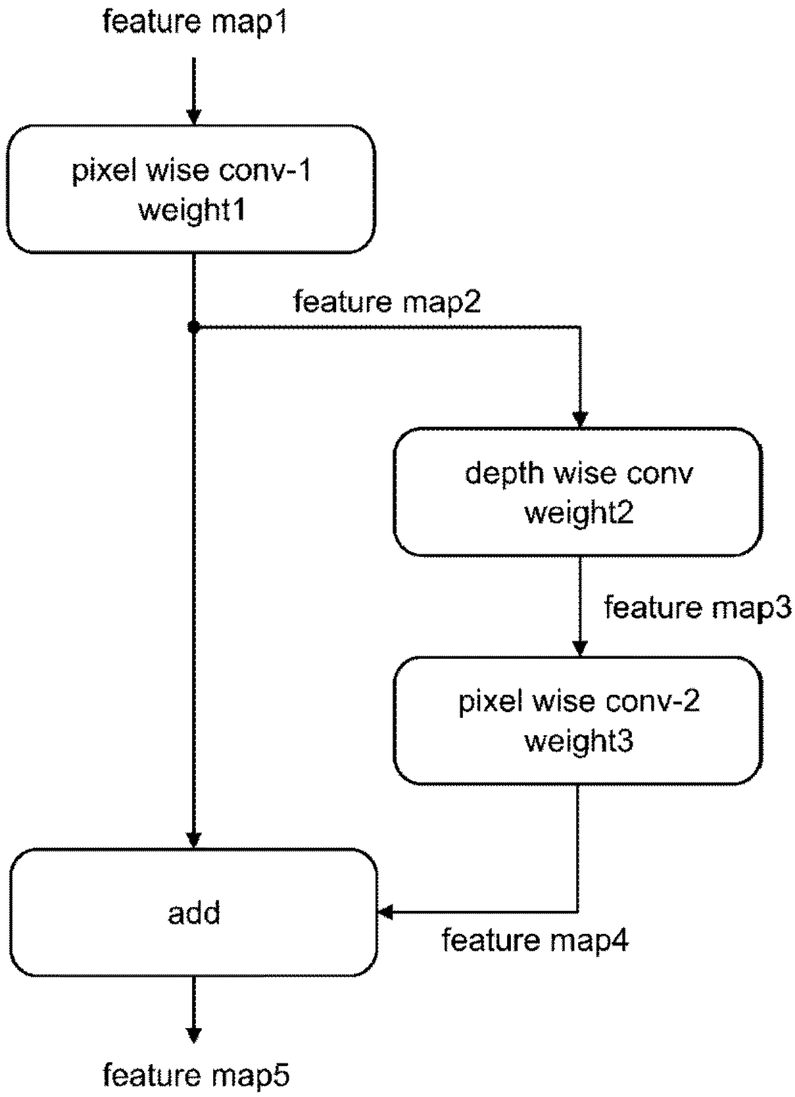


FIG. 8

| | kernel size | data size[byte] |
|---|---|---|
| weight 1 | 8x1x1x16 | 128 |
| weight 2 | 1x3x3x32 | 288 |
| weight 3 | 8x1x1x32 | 256 |
| total | | 672 |

FIG. 9

| | size | data size[byte] |
|---|---|---|
| feature map 1 | 1x30x40x16 | 19200 |
| feature map 2 | 1x30x40x8 | 9600 |
| feature map 3 | 1x30x40x32 | 38400 |
| feature map 4 | 1x30x40x8 | 9600 |
| feature map 5 | 1x30x40x8 | 9600 |

FIG. 10

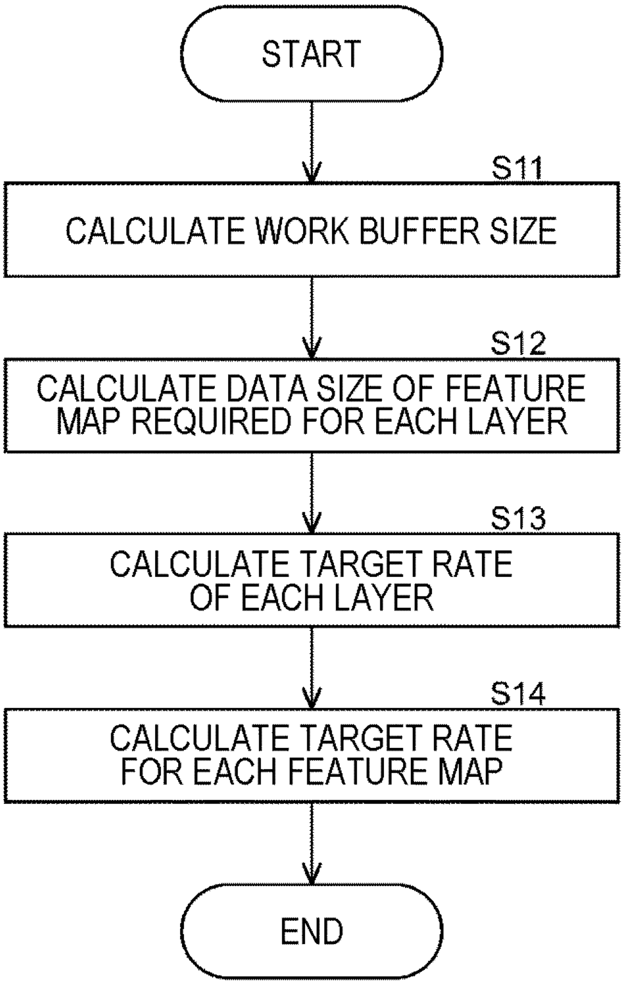

FIG. 11

| | input1 | input2 | output | skip | feature map data size |
|---|---|---|---|---|---|
| pixel wise conv-1 | feature map1 19200 byte | | feature map2 9600 byte | | 28800 byte |
| depth wise conv | feature map2 9600 byte | | feature map3 38400 byte | | 48000 byte |
| pixel wise conv-2 | feature map3 38400 byte | | feature map4 9600 byte | feature map2 9600 byte | 57600 byte |
| add | feature map2 9600 byte | feature map4 9600 byte | feature map5 9600 byte | | 28800 byte |

FIG. 12

| | feature map data size |
|---|---|
| pixel wise conv-1 | 28800 byte |
| depth wise conv | 48000 byte |
| pixel wise conv-2 | 57600 byte |
| add | 28800 byte |

FIG. 13

| | max target rate |
|---|---|
| pixel wise conv-1 | 8.702222222 |
| depth wise conv | 5.221333333 |
| pixel wise conv-2 | 4.351111111 |
| add | 8.702222222 |

FIG. 14

| | layer target rate |
|---|---|
| pixel wise conv-1 | 8 |
| depth wise conv | 5 |
| pixel wise conv-2 | 4 |
| add | 8 |

FIG. 15

| | pixel wise conv-1 | depth wise conv | pixel wise conv-2 | add | feature target rate |
|---|---|---|---|---|---|
| feature map1 | 8 | NOT REFERRED | NOT REFERRED | NOT REFERRED | 8 |
| feature map2 | 8 | 5 | 4 | 8 | 4 |
| feature map3 | NOT REFERRED | 5 | 4 | NOT REFERRED | 4 |
| feature map4 | NOT REFERRED | NOT REFERRED | 4 | 8 | 4 |
| feature map5 | NOT REFERRED | NOT REFERRED | NOT REFERRED | 8 | 8 |

FIG. 16

| | feature target rate |
|---|---|
| feature map1 | 8 |
| feature map2 | 4 |
| feature map3 | 4 |
| feature map4 | 4 |
| feature map5 | 8 |

FIG. 17

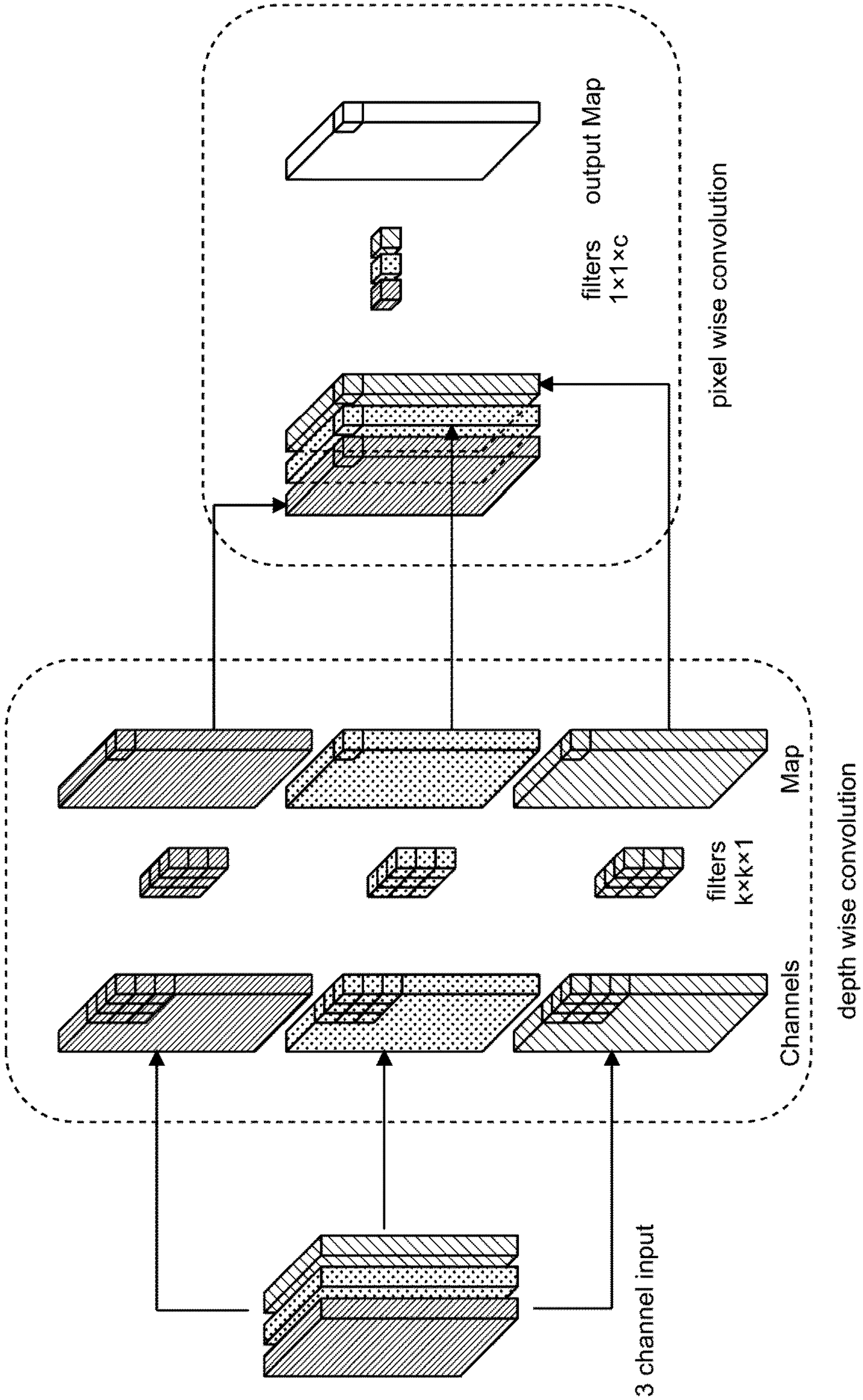
3 channel input
Channels
filters
k×k×1
Map
depth wise convolution
filters
1×1×c
output Map
pixel wise convolution

FIG. 18

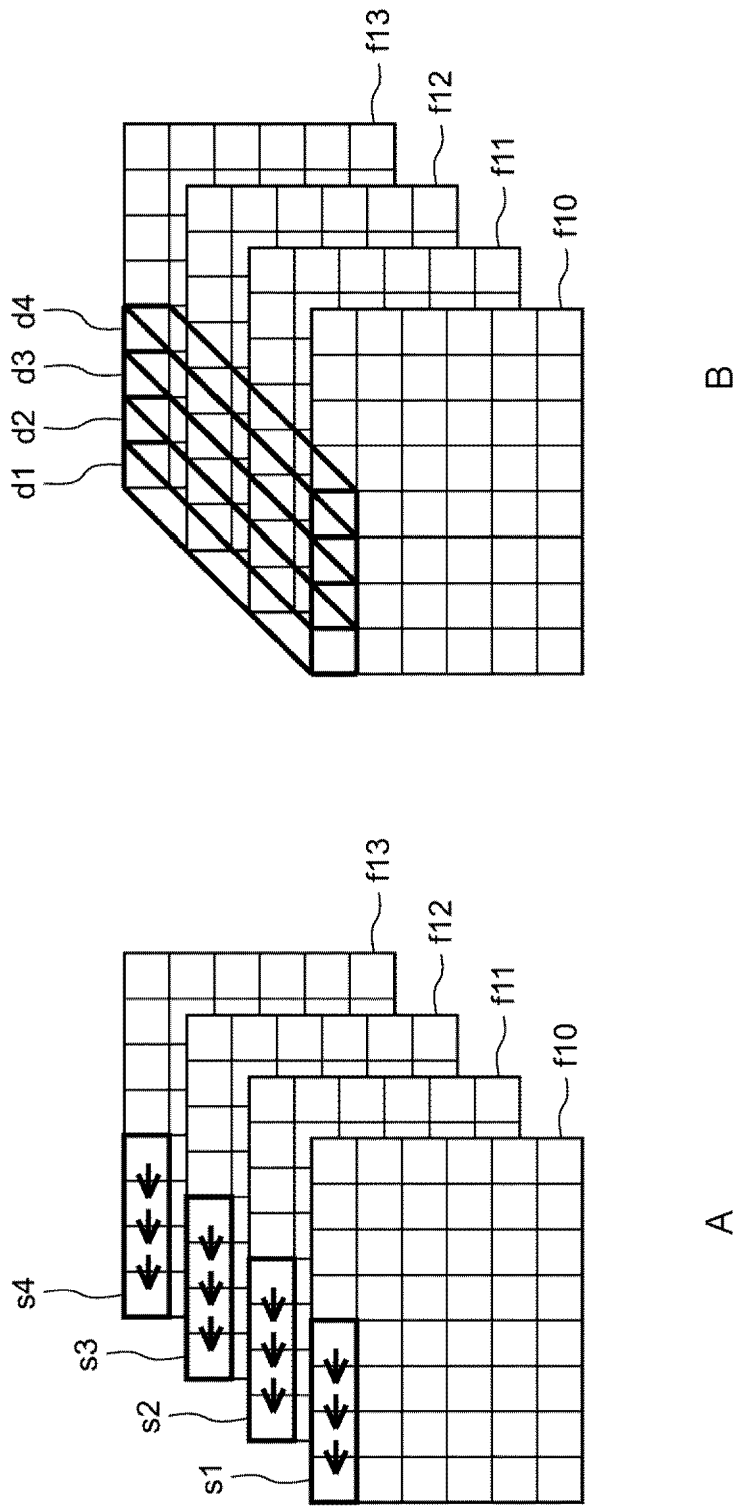

FIG. 19

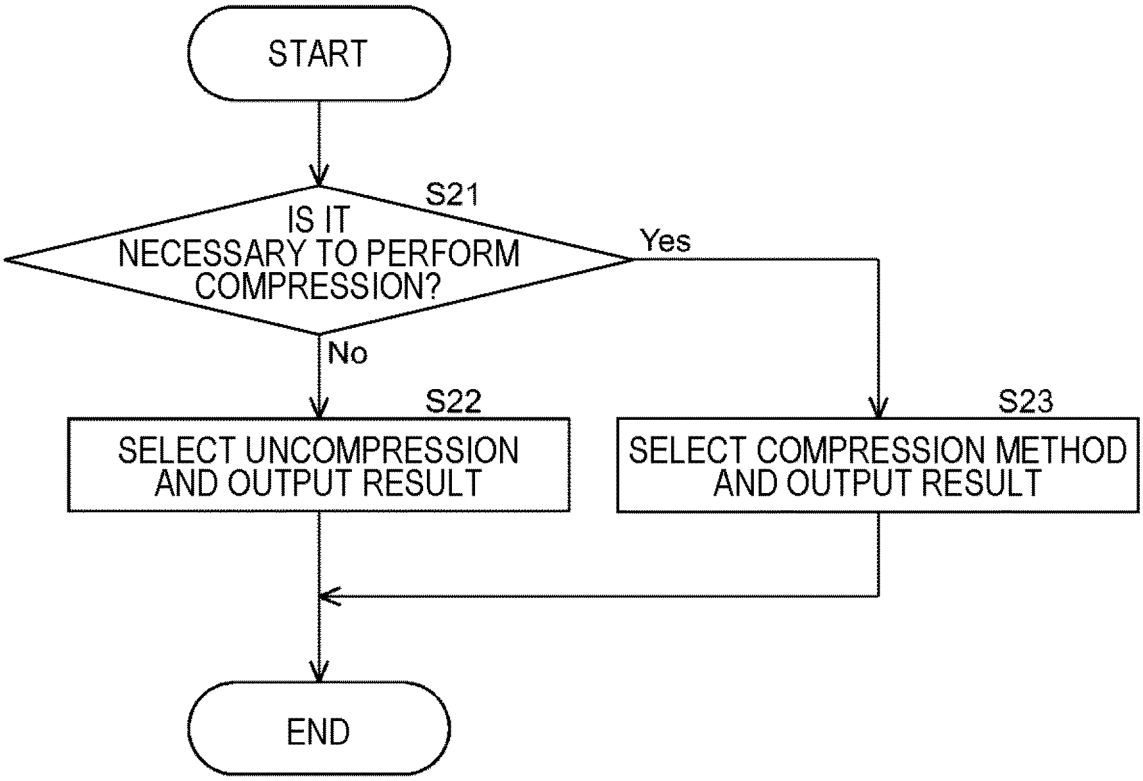
START
S21
IS IT NECESSARY TO PERFORM COMPRESSION?
Yes
No
S22
SELECT UNCOMPRESSION AND OUTPUT RESULT
S23
SELECT COMPRESSION METHOD AND OUTPUT RESULT
END

FIG. 20

| DETERMINATION TABLE | pixel wise conv-1 | depth wise conv | pixel wise conv-2 | add | DETERMINED COMPRESSION METHOD |
|---|---|---|---|---|---|
| feature map1 | | | | | **UNCOMPRESSION** |
| feature map2 | | | | | |
| feature map3 | | | | | |
| feature map4 | | | | | |
| feature map5 | | | | | **UNCOMPRESSION** |

FIG. 21

| DETERMINATION TABLE | pixel wise conv-1 | depth wise conv | pixel wise conv-2 | add | DETERMINED COMPRESSION METHOD |
|---|---|---|---|---|---|
| feature map1 | **pixel-wise** | | | | UNCOMPRESSION |
| feature map2 | | **depth-wise** | | **don't care** | |
| feature map3 | | | **pixel-wise** | | |
| feature map4 | | | | **don't care** | |
| feature map5 | | | | | UNCOMPRESSION |

*FIG. 22*

| DETERMINATION TABLE | pixel wise conv-1 | depth wise conv | pixel wise conv-2 | add | DETERMINED COMPRESSION METHOD |
|---|---|---|---|---|---|
| feature map1 | pixel-wise | | | | UNCOMPRESSION |
| feature map2 | | depth-wise | | don't care | |
| feature map3 | | | pixel-wise → | | **DEPTH DIRECTION COLLECTION** |
| feature map4 | | | | don't care | |
| feature map5 | | | | | UNCOMPRESSION |

FIG. 23

| DETERMINATION TABLE | pixel wise conv-1 | depth wise conv | pixel wise conv-2 | add | DETERMINED COMPRESSION METHOD |
|---|---|---|---|---|---|
| feature map1 | pixel-wise | | | | UNCOMPRESSION |
| feature map2 | | depth-wise | | ~~don't care~~ **depth-wise** | **SPATIAL DIRECTION COLLECTION** |
| feature map3 | | | pixel-wise | | DEPTH DIRECTION COLLECTION |
| feature map4 | | | | don't care | |
| feature map5 | | | | | UNCOMPRESSION |

FIG. 24

| priority | access method |
| --- | --- |
| 1 | ・depth-wise<br>・pixel-wise |
| 2 | ・don't care |

# FIG. 25

| DETERMINATION TABLE | pixel wise conv-1 | depth wise conv | pixel wise conv-2 | add | DETERMINED COMPRESSION METHOD |
|---|---|---|---|---|---|
| feature map1 | pixel-wise | | | | UNCOMPRESSION |
| feature map2 | | depth-wise | | ~~don't care~~ depth-wise | SPATIAL DIRECTION COLLECTION |
| feature map3 | | | pixel-wise | | DEPTH DIRECTION COLLECTION |
| feature map4 | | | | ~~don't care~~ **depth-wise** | **SPATIAL DIRECTION COLLECTION** |
| feature map5 | | | | | UNCOMPRESSION |

# FIG. 26

| DETERMINATION TABLE | pixel wise conv-1 | depth wise conv | pixel wise conv-2 | add | DETERMINED COMPRESSION METHOD |
|---|---|---|---|---|---|
| feature map1 | pixel-wise | | | | UNCOMPRESSION |
| feature map2 | | depth-wise | | ~~don't care~~ depth-wise | SPATIAL DIRECTION COLLECTION |
| feature map3 | | | pixel-wise | | DEPTH DIRECTION COLLECTION |
| feature map4 | | | | ~~don't care~~ depth-wise | SPATIAL DIRECTION COLLECTION |
| feature map5 | | | | | UNCOMPRESSION |

FIG. 27

| | TARGET RATE | COMPRESSION METHOD |
|---|---|---|
| feature map1 | 8 | UNCOMPRESSION |
| feature map2 | 4 | SPATIAL DIRECTION COLLECTION |
| feature map3 | 4 | DEPTH DIRECTION COLLECTION |
| feature map4 | 4 | SPATIAL DIRECTION COLLECTION |
| feature map5 | 8 | UNCOMPRESSION |

FIG. 28

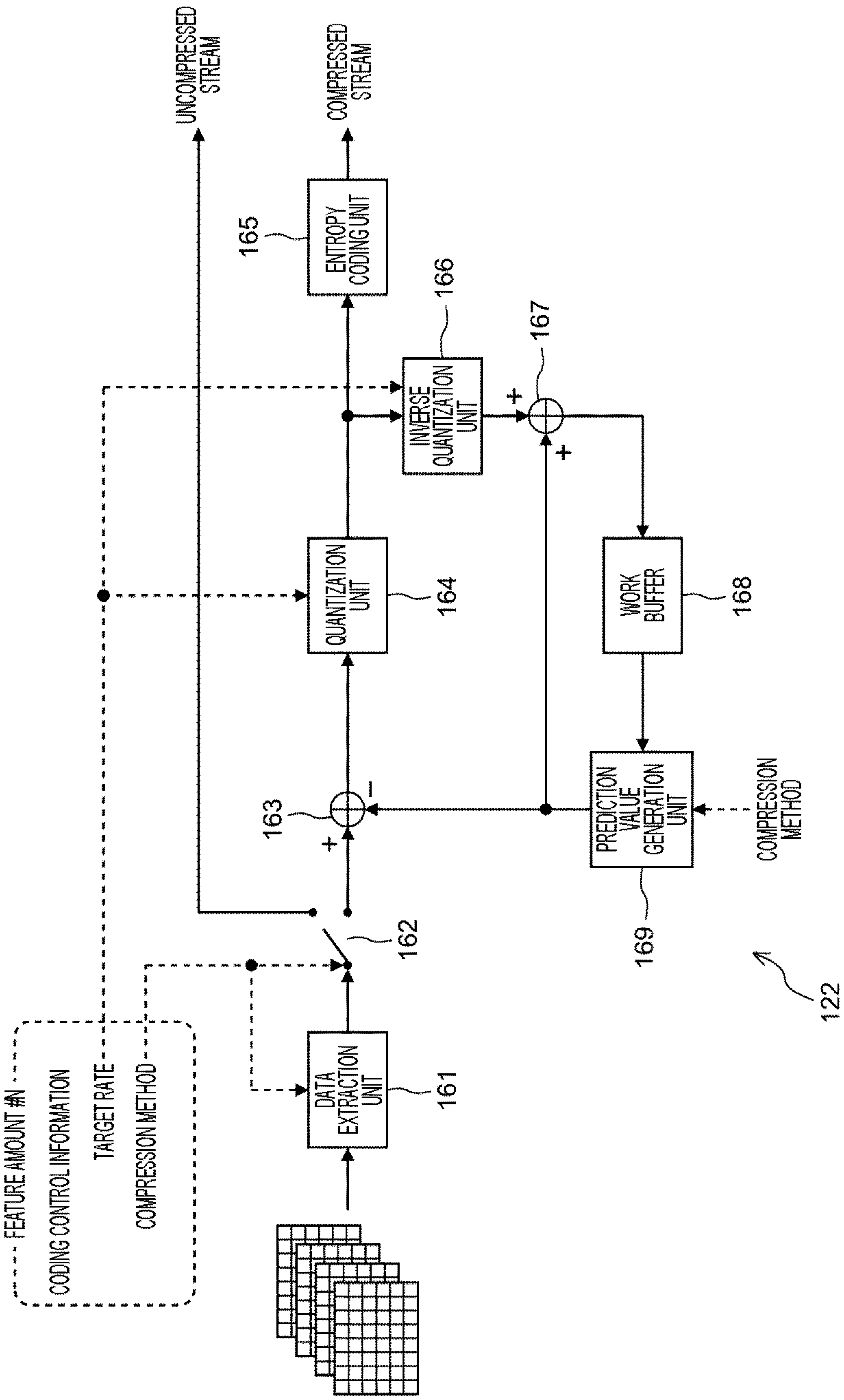
UNCOMPRESSED STREAM
COMPRESSED STREAM
165
ENTROPY CODING UNIT
166
INVERSE QUANTIZATION UNIT
167
+
+
QUANTIZATION UNIT
164
WORK BUFFER
168
163
+
-
PREDICTION VALUE GENERATION UNIT
COMPRESSION METHOD
169
162
FEATURE AMOUNT #N
CODING CONTROL INFORMATION
TARGET RATE
COMPRESSION METHOD
DATA EXTRACTION UNIT
161
122

FIG. 29

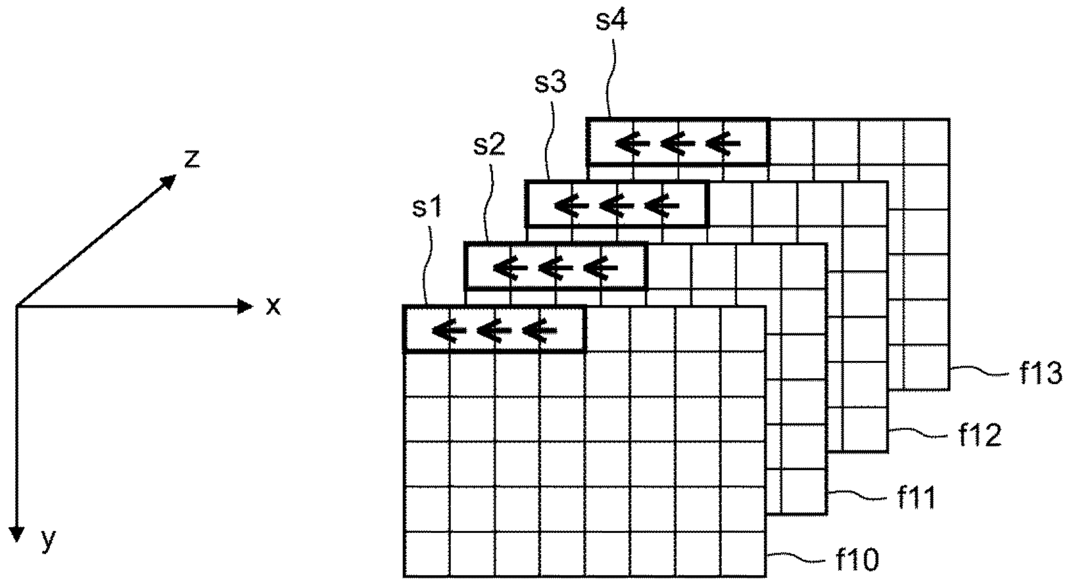

FIG. 30

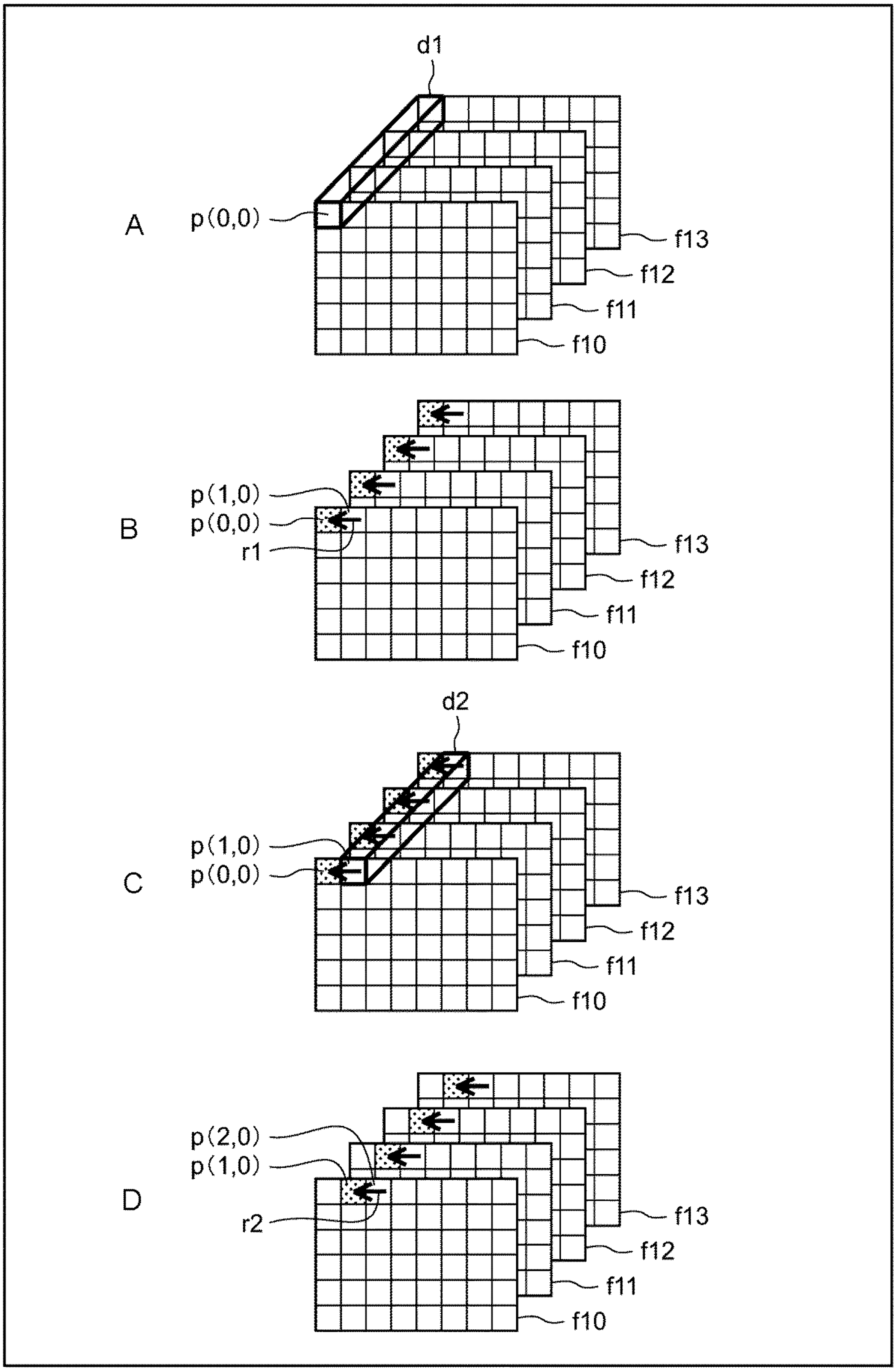
d1
A
p(0,0)
f13
f12
f11
f10
B
p(1,0)
p(0,0)
r1
f13
f12
f11
f10
d2
C
p(1,0)
p(0,0)
f13
f12
f11
f10
D
p(2,0)
p(1,0)
r2
f13
f12
f11
f10

FIG. 31

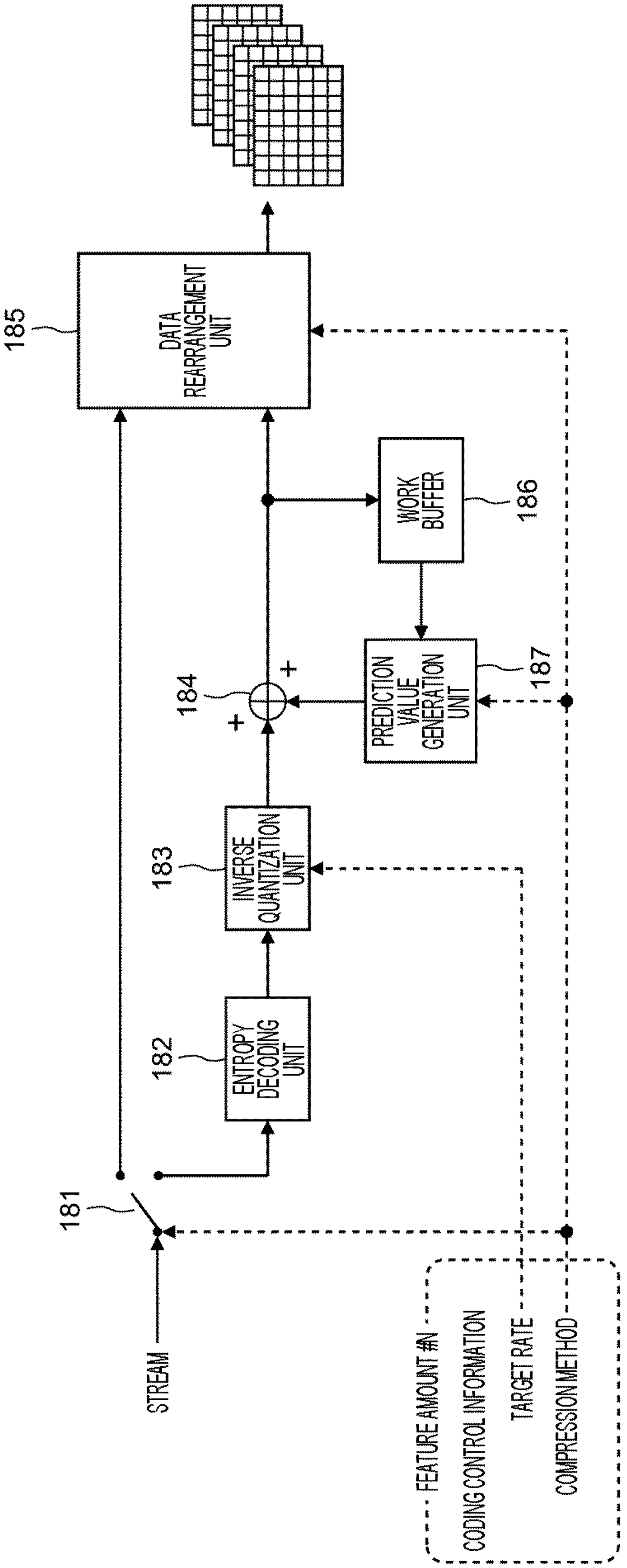
185
DATA REARRANGEMENT UNIT
WORK BUFFER
186
184
+
+
PREDICTION VALUE GENERATION UNIT
187
INVERSE QUANTIZATION UNIT
183
ENTROPY DECODING UNIT
182
181
STREAM
123
FEATURE AMOUNT #N
CODING CONTROL INFORMATION
TARGET RATE
COMPRESSION METHOD

FIG. 32

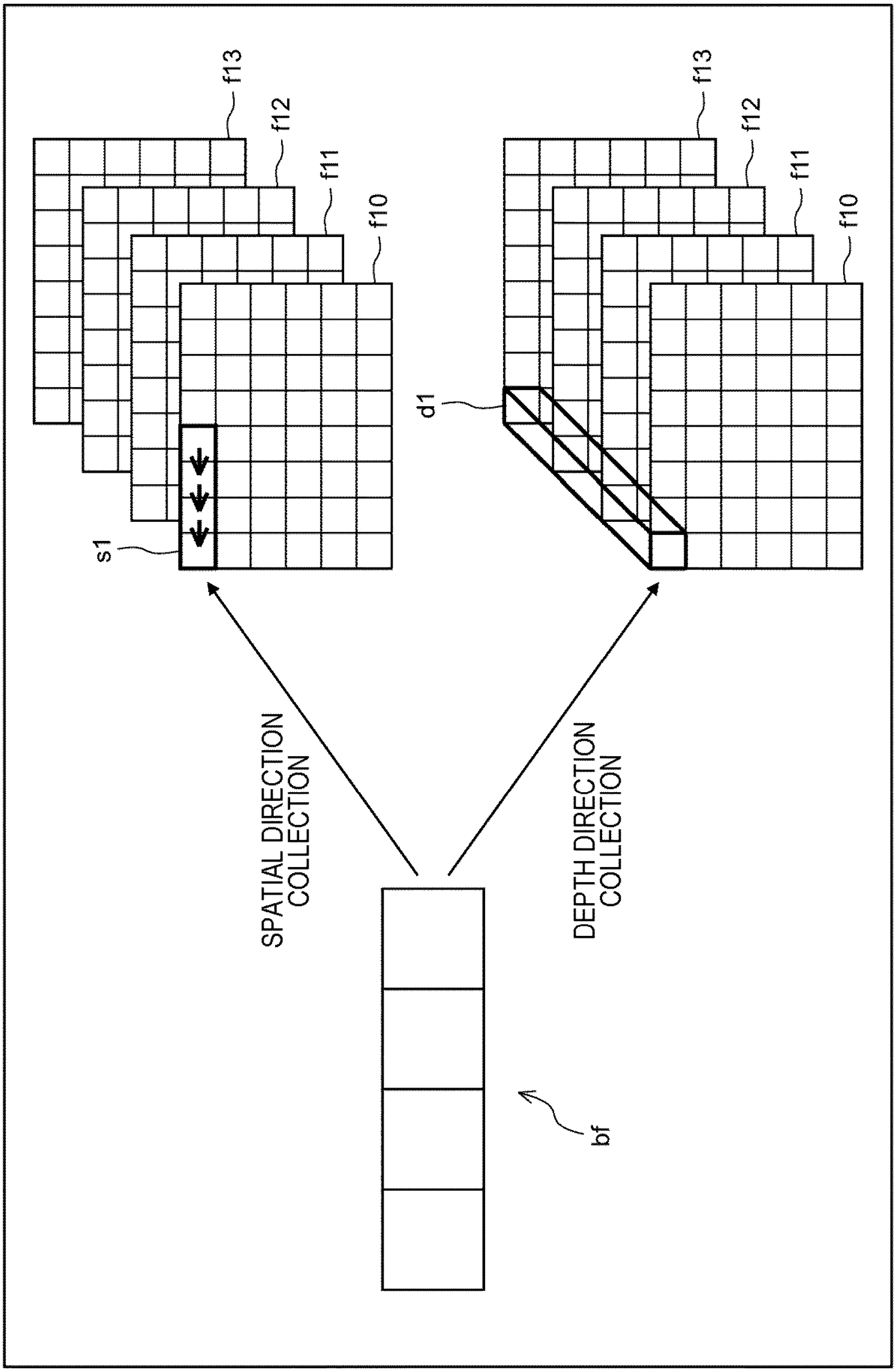
f13
f12
f11
f10
s1
d1
SPATIAL DIRECTION COLLECTION
DEPTH DIRECTION COLLECTION
bf

FIG. 33

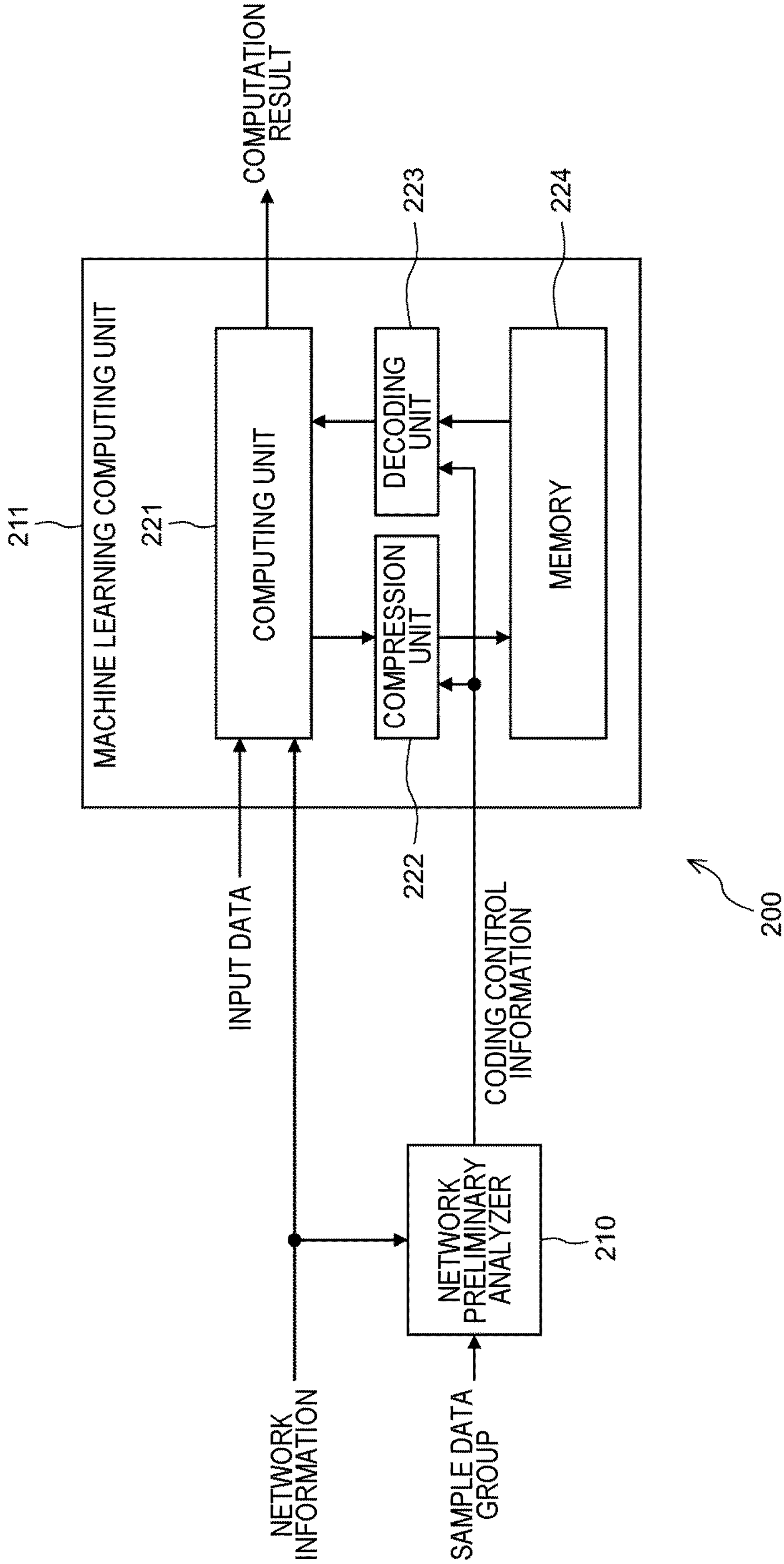
COMPUTATION RESULT
211
MACHINE LEARNING COMPUTING UNIT
221
COMPUTING UNIT
223
DECODING UNIT
224
MEMORY
COMPRESSION UNIT
222
INPUT DATA
CODING CONTROL INFORMATION
200
NETWORK PRELIMINARY ANALYZER
210
NETWORK INFORMATION
SAMPLE DATA GROUP

FIG. 34

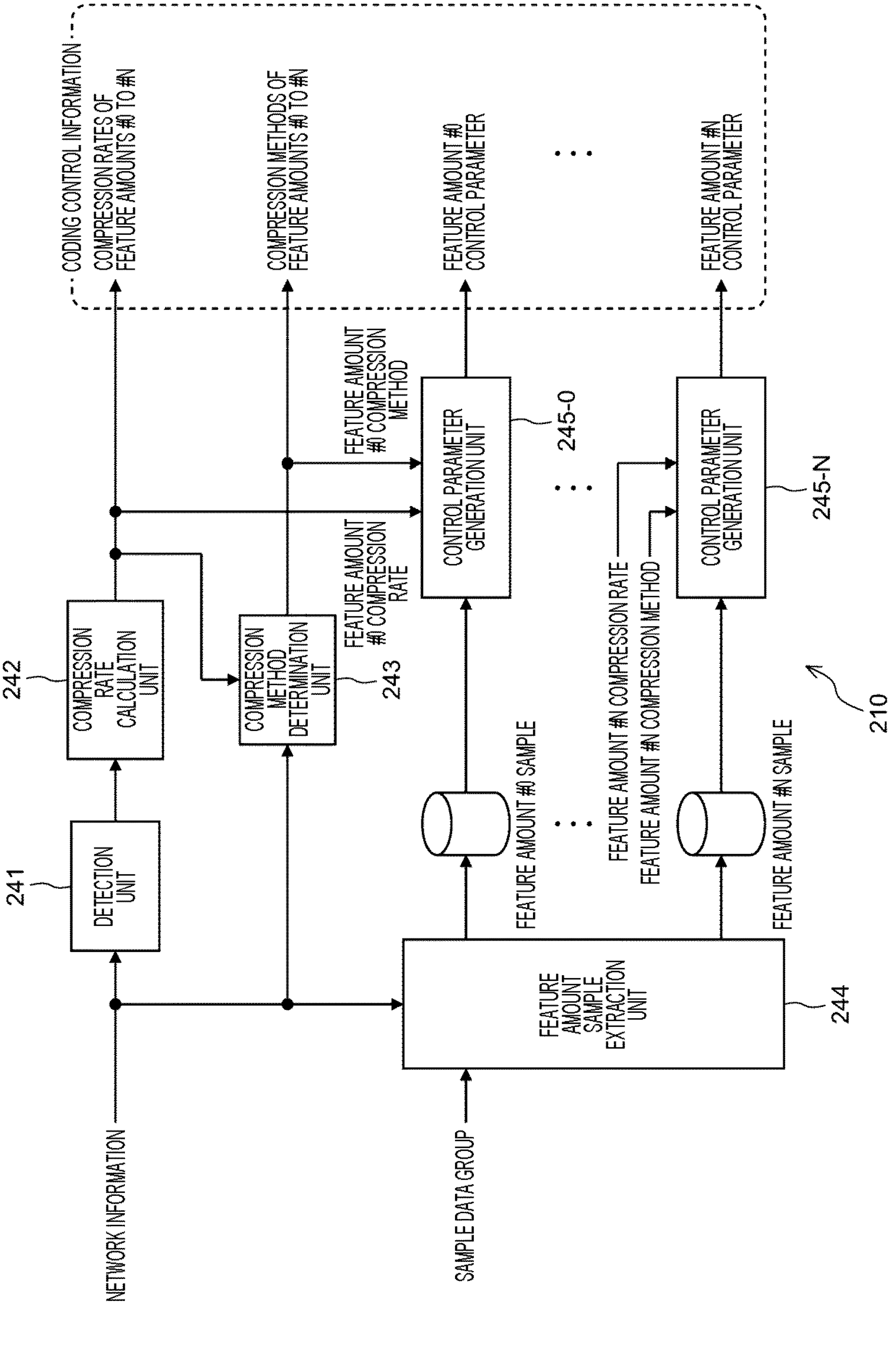

NETWORK INFORMATION
DETECTION UNIT
241
COMPRESSION RATE CALCULATION UNIT
242
COMPRESSION METHOD DETERMINATION UNIT
243
FEATURE AMOUNT SAMPLE EXTRACTION UNIT
244
SAMPLE DATA GROUP
FEATURE AMOUNT #0 SAMPLE
FEATURE AMOUNT #N SAMPLE
FEATURE AMOUNT #0 COMPRESSION RATE
FEATURE AMOUNT #0 COMPRESSION METHOD
FEATURE AMOUNT #N COMPRESSION RATE
FEATURE AMOUNT #N COMPRESSION METHOD
CONTROL PARAMETER GENERATION UNIT
245-0
CONTROL PARAMETER GENERATION UNIT
245-N
CODING CONTROL INFORMATION
COMPRESSION RATES OF FEATURE AMOUNTS #0 TO #N
COMPRESSION METHODS OF FEATURE AMOUNTS #0 TO #N
FEATURE AMOUNT #0 CONTROL PARAMETER
FEATURE AMOUNT #N CONTROL PARAMETER
210

*FIG. 35*

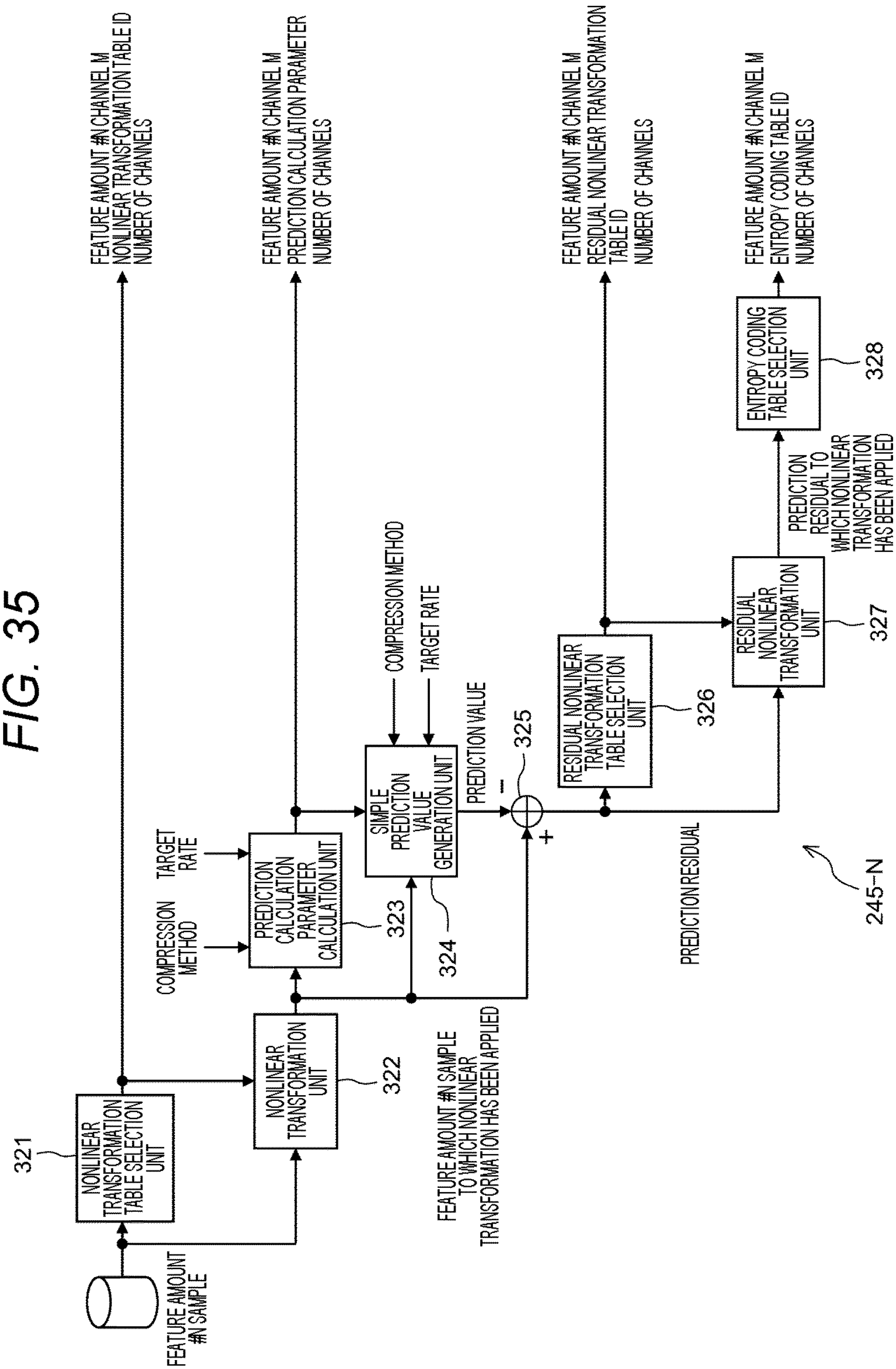
FEATURE AMOUNT #N SAMPLE
321
NONLINEAR TRANSFORMATION TABLE SELECTION UNIT
FEATURE AMOUNT #N CHANNEL M
NONLINEAR TRANSFORMATION TABLE ID
NUMBER OF CHANNELS
NONLINEAR TRANSFORMATION UNIT
322
FEATURE AMOUNT #N SAMPLE TO WHICH NONLINEAR TRANSFORMATION HAS BEEN APPLIED
COMPRESSION METHOD
TARGET RATE
PREDICTION CALCULATION PARAMETER CALCULATION UNIT
323
FEATURE AMOUNT #N CHANNEL M
PREDICTION CALCULATION PARAMETER
NUMBER OF CHANNELS
COMPRESSION METHOD
TARGET RATE
SIMPLE PREDICTION VALUE GENERATION UNIT
324
PREDICTION VALUE
−
+
325
PREDICTION RESIDUAL
RESIDUAL NONLINEAR TRANSFORMATION TABLE SELECTION UNIT
326
FEATURE AMOUNT #N CHANNEL M
RESIDUAL NONLINEAR TRANSFORMATION TABLE ID
NUMBER OF CHANNELS
RESIDUAL NONLINEAR TRANSFORMATION UNIT
327
PREDICTION RESIDUAL TO WHICH NONLINEAR TRANSFORMATION HAS BEEN APPLIED
ENTROPY CODING TABLE SELECTION UNIT
328
FEATURE AMOUNT #N CHANNEL M
ENTROPY CODING TABLE ID
NUMBER OF CHANNELS
245-N

FIG. 36

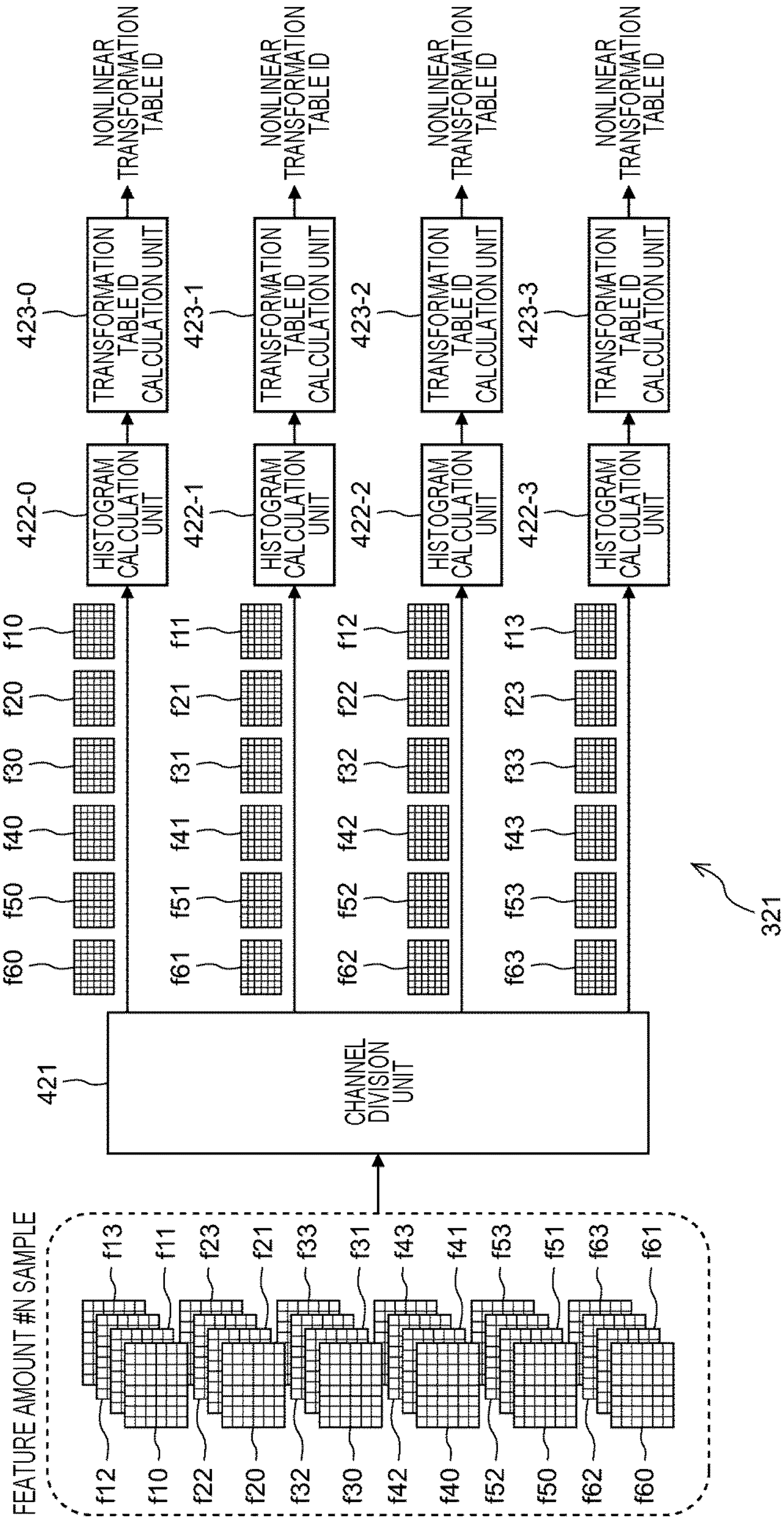
FEATURE AMOUNT #N SAMPLE
f13
f11
f23
f21
f33
f31
f43
f41
f53
f51
f63
f61
f12
f10
f22
f20
f32
f30
f42
f40
f52
f50
f62
f60
421
CHANNEL DIVISION UNIT
f60
f50
f40
f30
f20
f10
f61
f51
f41
f31
f21
f11
f62
f52
f42
f32
f22
f12
f63
f53
f43
f33
f23
f13
422-0
422-1
422-2
422-3
HISTOGRAM CALCULATION UNIT
423-0
423-1
423-2
423-3
TRANSFORMATION TABLE ID CALCULATION UNIT
NONLINEAR TRANSFORMATION TABLE ID
321

FIG. 37

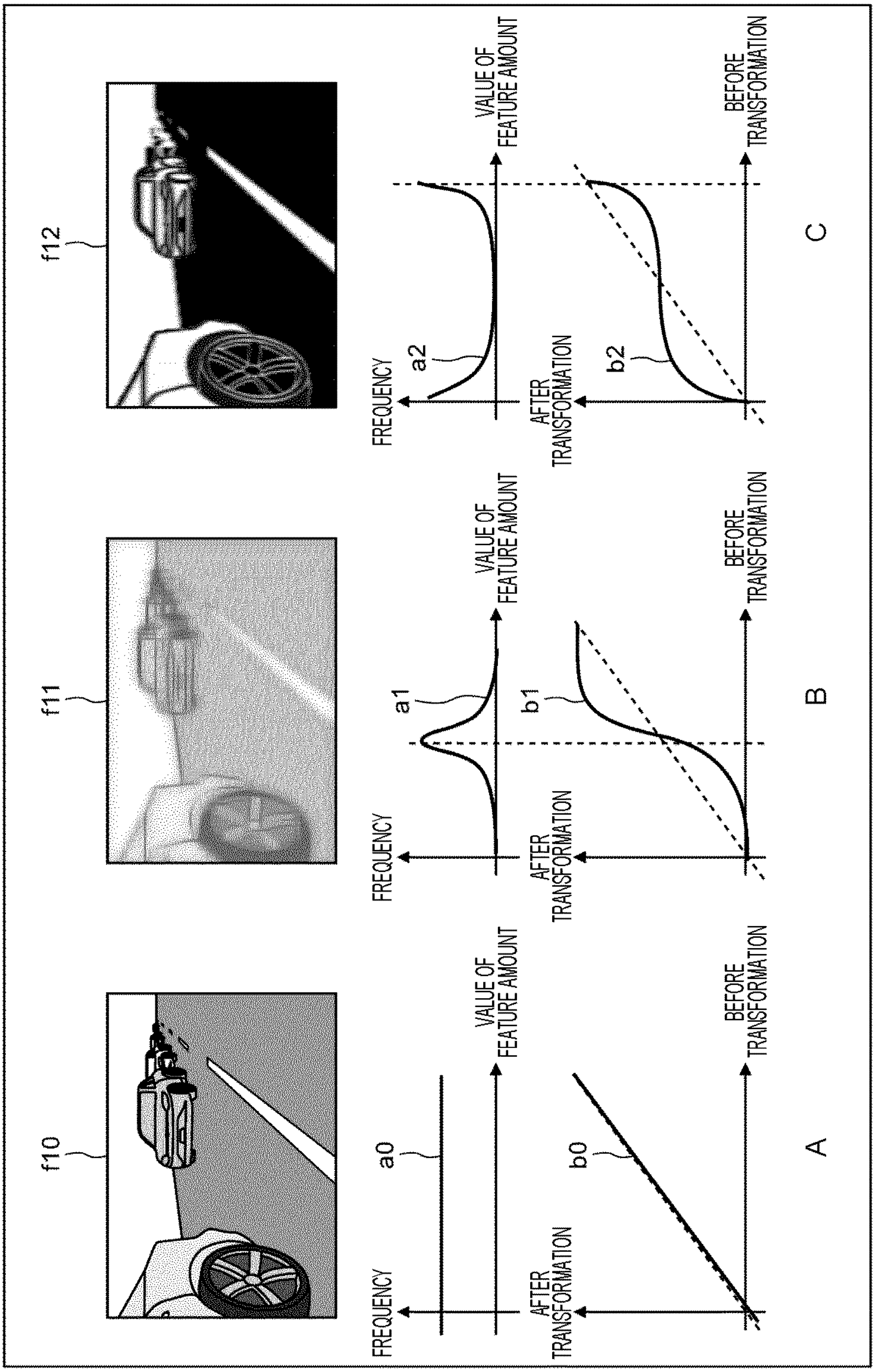
f10
f11
f12
a0
a1
a2
b0
b1
b2
FREQUENCY
VALUE OF FEATURE AMOUNT
AFTER TRANSFORMATION
BEFORE TRANSFORMATION
A
B
C

FIG. 38

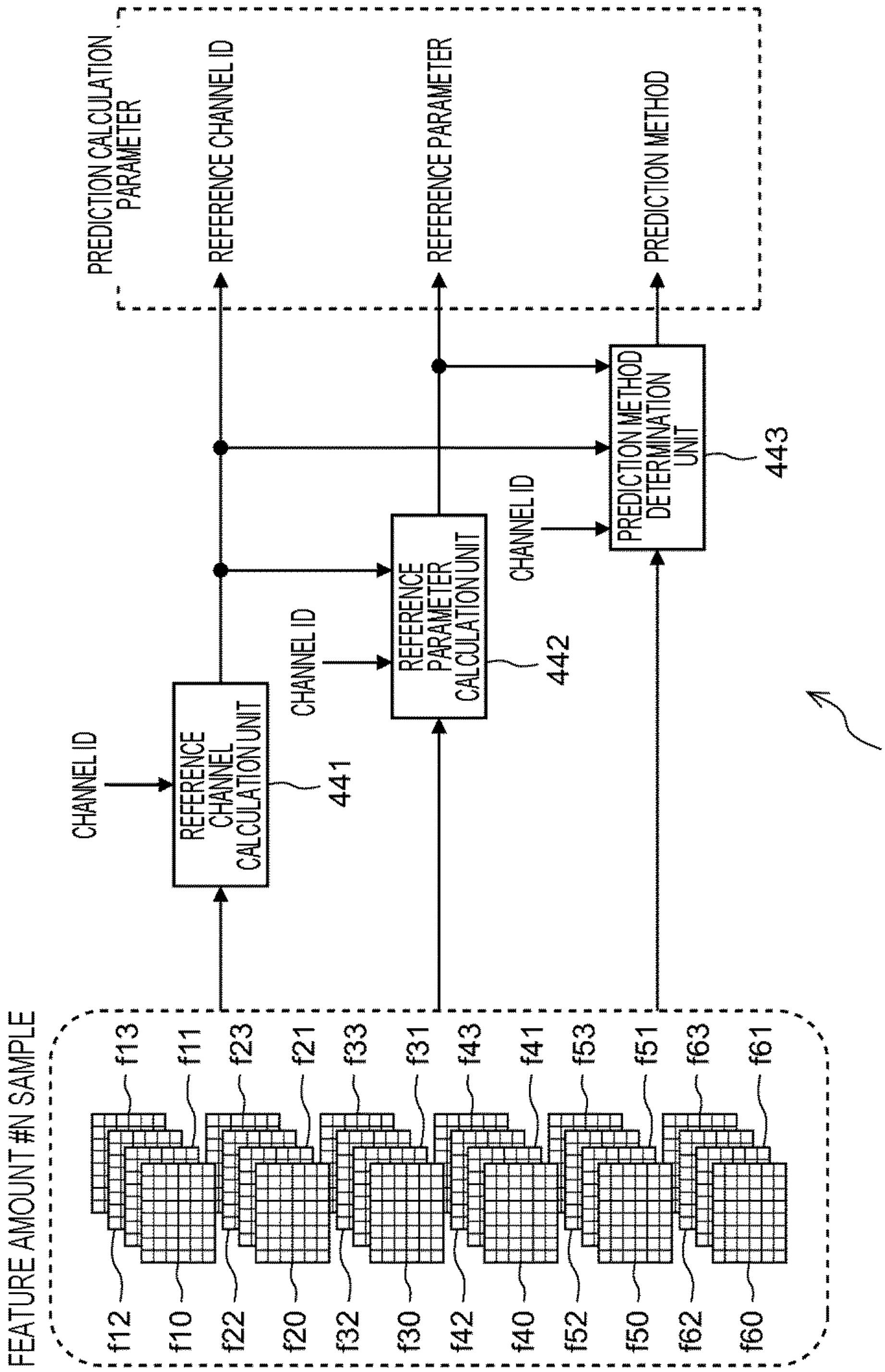
PREDICTION CALCULATION PARAMETER
REFERENCE CHANNEL ID
REFERENCE PARAMETER
PREDICTION METHOD
CHANNEL ID
REFERENCE CHANNEL CALCULATION UNIT
441
CHANNEL ID
REFERENCE PARAMETER CALCULATION UNIT
442
CHANNEL ID
PREDICTION METHOD DETERMINATION UNIT
443
323
FEATURE AMOUNT #N SAMPLE
f13
f11
f23
f21
f33
f31
f43
f41
f53
f51
f63
f61
f12
f10
f22
f20
f32
f30
f42
f40
f52
f50
f62
f60

FIG. 39

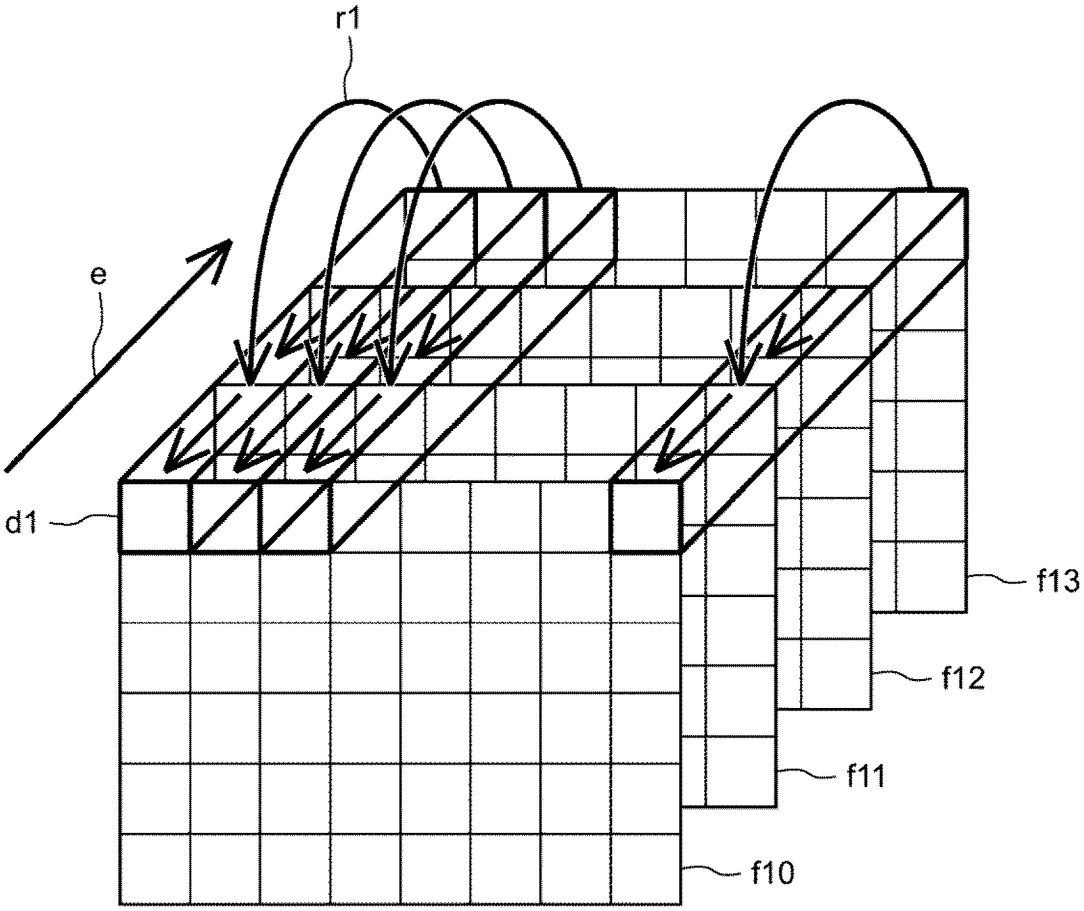

FIG. 40

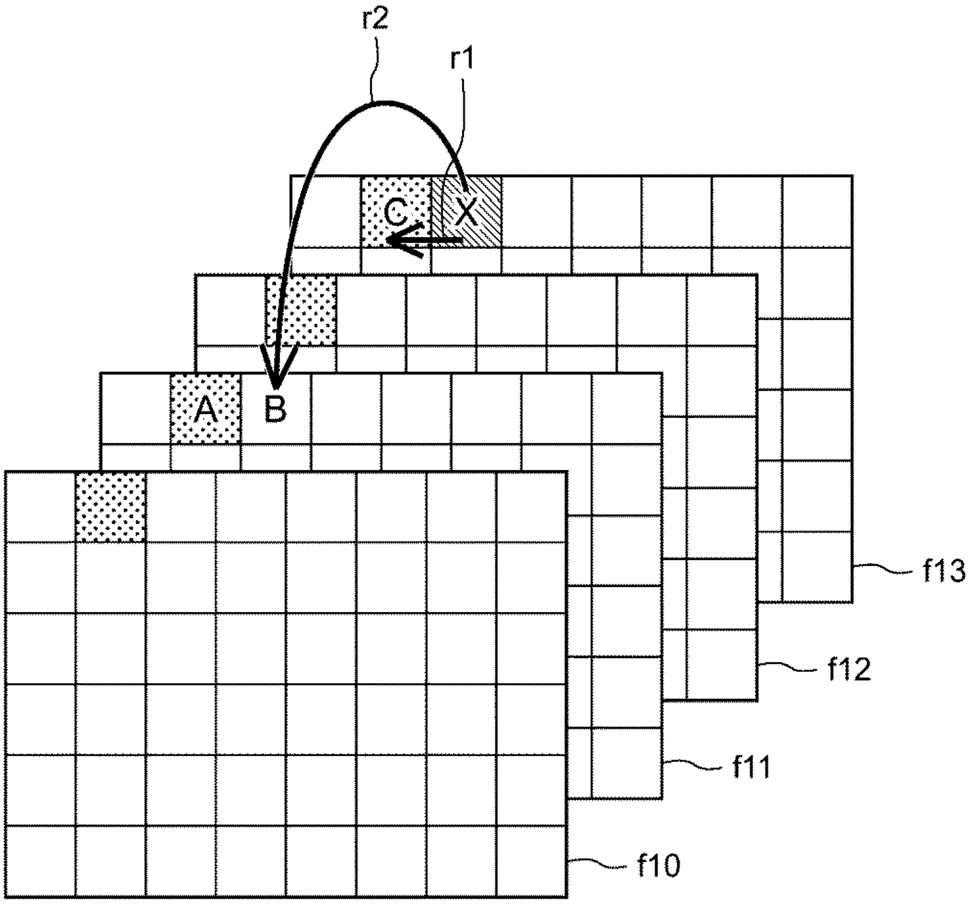


FIG. 41

| | | |
|---|---|---|
| PARAMETER NAME | | |
| REFERENCE CHANNEL | | REFERENCE CHANNEL ID |
| REFERENCE PARAMETER | $offset_0$ | REFERENCE FORMULA $offset_0$ |
| | $offset_1$ | REFERENCE FORMULA $offset_1$ |
| | Scale | REFERENCE FORMULA Scale |
| PREDICTION METHOD | | SPATIAL DIRECTION PREDICTION, INTER-CHANNEL PREDICTION, OR BIDIRECTIONAL PREDICTION |

FIG. 42

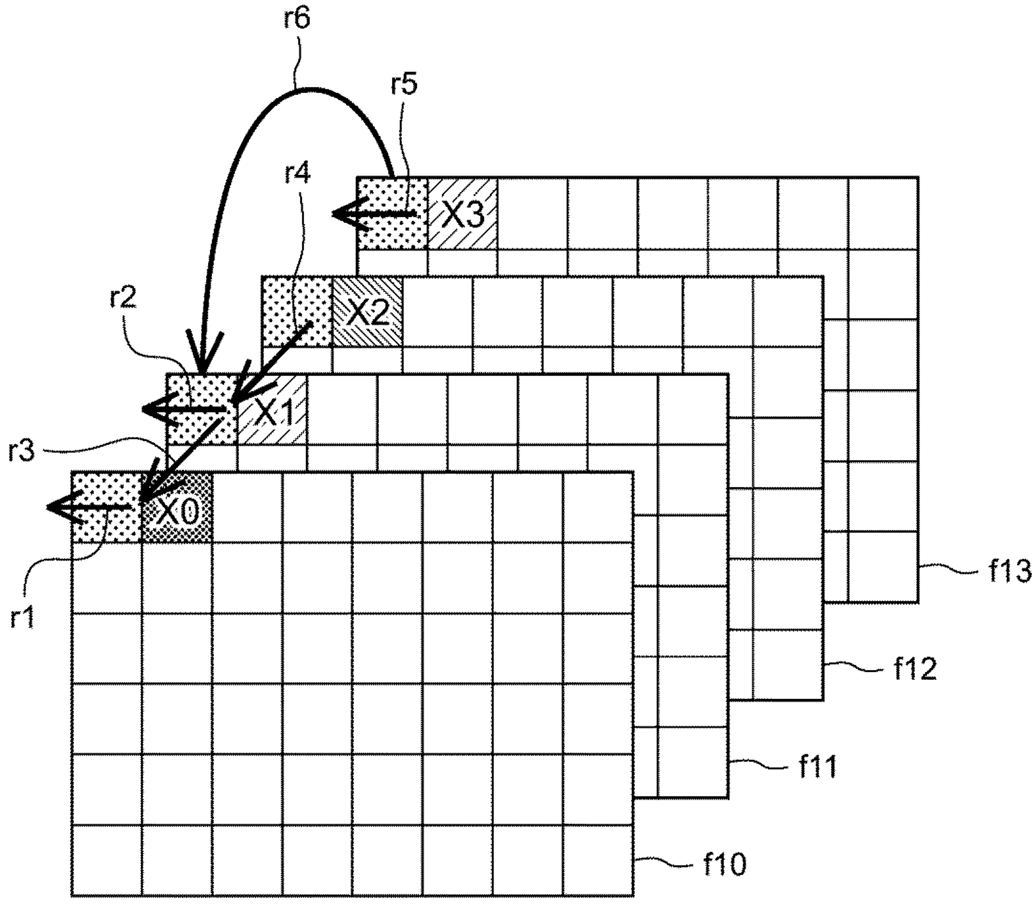

FIG. 43

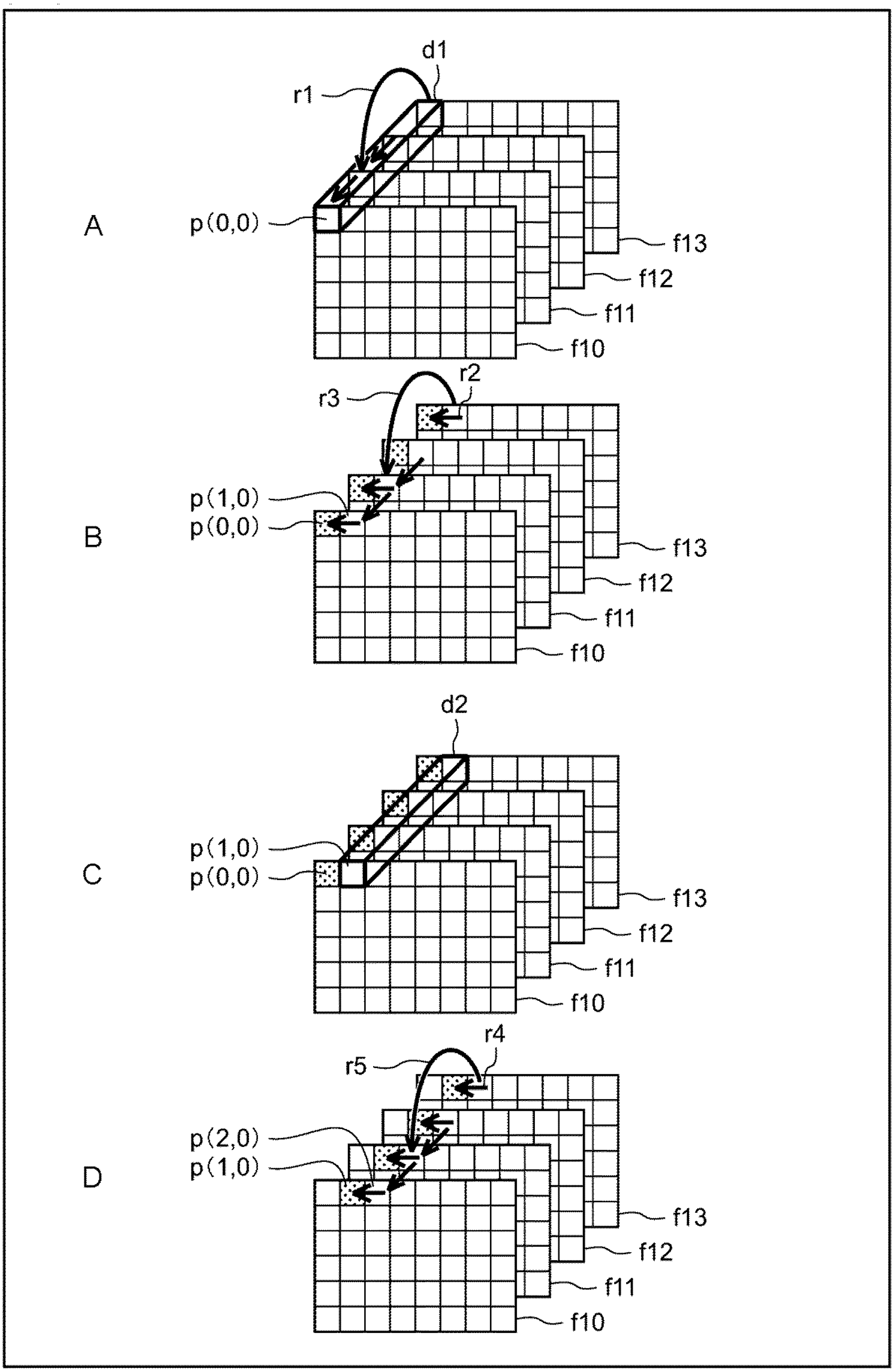
A
B
C
D
d1
r1
p(0,0)
f13
f12
f11
f10
r2
r3
p(1,0)
p(0,0)
f13
f12
f11
f10
d2
p(1,0)
p(0,0)
f13
f12
f11
f10
r4
r5
p(2,0)
p(1,0)
f13
f12
f11
f10

FIG. 44

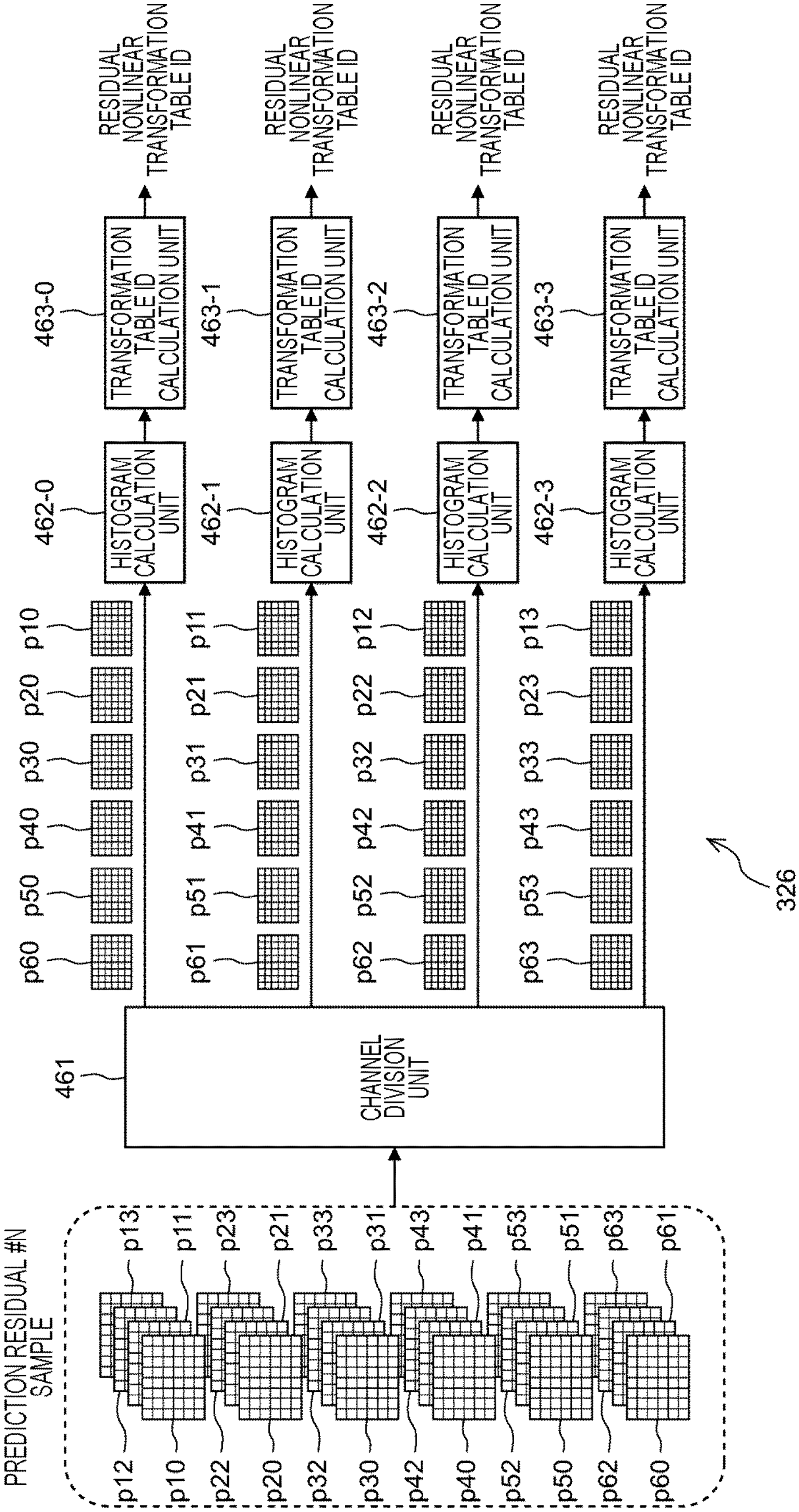
PREDICTION RESIDUAL #N SAMPLE
p12
p13
p10
p11
p22
p23
p20
p21
p32
p33
p30
p31
p42
p43
p40
p41
p52
p53
p50
p51
p62
p63
p60
p61
461
CHANNEL DIVISION UNIT
p60
p50
p40
p30
p20
p10
p61
p51
p41
p31
p21
p11
p62
p52
p42
p32
p22
p12
p63
p53
p43
p33
p23
p13
462-0
HISTOGRAM CALCULATION UNIT
462-1
HISTOGRAM CALCULATION UNIT
462-2
HISTOGRAM CALCULATION UNIT
462-3
HISTOGRAM CALCULATION UNIT
463-0
TRANSFORMATION TABLE ID CALCULATION UNIT
463-1
TRANSFORMATION TABLE ID CALCULATION UNIT
463-2
TRANSFORMATION TABLE ID CALCULATION UNIT
463-3
TRANSFORMATION TABLE ID CALCULATION UNIT
RESIDUAL NONLINEAR TRANSFORMATION TABLE ID
RESIDUAL NONLINEAR TRANSFORMATION TABLE ID
RESIDUAL NONLINEAR TRANSFORMATION TABLE ID
RESIDUAL NONLINEAR TRANSFORMATION TABLE ID
326

FIG. 45

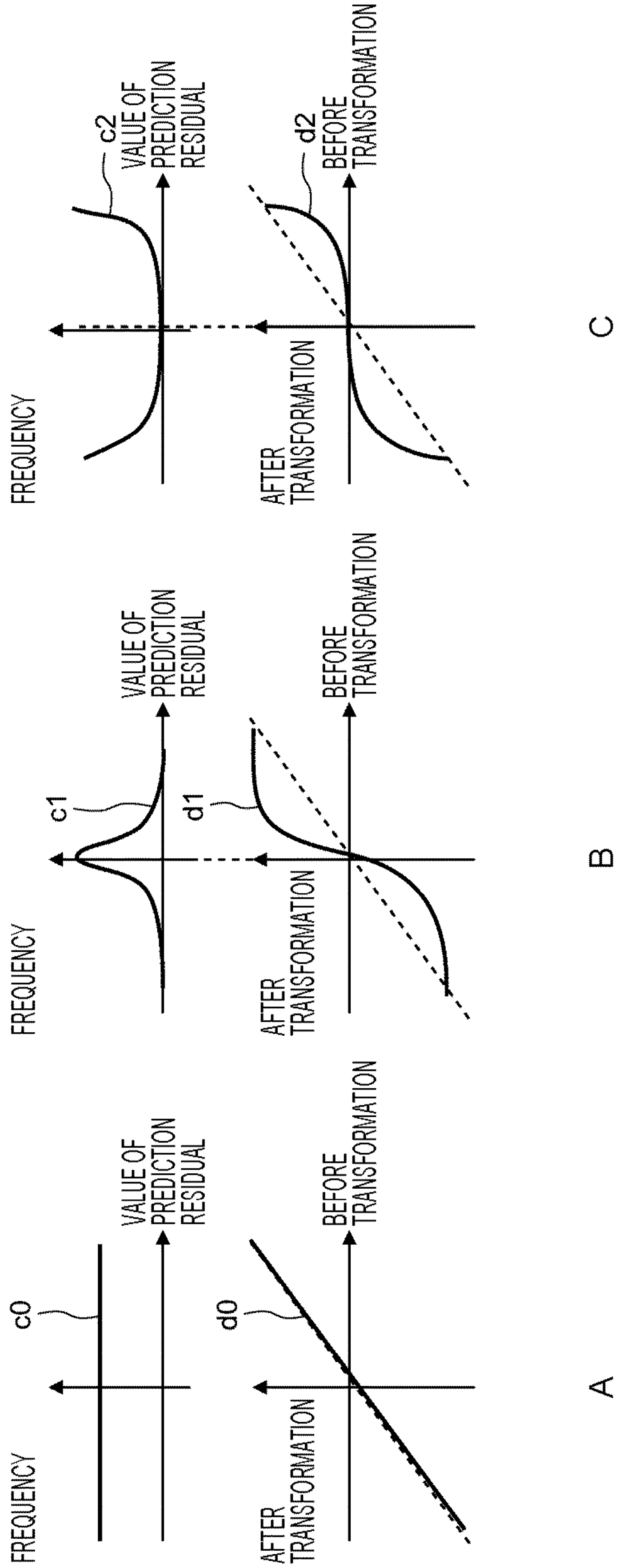
FREQUENCY
c0
VALUE OF PREDICTION RESIDUAL
AFTER TRANSFORMATION
d0
BEFORE TRANSFORMATION
A
FREQUENCY
c1
VALUE OF PREDICTION RESIDUAL
AFTER TRANSFORMATION
d1
BEFORE TRANSFORMATION
B
FREQUENCY
c2
VALUE OF PREDICTION RESIDUAL
AFTER TRANSFORMATION
d2
BEFORE TRANSFORMATION
C

# FIG. 46

| Table ID | 0 | 1 | 2 | 3 |
|---|---|---|---|---|
| 0 | 1 | 10 | 100 | 1000 |
| 1 | 010 | 11 | 101 | 1001 |
| -1 | 011 | 0100 | 110 | 1010 |
| 2 | 00100 | 0101 | 111 | 1011 |
| -2 | 00101 | 0110 | 01000 | 1100 |
| 3 | 00110 | 0111 | 01001 | 1101 |
| -3 | 00111 | 001000 | 01010 | 1110 |
| 4 | 0001000 | 001001 | 01011 | 1111 |
| -4 | 0001001 | 001010 | 01100 | 010000 |
| 5 | 0001010 | 001011 | 01101 | 010001 |
| -5 | 0001011 | 001100 | 01110 | 010010 |
| 6 | 0001100 | 001101 | 01111 | 010011 |
| -6 | 0001101 | 001110 | 0010000 | 010100 |
| 7 | 0001110 | 001111 | 0010001 | 010101 |
| -7 | 0001111 | 00010000 | 0010010 | 010110 |
| 8 | 000010000 | 00010001 | 0010011 | 010111 |
| -8 | 000010001 | 00010010 | 0010100 | 011000 |
| 9 | 000010010 | 00010011 | 0010101 | 011001 |
| -9 | 000010011 | 00010100 | 0010110 | 011010 |
| 10 | 000010100 | 00010101 | 0010111 | 011011 |
| -10 | 000010101 | 00010110 | 0011000 | 011100 |
| 11 | 000010110 | 00010111 | 0011001 | 011101 |
| -11 | 000010111 | 00011000 | 0011010 | 011110 |
| | | | | |

# FIG. 47

| feature map ID-channel ID | TARGET RATE | COMPRESSION METHOD | NONLINEAR TRANSFORMATION TABLE ID | REFERENCE CHANNEL ID | REFERENCE PARAMETER | | | PREDICTION METHOD | RESIDUAL NONLINEAR TRANSFORMATION TABLE ID | ENTROPY CODING TABLE ID |
|---|---|---|---|---|---|---|---|---|---|---|
| | | | | | $offset_0$ | $offset_1$ | Scale | | | |
| 2-0 | 4 | SPATIAL DIRECTION COLLECTION | 0 | - | - | - | - | SPATIAL DIRECTION PREDICTION | 0 | 0 |
| 2-1 | 4 | SPATIAL DIRECTION COLLECTION | 1 | 2-1 | 127 | 127 | 1.0 | SPATIAL DIRECTION PREDICTION | 2 | 1 |
| 2-2 | 4 | SPATIAL DIRECTION COLLECTION | 1 | 2-1 | 127 | 130 | 0.9 | INTER-CHANNEL PREDICTION | 1 | 3 |
| 2-3 | 4 | SPATIAL DIRECTION COLLECTION | 0 | 2-3 | 127 | 0 | −2.5 | BIDIRECTIONAL PREDICTION | 2 | 3 |
| 2-4 | 4 | SPATIAL DIRECTION COLLECTION | 0 | 2-1 | 127 | 127 | −0.87 | BIDIRECTIONAL PREDICTION | 3 | 2 |
| 2-5 | 4 | SPATIAL DIRECTION COLLECTION | 2 | 2-5 | 127 | 130 | 0.9 | INTER-CHANNEL PREDICTION | 5 | 2 |
| 2-6 | 4 | SPATIAL DIRECTION COLLECTION | 2 | 2-2 | 127 | 121 | 1.9 | SPATIAL DIRECTION PREDICTION | 0 | 1 |
| 2-7 | 4 | SPATIAL DIRECTION COLLECTION | 2 | 2-4 | 127 | 128 | 0.2 | BIDIRECTIONAL PREDICTION | 2 | 1 |
| 3-0 | | | | | | | | | | |
| 3-1 | | | | | | | | | | |
| 3-2 | | | | | | | | | | |

FIG. 48

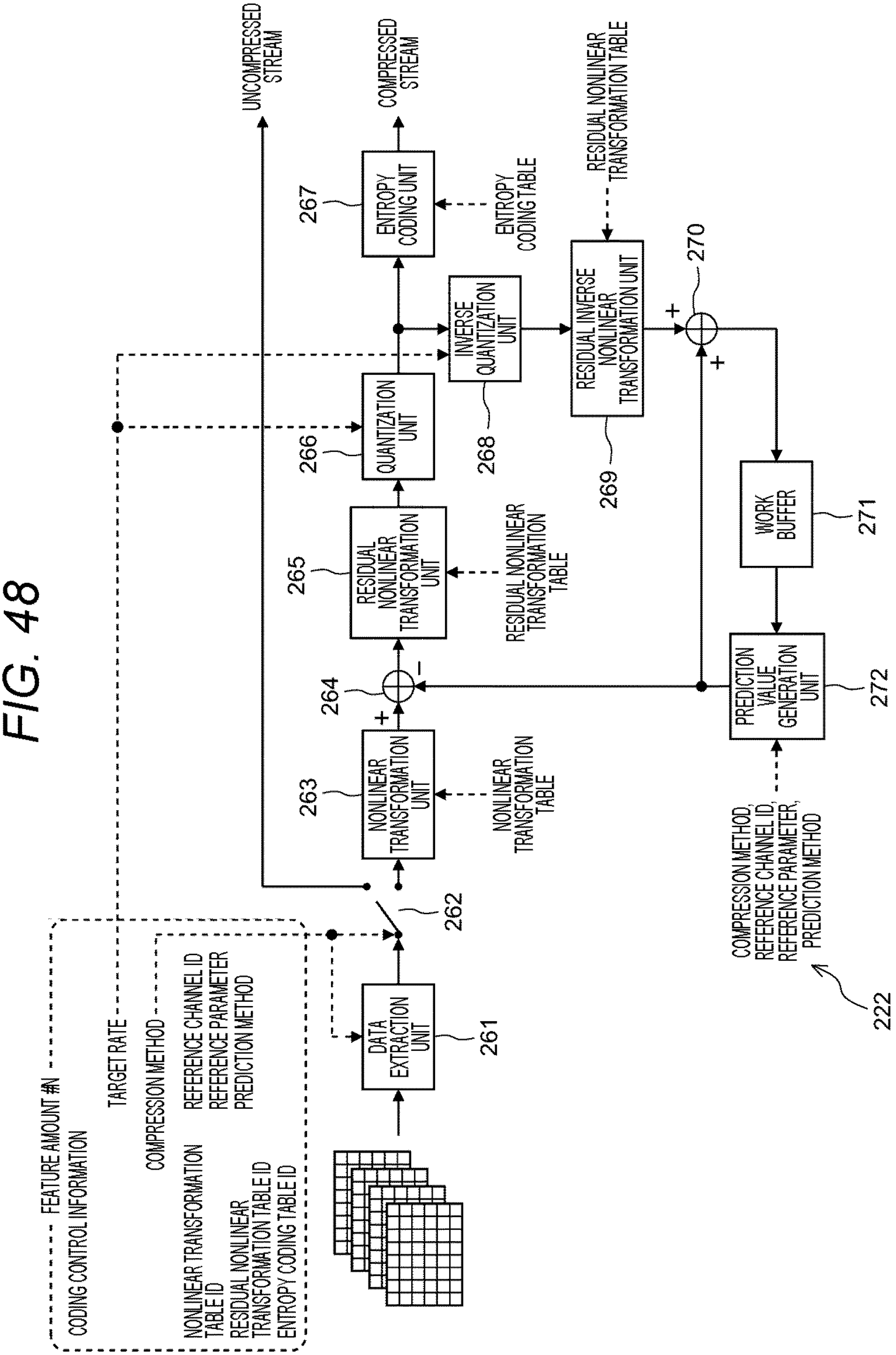
FEATURE AMOUNT #N
CODING CONTROL INFORMATION
TARGET RATE
COMPRESSION METHOD
REFERENCE CHANNEL ID
REFERENCE PARAMETER
PREDICTION METHOD
NONLINEAR TRANSFORMATION TABLE ID
RESIDUAL NONLINEAR TRANSFORMATION TABLE ID
ENTROPY CODING TABLE ID
DATA EXTRACTION UNIT
261
262
UNCOMPRESSED STREAM
NONLINEAR TRANSFORMATION UNIT
263
NONLINEAR TRANSFORMATION TABLE
264
+
−
RESIDUAL NONLINEAR TRANSFORMATION UNIT
265
RESIDUAL NONLINEAR TRANSFORMATION TABLE
QUANTIZATION UNIT
266
INVERSE QUANTIZATION UNIT
268
ENTROPY CODING UNIT
267
ENTROPY CODING TABLE
COMPRESSED STREAM
RESIDUAL INVERSE NONLINEAR TRANSFORMATION UNIT
269
RESIDUAL NONLINEAR TRANSFORMATION TABLE
270
+
+
WORK BUFFER
271
PREDICTION VALUE GENERATION UNIT
272
COMPRESSION METHOD, REFERENCE CHANNEL ID, REFERENCE PARAMETER, PREDICTION METHOD
222

FIG. 49

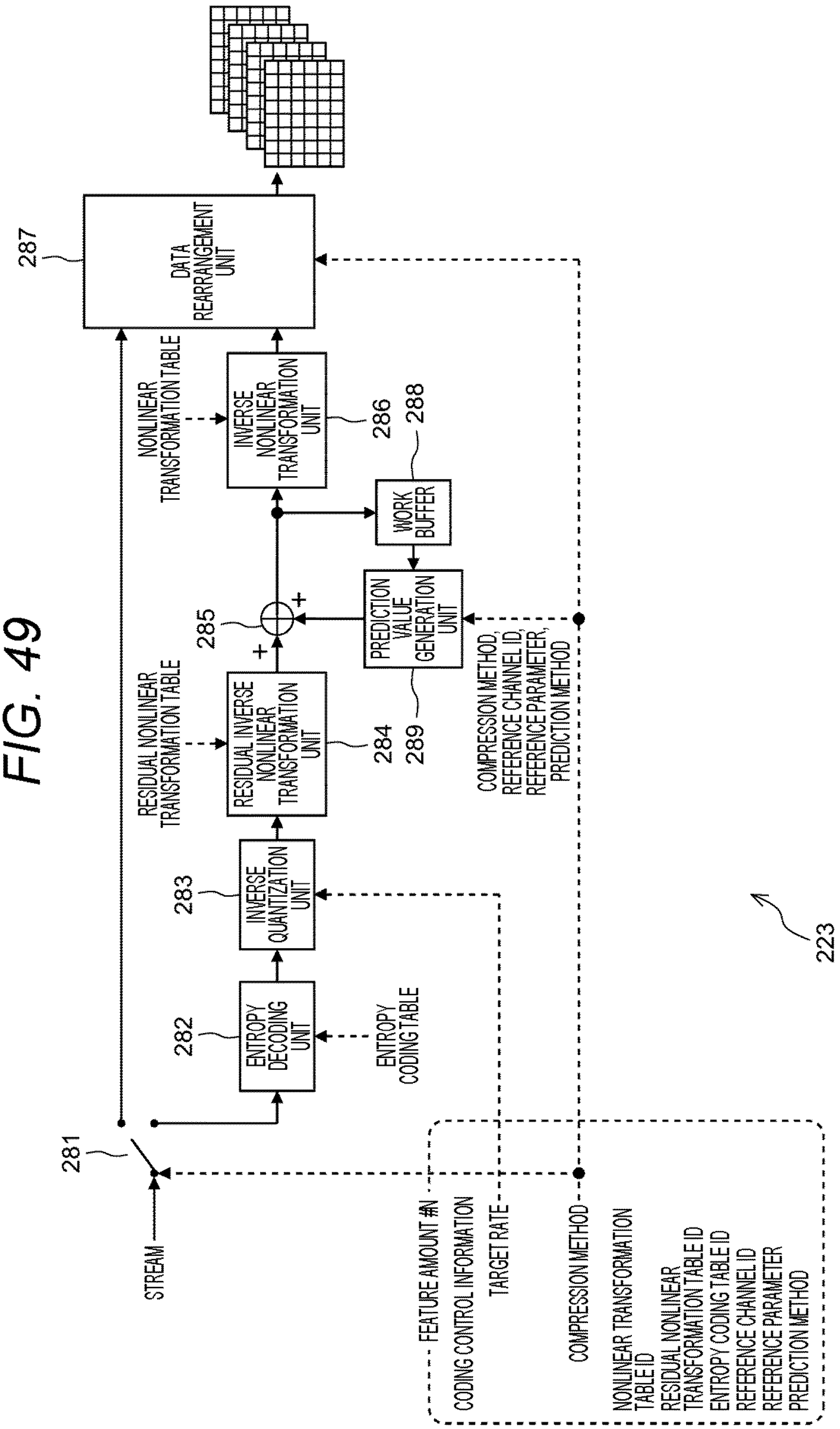
STREAM
281
282
ENTROPY DECODING UNIT
ENTROPY CODING TABLE
283
INVERSE QUANTIZATION UNIT
RESIDUAL NONLINEAR TRANSFORMATION TABLE
RESIDUAL INVERSE NONLINEAR TRANSFORMATION UNIT
284
285
+
+
PREDICTION VALUE GENERATION UNIT
289
COMPRESSION METHOD, REFERENCE CHANNEL ID, REFERENCE PARAMETER, PREDICTION METHOD
WORK BUFFER
288
NONLINEAR TRANSFORMATION TABLE
INVERSE NONLINEAR TRANSFORMATION UNIT
286
287
DATA REARRANGEMENT UNIT
FEATURE AMOUNT #N
CODING CONTROL INFORMATION
TARGET RATE
COMPRESSION METHOD
NONLINEAR TRANSFORMATION TABLE ID
RESIDUAL NONLINEAR TRANSFORMATION TABLE ID
ENTROPY CODING TABLE ID
REFERENCE CHANNEL ID
REFERENCE PARAMETER
PREDICTION METHOD
223

FIG. 50

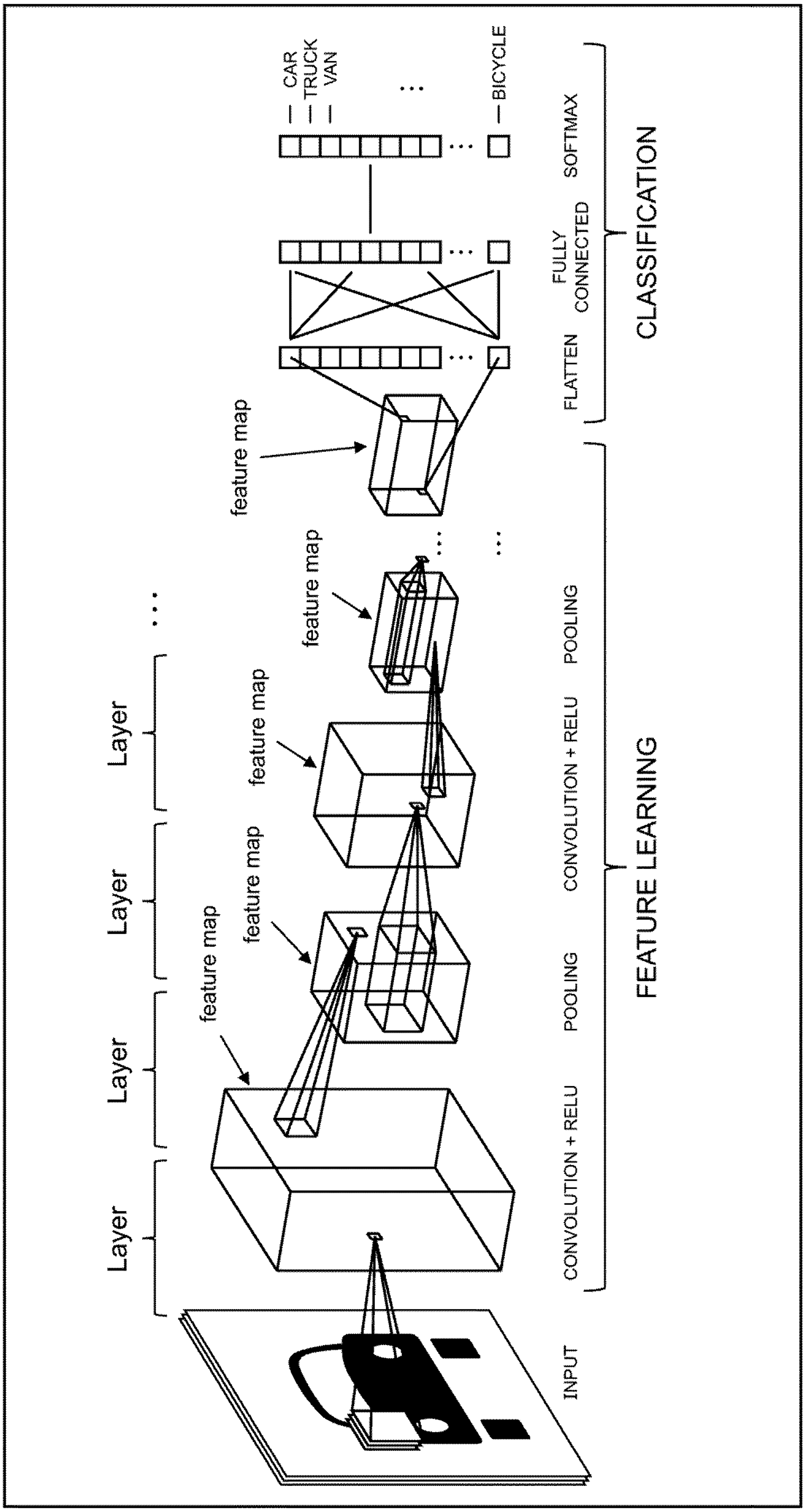

INPUT
Layer
Layer
Layer
Layer
feature map
feature map
feature map
feature map
feature map
CONVOLUTION + RELU
POOLING
CONVOLUTION + RELU
POOLING
FLATTEN
FULLY CONNECTED
SOFTMAX
CAR
TRUCK
VAN
BICYCLE
FEATURE LEARNING
CLASSIFICATION

FIG. 51

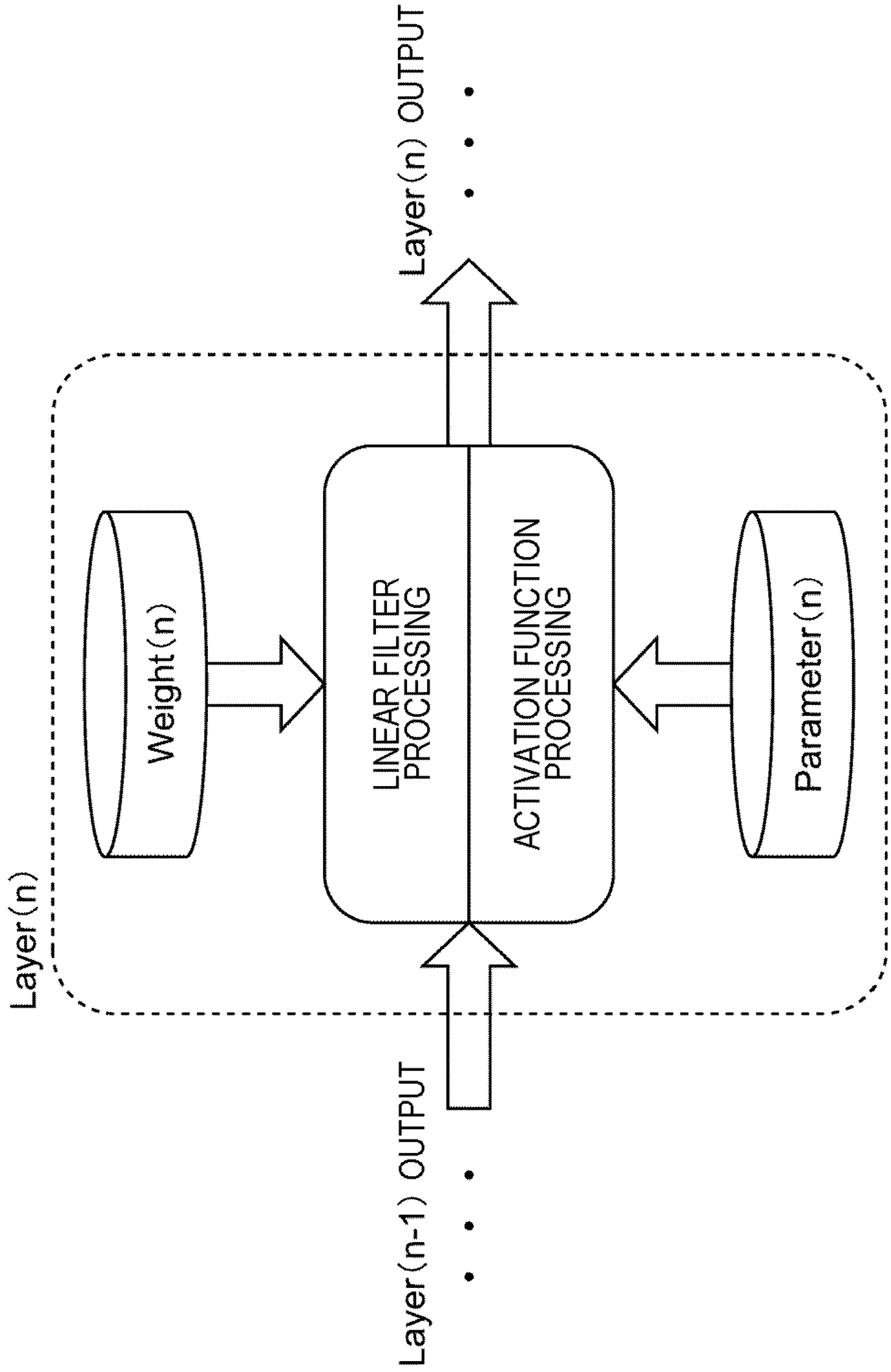
Layer(n-1) OUTPUT
Layer(n)
Weight(n)
LINEAR FILTER PROCESSING
ACTIVATION FUNCTION PROCESSING
Parameter(n)
Layer(n) OUTPUT

FIG. 52

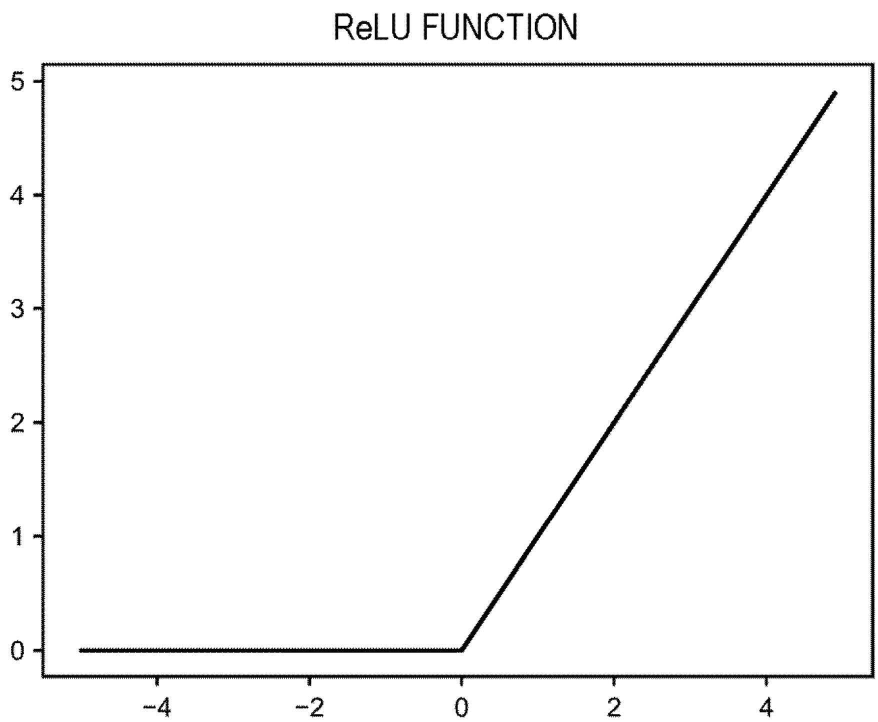

FIG. 53

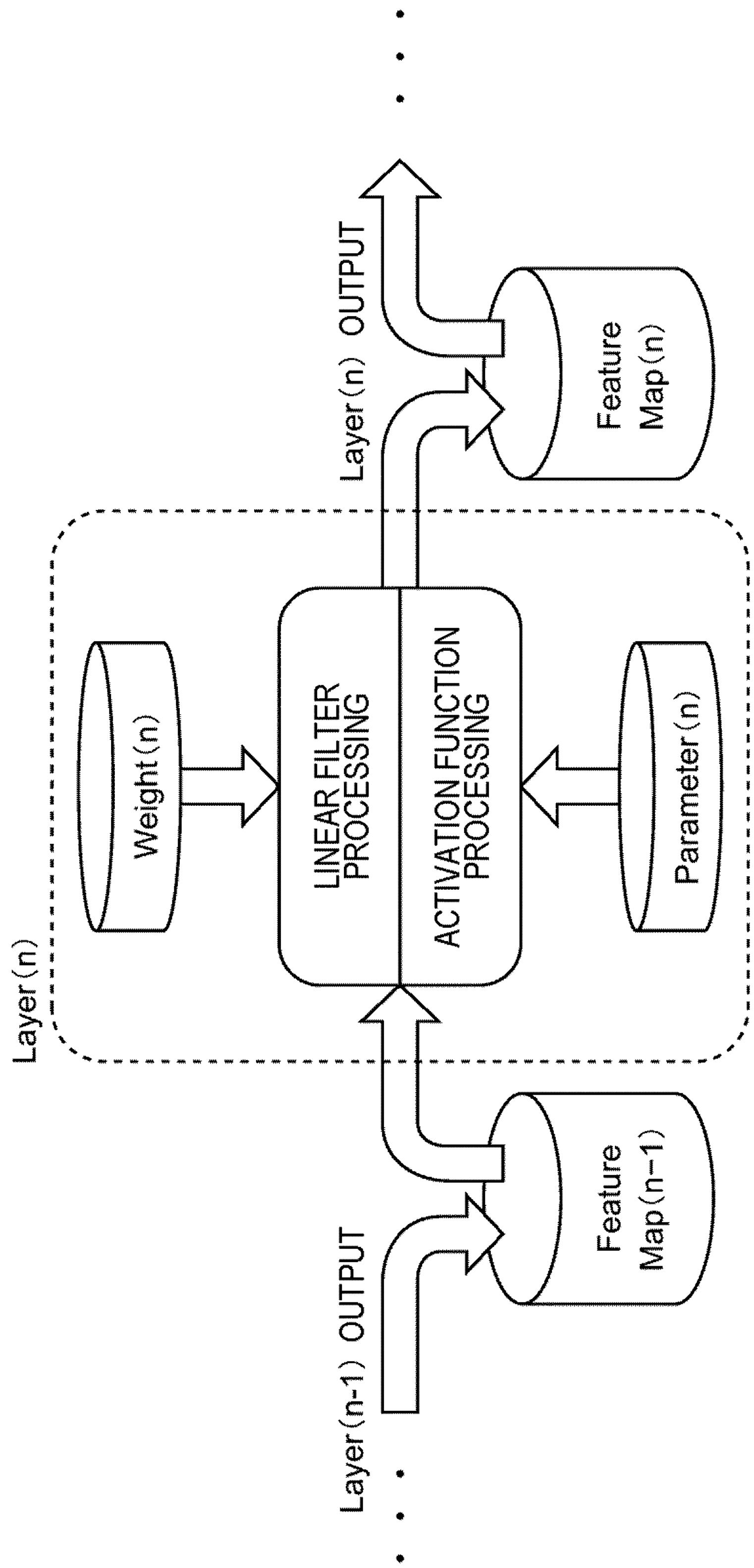
Layer (n-1) OUTPUT
Feature Map (n−1)
Layer (n)
Weight (n)
LINEAR FILTER PROCESSING
ACTIVATION FUNCTION PROCESSING
Parameter (n)
Layer (n) OUTPUT
Feature Map (n)

FIG. 54

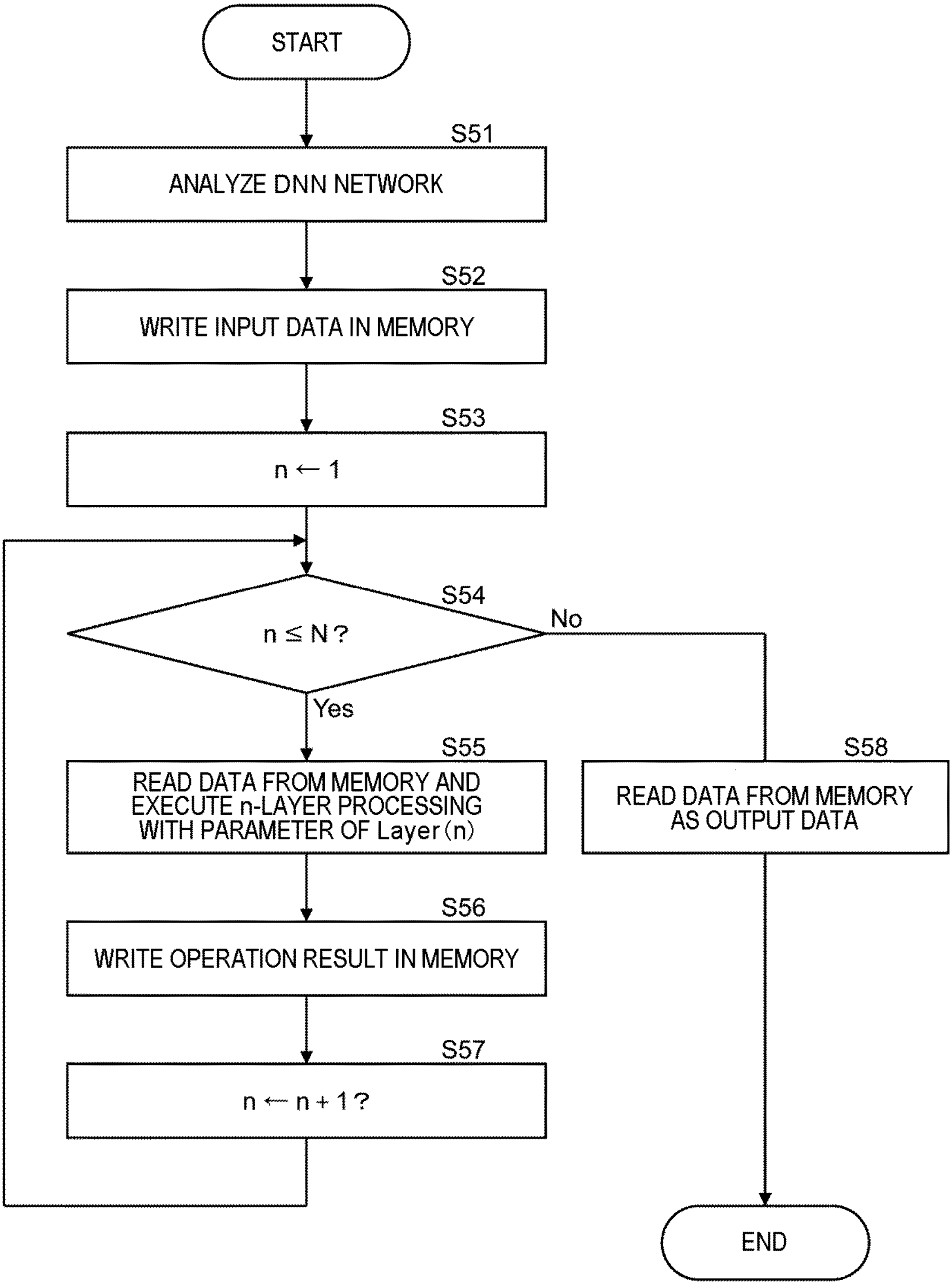
START
S51
ANALYZE DNN NETWORK
S52
WRITE INPUT DATA IN MEMORY
S53
n ← 1
S54
n ≤ N ?
No
Yes
S55
READ DATA FROM MEMORY AND EXECUTE n-LAYER PROCESSING WITH PARAMETER OF Layer (n)
S56
WRITE OPERATION RESULT IN MEMORY
S57
n ← n + 1 ?
S58
READ DATA FROM MEMORY AS OUTPUT DATA
END

FIG. 55

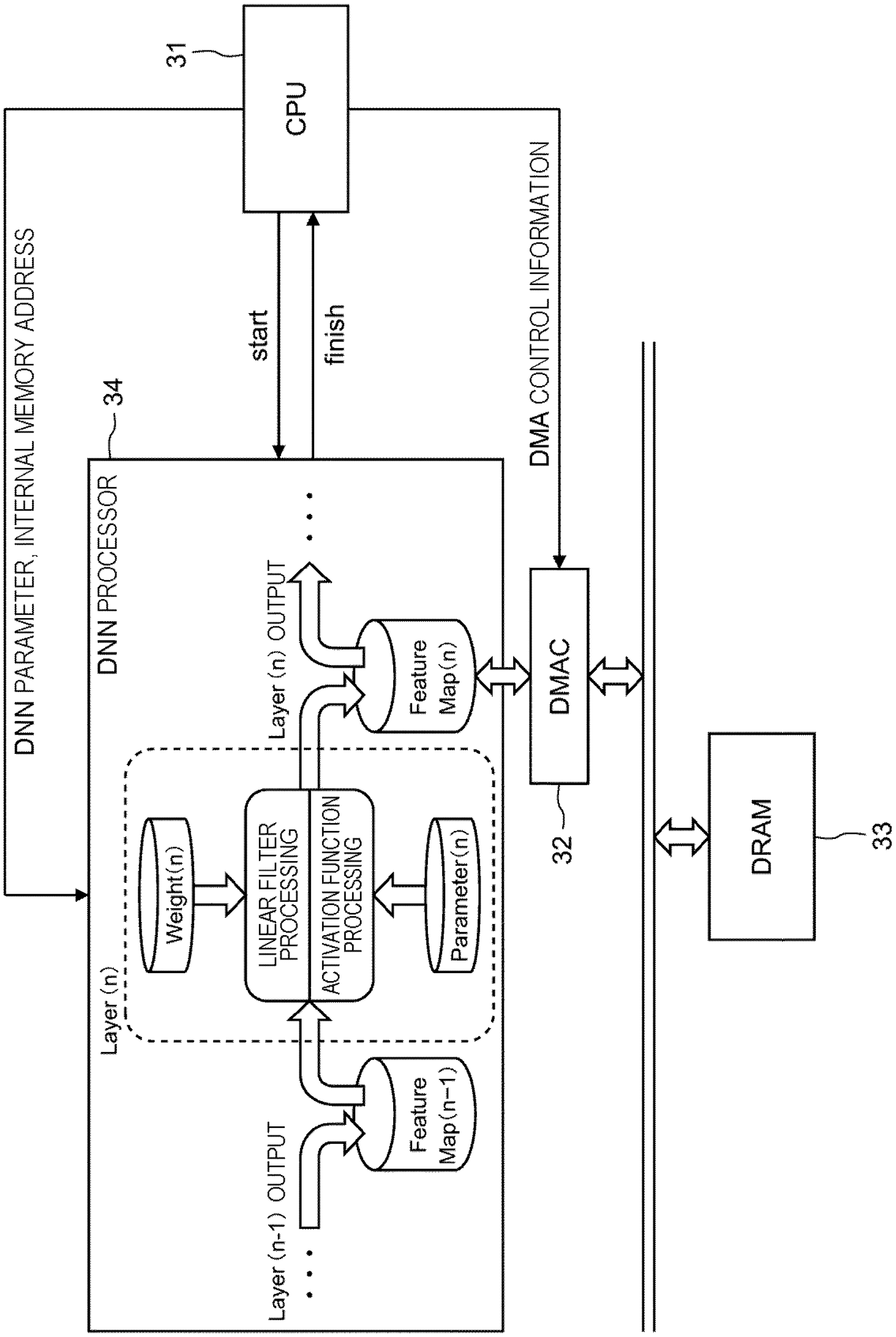

DNN PARAMETER, INTERNAL MEMORY ADDRESS
CPU
31
start
finish
DMA CONTROL INFORMATION
34
DNN PROCESSOR
Layer (n-1) OUTPUT
Feature Map(n−1)
Layer (n)
Weight(n)
LINEAR FILTER PROCESSING
ACTIVATION FUNCTION PROCESSING
Parameter(n)
Layer (n) OUTPUT
Feature Map(n)
DMAC
32
DRAM
33

FIG. 56

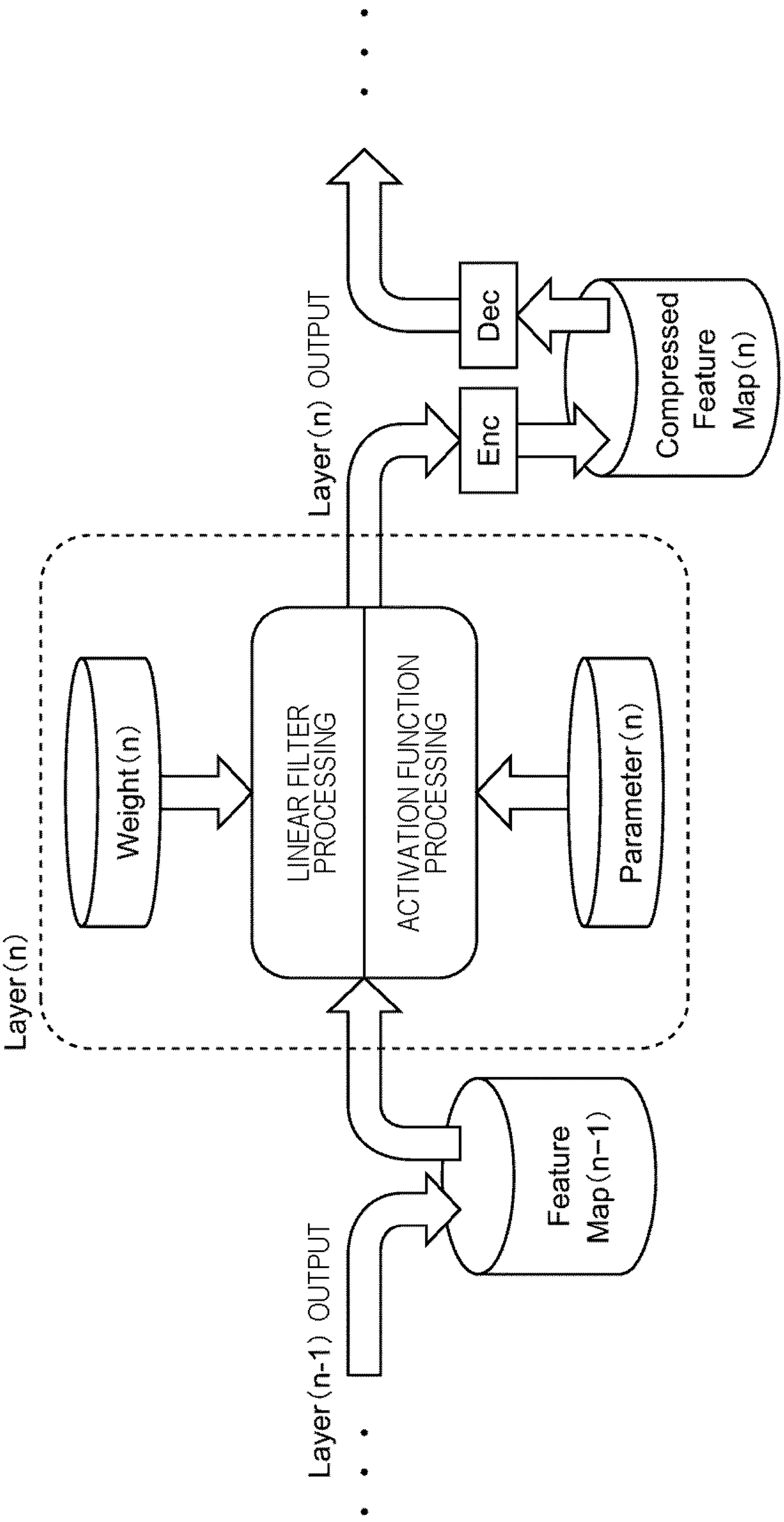
Layer(n-1) OUTPUT
Feature Map(n−1)
Layer(n)
Weight(n)
LINEAR FILTER PROCESSING
ACTIVATION FUNCTION PROCESSING
Parameter(n)
Layer(n) OUTPUT
Enc
Dec
Compressed Feature Map(n)

FIG. 57

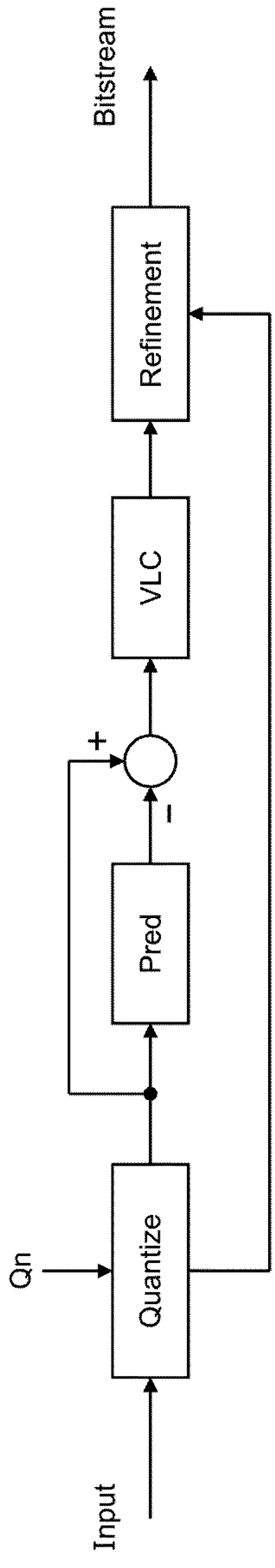

FIG. 58

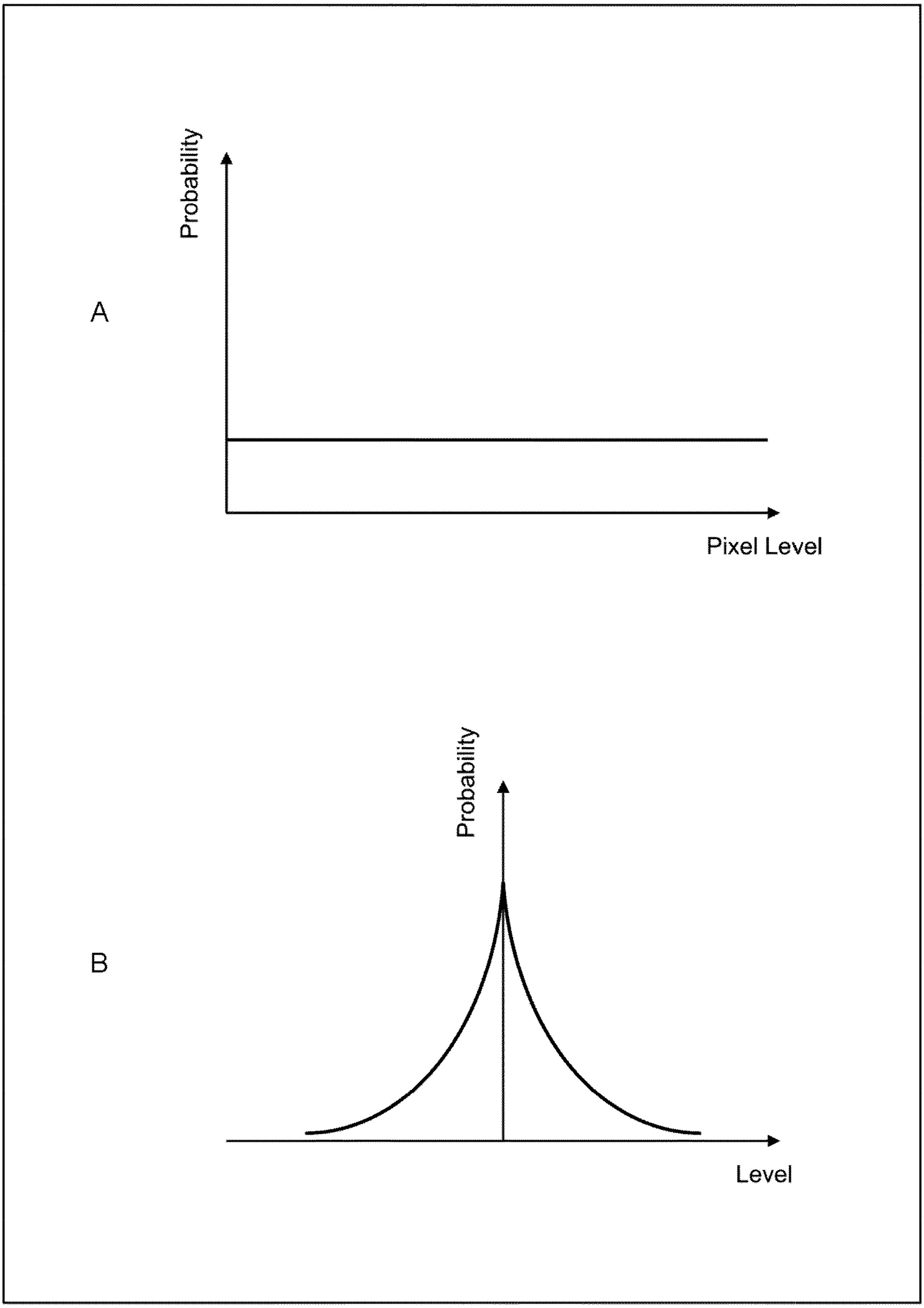

FIG. 59

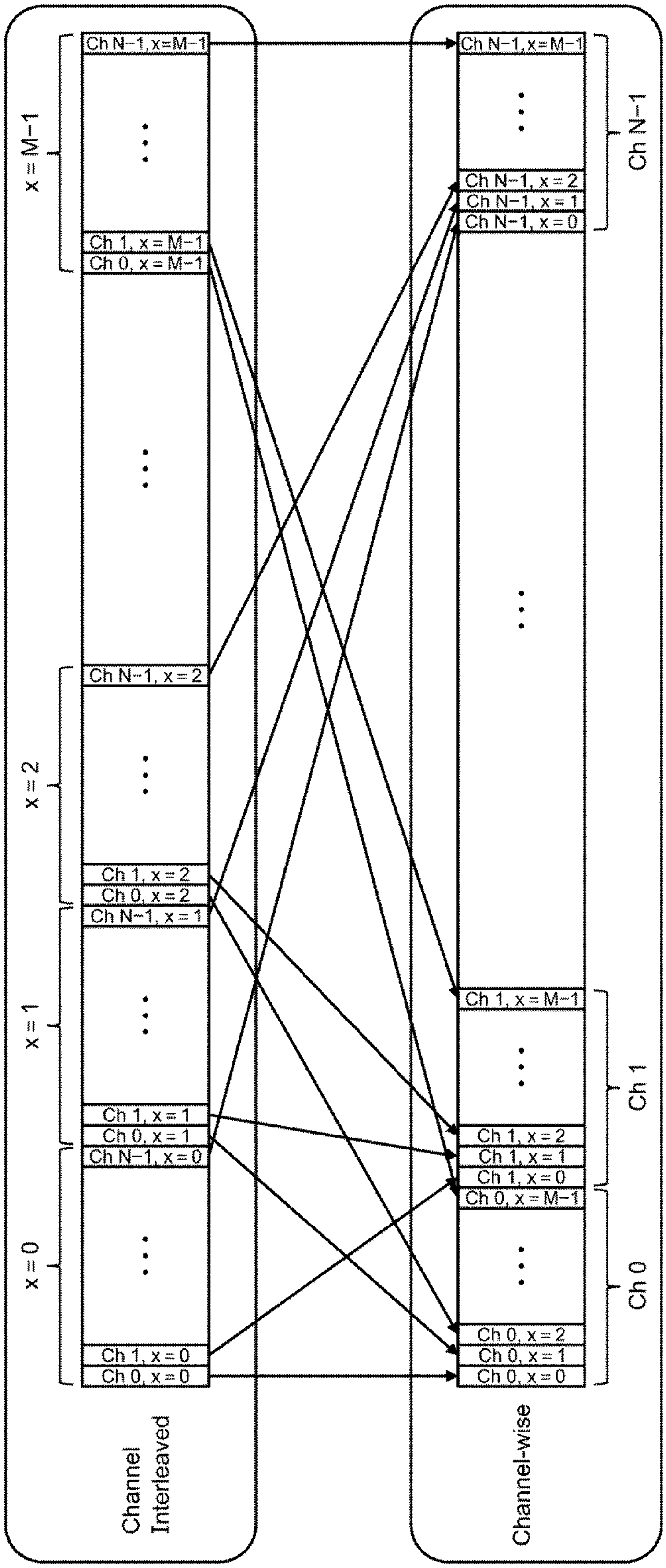
Channel Interleaved
x = 0
x = 1
x = 2
x = M−1
Ch 0, x = 0
Ch 1, x = 0
Ch N−1, x = 0
Ch 0, x = 1
Ch 1, x = 1
Ch N−1, x = 1
Ch 0, x = 2
Ch 1, x = 2
Ch N−1, x = 2
Ch 0, x = M−1
Ch 1, x = M−1
Ch N−1, x=M−1
Channel-wise
Ch 0
Ch 1
Ch N−1
Ch 0, x = 0
Ch 0, x = 1
Ch 0, x = 2
Ch 0, x = M−1
Ch 1, x = 0
Ch 1, x = 1
Ch 1, x = 2
Ch 1, x = M−1
Ch N−1, x = 0
Ch N−1, x = 1
Ch N−1, x = 2
Ch N−1, x=M−1

FIG. 60

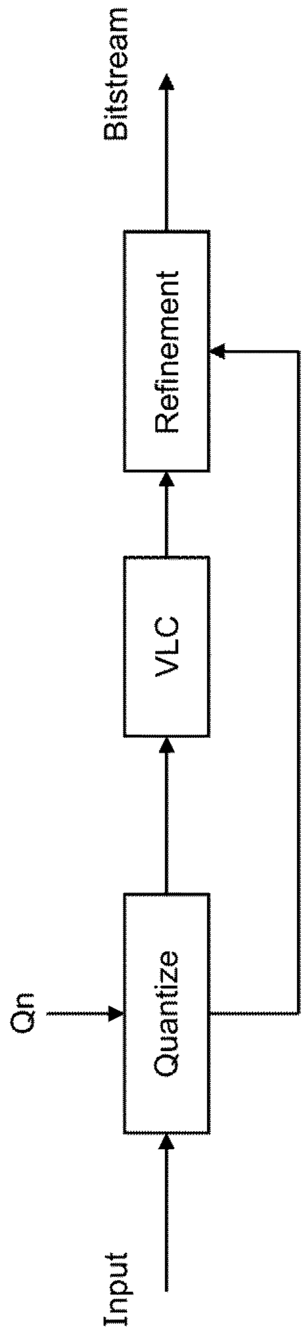

FIG. 61

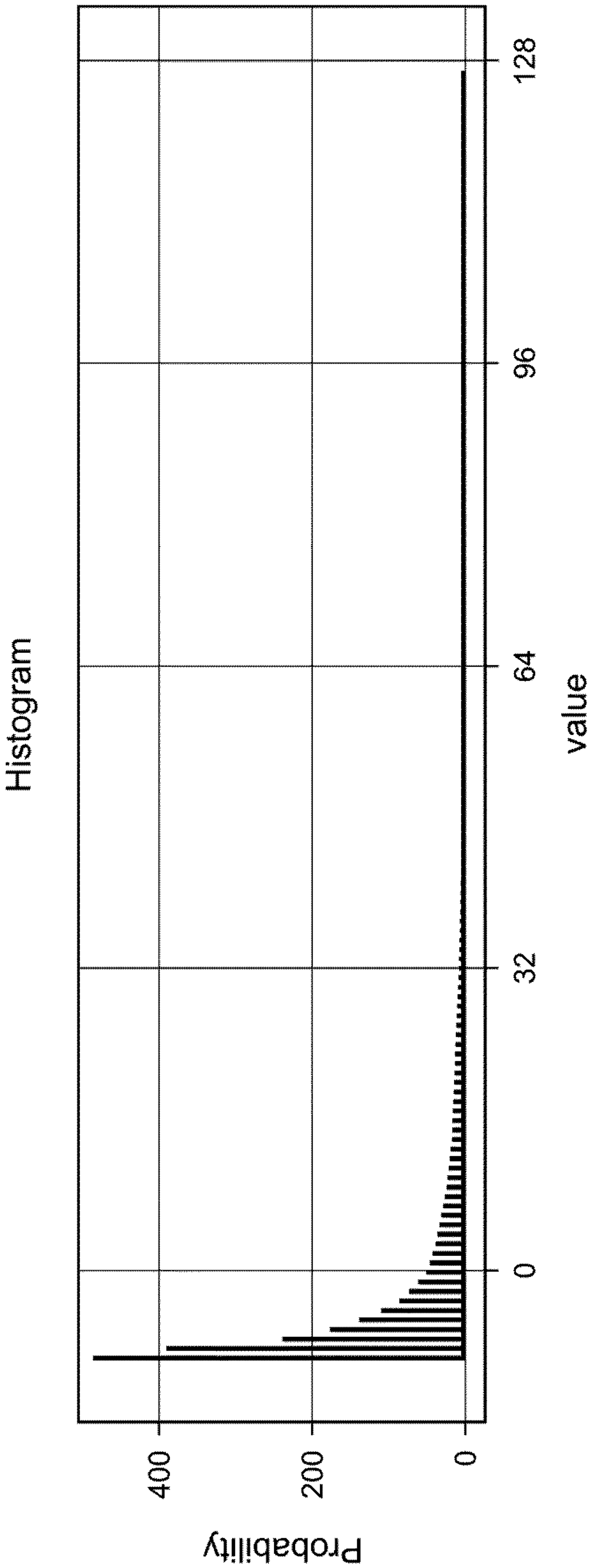

FIG. 62

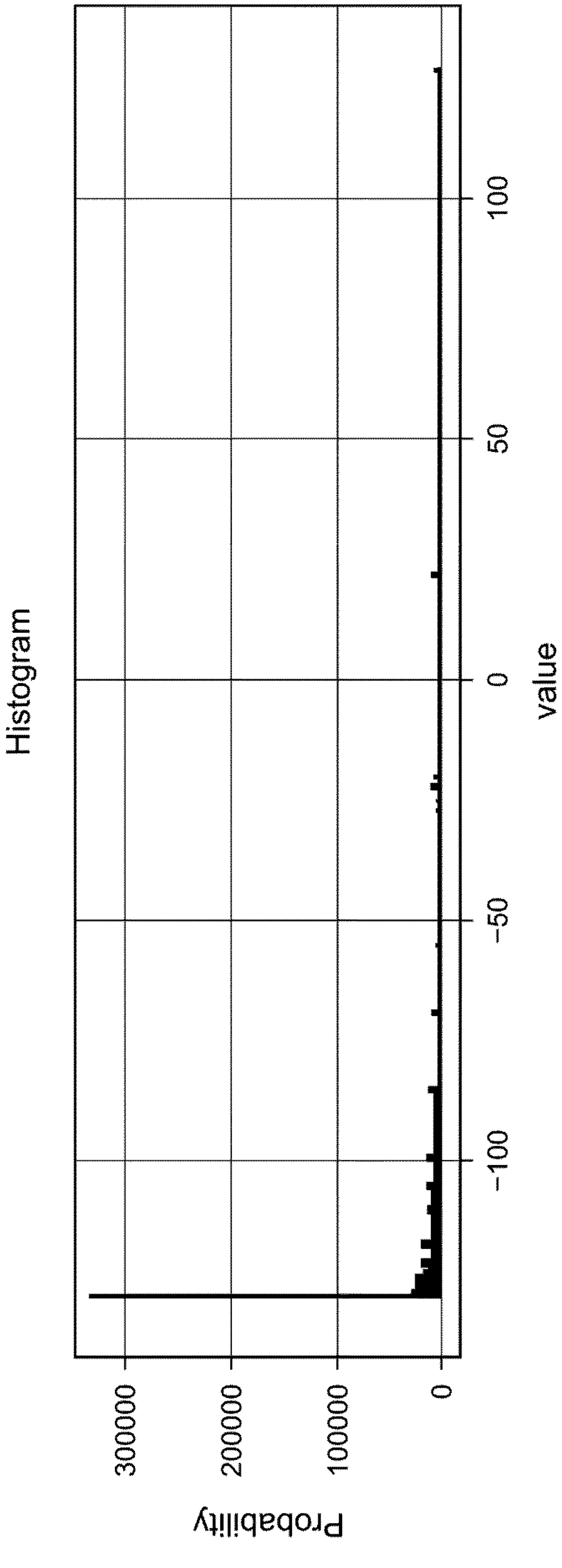
Histogram
Probability
300000
200000
100000
0
−100
−50
0
50
100
value

FIG. 63

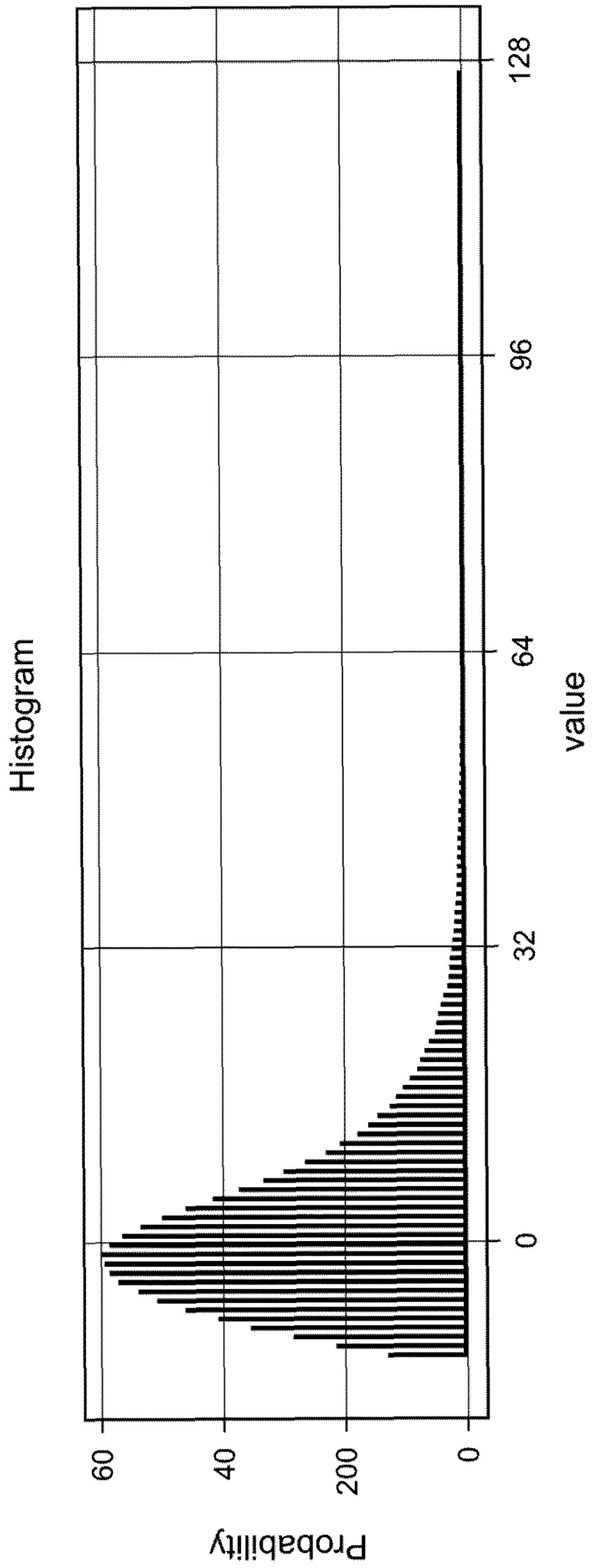

FIG. 64

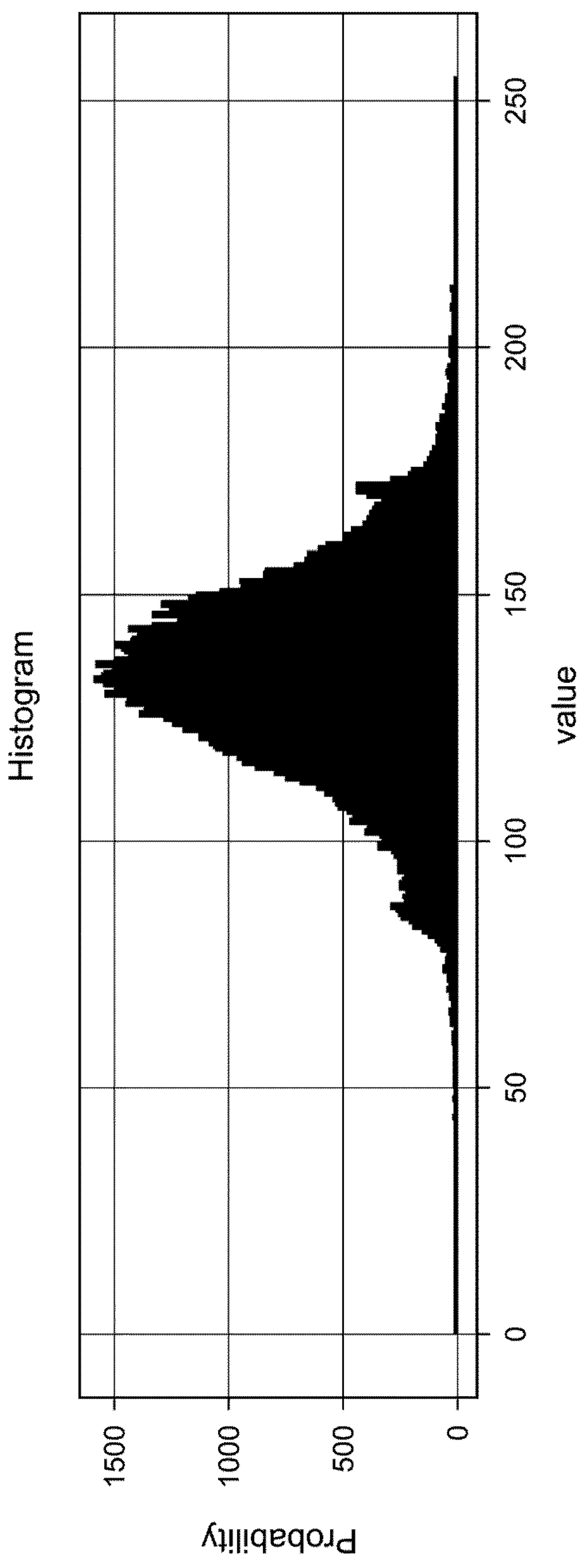
Histogram
Probability
1500
1000
500
0
0
50
100
150
200
250
value

FIG. 65

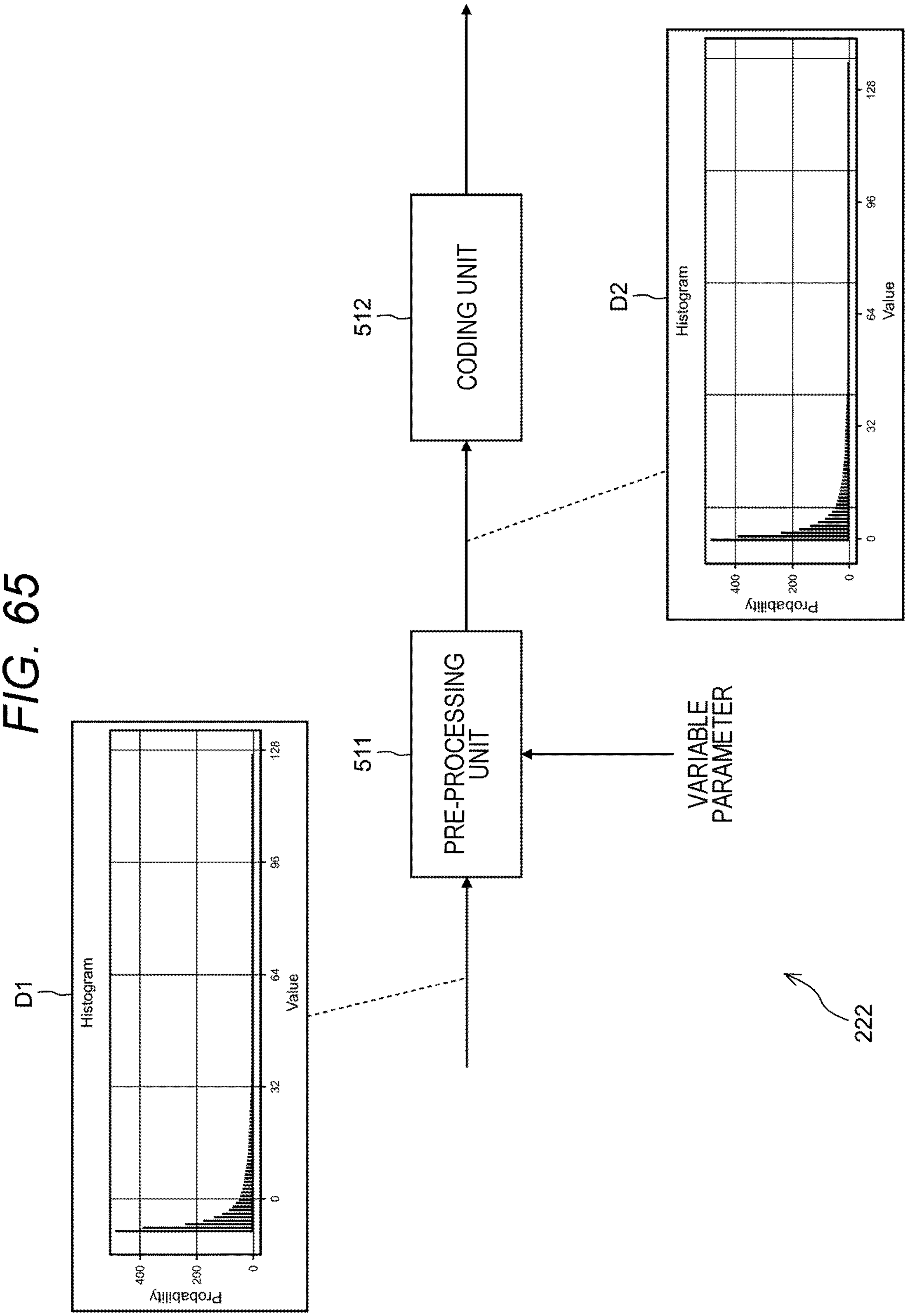
D1
Histogram
Probability
400
200
0
0
32
64
96
128
Value
511
PRE-PROCESSING UNIT
512
CODING UNIT
VARIABLE PARAMETER
D2
Histogram
Probability
400
200
0
0
32
64
96
128
Value
222

FIG. 66

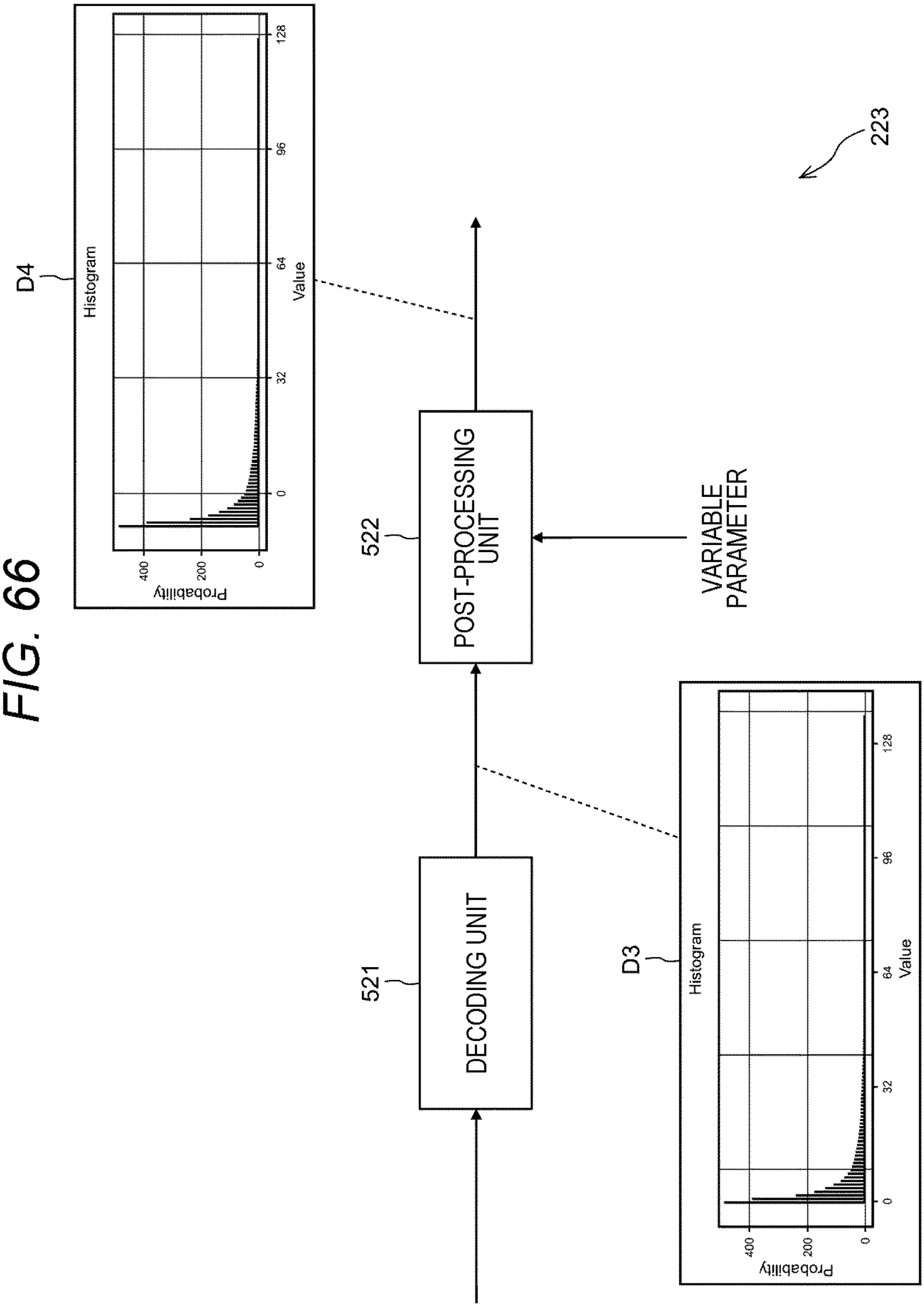
D4
Histogram
Probability
400
200
0
0
32
64
96
128
Value
223
522
POST-PROCESSING UNIT
VARIABLE PARAMETER
521
DECODING UNIT
D3
Histogram
Probability
400
200
0
0
32
64
96
128
Value

FIG. 67

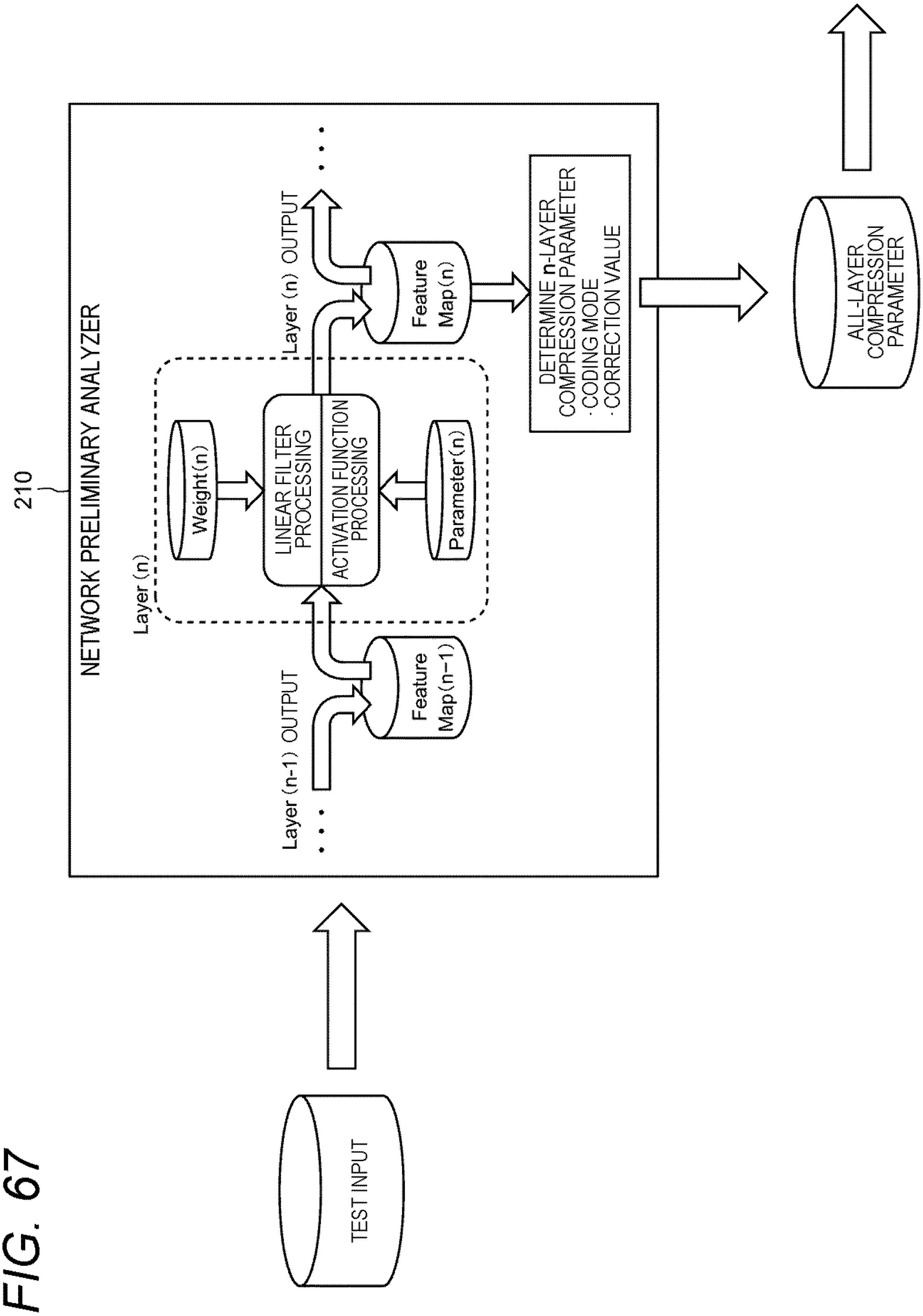
210
NETWORK PRELIMINARY ANALYZER
Layer (n)
Layer (n-1) OUTPUT
Feature Map(n−1)
Weight(n)
LINEAR FILTER PROCESSING
ACTIVATION FUNCTION PROCESSING
Parameter(n)
Layer (n) OUTPUT
Feature Map(n)
DETERMINE n-LAYER COMPRESSION PARAMETER
·CODING MODE
·CORRECTION VALUE
TEST INPUT
ALL-LAYER COMPRESSION PARAMETER

FIG. 68

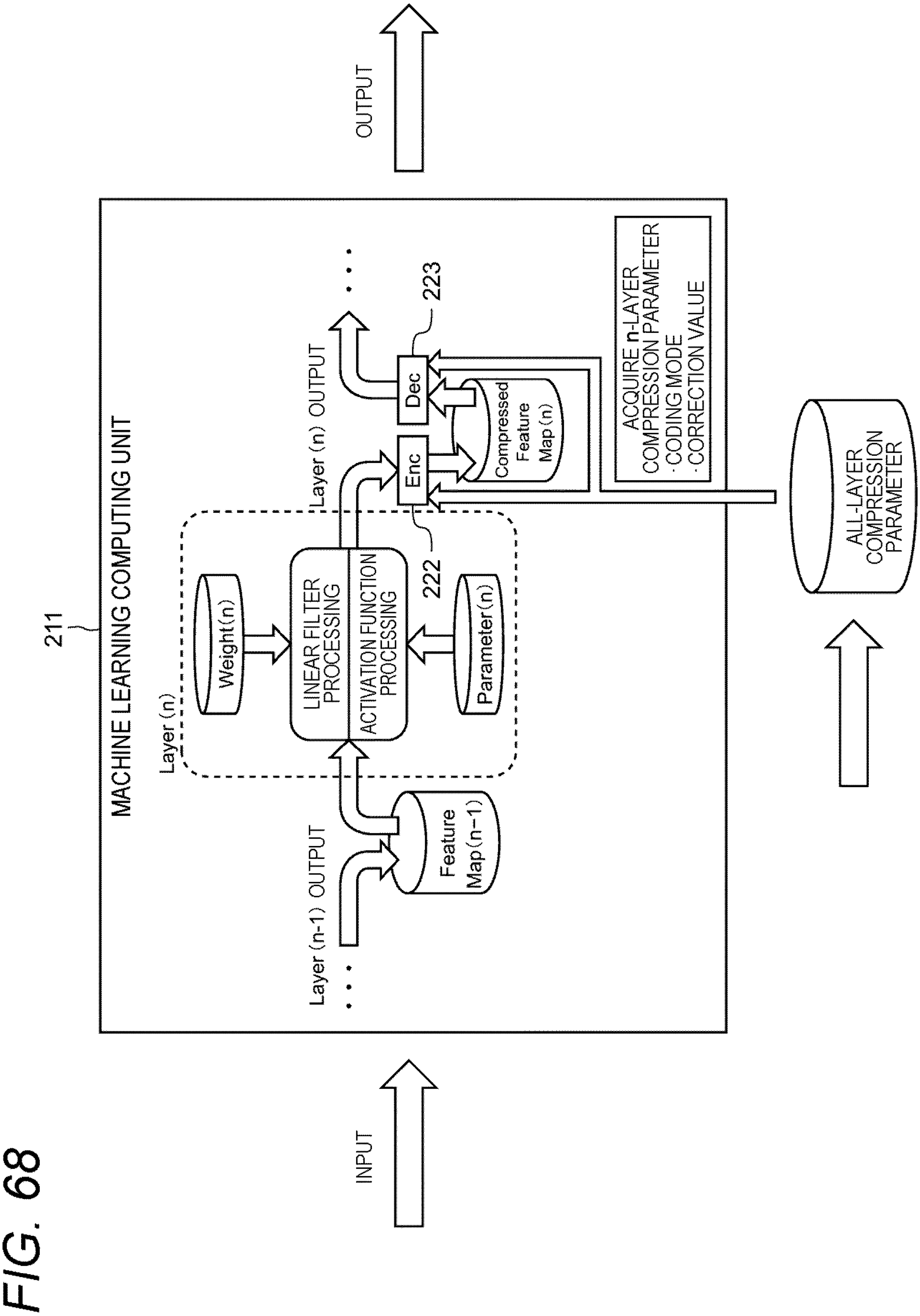

211
MACHINE LEARNING COMPUTING UNIT
INPUT
OUTPUT
Layer (n-1) OUTPUT
Feature Map (n-1)
Layer (n)
Weight (n)
LINEAR FILTER PROCESSING
ACTIVATION FUNCTION PROCESSING
Parameter (n)
222
Layer (n) OUTPUT
Enc
Dec
223
Compressed Feature Map (n)
ACQUIRE n-LAYER COMPRESSION PARAMETER
· CODING MODE
· CORRECTION VALUE
ALL-LAYER COMPRESSION PARAMETER

FIG. 69

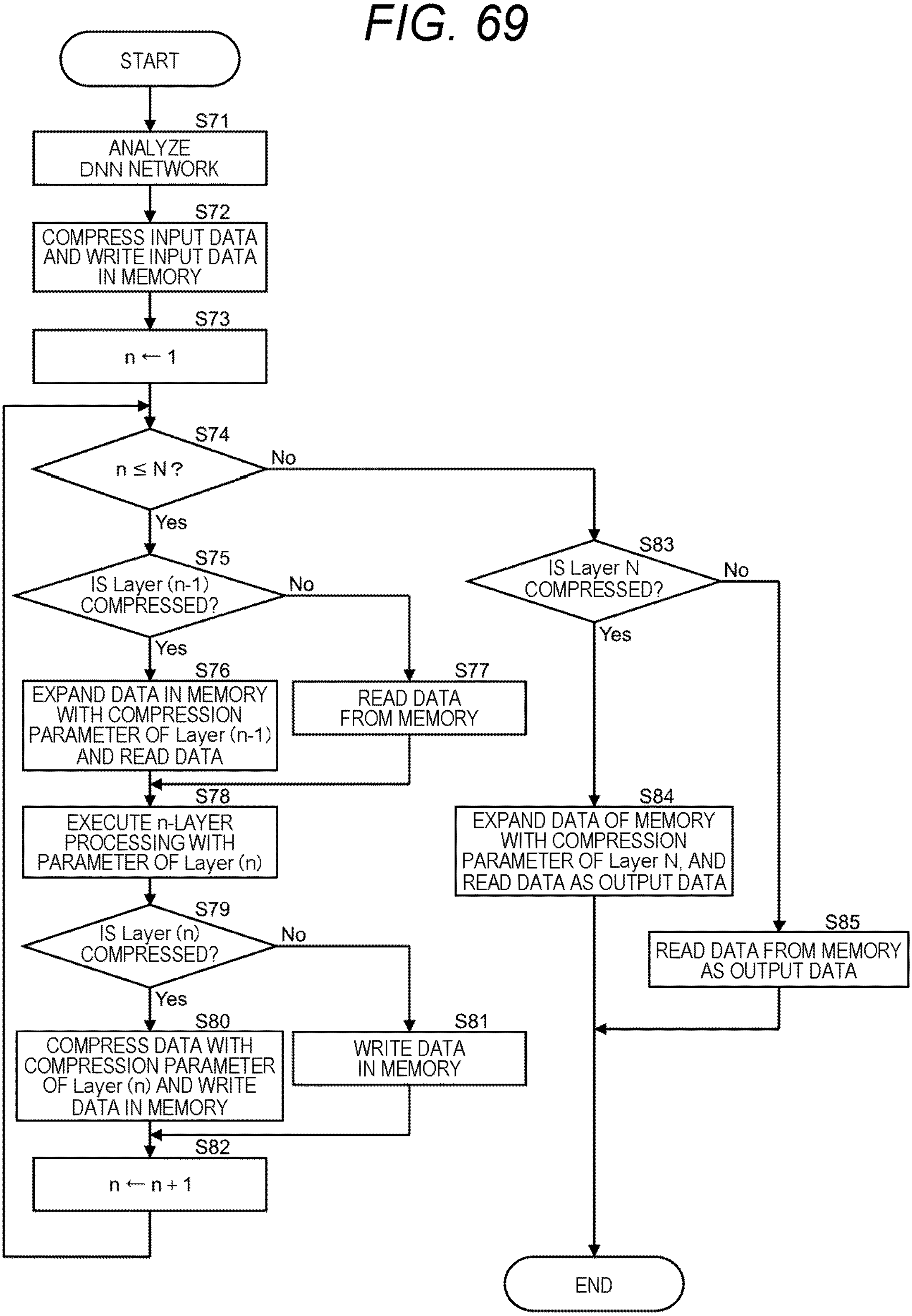
START
S71
ANALYZE DNN NETWORK
S72
COMPRESS INPUT DATA AND WRITE INPUT DATA IN MEMORY
S73
n ← 1
S74
n ≤ N ?
No
Yes
S75
IS Layer (n-1) COMPRESSED?
No
Yes
S76
EXPAND DATA IN MEMORY WITH COMPRESSION PARAMETER OF Layer (n-1) AND READ DATA
S77
READ DATA FROM MEMORY
S78
EXECUTE n-LAYER PROCESSING WITH PARAMETER OF Layer (n)
S79
IS Layer (n) COMPRESSED?
No
Yes
S80
COMPRESS DATA WITH COMPRESSION PARAMETER OF Layer (n) AND WRITE DATA IN MEMORY
S81
WRITE DATA IN MEMORY
S82
n ← n + 1
S83
IS Layer N COMPRESSED?
No
Yes
S84
EXPAND DATA OF MEMORY WITH COMPRESSION PARAMETER OF Layer N, AND READ DATA AS OUTPUT DATA
S85
READ DATA FROM MEMORY AS OUTPUT DATA
END

FIG. 70

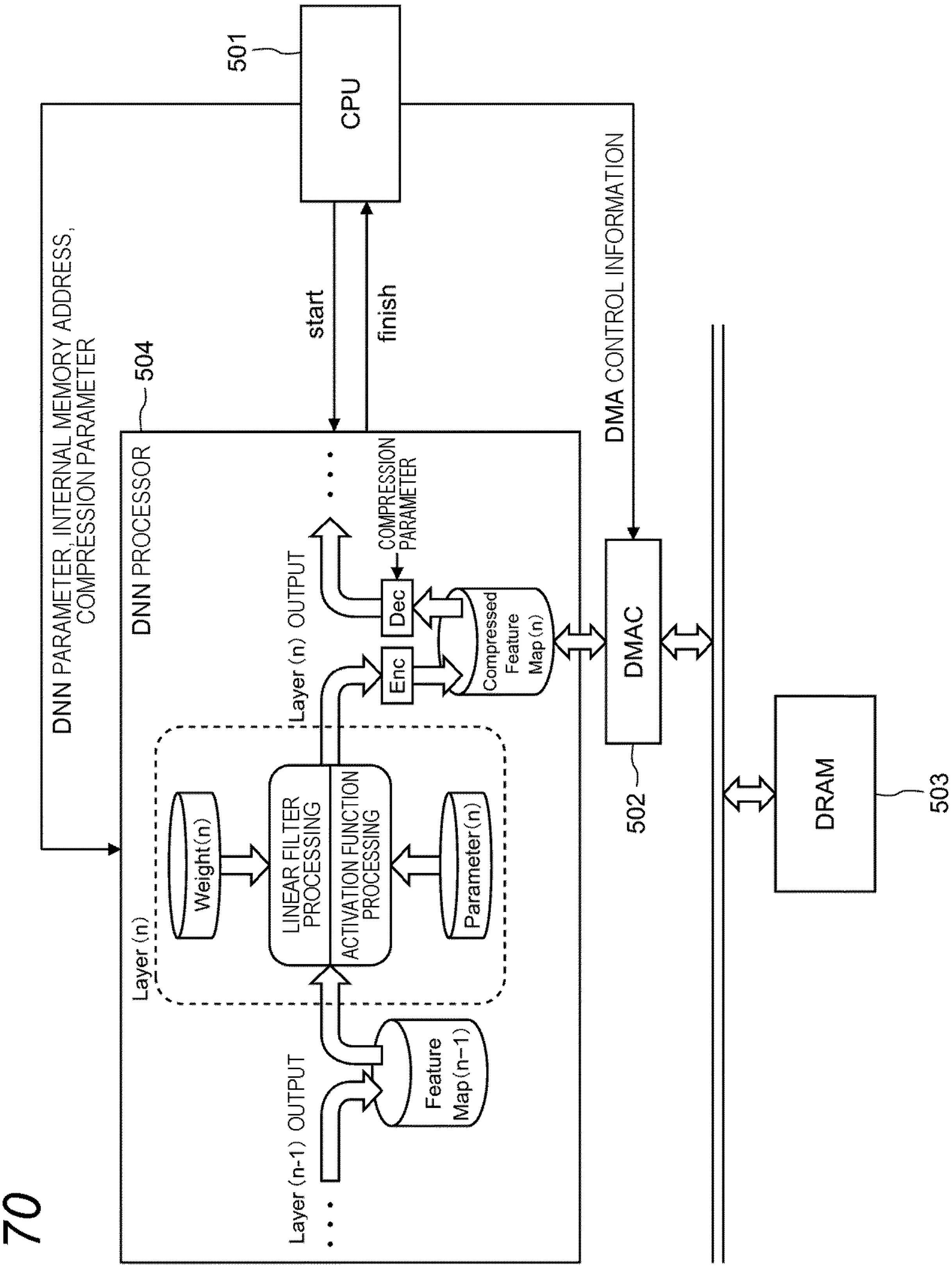
CPU
501
start
finish
DNN PARAMETER, INTERNAL MEMORY ADDRESS, COMPRESSION PARAMETER
DMA CONTROL INFORMATION
504
DNN PROCESSOR
Layer (n-1) OUTPUT
Feature Map (n−1)
Layer (n)
Weight (n)
LINEAR FILTER PROCESSING
ACTIVATION FUNCTION PROCESSING
Parameter (n)
Layer (n) OUTPUT
Enc
Dec
COMPRESSION PARAMETER
Compressed Feature Map (n)
DMAC
502
DRAM
503

FIG. 71

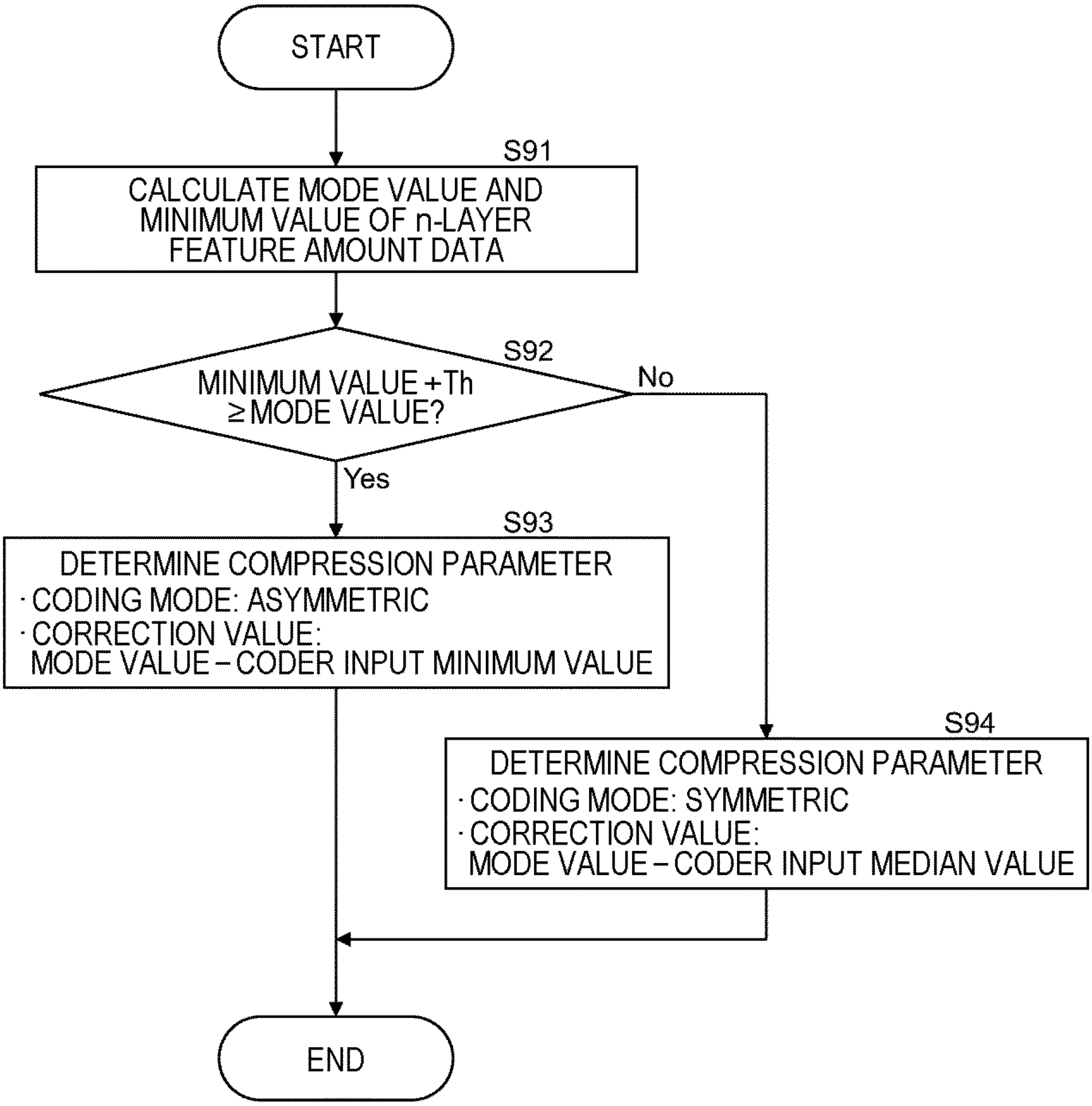
START
S91
CALCULATE MODE VALUE AND MINIMUM VALUE OF n-LAYER FEATURE AMOUNT DATA
S92
MINIMUM VALUE + Th ≥ MODE VALUE?
No
Yes
S93
DETERMINE COMPRESSION PARAMETER
· CODING MODE: ASYMMETRIC
· CORRECTION VALUE:
MODE VALUE − CODER INPUT MINIMUM VALUE
S94
DETERMINE COMPRESSION PARAMETER
· CODING MODE: SYMMETRIC
· CORRECTION VALUE:
MODE VALUE − CODER INPUT MEDIAN VALUE
END

FIG. 72

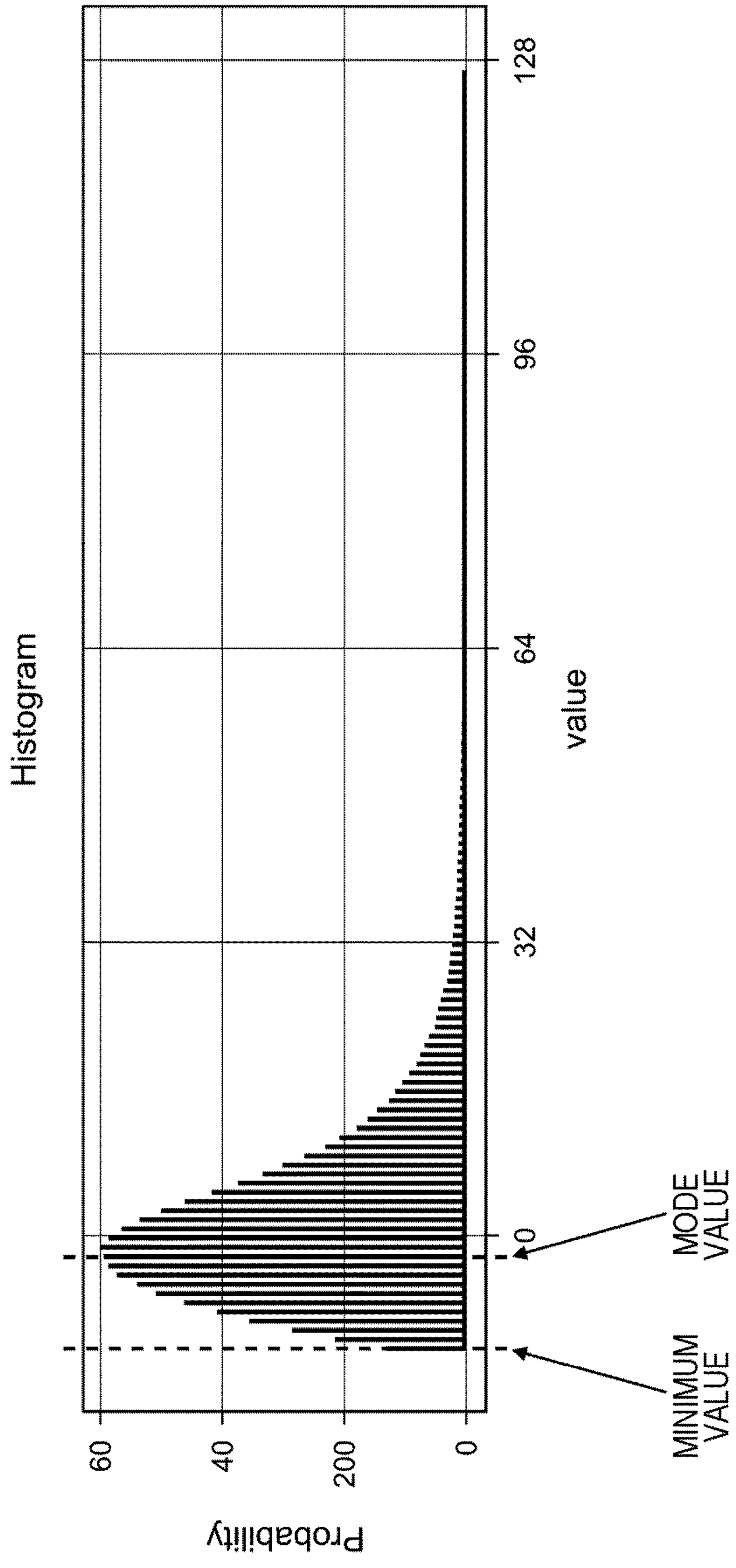
Histogram
Probability
60
40
200
0
0
32
64
96
128
value
MINIMUM VALUE
MODE VALUE

FIG. 73

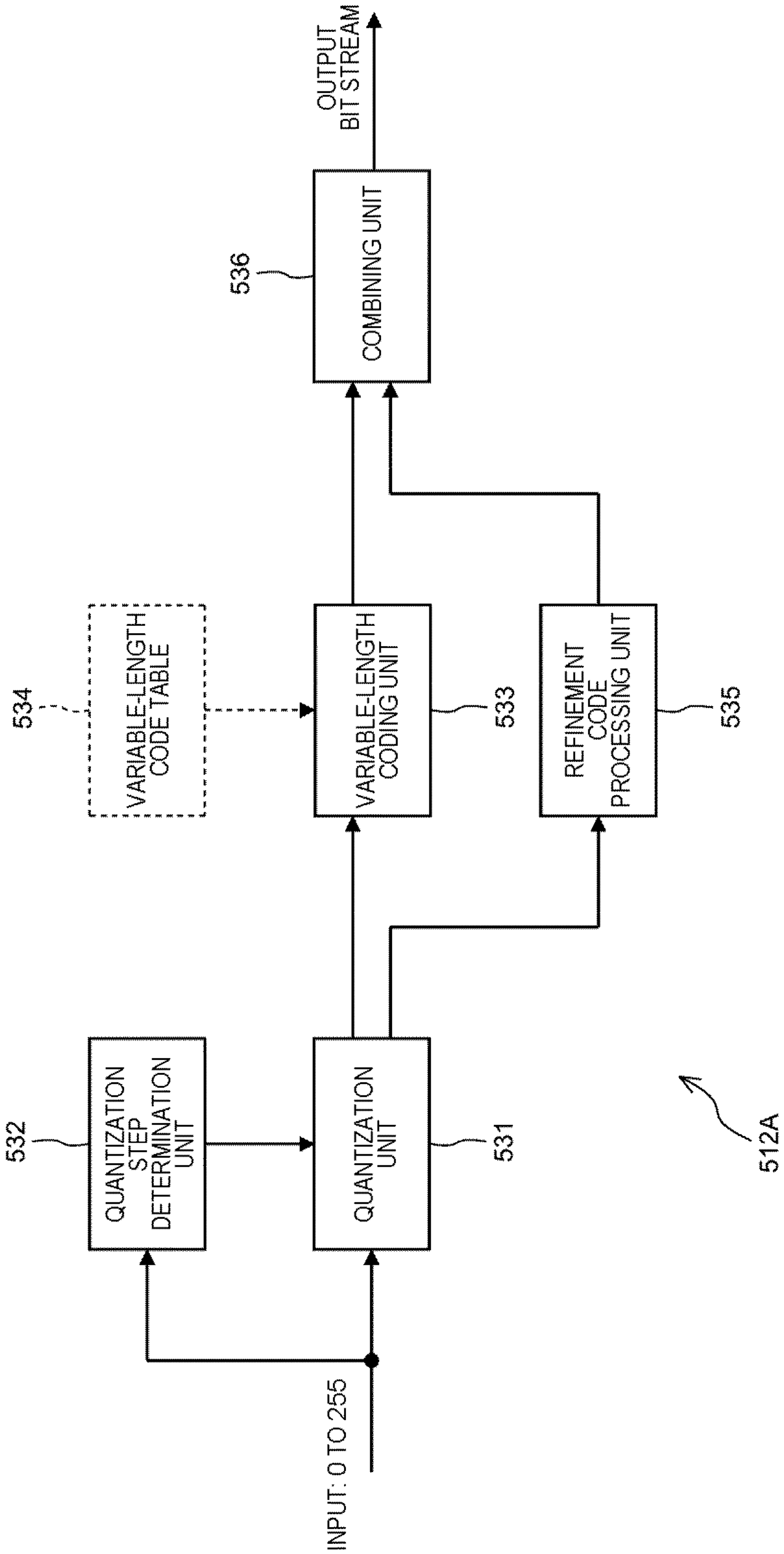
INPUT: 0 TO 255
532
QUANTIZATION STEP DETERMINATION UNIT
QUANTIZATION UNIT
531
534
VARIABLE-LENGTH CODE TABLE
VARIABLE-LENGTH CODING UNIT
533
REFINEMENT CODE PROCESSING UNIT
535
536
COMBINING UNIT
OUTPUT BIT STREAM
512A

FIG. 74

| INPUT VALUE | VARIABLE-LENGTH CODE WORD |
|---|---|
| 0 | 0 |
| 1 | 100 |
| 2 | 101 |
| 3 | 11000 |
| 4 | 11001 |
| 5 | 11010 |
| 6 | 11011 |
| 7 | 1110000 |
| 8 | 1110001 |
| 9 | 1110010 |
| 10 | 1110011 |
| 11 | 1110100 |
| 12 | 1110101 |
| 13 | 1110110 |
| ... | ... |

534

FIG. 75

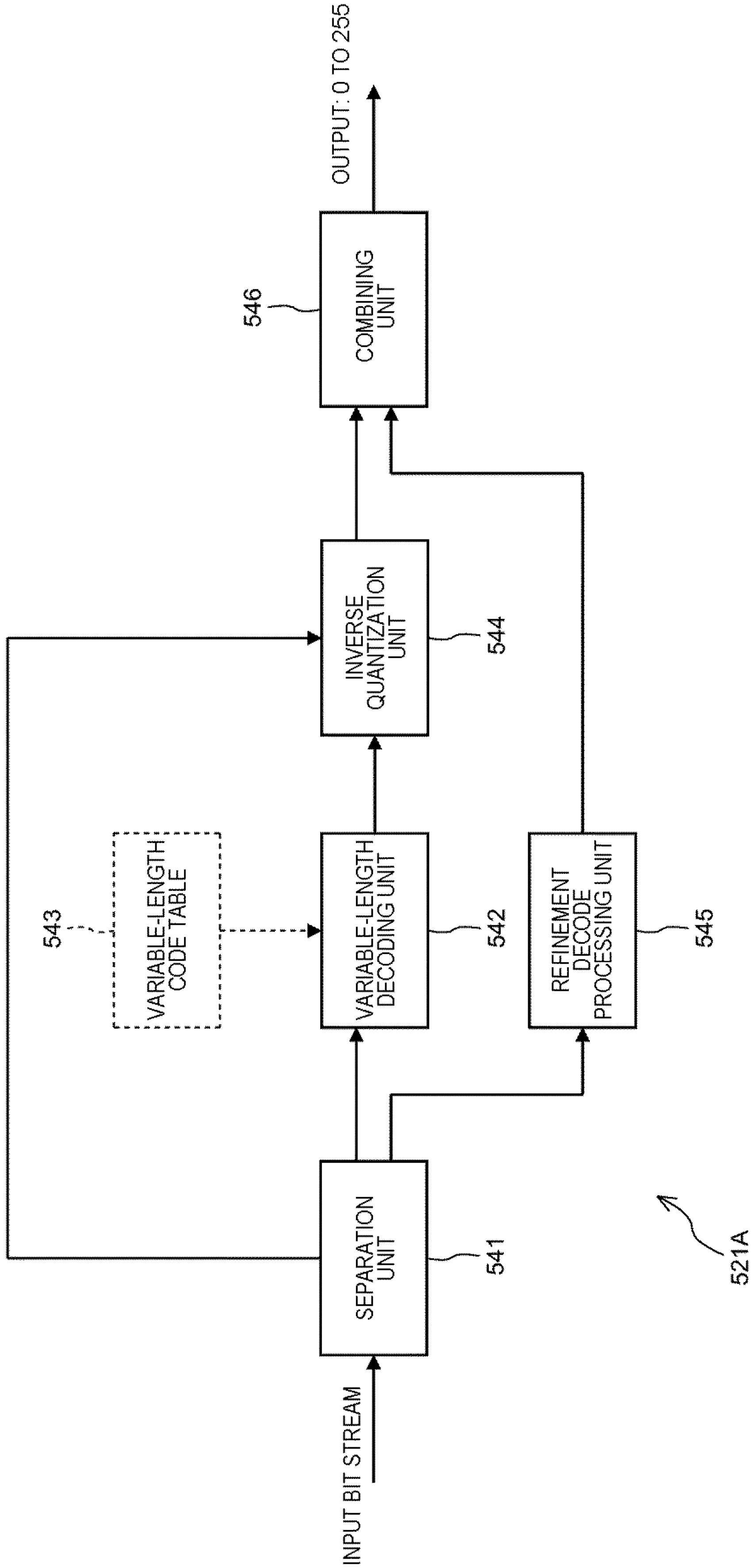
OUTPUT: 0 TO 255
546
COMBINING UNIT
INVERSE QUANTIZATION UNIT
544
543
VARIABLE-LENGTH CODE TABLE
VARIABLE-LENGTH DECODING UNIT
542
REFINEMENT DECODE PROCESSING UNIT
545
SEPARATION UNIT
541
INPUT BIT STREAM
521A

FIG. 76

| INPUT VALUE | VARIABLE-LENGTH CODE WORD |
|---|---|
| 0 | 0 |
| 1 | 100 |
| 2 | 101 |
| 3 | 11000 |
| 4 | 11001 |
| 5 | 11010 |
| 6 | 11011 |
| 7 | 1110000 |
| 8 | 1110001 |
| 9 | 1110010 |
| 10 | 1110011 |
| 11 | 1110100 |
| 12 | 1110101 |
| 13 | 1110110 |
| ... | ... |

543

FIG. 77

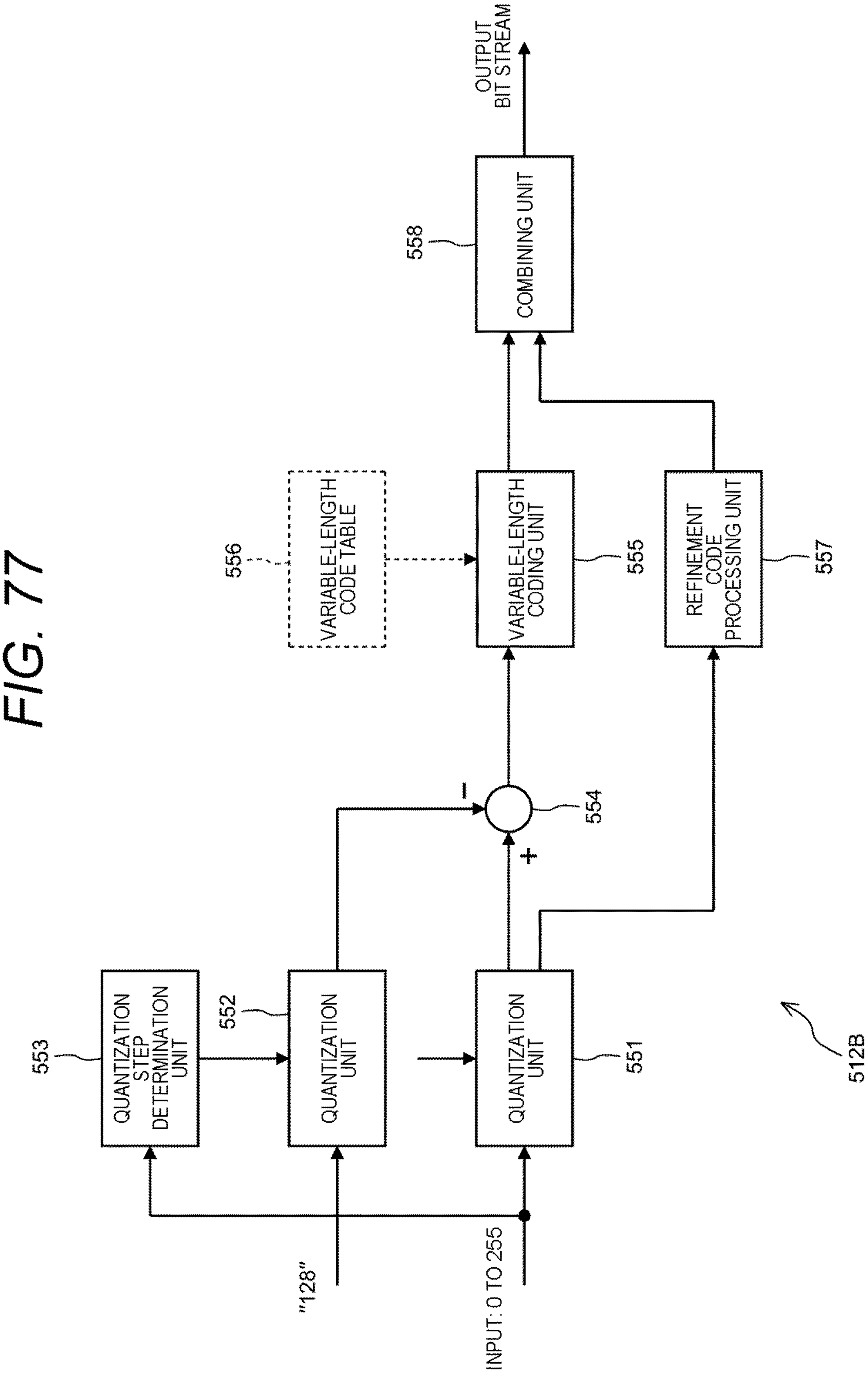
OUTPUT BIT STREAM
558
COMBINING UNIT
556
VARIABLE-LENGTH CODE TABLE
VARIABLE-LENGTH CODING UNIT
555
REFINEMENT CODE PROCESSING UNIT
557
554
553
QUANTIZATION STEP DETERMINATION UNIT
552
QUANTIZATION UNIT
QUANTIZATION UNIT
551
"128"
INPUT: 0 TO 255
512B

FIG. 78

| INPUT VALUE | VARIABLE-LENGTH CODE WORD |
|---|---|
| ... | ... |
| −6 | 1110101 |
| −5 | 1110011 |
| −4 | 1110001 |
| −3 | 11011 |
| −2 | 11001 |
| −1 | 101 |
| 0 | 0 |
| 1 | 100 |
| 2 | 11000 |
| 3 | 11010 |
| 4 | 1110000 |
| 5 | 1110010 |
| 6 | 1110100 |
| 7 | 1110110 |
| ... | ... |

556

FIG. 79

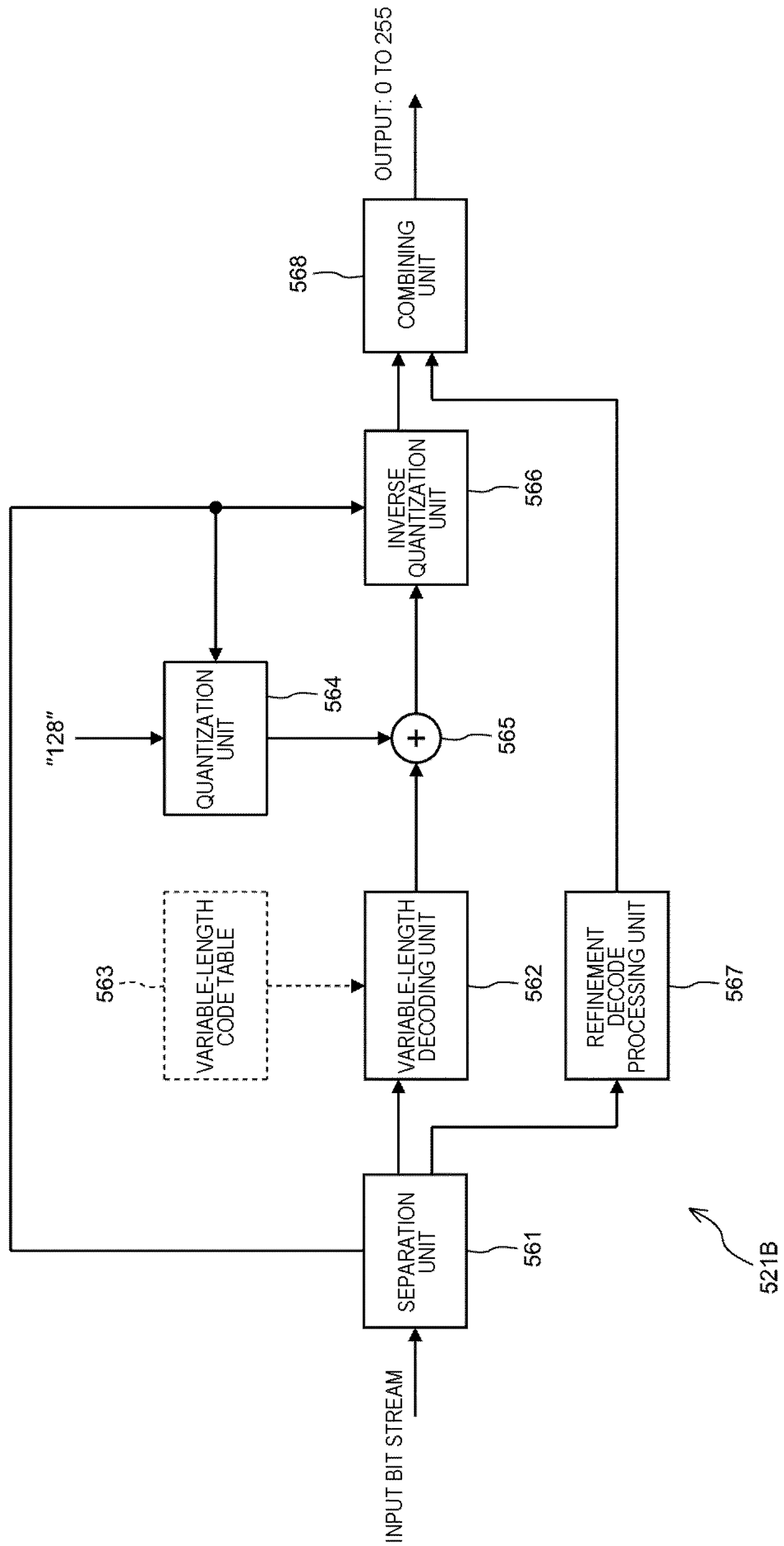
OUTPUT: 0 TO 255
568
COMBINING UNIT
INVERSE QUANTIZATION UNIT
566
"128"
QUANTIZATION UNIT
564
565
563
VARIABLE-LENGTH CODE TABLE
VARIABLE-LENGTH DECODING UNIT
562
REFINEMENT DECODE PROCESSING UNIT
567
SEPARATION UNIT
561
INPUT BIT STREAM
521B

FIG. 80

| INPUT VALUE | VARIABLE-LENGTH CODE WORD |
|---|---|
| ... | ... |
| −6 | 1110101 |
| −5 | 1110011 |
| −4 | 1110001 |
| −3 | 11011 |
| −2 | 11001 |
| −1 | 101 |
| 0 | 0 |
| 1 | 100 |
| 2 | 11000 |
| 3 | 11010 |
| 4 | 1110000 |
| 5 | 1110010 |
| 6 | 1110100 |
| 7 | 1110110 |
| ... | ... |

563

FIG. 81

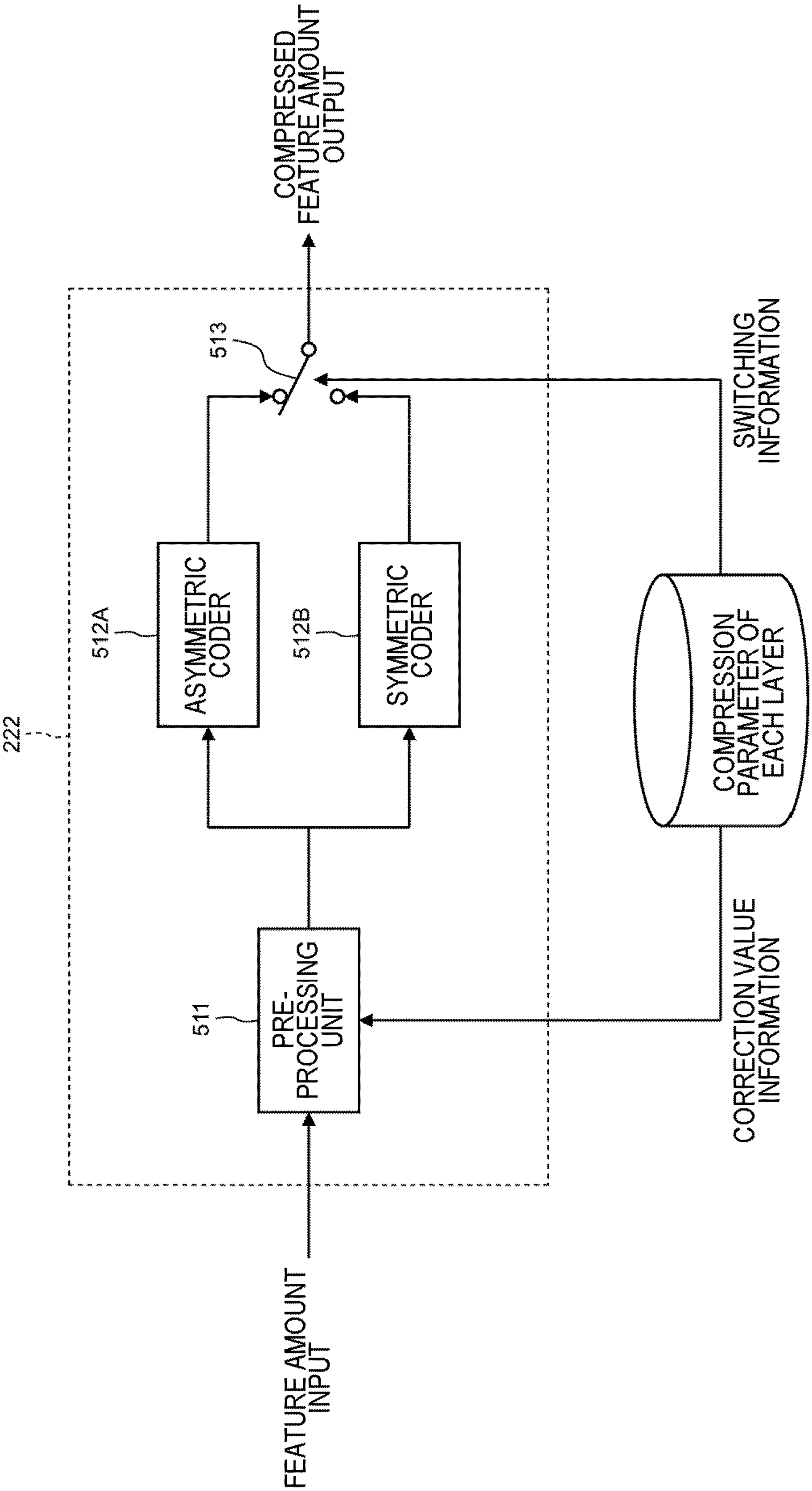
222
511
PRE-PROCESSING UNIT
512A
ASYMMETRIC CODER
512B
SYMMETRIC CODER
513
FEATURE AMOUNT INPUT
COMPRESSED FEATURE AMOUNT OUTPUT
COMPRESSION PARAMETER OF EACH LAYER
CORRECTION VALUE INFORMATION
SWITCHING INFORMATION

FIG. 82

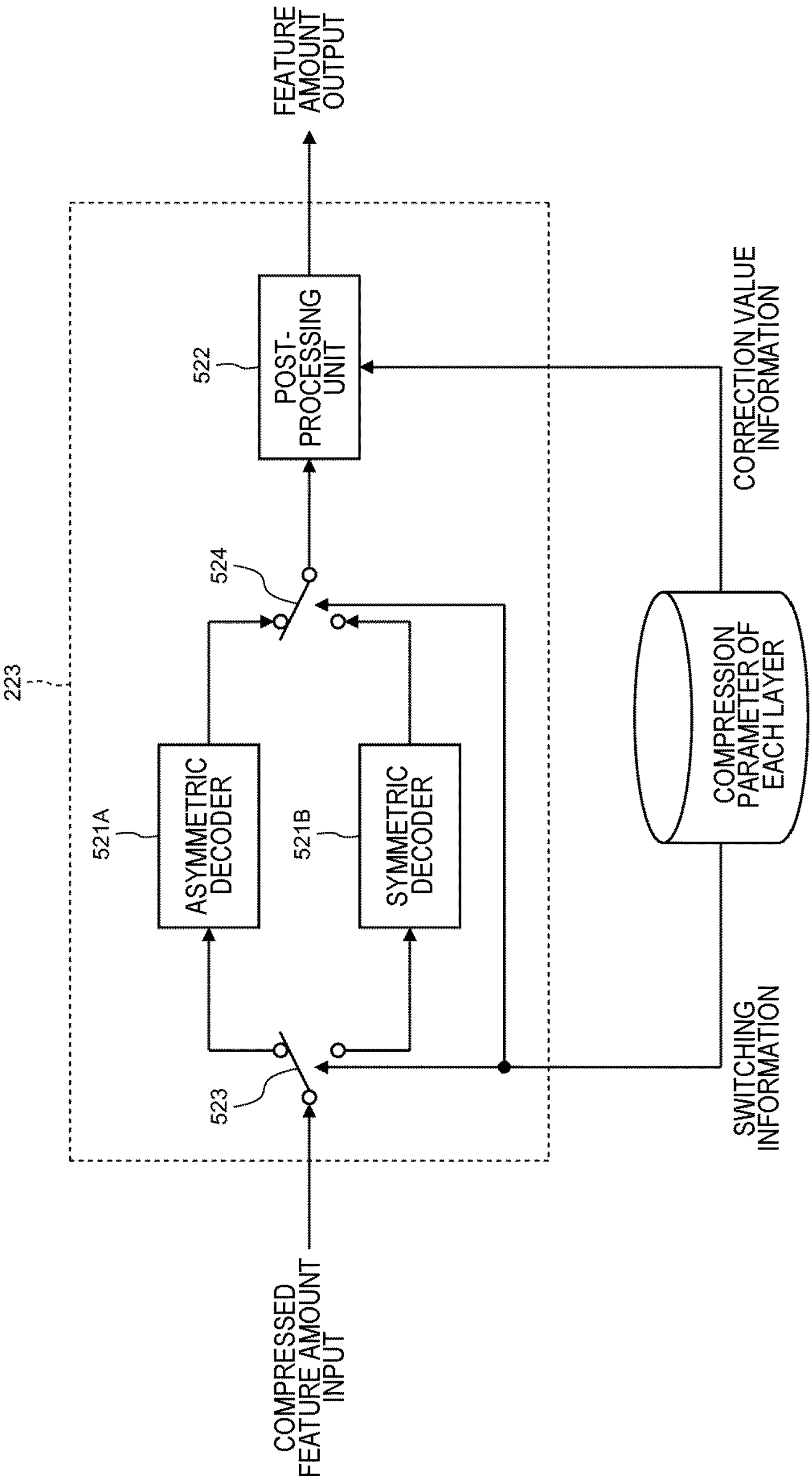
223
COMPRESSED FEATURE AMOUNT INPUT
523
521A
ASYMMETRIC DECODER
521B
SYMMETRIC DECODER
524
522
POST-PROCESSING UNIT
FEATURE AMOUNT OUTPUT
COMPRESSION PARAMETER OF EACH LAYER
SWITCHING INFORMATION
CORRECTION VALUE INFORMATION

FIG. 83

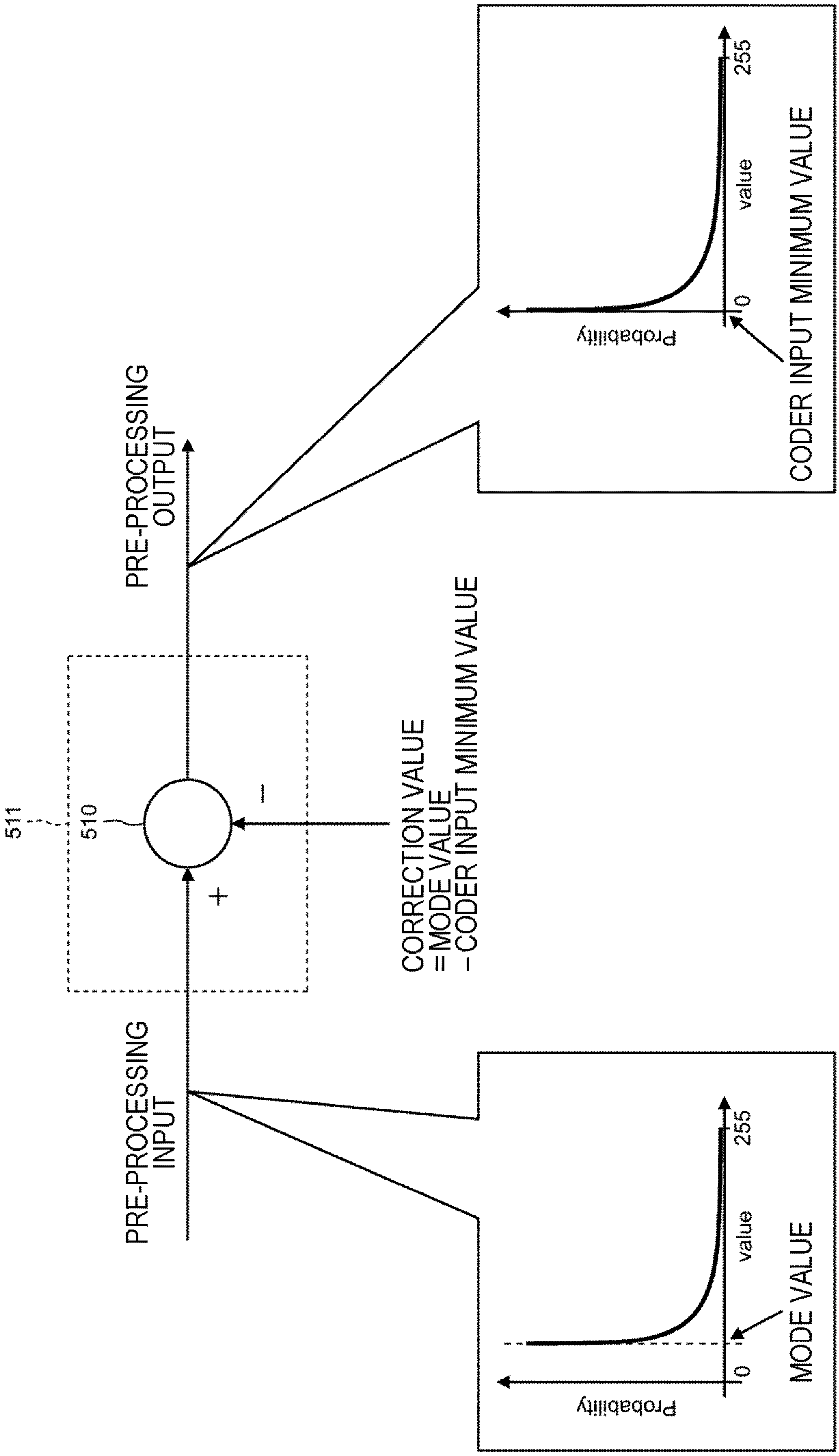
511
510
PRE-PROCESSING INPUT
PRE-PROCESSING OUTPUT
+
−
CORRECTION VALUE
=MODE VALUE
−CODER INPUT MINIMUM VALUE
Probability
value
0
255
MODE VALUE
Probability
value
0
255
CODER INPUT MINIMUM VALUE

FIG. 84

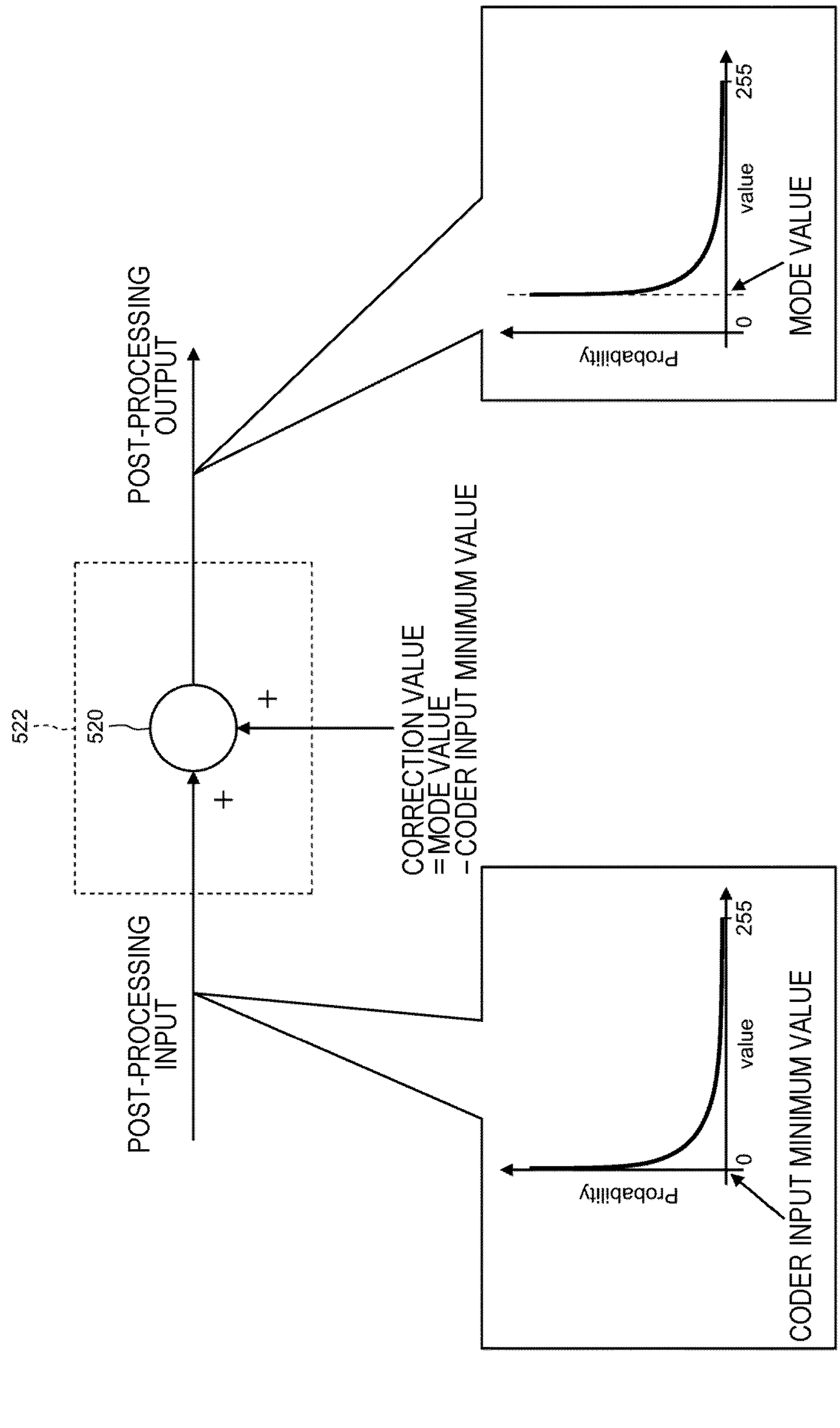
522
520
POST-PROCESSING INPUT
POST-PROCESSING OUTPUT
+
+
CORRECTION VALUE
=MODE VALUE
−CODER INPUT MINIMUM VALUE
Probability
value
0
255
CODER INPUT MINIMUM VALUE
Probability
value
0
255
MODE VALUE

FIG. 85

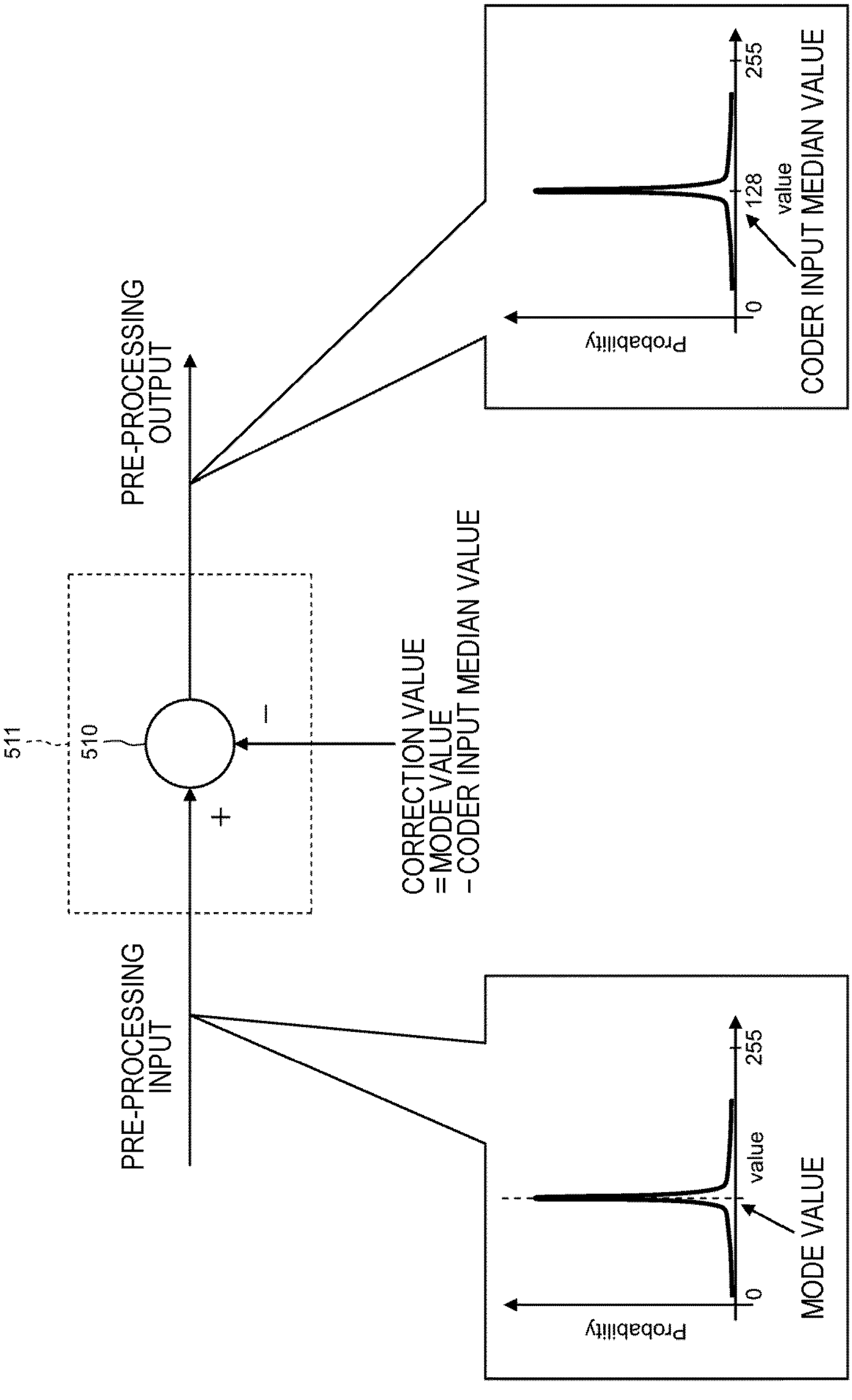
PRE-PROCESSING INPUT
PRE-PROCESSING OUTPUT
511
510
+
−
CORRECTION VALUE
=MODE VALUE
−CODER INPUT MEDIAN VALUE
Probability
0
255
value
MODE VALUE
Probability
0
128
255
value
CODER INPUT MEDIAN VALUE

FIG. 86

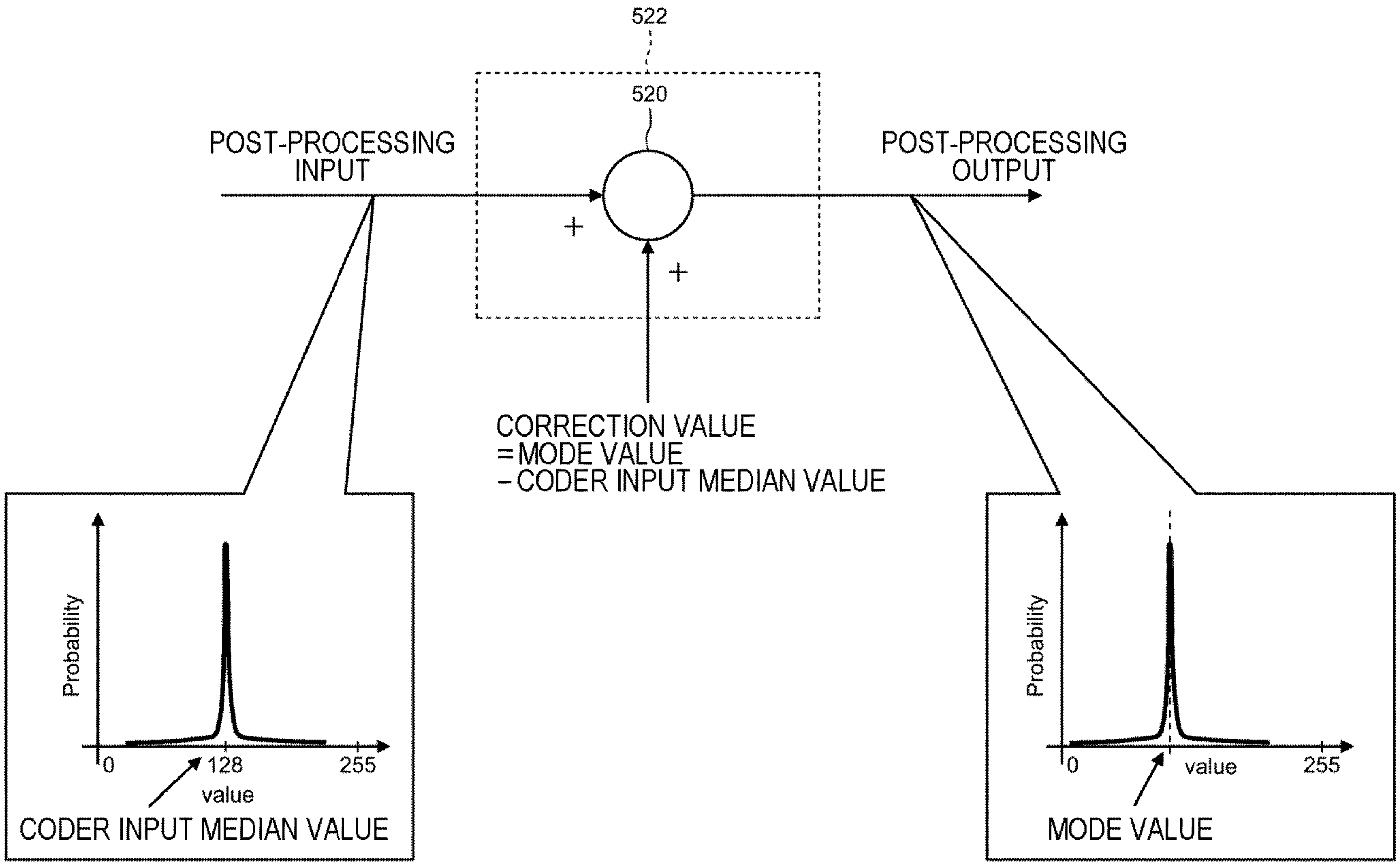
522
520
POST-PROCESSING INPUT
POST-PROCESSING OUTPUT
+
+
CORRECTION VALUE
=MODE VALUE
−CODER INPUT MEDIAN VALUE
Probability
0
128
255
value
CODER INPUT MEDIAN VALUE
Probability
0
value
255
MODE VALUE

FIG. 87

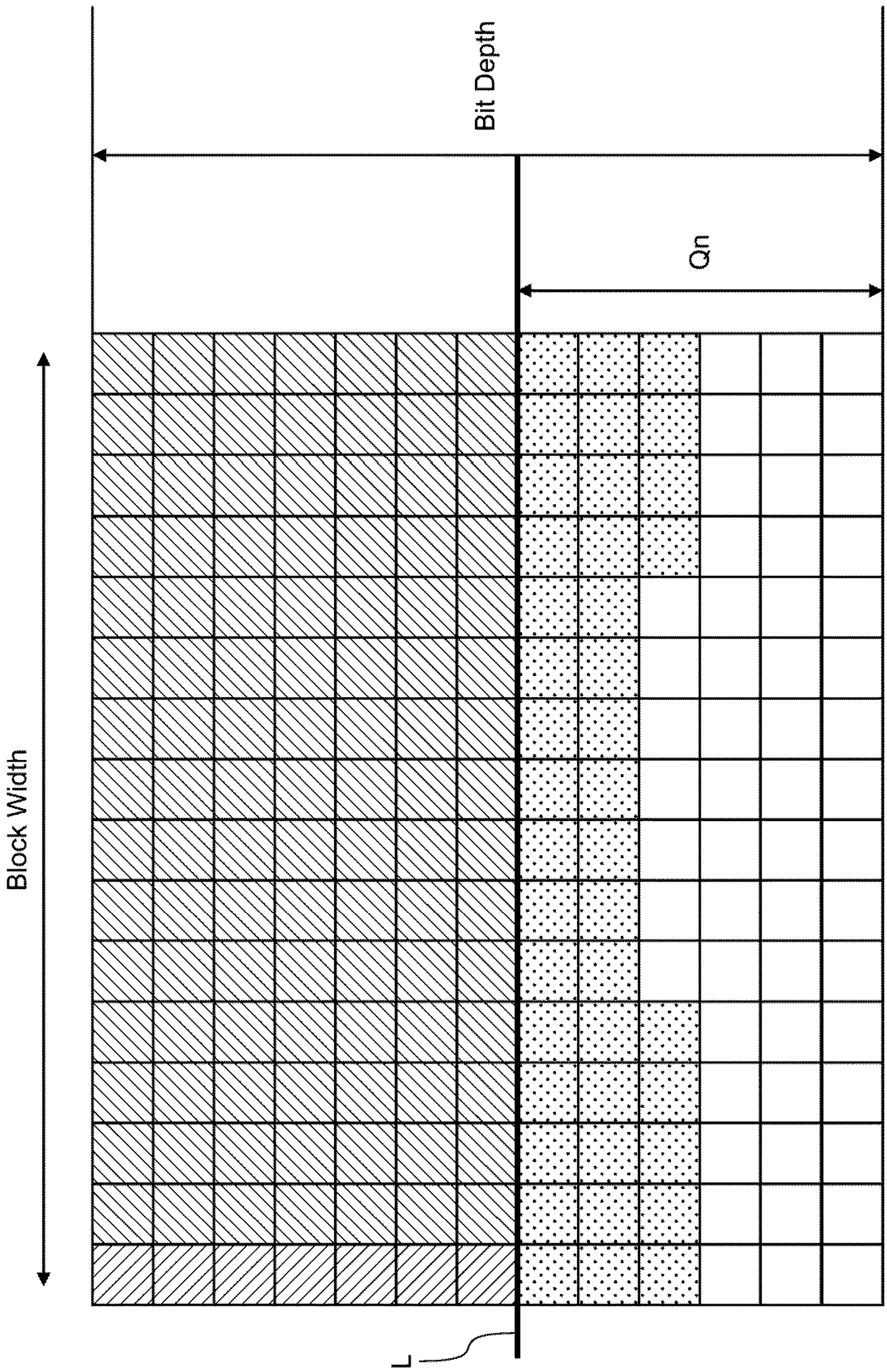

FIG. 88

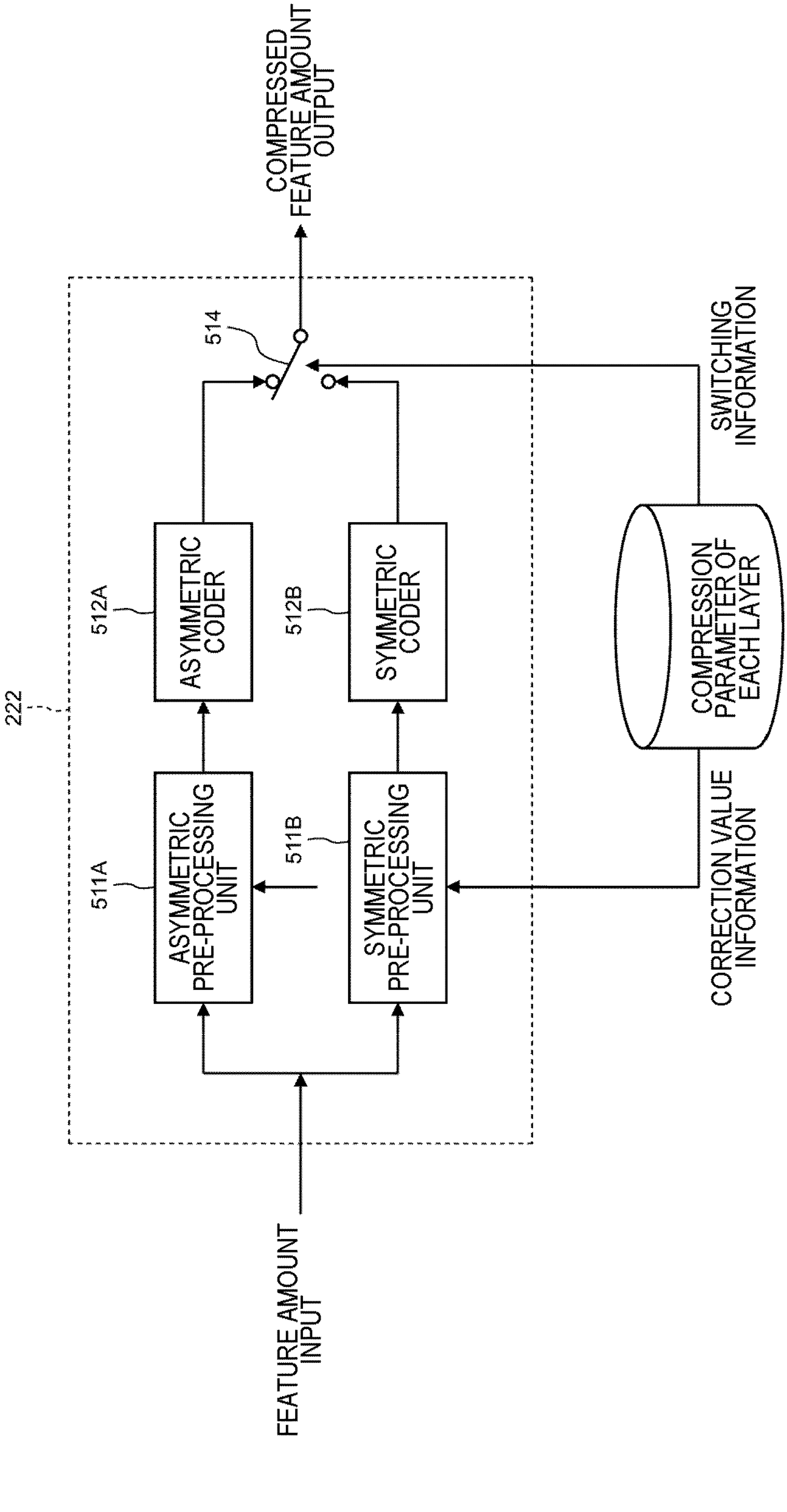
222
511A
ASYMMETRIC PRE-PROCESSING UNIT
512A
ASYMMETRIC CODER
511B
SYMMETRIC PRE-PROCESSING UNIT
512B
SYMMETRIC CODER
514
FEATURE AMOUNT INPUT
COMPRESSED FEATURE AMOUNT OUTPUT
COMPRESSION PARAMETER OF EACH LAYER
CORRECTION VALUE INFORMATION
SWITCHING INFORMATION

FIG. 89

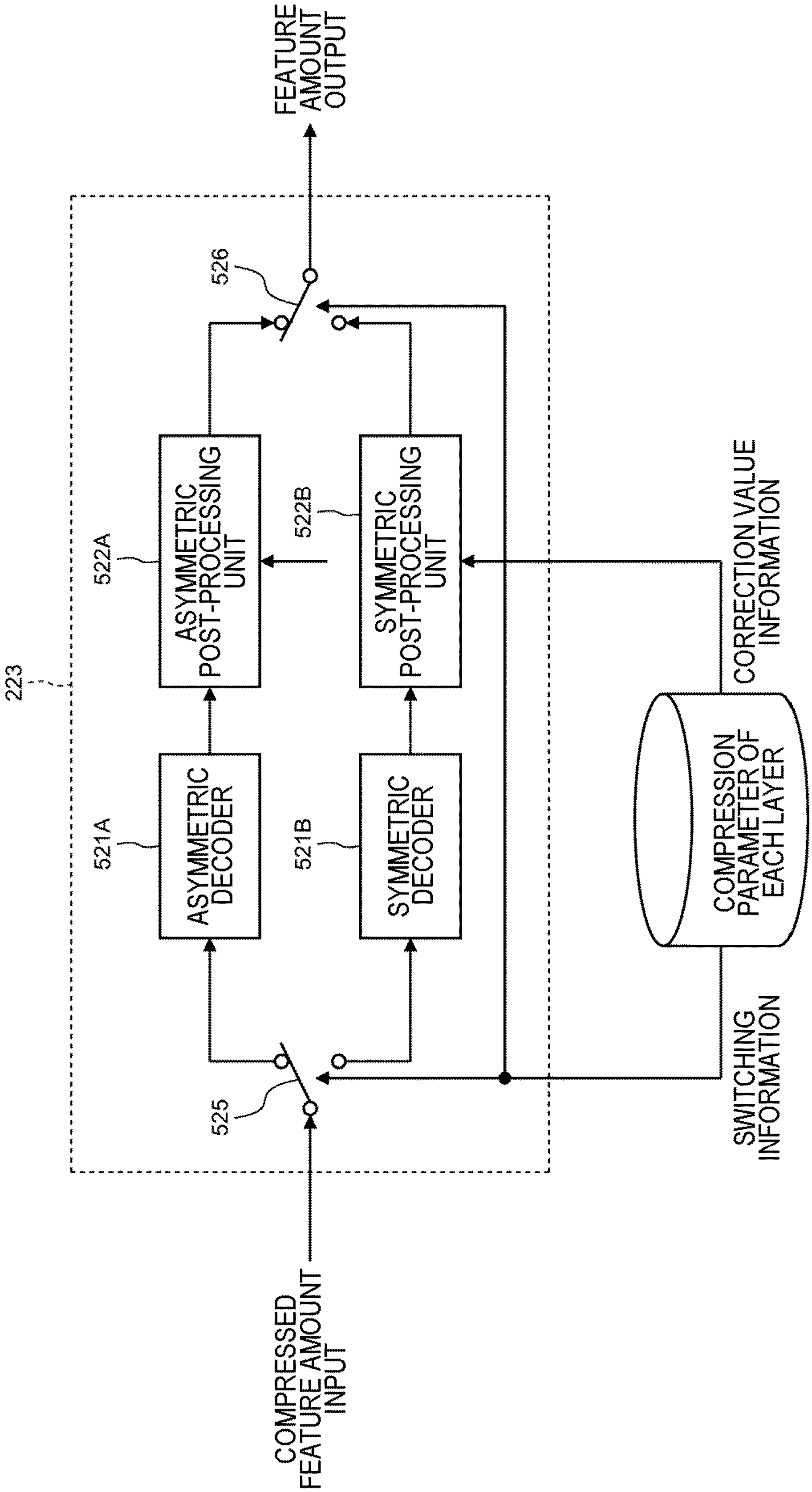
COMPRESSED FEATURE AMOUNT INPUT
FEATURE AMOUNT OUTPUT
223
525
526
521A
ASYMMETRIC DECODER
521B
SYMMETRIC DECODER
522A
ASYMMETRIC POST-PROCESSING UNIT
522B
SYMMETRIC POST-PROCESSING UNIT
COMPRESSION PARAMETER OF EACH LAYER
SWITCHING INFORMATION
CORRECTION VALUE INFORMATION

FIG. 90

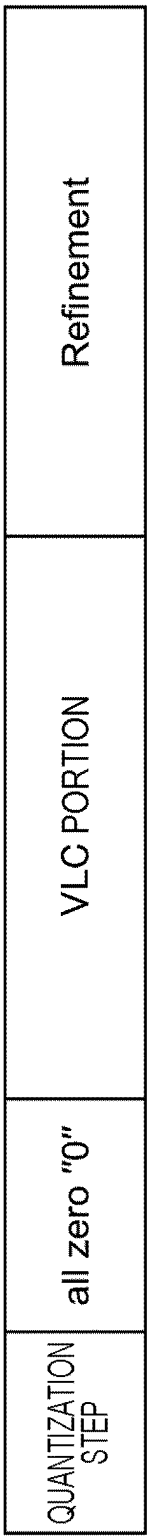

FIG. 91

| | | |
|---|---|---|
| QUANTIZATION STEP | all zero "1" | Refinement |

FIG. 92

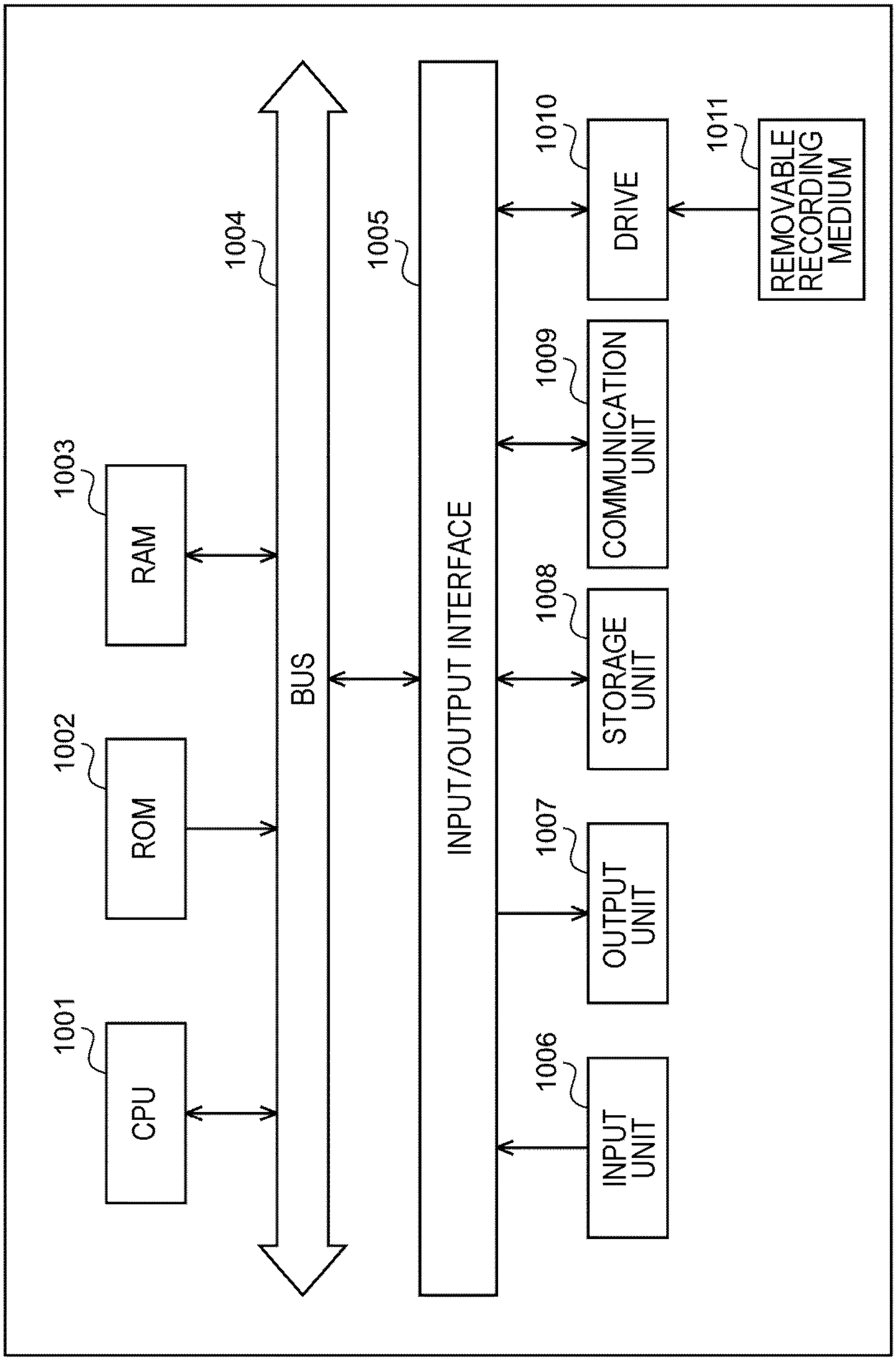

CPU
1001
ROM
1002
RAM
1003
BUS
1004
INPUT/OUTPUT INTERFACE
1005
INPUT UNIT
1006
OUTPUT UNIT
1007
STORAGE UNIT
1008
COMMUNICATION UNIT
1009
DRIVE
1010
REMOVABLE RECORDING MEDIUM
1011

**INTERNATIONAL SEARCH REPORT**

International application No.
**PCT/JP2023/044343**

**A. CLASSIFICATION OF SUBJECT MATTER**

***H04N 19/46***(2014.01)i; ***H04N 19/42***(2014.01)i; ***H04N 19/60***(2014.01)i; ***H04N 19/85***(2014.01)i
FI: H04N19/46; H04N19/42; H04N19/60; H04N19/85

According to International Patent Classification (IPC) or to both national classification and IPC

**B. FIELDS SEARCHED**

Minimum documentation searched (classification system followed by classification symbols)

H04N19/46; H04N19/42; H04N19/60; H04N19/85

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | JP 2006-352509 A (SONY CORPORATION) 28 December 2006 (2006-12-28) paragraphs [0032]-[0034], [0045]-[0049] | 26 |
| A | JP 2020-53820 A (PREFERRED NETWORKS, INC) 02 April 2020 (2020-04-02) entire text, all drawings | 1-25, 27 |
| A | JP 2021-522756 A (SONY INTERACTIVE ENTERTAINMENT LLC) 30 August 2021 (2021-08-30) entire text, all drawings | 1-25, 27 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 February 2024** | **05 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/044343**

**Box No. III Observations where unity of invention is lacking (Continuation of item 3 of first sheet)**

This International Searching Authority found multiple inventions in this international application, as follows:

(i) The number of inventions included in the claims is: 2

(ii) Claim numbers of claims classified into each invention
Main invention: Claims 1-25 and 27
Additional invention: Claim 26

(iii) Reasons for determining that the requirement of unity of invention is not satisfied

The invention in claim 1 has a special technical feature in light of the disclosure of a document cited in the international search report, and thus, the invention in claim 1 and the invention in claims 2-24 referring to claim 1 are classified as the main invention.

Also, the invention in claim 25 differs from the invention in claim 1 only in the category, and thus, claim 25 is classified as the main invention.

In addition, the invention in claim 27 shares, with the invention in claim 1, the common technical feature of processing each of a “computation unit,” a “compression unit,” and a “decoding unit,” and thus, claim 27 is classified as the main invention.

Also, the invention in claim 26 shares, with the invention in claim 1, the common technical feature of comprising a “pre-analysis unit that generates control information for controlling the compression” and a “compression unit that compresses data” “on the basis of the control information.” However, the common technical feature cannot be considered special, in light of the disclosure of document 1 cited in the international search report.

Therefore, claim 26 is classified as the additional invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant’s protest and, where applicable, the payment of a protest fee.

☐ The additional search fees were accompanied by the applicant’s protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2023/044343**

| Patent document cited in search report | Publication date (day/month/year) | Patent family member(s) | Publication date (day/month/year) |
|---|---|---|---|
| JP 2006-352509 A | 28 December 2006 | US 2009/0290045 A1<br>paragraphs [0067]-[0069], [0080]-[0084]<br>CN 101199198 A<br>EP 1901547 A1<br>KR 10-2008-0025048 A<br>WO 2006/134723 A1 | |
| JP 2020-53820 A | 02 April 2020 | (Family: none) | |
| JP 2021-522756 A | 30 August 2021 | US 2019/0387252 A1<br>whole description, whole figure<br>CN 112715027 A<br>CN 115623200 A<br>EP 4171032 A2<br>JP 2022-3775 A<br>JP 2022-133346 A<br>JP 2023-126970 A<br>US 2020/0084473 A1<br>US 2021/0297695 A1<br>WO 2019/245805 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021111320 A